(19) Europäisches Patentamt
European Patent Office
Office européen des brevets

(11) **EP 3 606 079 A1**

(12) **EUROPEAN PATENT APPLICATION**
published in accordance with Art. 153(4) EPC

(43) Date of publication:
**05.02.2020 Bulletin 2020/06**

(21) Application number: **18770208.9**

(22) Date of filing: **14.03.2018**

(51) Int Cl.:
*H04N 19/80* (2014.01)   *H04N 19/46* (2014.01)

(86) International application number:
**PCT/JP2018/009911**

(87) International publication number:
**WO 2018/173873 (27.09.2018 Gazette 2018/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.03.2017 JP 2017058520**

(71) Applicant: **Sony Corporation**
**Tokyo 108-0075 (JP)**

(72) Inventors:
• **KAWAI Takuro**
  **Tokyo 108-0075 (JP)**
• **HOSOKAWA Kenichiro**
  **Tokyo 108-0075 (JP)**
• **NAKAGAMI Ohji**
  **Tokyo 108-0075 (JP)**
• **IKEDA Masaru**
  **Tokyo 108-0075 (JP)**

(74) Representative: **D Young & Co LLP**
**120 Holborn**
**London EC1N 2DY (GB)**

(54) **CODING DEVICE AND CODING METHOD, AND DECODING DEVICE AND DECODING METHOD**

(57)    The present technology relates to an encoding apparatus and an encoding method as well as a decoding apparatus and a decoding method that make it possible to appropriately improve the compression efficiency.

A prediction tap selection section selects a pixel that becomes a prediction tap from a first image, and a classification section classifies the noticed pixel into one of a plurality of classes. A coefficient acquisition section acquires a tap coefficient of the class of the noticed pixel from tap coefficients, and an arithmetic operation section performs prediction operation using the tap coefficient of the class of the noticed pixel and the prediction tap of the noticed pixel to determine a pixel value of a corresponding pixel, which corresponds to the noticed pixel, of a second image that is used for prediction of a predicted image. Further, reduction coefficients obtained by projecting tap coefficients for the individual classes to a space of a dimension lower than that of a tap coefficient space of the tap coefficients and a transform coefficient for projecting the reduction coefficients to the tap coefficient space are transmitted. The present technology can be applied, for example, to an encoding apparatus and a decoding apparatus for an image.

FIG.16

EP 3 606 079 A1

**Description**

[Technical Field]

The present technology relates to an encoding apparatus and an encoding method as well as a decoding apparatus and a decoding method, and particularly to an encoding apparatus and an encoding method as well as a decoding apparatus and a decoding method that make it possible to appropriately improve the compression efficiency, for example, of an image.

[Background Art]

For example, a classification adaptive process for converting a first image into a second image has been proposed previously. In the classification adaptive process, a pixel that becomes a prediction tap to be used in prediction operation for determining a pixel value of a corresponding pixel of a second image corresponding to a noticed pixel that is noticed in a first image is selected from within the first image and the noticed pixel is classified into one of a plurality of classes in accordance with a fixed rule. Then, in the classification adaptive process, from tap coefficients that are determined by learning for minimizing the statistical error between a result of prediction operation using a student image corresponding to the first image and a teacher image corresponding to the second image and are to be used for prediction operation individually for the plurality of classes, a tap coefficient of the class of the noticed pixel is acquired. Then, by performing prediction operation using the tap coefficient of the class of the noticed pixel and the prediction tap of the noticed pixel to determine a pixel value of the corresponding pixel.

It is to be noted that, in regard to the classification adaptive process, a technology for integrating tap coefficients of two or more classes (for example, PTL 1) and a technology for determining a seed coefficient from which a tap coefficient is determined by predetermined arithmetic operation with a parameter (for example, PTL 2) have been proposed.

[Citation List]

[Patent Literature]

[PTL 1]
Japanese Patent No. 3890638
[PTL 2]
Japanese Patent No. 4670169

[Summary]

[Technical Problem]

Incidentally, for example, in prediction encoding of an image, it is demanded to appropriately improve the compression efficiency.

The present technology has been made in view of such a situation as described above and makes it possible to appropriately improve the compression efficiency of an image.

[Solution to Problem]

A first encoding apparatus of the present technology is an encoding apparatus including: a filter section including a prediction tap selection section configured to select, from a first image obtained by adding a residual of prediction encoding and a predicted image, a pixel that becomes a prediction tap to be used for prediction operation for determining a pixel value of a corresponding pixel, which corresponds to a noticed pixel noticed in the first image, of a second image that is used for prediction of the predicted image, a classification section configured to classify the noticed pixel into one of a plurality of classes, a coefficient acquisition section configured to acquire, from tap coefficients reconstructed from reduction coefficients obtained by projecting tap coefficients for the individual classes, which are determined by learning using a student image corresponding to the first image and an a teacher image equivalent to an original image corresponding to the first image, to a space of a dimension lower than that of a tap coefficient space that is a space of the tap coefficients for the individual classes, a tap coefficient of the class of the noticed pixel, and an arithmetic operation section configured to determine a pixel value of the corresponding pixel by performing the prediction operation using the tap coefficient of the class of the noticed pixel and the prediction tap of the noticed pixel, the filter section performing a filter process for the first image to generate the second image; and a transmission section configured to transmit the reduction coefficients and a transform coefficient for projecting the reduction coefficients to the tap coefficient space.

A first encoding method of the present technology is an encoding method including: performing a filter process including selecting, from a first image obtained by adding a residual of prediction encoding and a predicted image, a pixel that becomes a prediction tap to be used for prediction operation for determining a pixel value of a corresponding pixel, which corresponds to a noticed pixel noticed in the first image, of a second image that is used for prediction of the predicted image, classifying the noticed pixel into one of a plurality of classes, acquiring, from tap coefficients reconstructed from reduction coefficients obtained by projecting tap coefficients for the individual classes, which are determined by learning using a student image corresponding to the first image and an a teacher image equivalent to an original image corresponding to the first image, to a space of a dimension lower than that of a tap coefficient space that is a space of the tap coefficients for the individual classes, a tap coefficient of the class of the noticed pixel, and determining a pixel value of the corresponding pixel by performing the prediction operation using the tap coefficient of the class of the noticed pixel and the prediction tap of the noticed pixel, the filter process being performed for the first image to generate the second image; and transmitting the reduction coefficients and a transform coefficient for projecting the reduction coefficients to the tap coefficient space.

In the first encoding apparatus and encoding method of the present technology, from a first image obtained by adding a residual of prediction encoding and a predicted image, a pixel that becomes a prediction tap to be used for prediction operation for determining a pixel value of a corresponding pixel, which corresponds to a noticed pixel noticed in the first image, of a second image that is used for prediction of the predicted image is selected, and the noticed pixel is classified into one of a plurality of classes. Further, from tap coefficients reconstructed from reduction coefficients obtained by projecting tap coefficients for the individual classes, which are determined by learning using a student image corresponding to the first image and an a teacher image equivalent to an original image corresponding to the first image, to a space of a dimension lower than that of a tap coefficient space that is a space of the tap coefficients for the individual classes, a tap coefficient of the class of the noticed pixel is acquired, and a pixel value of the corresponding pixel is determined by performing the prediction operation using the tap coefficient of the class of the noticed pixel and the prediction tap of the noticed pixel thereby to perform a filter process for the first image to generate the second image. Then, the reduction coefficients and a transform coefficient for projecting the reduction coefficients to the tap coefficient space are transmitted.

A first decoding apparatus of the present technology is a decoding apparatus including a filter section including a reception section configured to receive reduction coefficients obtained by projecting tap coefficients for individual classes, which are determined by learning using a student image equivalent to a first image obtained by adding a residual of prediction encoding and a predicted image and a teacher image equivalent to an original image corresponding to the first image, to a space of a dimension lower than that of a tap coefficient space that is a space of the tap coefficients for the individual classes, and a transform coefficient for projecting the reduction coefficients to the tap coefficient space, a prediction tap selection section configured to select, from within the first image, a pixel that becomes a prediction tap to be used for prediction operation for determining a pixel value of a corresponding pixel, which corresponds to a noticed pixel noticed in the first image, of a second image that is used for prediction of the predicted image, a classification section configured to classify the noticed pixel into one of a plurality of classes, a coefficient acquisition section configured to acquire, from the tap coefficients reconstructed by conversion of the reduction coefficients with the transform coefficient, a tap coefficient of the class of the noticed pixel, and an arithmetic operation section configured to determine a pixel value of the corresponding pixel by performing the prediction operation using the tap coefficient of the class of the noticed class and the prediction tap of the noticed pixel. The filter section performs a filter process for the first image to generate the second image.

A first decoding method of the present technology is a decoding method including performing a filter process including receiving reduction coefficients obtained by projecting tap coefficients for individual classes, which are determined by learning using a student image equivalent to a first image obtained by adding a residual of prediction encoding and a predicted image and a teacher image equivalent to an original image corresponding to the first image, to a space of a dimension lower than that of a tap coefficient space that is a space of the tap coefficients for the individual classes, and a transform coefficient for projecting the reduction coefficients to the tap coefficient space, selecting, from within the first image, a pixel that becomes a prediction tap to be used for prediction operation for determining a pixel value of a corresponding pixel, which corresponds to a noticed pixel noticed in the first image, of a second image that is used for prediction of the predicted image, classifying the noticed pixel into one of a plurality of classes, acquiring, from the tap coefficients reconstructed by conversion of the reduction coefficients with the transform coefficient, a tap coefficient of the class of the noticed pixel, and determining a pixel value of the corresponding pixel by performing the prediction operation using the tap coefficient of the class of the noticed class and the prediction tap of the noticed pixel, the filter process being performed for the first image to generate the second image.

In the first decoding apparatus and decoding method of the present technology, reduction coefficients obtained by projecting tap coefficients for individual classes, which are determined by learning using a student image equivalent to a first image obtained by adding a residual of prediction encoding and a predicted image and a teacher image equivalent to an original image corresponding to the first image, to a space of a dimension lower than that of a tap coefficient space that is a space of the tap coefficients for the individual classes, and a transform coefficient for projecting the reduction coefficients to the tap coefficient space, are received. Then, from within the first image, a pixel that becomes a prediction tap to be used for prediction operation for determining a pixel value of a corresponding pixel, which corresponds to a noticed pixel noticed in the first image, of a second image that is used for prediction of the predicted image, is selected, and the noticed pixel is classified into one of a plurality of classes. Further, from the tap coefficients reconstructed by conversion of the reduction coefficients with the transform coefficient, a tap coefficient of the class of the noticed pixel is acquired, and a pixel value of the corresponding pixel by performing the prediction operation using the tap coefficient of the class of the noticed class and the prediction tap of the noticed pixel is determined thereby to perform a filter process for the first image to generate the second image.

A second encoding apparatus of the present technology is an encoding apparatus including: a filter section including a prediction tap selection section configured to select, from a first image obtained by adding a residual of prediction encoding and a predicted image, a pixel that becomes a prediction tap to be used for prediction operation for determining a pixel value of a corresponding pixel, which corresponds to a noticed pixel noticed in the first image, of a second image that is used for prediction of the predicted image, a classification section configured to classify the noticed pixel into one of a plurality of classes, a coefficient acquisition section configured to acquire, from tap coefficients reconstructed from seed coefficients used to determine tap coefficients for the individual classes, which are determined by learning using a student image corresponding to the first image and an a teacher image equivalent to an original image corresponding to the first image, by given arithmetic operation with a parameter representative of each class, a tap coefficient of the class of the noticed pixel, and an arithmetic operation section configured to determine a pixel value of the corresponding pixel by performing the prediction operation using the tap coefficient of the class of the noticed pixel and the prediction tap of the noticed pixel, the filter section performing a filter process for the first image to generate the second image; and a transmission section configured to transmit the seed coefficients.

A second encoding method of the present technology is an encoding method including: performing a filter process including selecting, from a first image obtained by adding a residual of prediction encoding and a predicted image, a pixel that becomes a prediction tap to be used for prediction operation for determining a pixel value of a corresponding pixel, which corresponds to a noticed pixel noticed in the first image, of a second image that is used for prediction of the predicted image, classifying the noticed pixel into one of a plurality of classes, acquiring, from tap coefficients reconstructed from seed coefficients used to determine tap coefficients for the individual classes, which are determined by learning using a student image corresponding to the first image and an a teacher image equivalent to an original image corresponding to the first image, by given arithmetic operation with a parameter representative of each class, a tap coefficient of the class of the noticed pixel, and determining a pixel value of the corresponding pixel by performing the prediction operation using the tap coefficient of the class of the noticed pixel and the prediction tap of the noticed pixel, the filter process being performed for the first image to generate the second image; and transmitting the seed coefficients.

In the second encoding apparatus and encoding method of the present technology, from a first image obtained by adding a residual of prediction encoding and a predicted image, a pixel that becomes a prediction tap to be used for prediction operation for determining a pixel value of a corresponding pixel, which corresponds to a noticed pixel noticed in the first image, of a second image that is used for prediction of the predicted image is selected, and the noticed pixel is classified into one of a plurality of classes. Further, from tap coefficients reconstructed from seed coefficients used to determine tap coefficients for the individual classes, which are determined by learning using a student image corresponding to the first image and an a teacher image equivalent to an original image corresponding to the first image, by given arithmetic operation with a parameter representative of each class, a tap coefficient of the class of the noticed pixel is acquired, and a pixel value of the corresponding pixel is determined by performing the prediction operation using the tap coefficient of the class of the noticed pixel and the prediction tap of the noticed pixel thereby to perform a filter process for the first image to generate the second image.

A second decoding apparatus of the present technology is a decoding apparatus including a filter section including a reception section configured to receive seed coefficients used to determine tap coefficients for individual classes, which are determined by learning using a student image corresponding to a first image obtained by adding a residual of prediction encoding and a predicted image and an a teacher image equivalent to an original image corresponding to the first image, by given arithmetic operation with a parameter representative of each class, a prediction tap selection section configured to select, from within the first image, a pixel that becomes a prediction tap to be used for prediction operation for determining a pixel value of a corresponding pixel, which corresponds to a noticed pixel noticed in the first image, of a second image that is used for prediction of the predicted image, a classification section configured to classify the noticed pixel into one of a plurality of classes, a coefficient acquisition section configured to acquire, from the tap coefficients reconstructed by the given arithmetic operation using the parameter and the seed coefficients, a tap coefficient of the class of the noticed pixel, and an arithmetic operation section configured to determine a pixel value of the corresponding pixel by performing the prediction operation using the tap coefficient of the class of the noticed class and the prediction tap of the noticed pixel. The filter section performs a filter process for the first image to generate the second image.

A second decoding method of the present technology is a decoding method including performing a filter process including receiving seed coefficients used to determine tap coefficients for individual classes, which are determined by learning using a student image corresponding to a first image obtained by adding a residual of prediction encoding and a predicted image and an a teacher image equivalent to an original image corresponding to the first image, by given arithmetic operation with a parameter representative of each class, selecting, from within the first image, a pixel that becomes a prediction tap to be used for prediction operation for determining a pixel value of a corresponding pixel, which corresponds to a noticed pixel noticed in the first image, of a second image that is used for prediction of the predicted image, classifying the noticed pixel into one of a plurality of classes, acquiring, from the tap coefficients reconstructed by the given arithmetic operation using the parameter and the seed coefficients, a tap coefficient of the class of the noticed pixel, and determining a pixel value of the corresponding pixel by performing the prediction operation using the tap coefficient of the class of the noticed class and the prediction tap of the noticed pixel, the filter process being performed for the first image to generate the second image.

In the second decoding apparatus and decoding method of the present technology, seed coefficients used to determine tap coefficients for individual classes, which are determined by learning using a student image corresponding to a first image obtained by adding a residual of prediction encoding and a predicted image and an a teacher image equivalent to an original image corresponding to the first image, by given arithmetic operation with a parameter representative of each class, are used. Then, from within the first image, a pixel that becomes a prediction tap to be used for prediction operation for determining a pixel value of a corresponding pixel, which corresponds to a noticed pixel noticed in the first image, of a second image that is used for prediction of the predicted image is selected, and the noticed pixel is classified into one of a plurality of classes. Further, from the tap coefficients reconstructed by the given arithmetic operation using the parameter and the seed coefficients, a tap coefficient of the class of the noticed pixel is acquired, and a pixel value of the corresponding pixel is determined by performing the prediction operation using the tap coefficient of the class of the noticed class and the prediction tap of the noticed pixel, whereby a filter process for the first image is performed to generate the second image.

It is to be noted that any of the encoding apparatus and the decoding apparatus may be an independent apparatus or may be an internal block configuring one apparatus.

Further, the encoding apparatus and the decoding apparatus can be implemented by causing a computer to execute a program.

Further, the program for causing a computer to function as the encoding apparatus or the decoding apparatus can be provided by transmission through a transmission medium or by recording the program on a recording medium.

[Advantageous Effect of Invention]

With the present technology, the compression efficiency of an image can be improved appropriately.

It is to be noted that the advantageous effect described here is not restrictive and may be any effect described in the present disclosure.

[Brief Description of Drawings]

[FIG. 1]

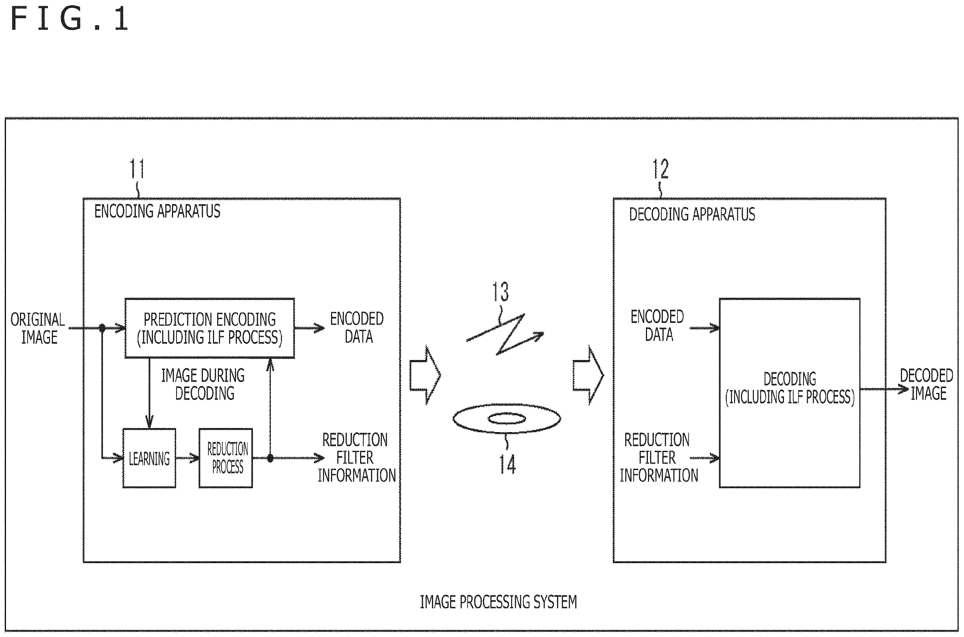

FIG. 1 is a view depicting an example of a configuration of an embodiment of an image processing system to which the present technology is applied.
[FIG. 2]

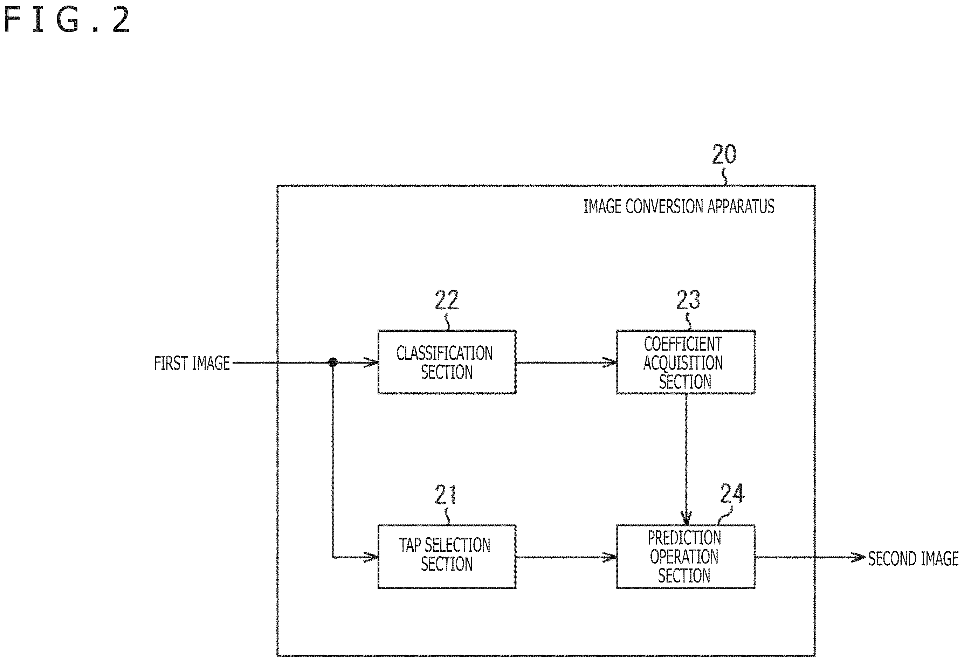

FIG. 2 is a block diagram depicting a first example of a configuration of an image conversion apparatus that performs a classification adaptive process.
[FIG. 3]

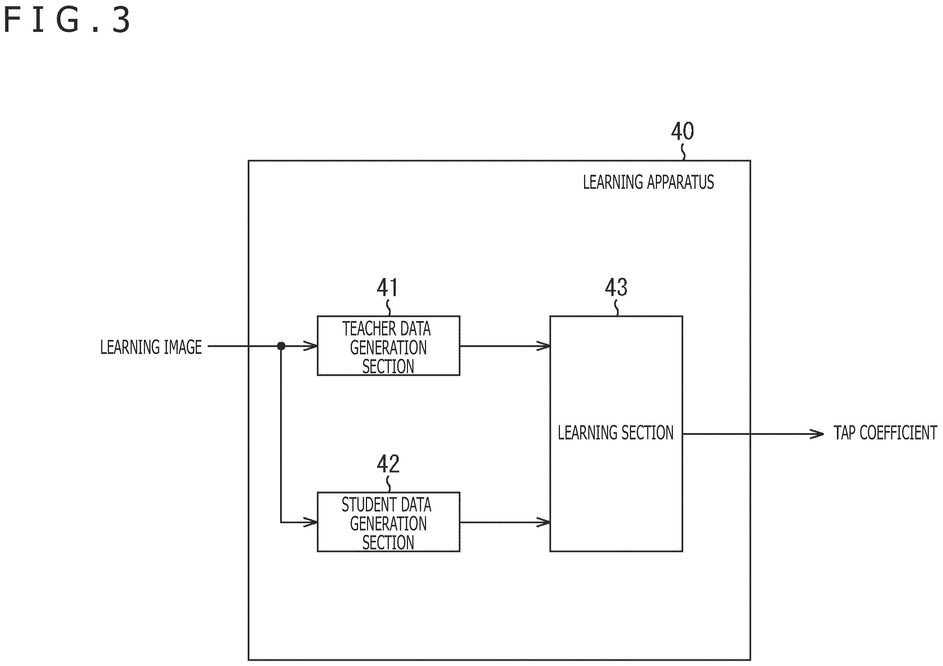

FIG. 3 is a block diagram depicting an example of a configuration of a learning apparatus that performs learning of a tap coefficient to be stored into a coefficient acquisition section 23.
[FIG. 4]

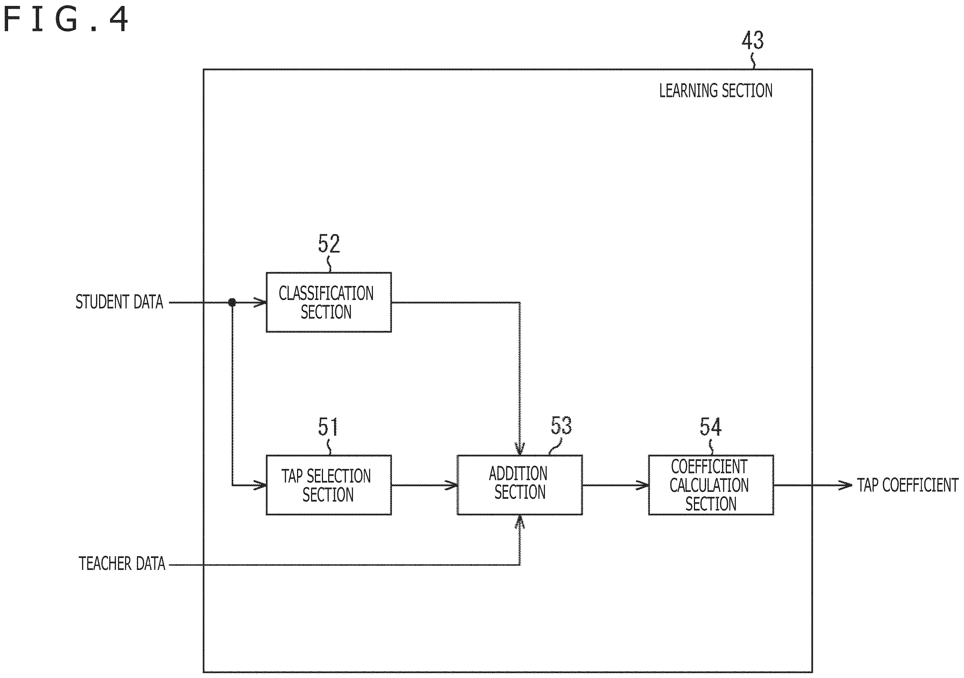

FIG. 4 is a block diagram depicting an example of a configuration of a learning section 43.
[FIG. 5]

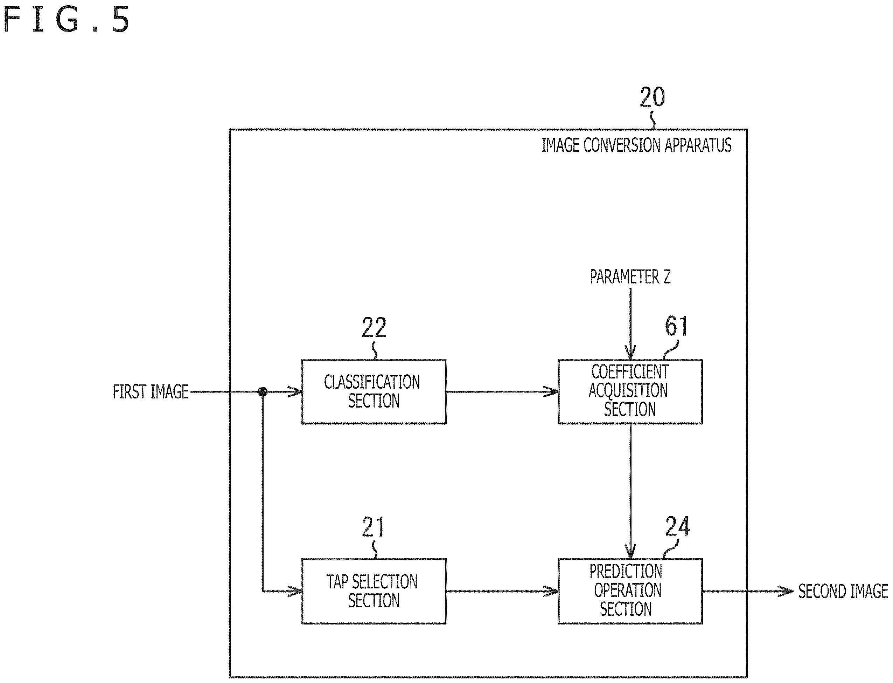

FIG. 5 is a block diagram depicting a second example of a configuration of the image conversion apparatus that performs a classification adaptive process.

[FIG. 6]

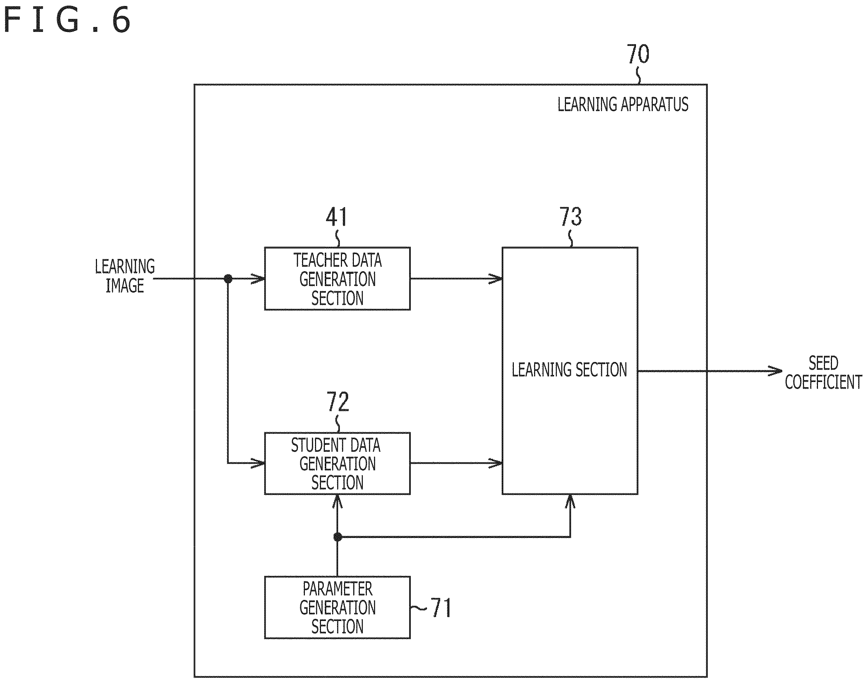

FIG. 6 is a block diagram depicting an example of a configuration of a learning apparatus that performs learning of a seed coefficient to be stored into a coefficient acquisition section 61.

[FIG. 7]

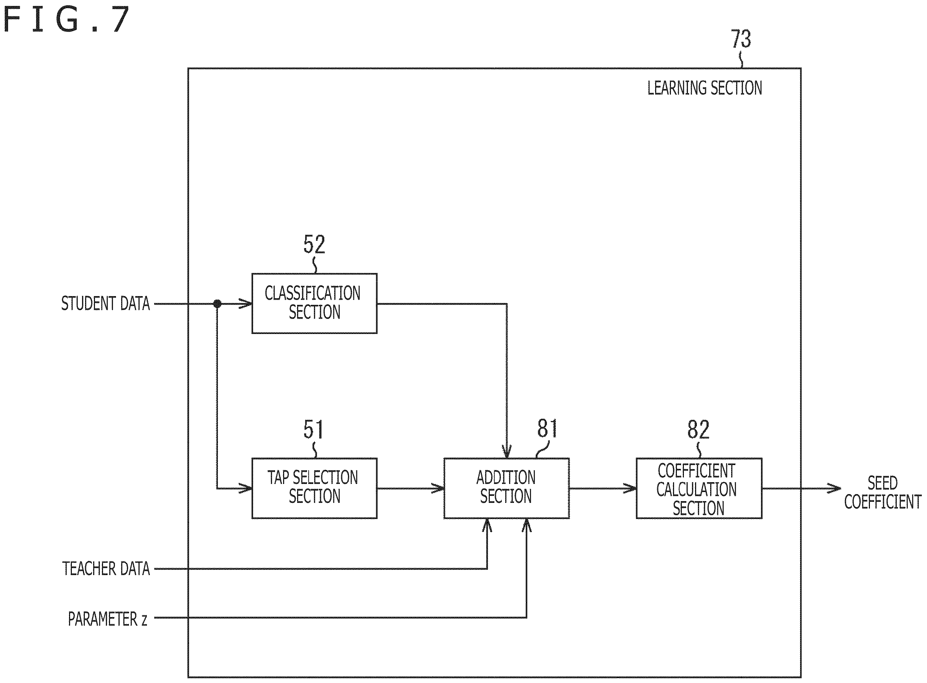

FIG. 7 is a block diagram depicting an example of a configuration of a learning section 73.

[FIG. 8]

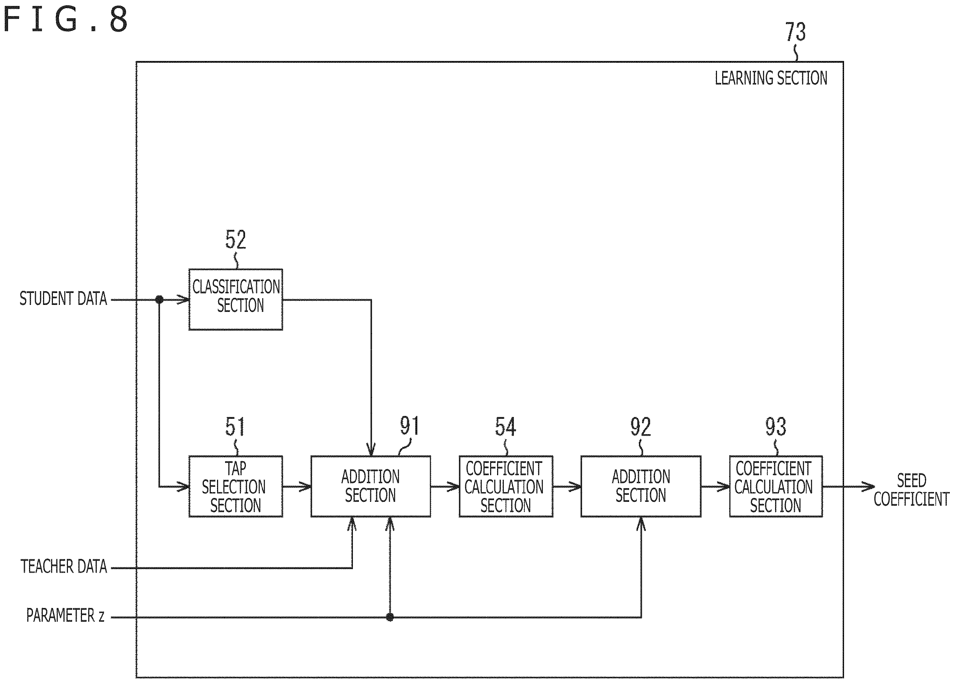

FIG. 8 is a block diagram depicting another example of a configuration of the learning section 73.

[FIG. 9]

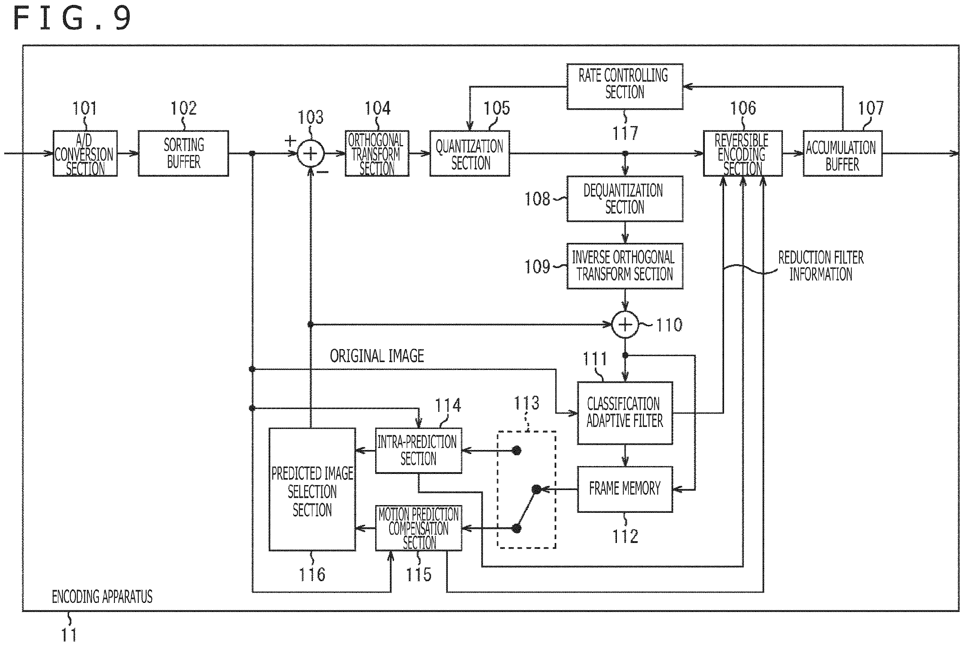

FIG. 9 is a block diagram depicting a first example of a configuration of an encoding apparatus 11.

[FIG. 10]

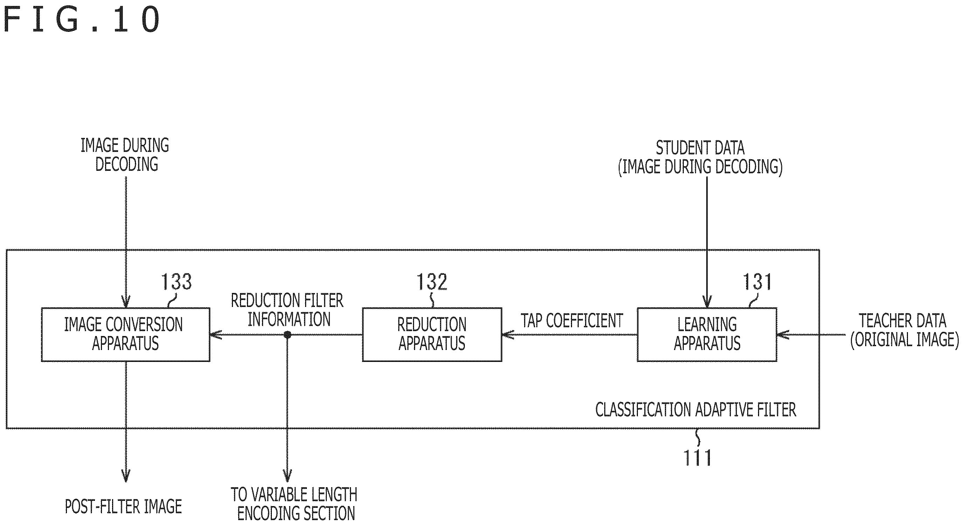

FIG. 10 is a block diagram depicting an example of a configuration of a classification adaptive filter 111.

[FIG. 11]

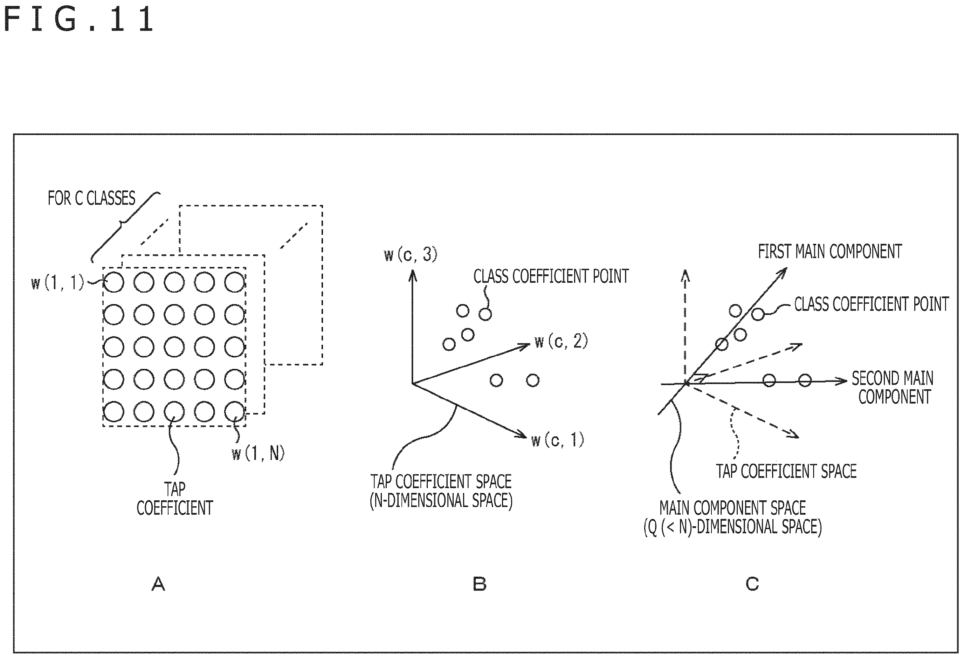

FIG. 11 is a view illustrating an overview of a main component utilization type reduction method.

[FIG. 12]

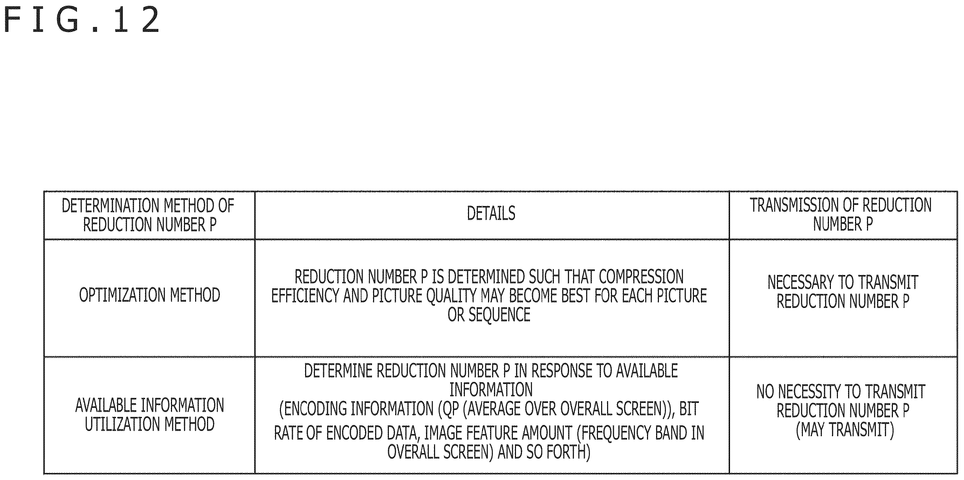

FIG. 12 is a view depicting an example of a determination method for determining a reduction number P in the main component utilization type reduction method.

[FIG. 13]

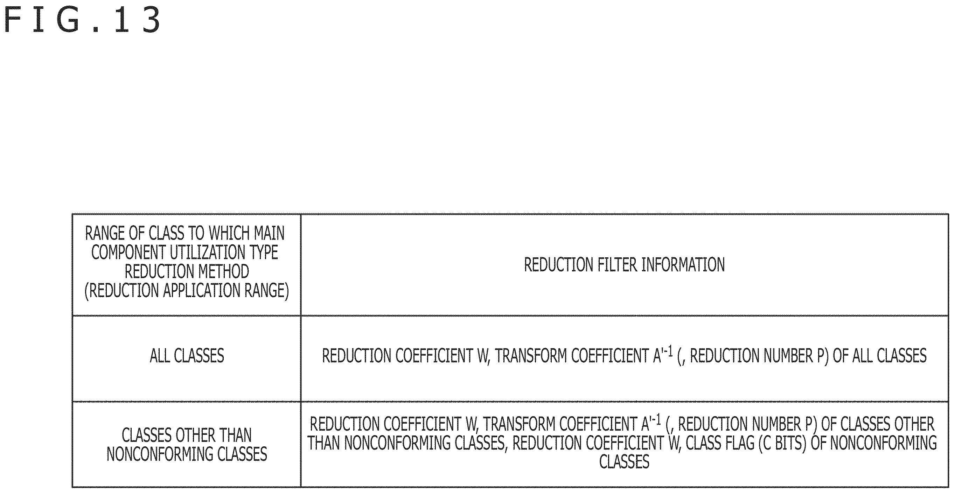

FIG. 13 is a view depicting a range of a class in which the main component utilization type reduction method is applied.

[FIG. 14]

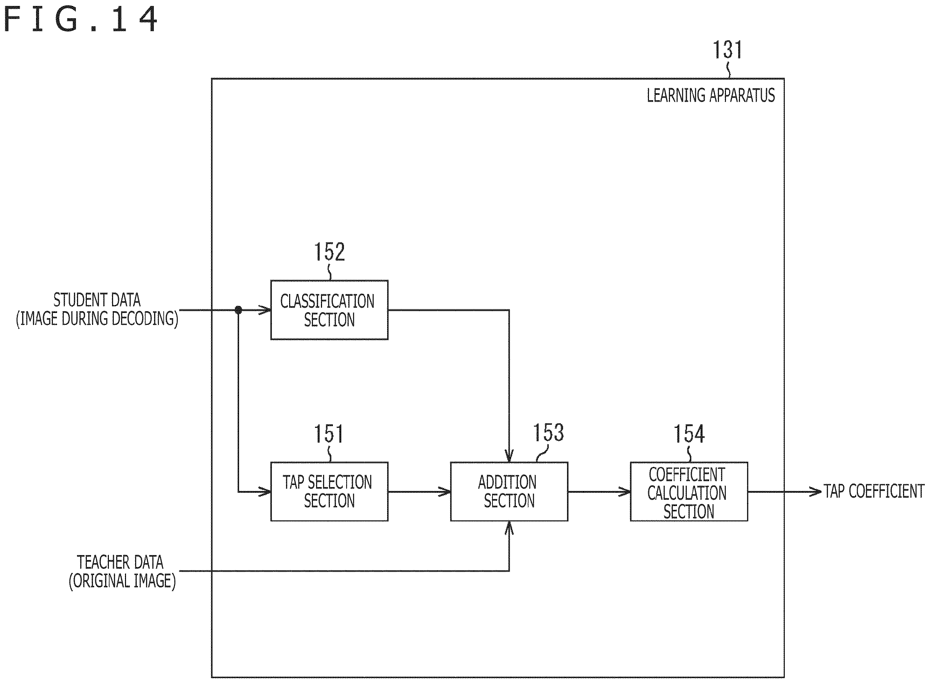

FIG. 14 is a block diagram depicting an example of a configuration of a learning apparatus 131.

[FIG. 15]

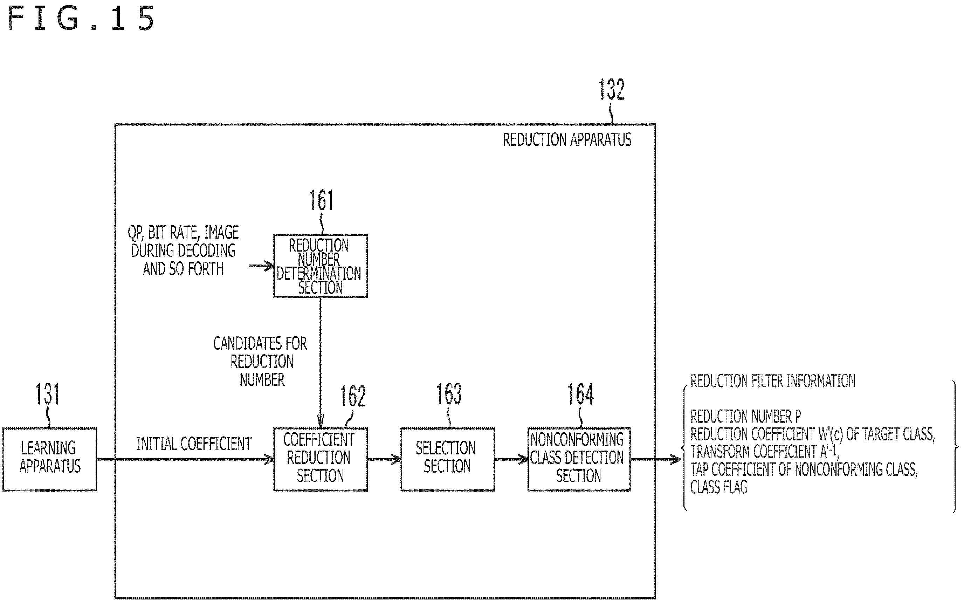

FIG. 15 is a block diagram depicting a first example of a configuration of a reduction apparatus 132.

[FIG. 16]

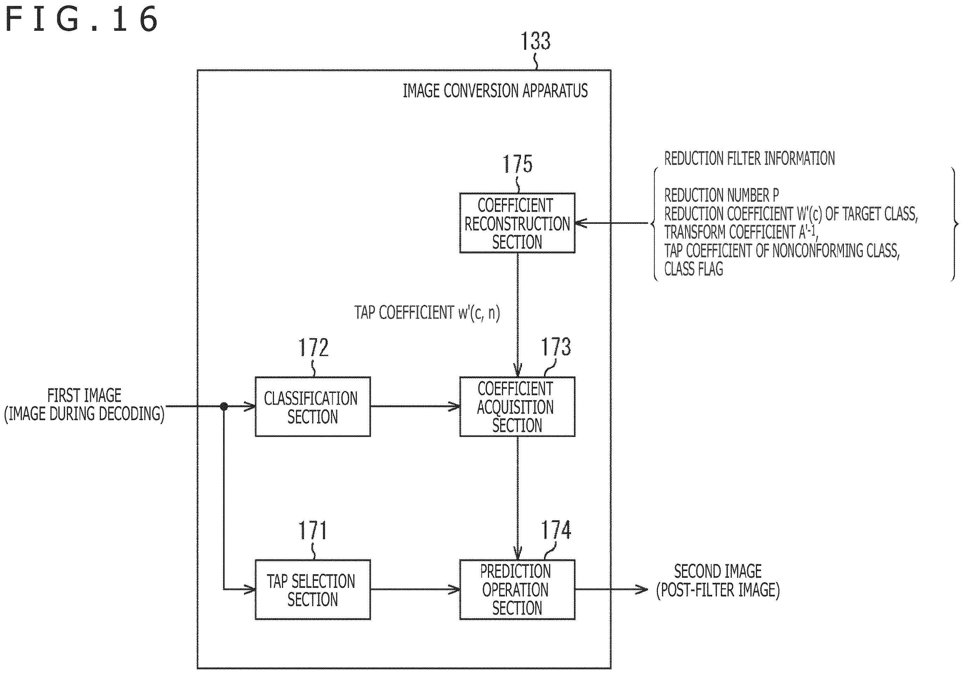

FIG. 16 is a block diagram depicting a first example of a configuration of an image conversion apparatus 133.

[FIG. 17]

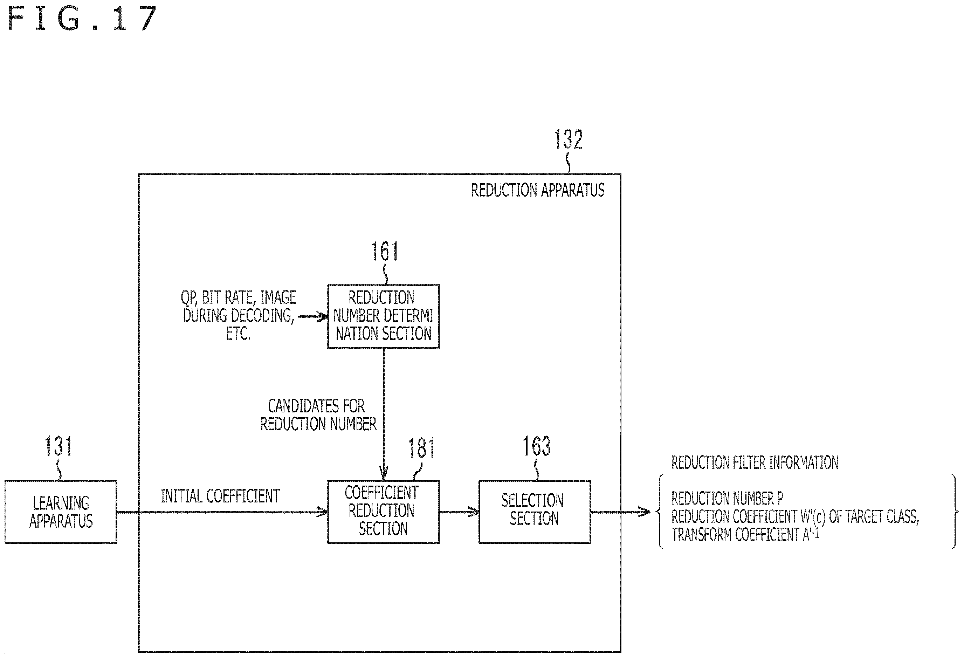

FIG. 17 is a block diagram depicting a second example of a configuration of the reduction apparatus 132.

[FIG. 18]

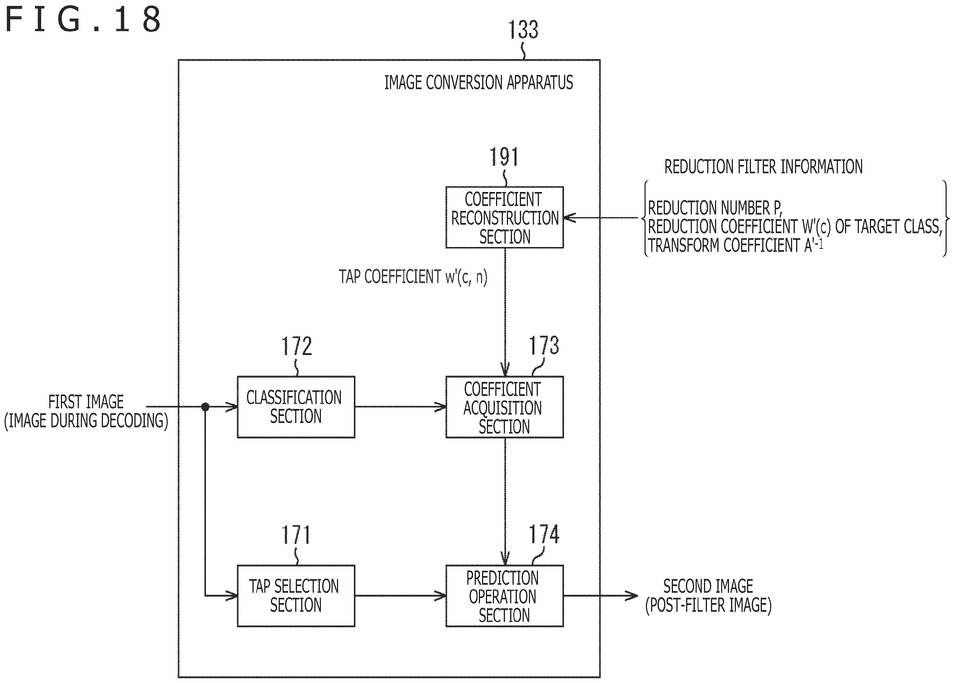

FIG. 18 is a block diagram depicting a second example of a configuration of the image conversion apparatus 133.

[FIG. 19]

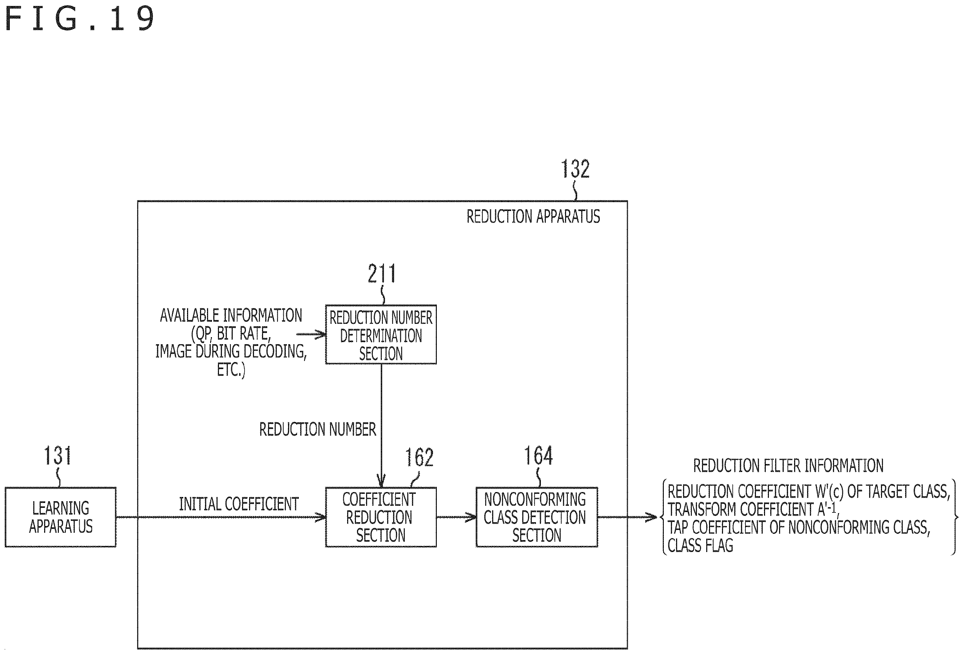

FIG. 19 is a block diagram depicting a third example of a configuration of the reduction apparatus 132.

[FIG. 20]

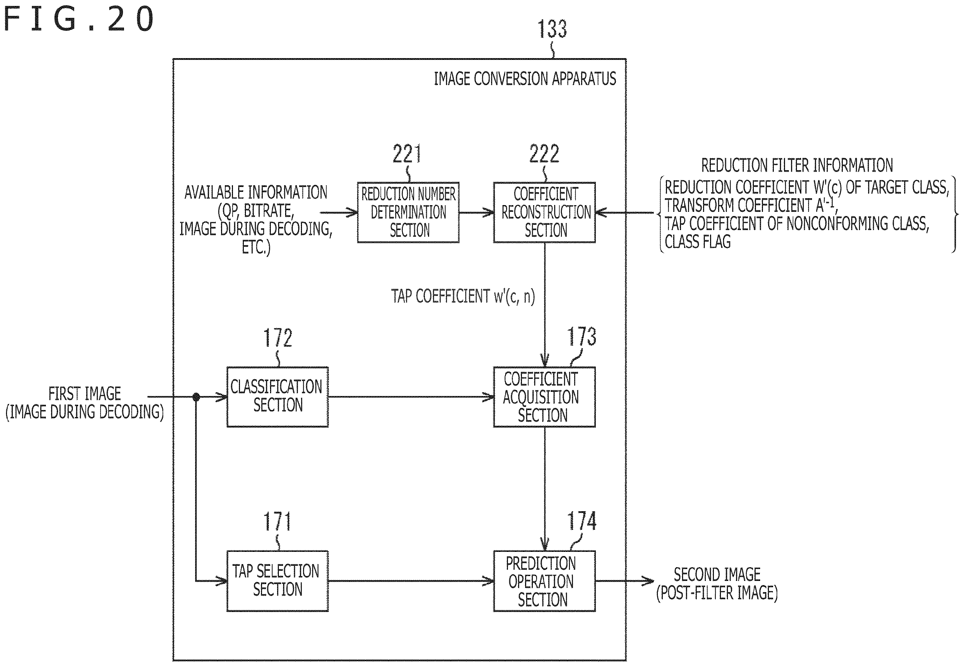

FIG. 20 is a block diagram depicting a third example of a configuration of the image conversion apparatus 133.

[FIG. 21]

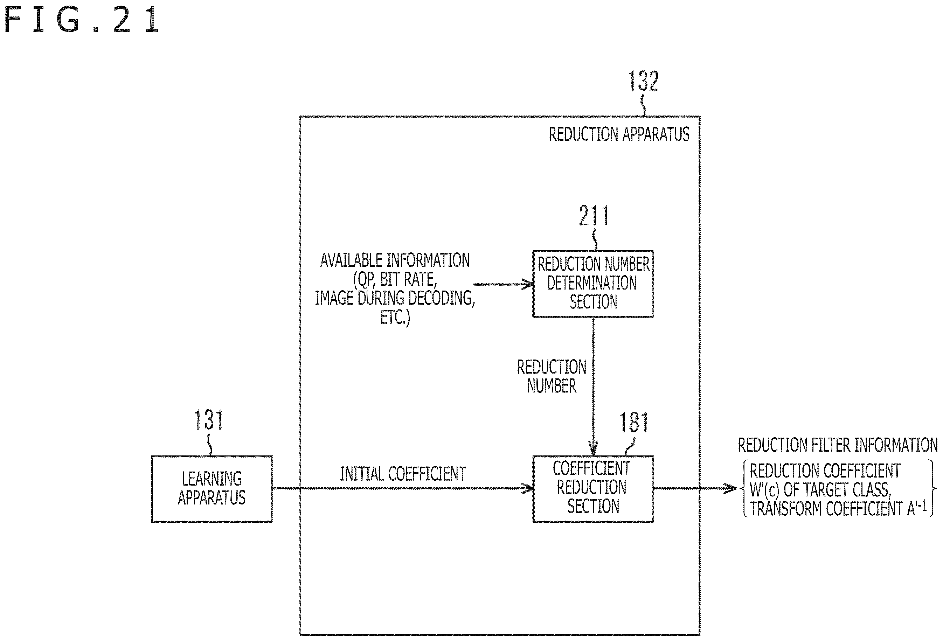

FIG. 21 is a block diagram depicting a fourth example of a configuration of the reduction apparatus 132.

[FIG. 22]

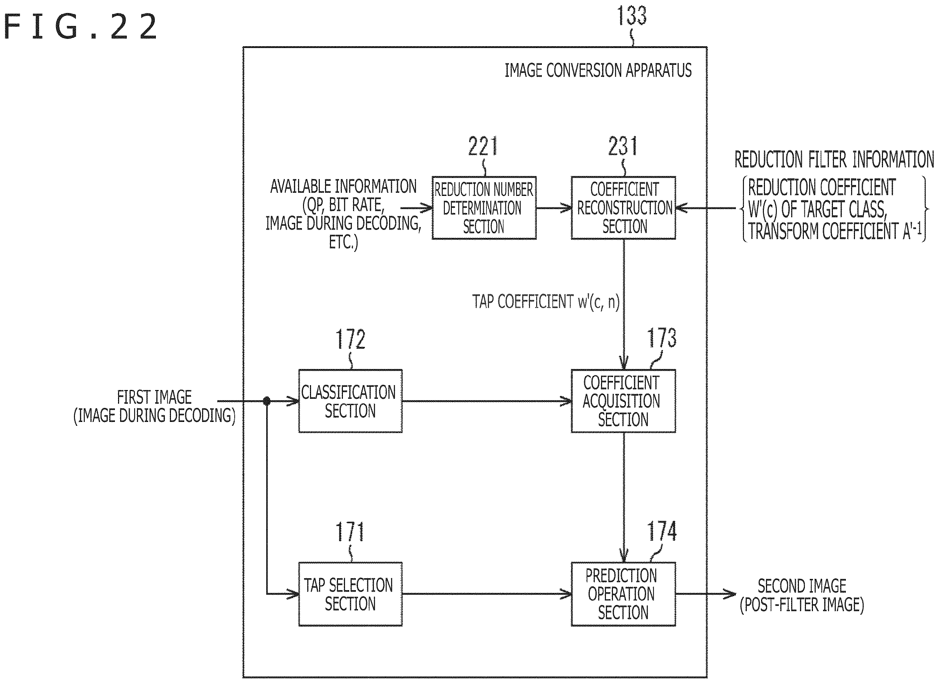

FIG. 22 is a block diagram depicting a fourth example of a configuration of the image conversion apparatus 133.

[FIG. 23]

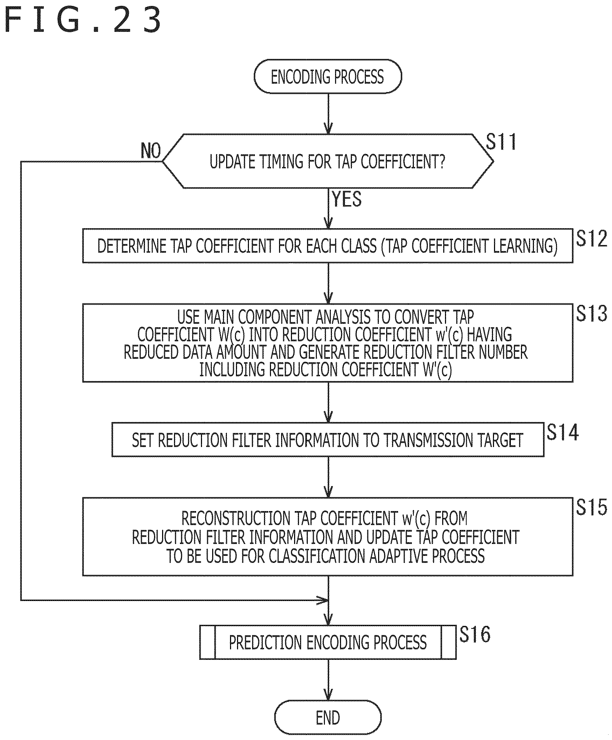

FIG. 23 is a flow chart illustrating an example of an encoding process of the encoding apparatus 11.

[FIG. 24]

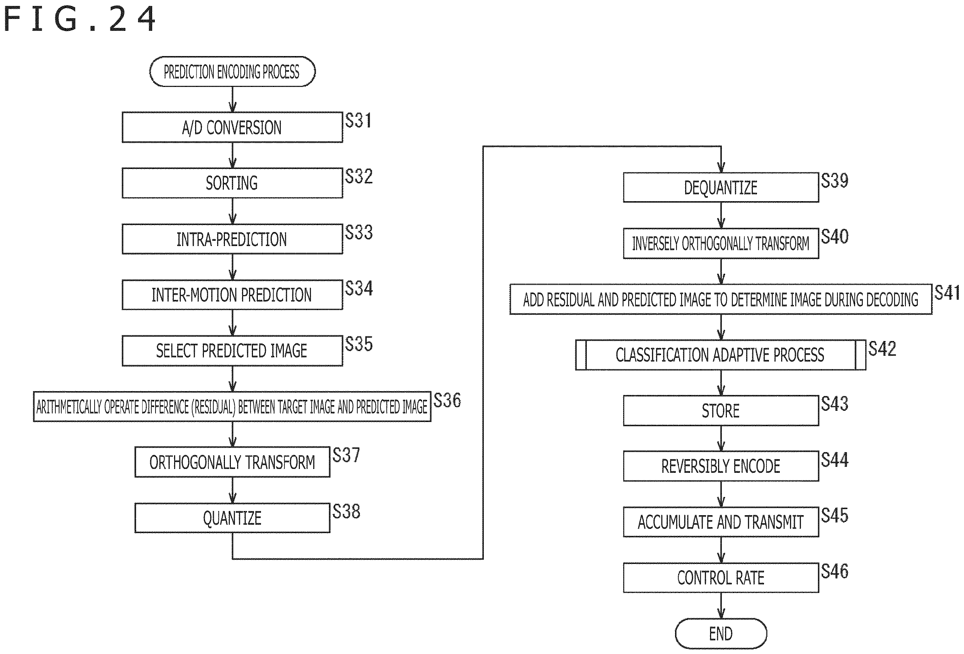

FIG. 24 is a flow chart illustrating an example of a prediction encoding process at step S16.

[FIG. 25]

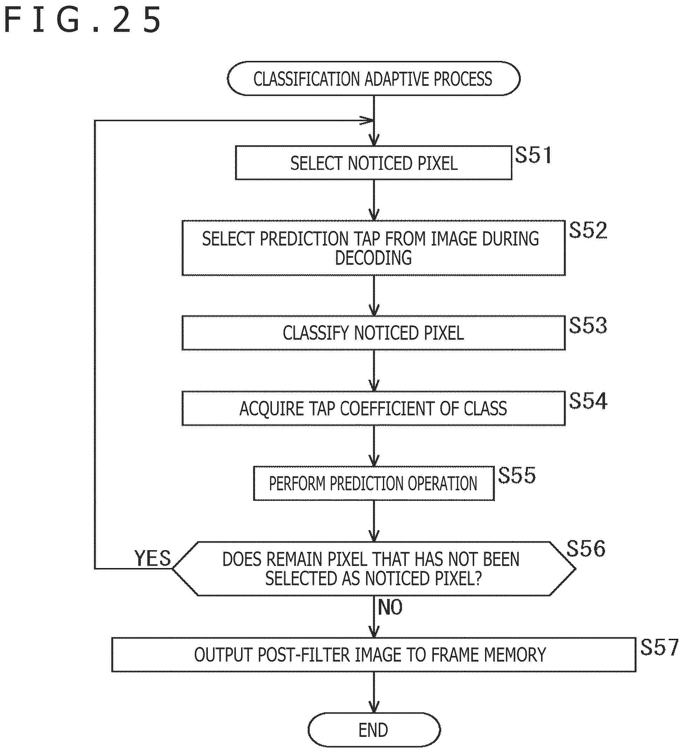

FIG. 25 is a flow chart illustrating an example of a classification adaptive process performed at step S42.

[FIG. 26]

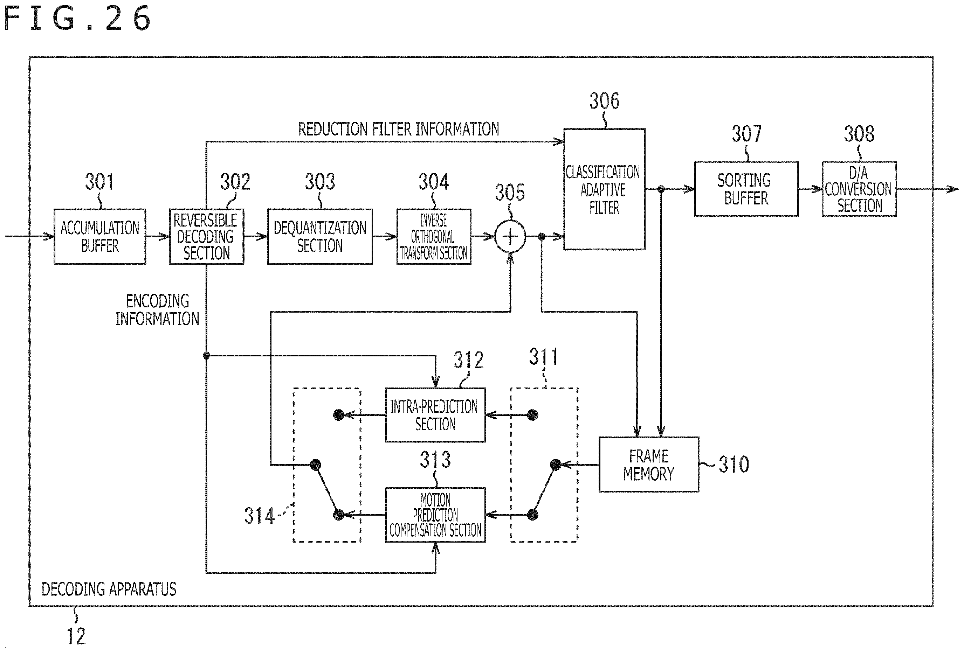

FIG. 26 is a block depicting a first example of a configuration of a decoding apparatus 12.

[FIG. 27]

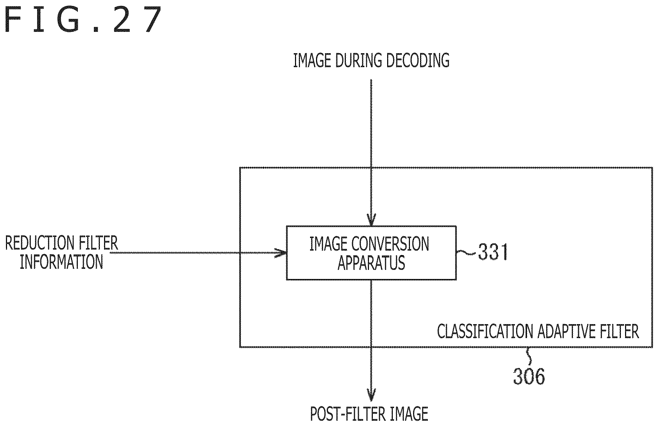

FIG. 27 is a block diagram depicting an example of a configuration of a classification adaptive filter 306.

[FIG. 28]

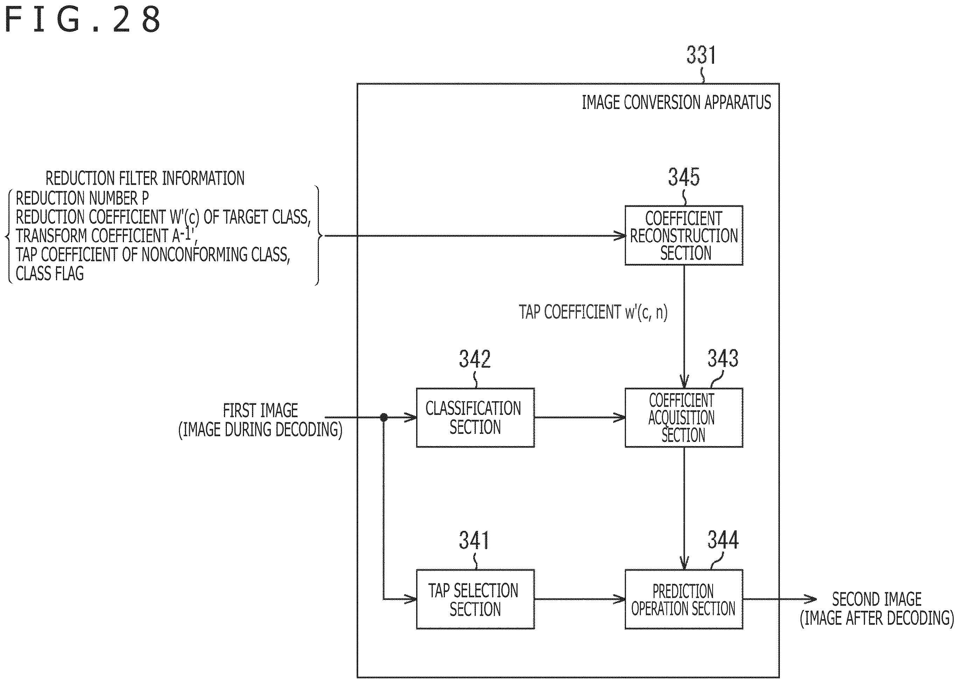

FIG. 28 is a block diagram depicting a first example of a configuration of an image conversion apparatus 331.

[FIG. 29]

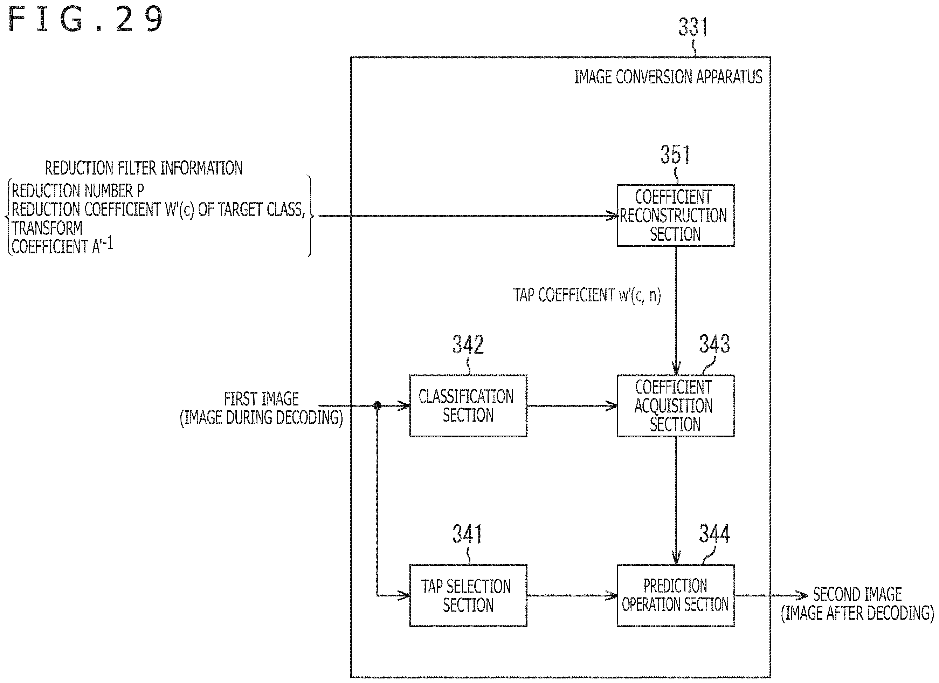

FIG. 29 is a block diagram depicting a second example of a configuration of the image conversion apparatus 331.

[FIG. 30]

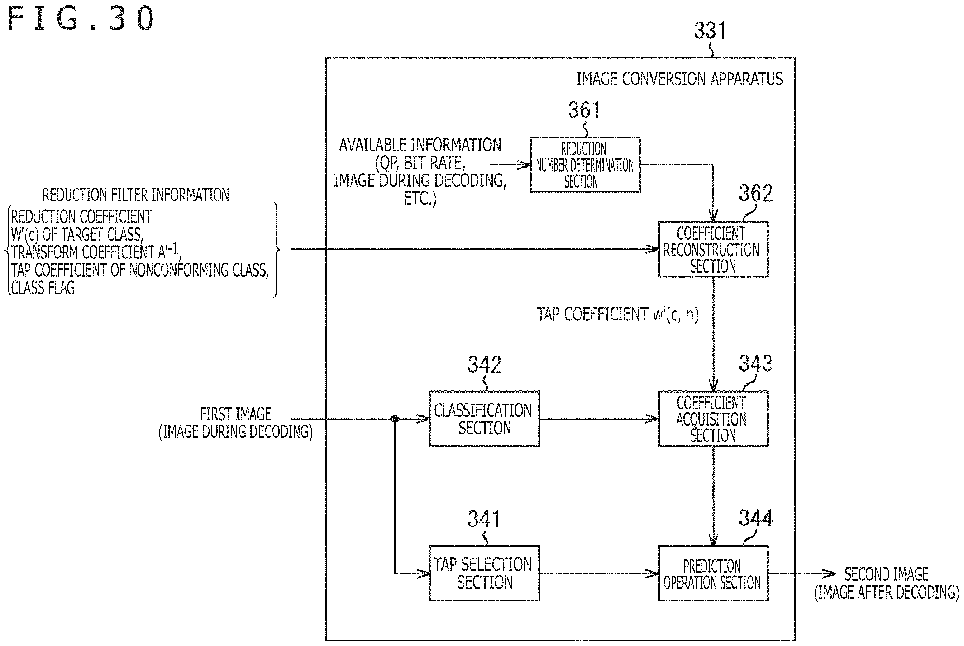

FIG. 30 is a block diagram depicting a third example of a configuration of the image conversion apparatus 331.

[FIG. 31]

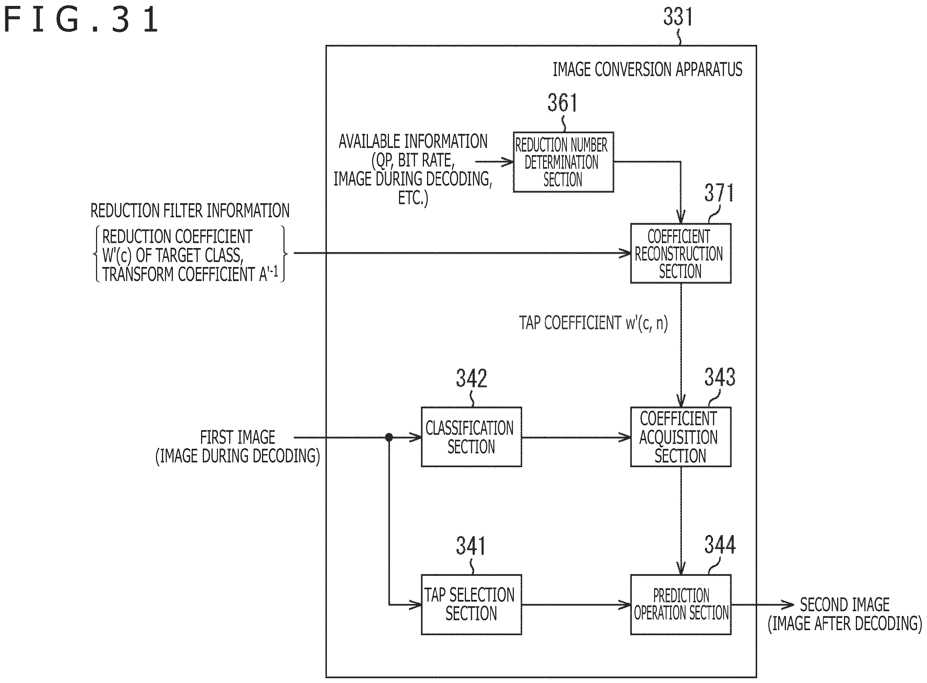

FIG. 31 is a block diagram depicting a fourth example of a configuration of the image conversion apparatus 331.

[FIG. 32]

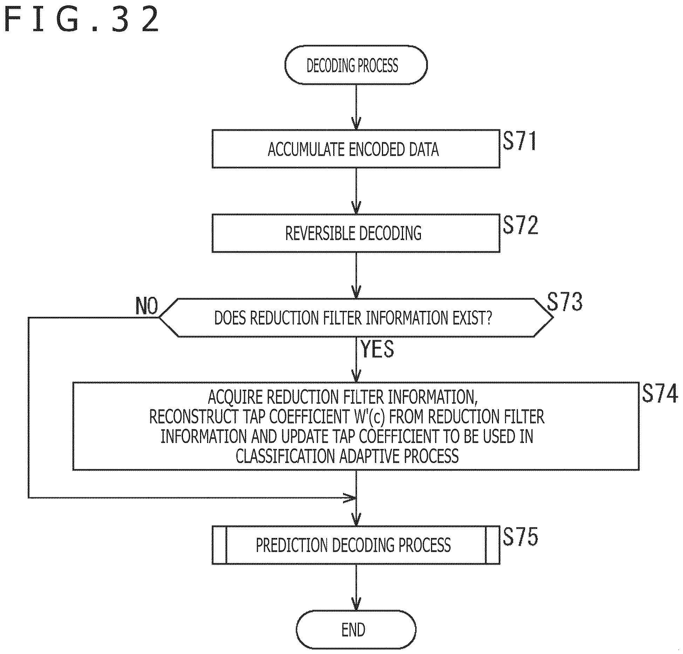

FIG. 32 is a flow chart illustrating an example of a decoding process of the decoding apparatus 12.

[FIG. 33]

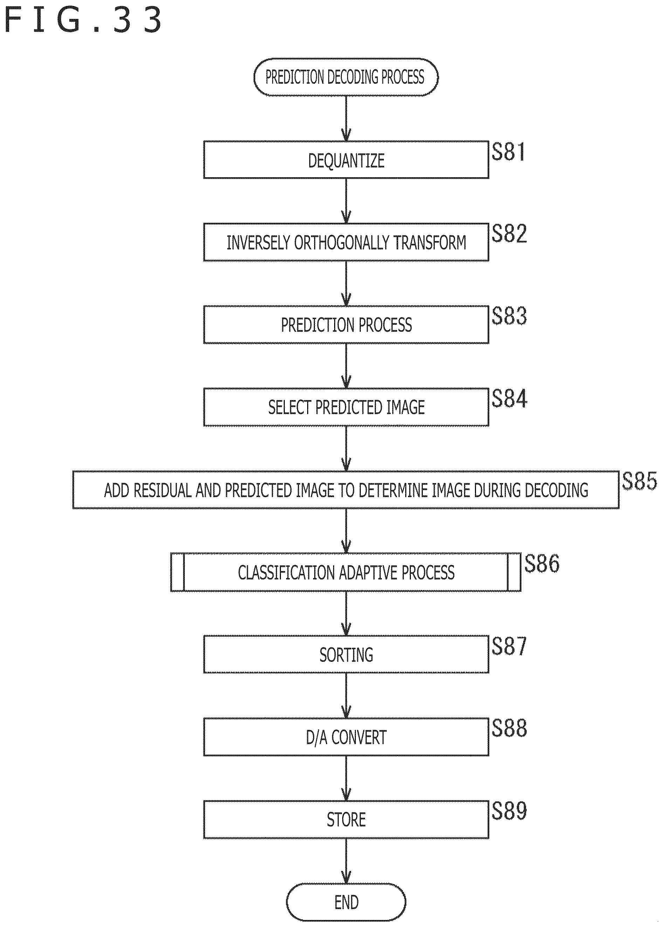

FIG. 33 is a flow chart illustrating an example of a prediction decoding process at step S75.
[FIG. 34]

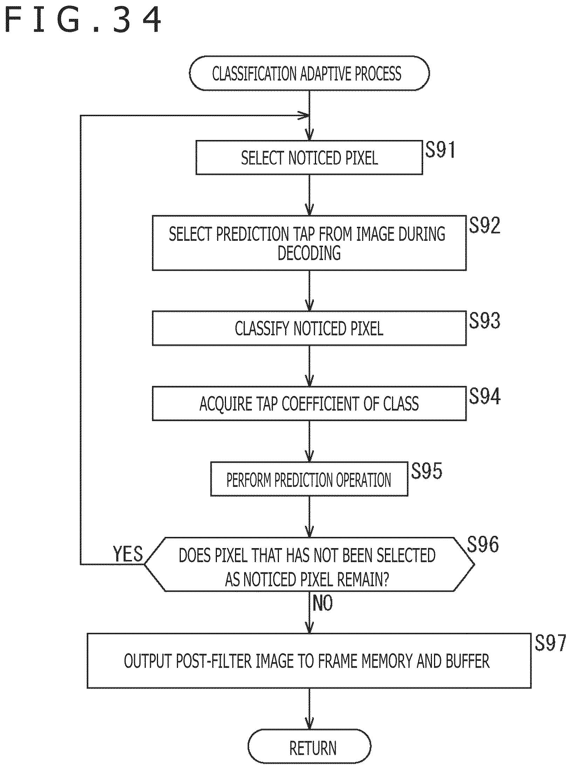

FIG. 34 is a flow chart illustrating an example of a classification adaptive process performed at step S86.
[FIG. 35]

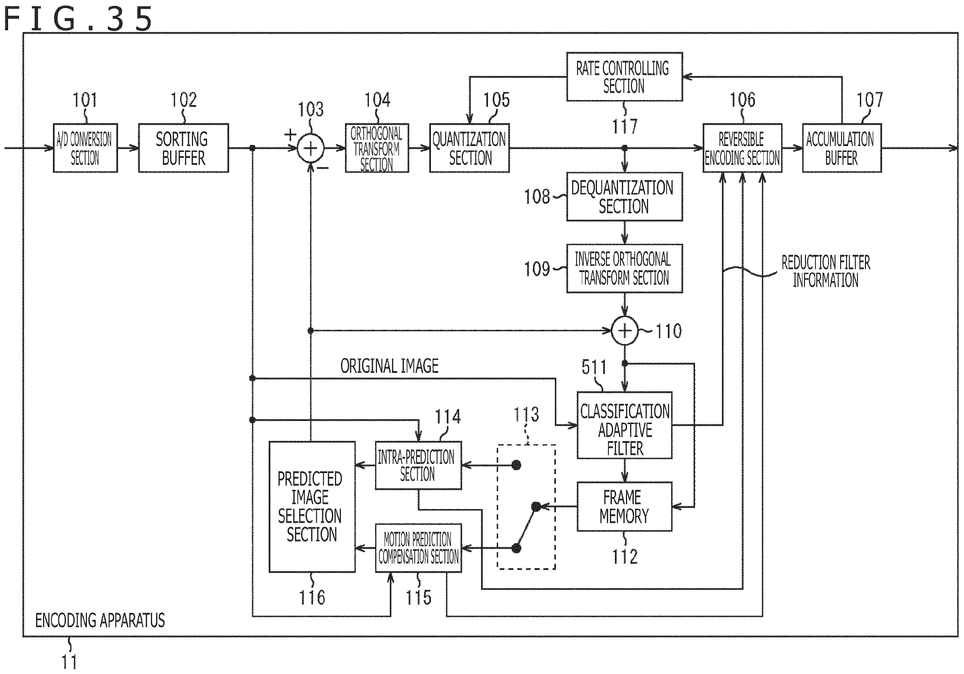

FIG. 35 is a block diagram depicting a second example of a configuration of the encoding apparatus 11.
[FIG. 36]

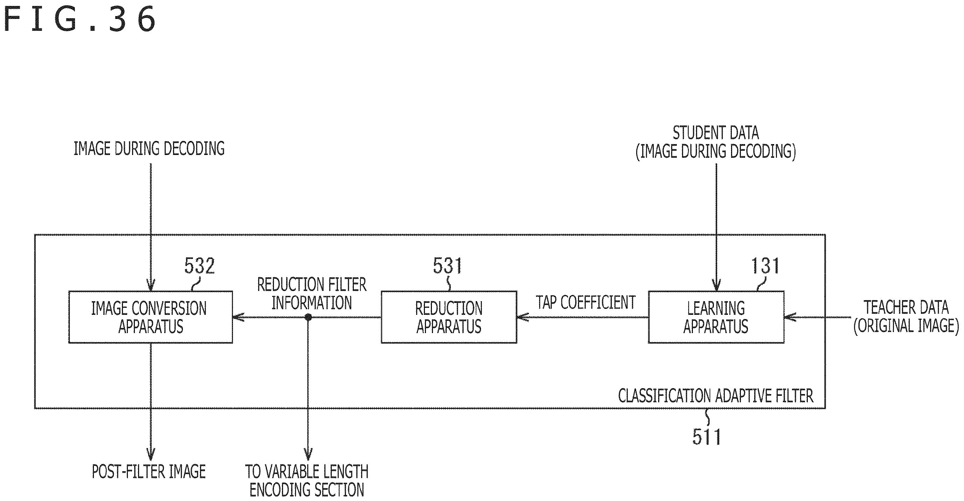

FIG. 36 is a block diagram depicting an example of a configuration of a classification adaptive filter 511.
[FIG. 37]

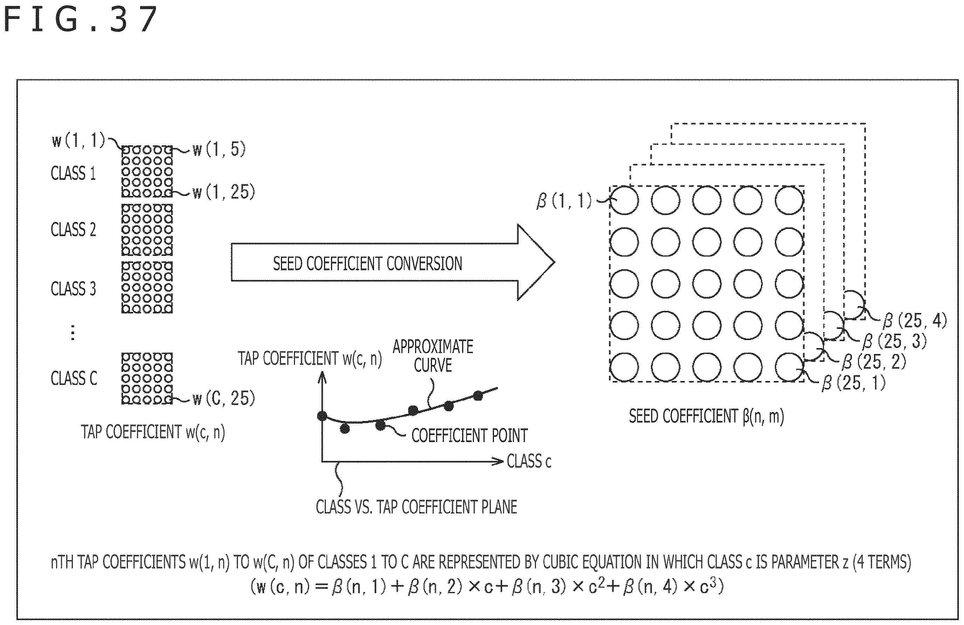

FIG. 37 is a view illustrating an overview of a seed coefficient utilization type reduction method.
[FIG. 38]

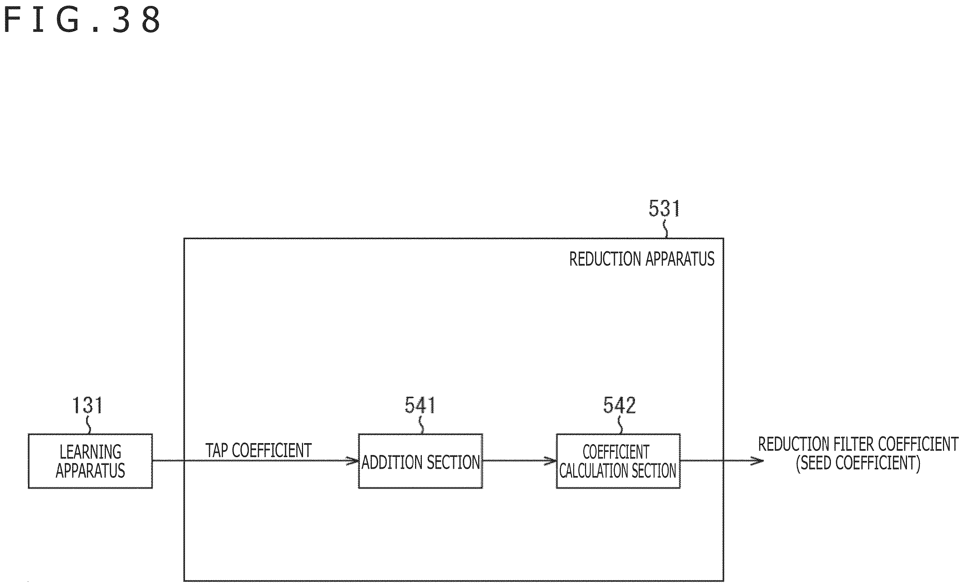

FIG. 38 is a block diagram depicting an example of a configuration of a reduction apparatus 531.
[FIG. 39]

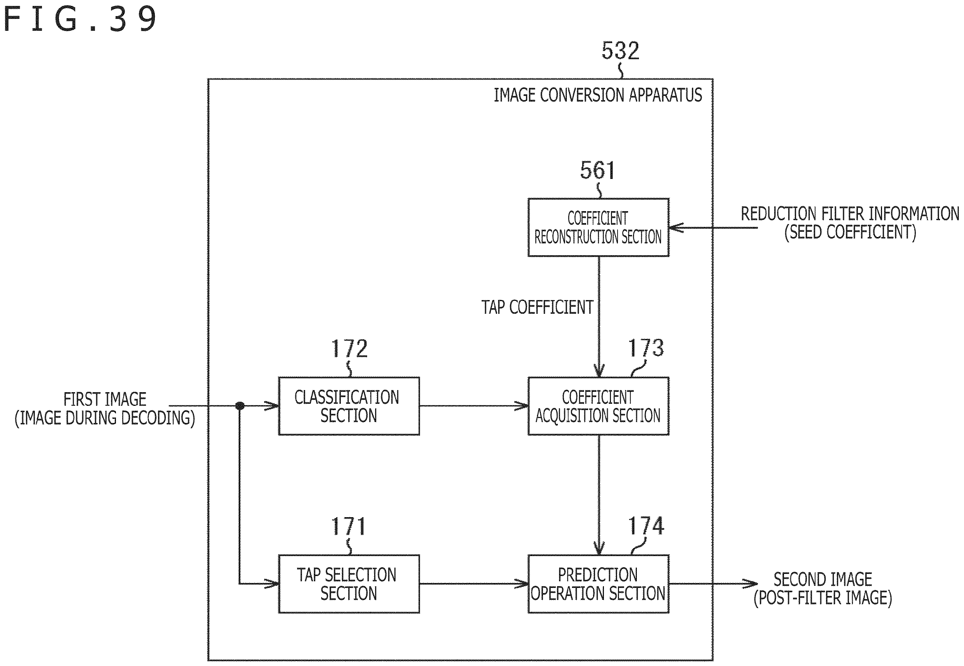

FIG. 39 is a block diagram depicting an example of a configuration of an image conversion apparatus 532.
[FIG. 40]

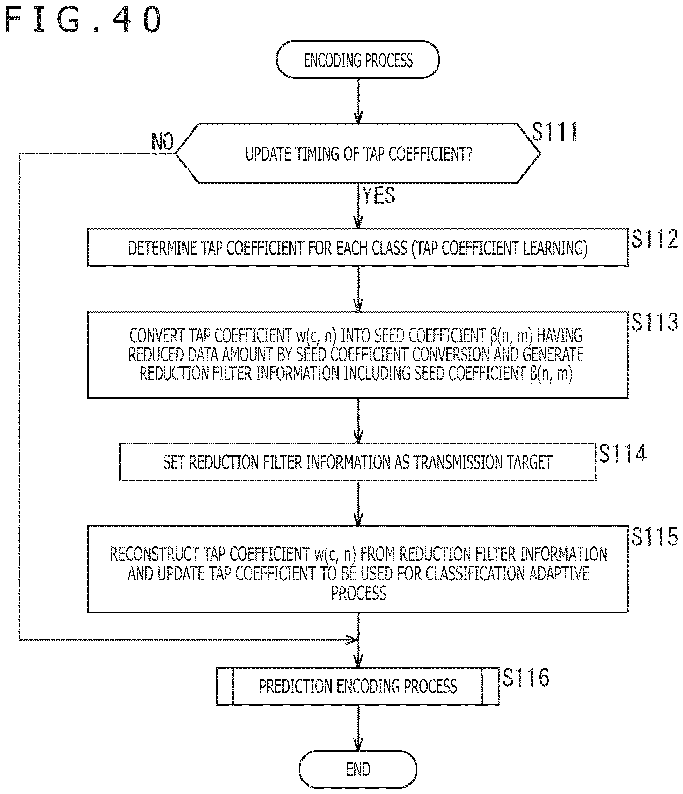

FIG. 40 is a flow chart illustrating an example of an encoding process of the encoding apparatus 11.
[FIG. 41]

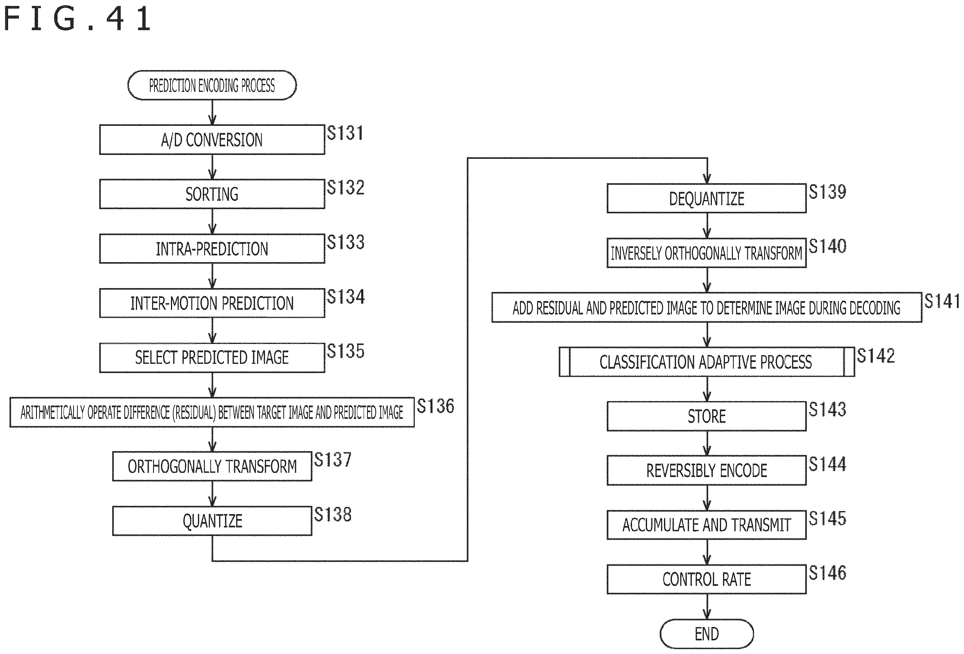

FIG. 41 is a flow chart illustrating an example of a prediction encoding process at step S116.
[FIG. 42]

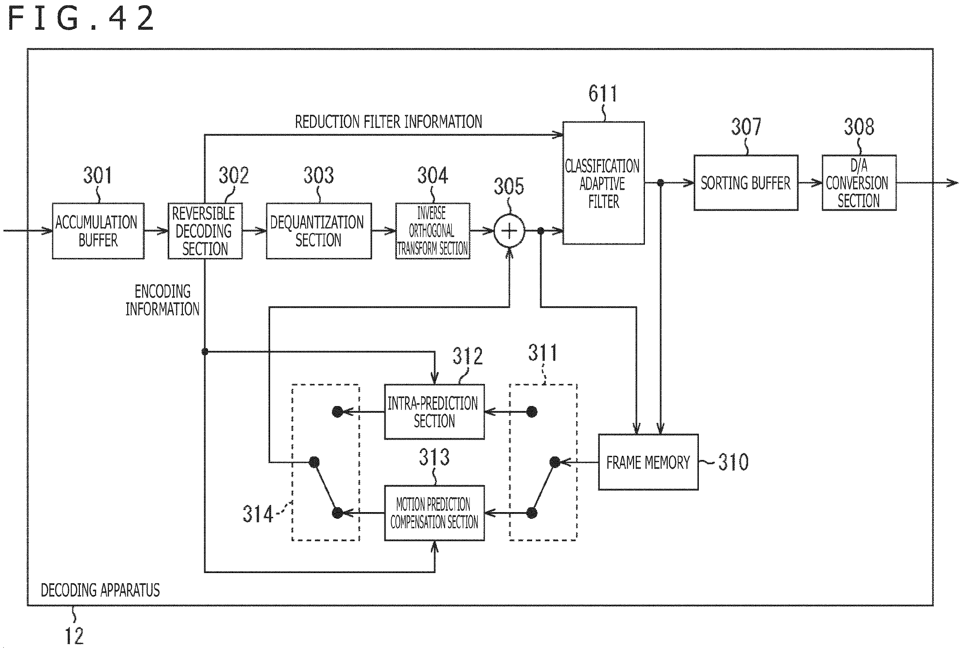

FIG. 42 is a block diagram depicting a second example of a configuration of the decoding apparatus 12.
[FIG. 43]

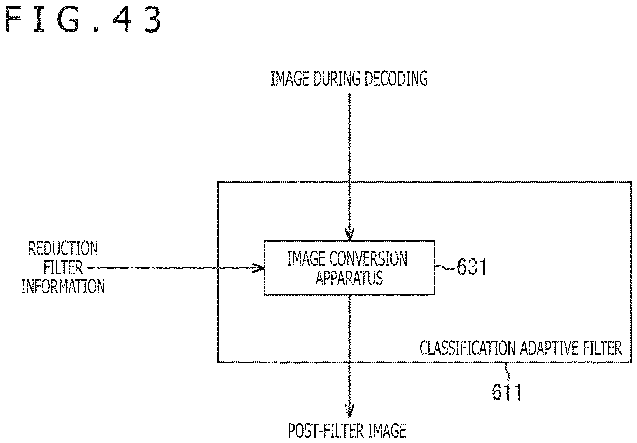

FIG. 43 is a block diagram depicting an example of a configuration of a classification adaptive filter 611.
[FIG. 44]

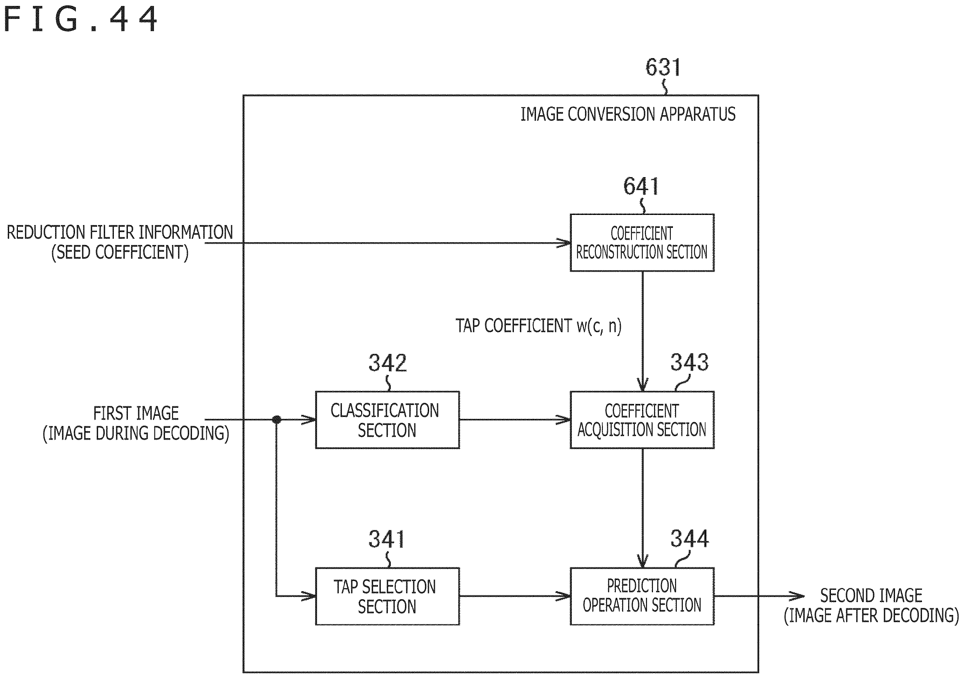

FIG. 44 is a block diagram depicting an example of a configuration of an image conversion apparatus 631.
[FIG. 45]

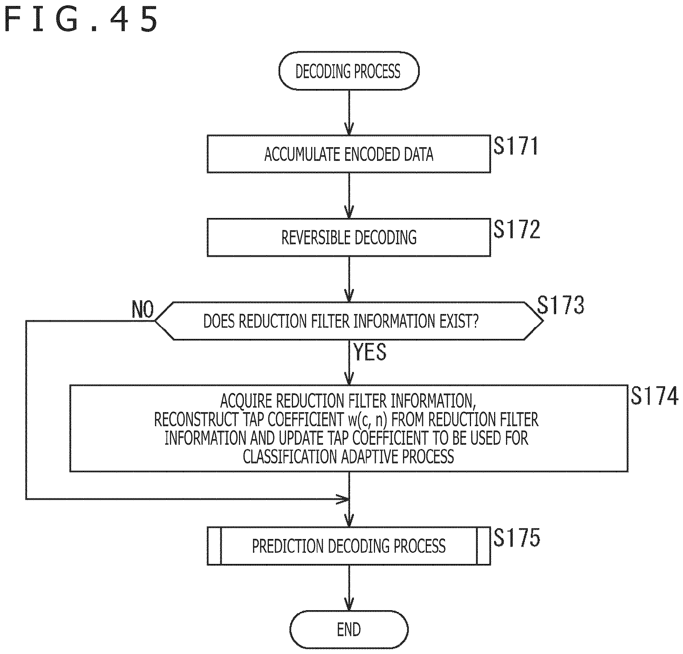

FIG. 45 is a flow chart illustrating a decoding process of the decoding apparatus 12.
[FIG. 46]

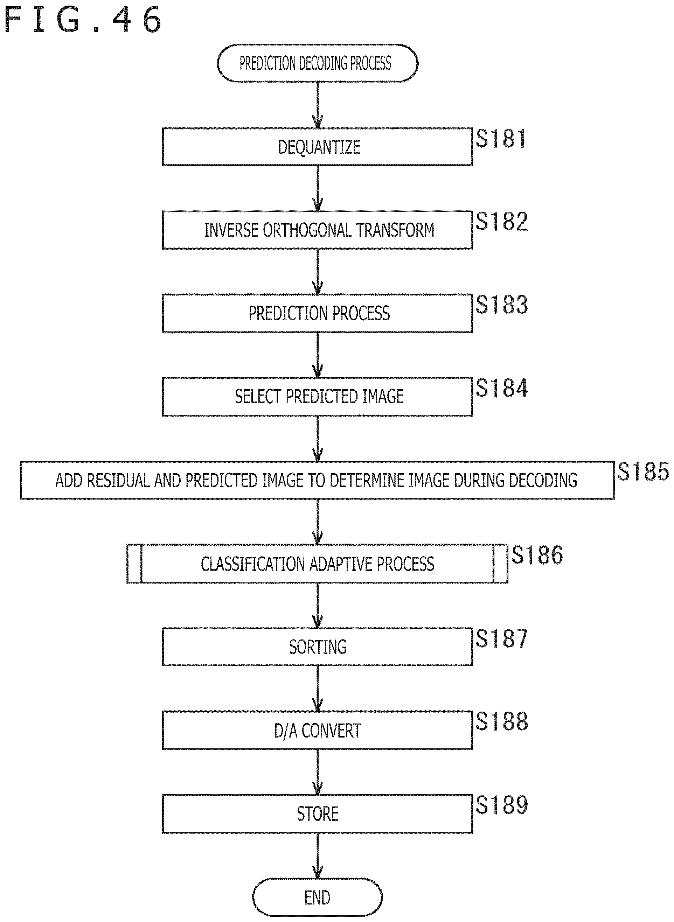

FIG. 46 is a flow chart illustrating an example of a prediction decoding process at step S175.
[FIG. 47]

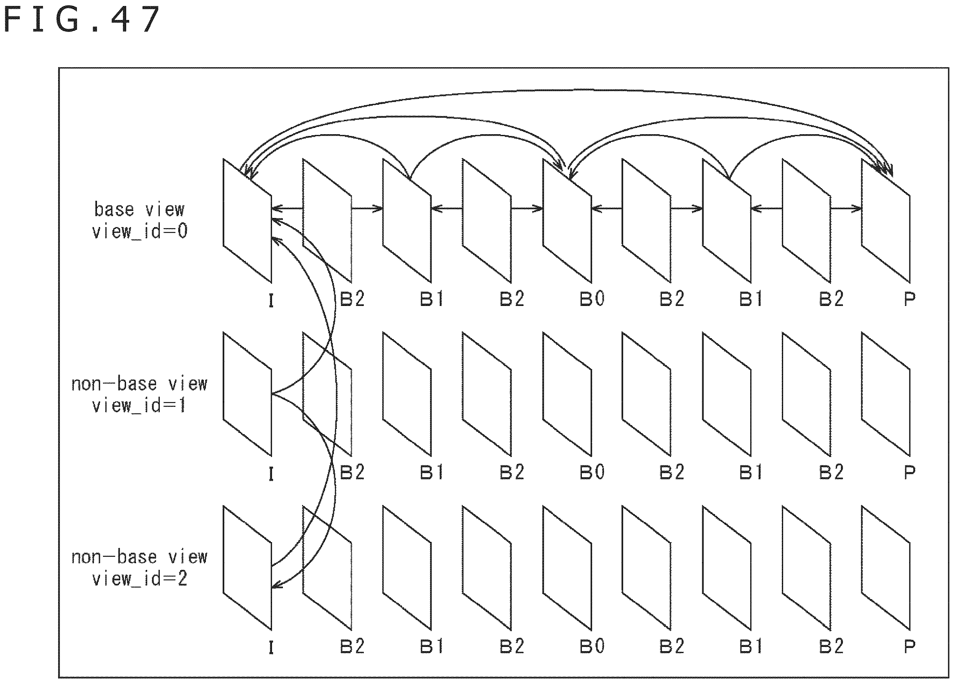

FIG. 47 is a view depicting an example of a multi-view image encoding method.
[FIG. 48]

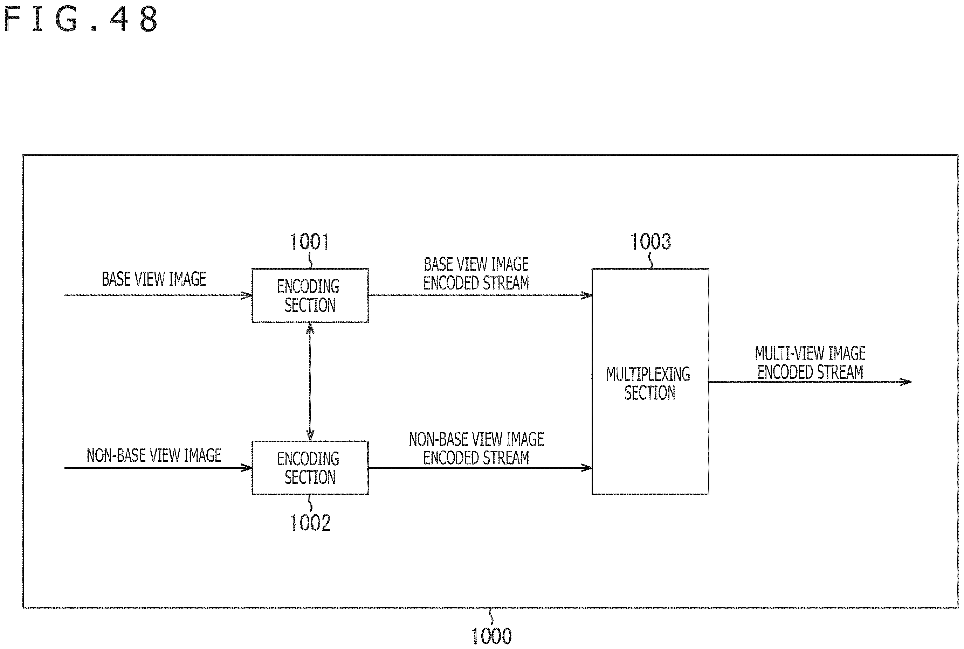

FIG. 48 is a view depicting an example of a main configuration of a multi-view image encoding apparatus to which the present technology is applied.
[FIG. 49]

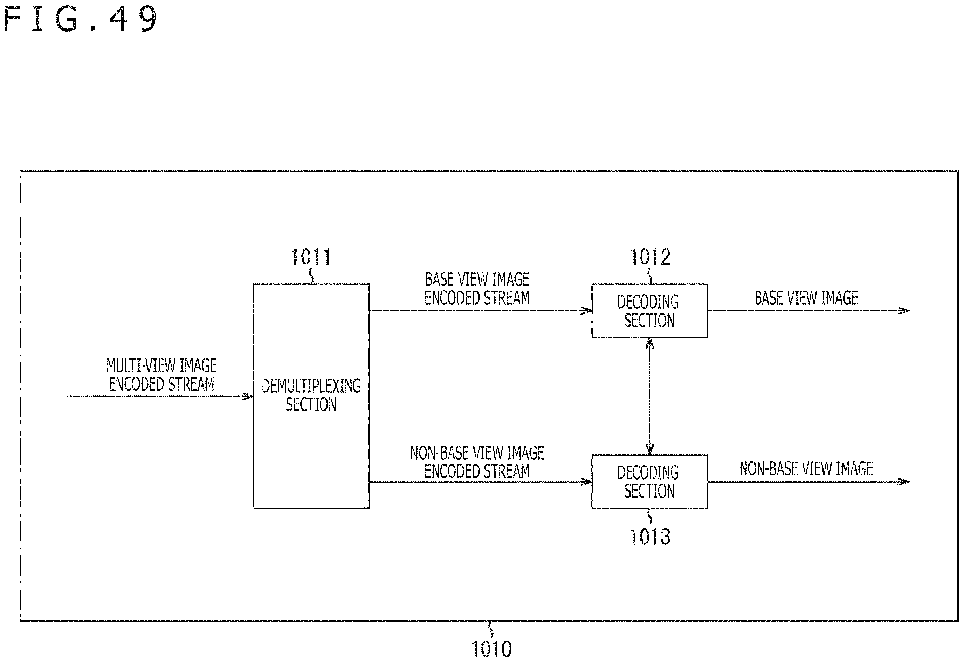

FIG. 49 is a view depicting an example of a main configuration of a multi-view image decoding apparatus to which the present technology is applied.
[FIG. 50]

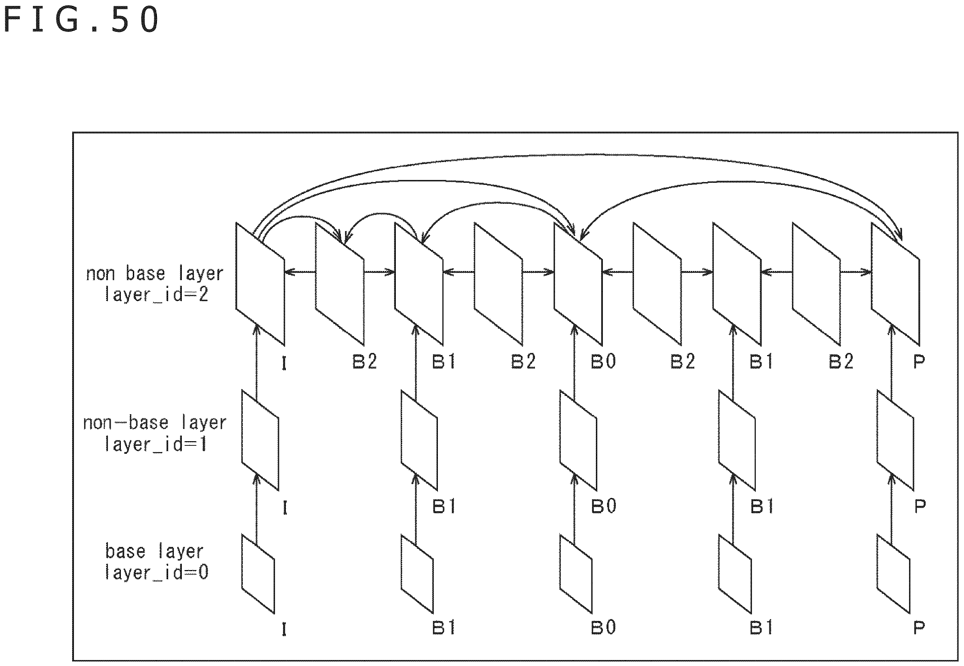

FIG. 50 is a view depicting an example of a hierarchical image encoding method.
[FIG. 51]

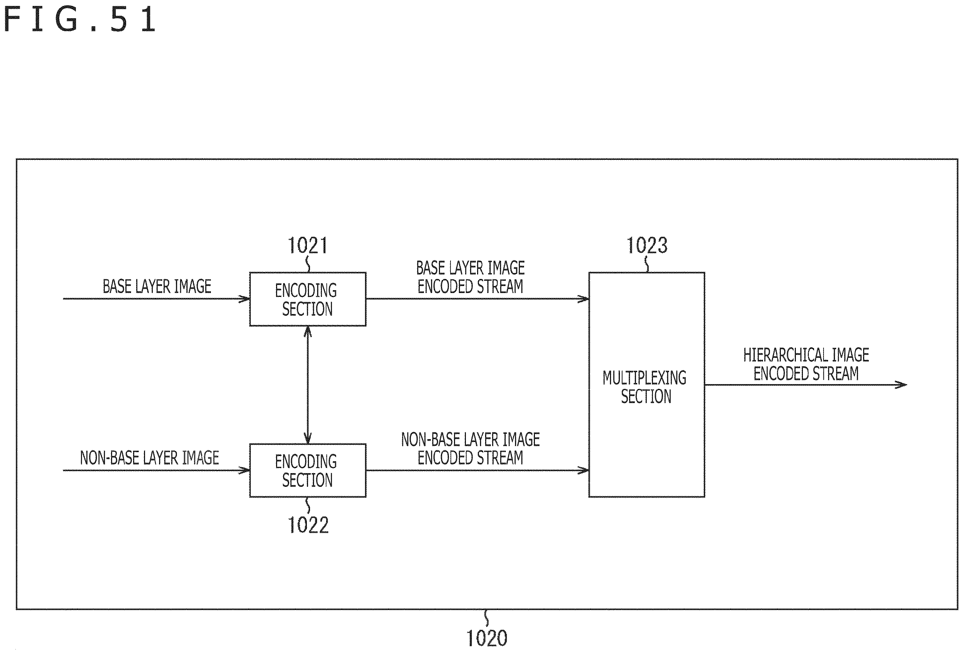

FIG. 51 is a view depicting an example of a main configuration of a hierarchical image encoding apparatus to which the present technology is applied.
[FIG. 52]

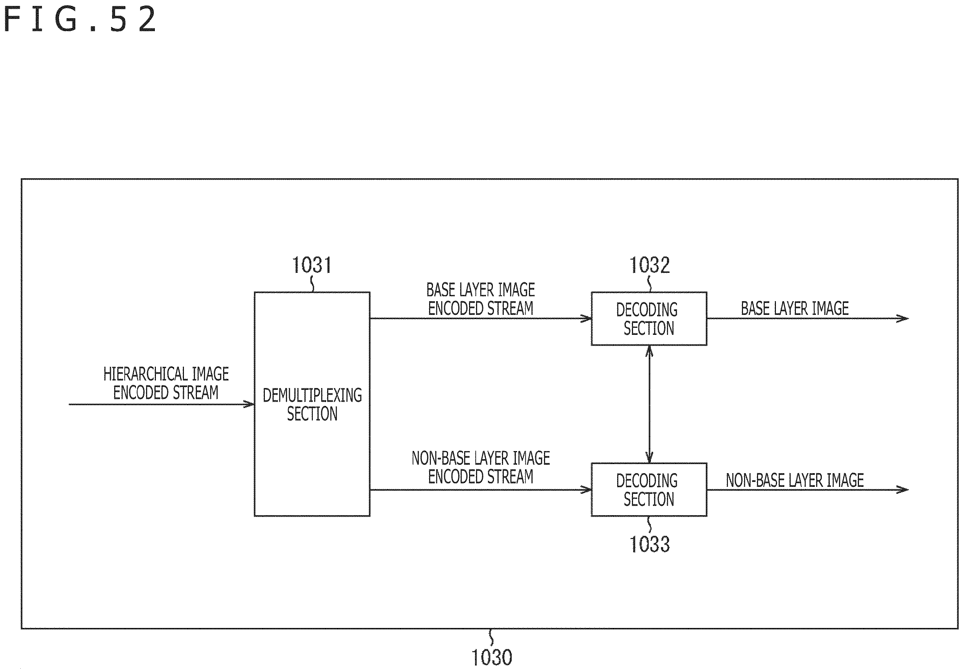

FIG. 52 is a view depicting an example of a main configuration of a hierarchical image decoding apparatus to which the present technology is applied.
[FIG. 53]

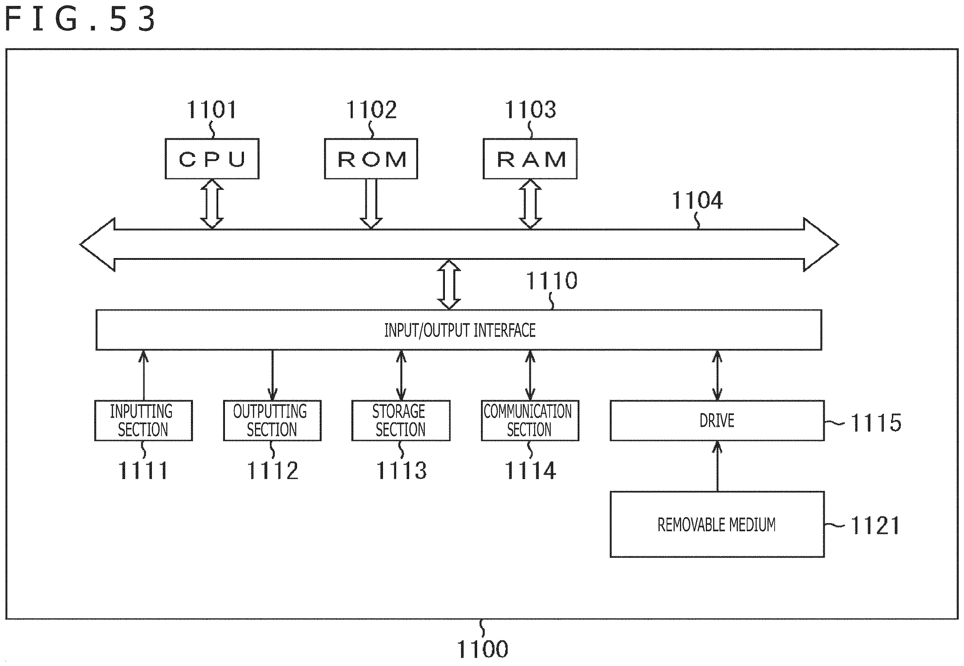

FIG. 53 is a block diagram depicting an example of a main configuration of a computer.
[FIG. 54]

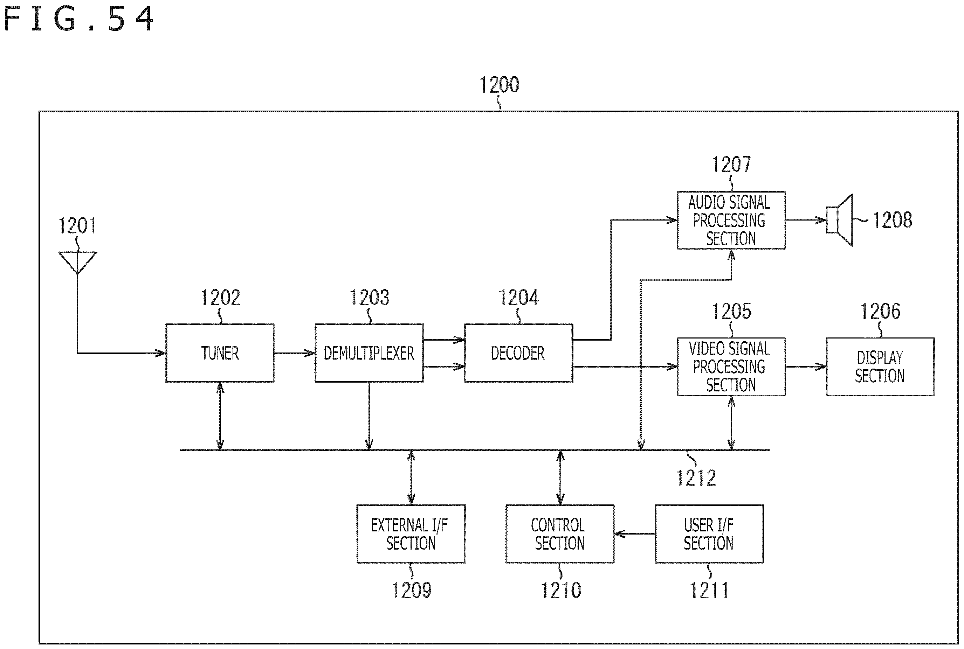

FIG. 54 is a block diagram depicting an example of a schematic configuration of a television apparatus.
[FIG. 55]

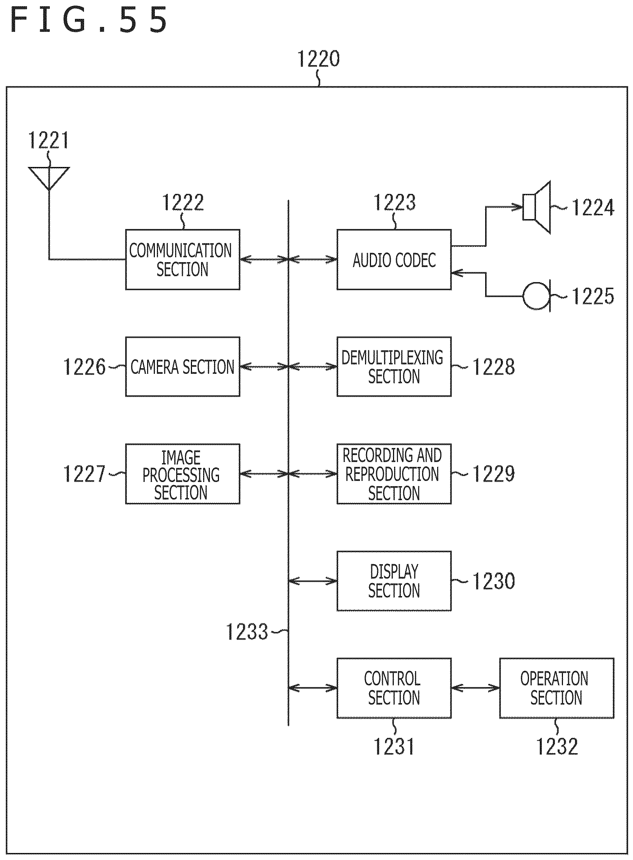

FIG. 55 is a block diagram depicting an example of a schematic configuration of a portable telephone set.
[FIG. 56]

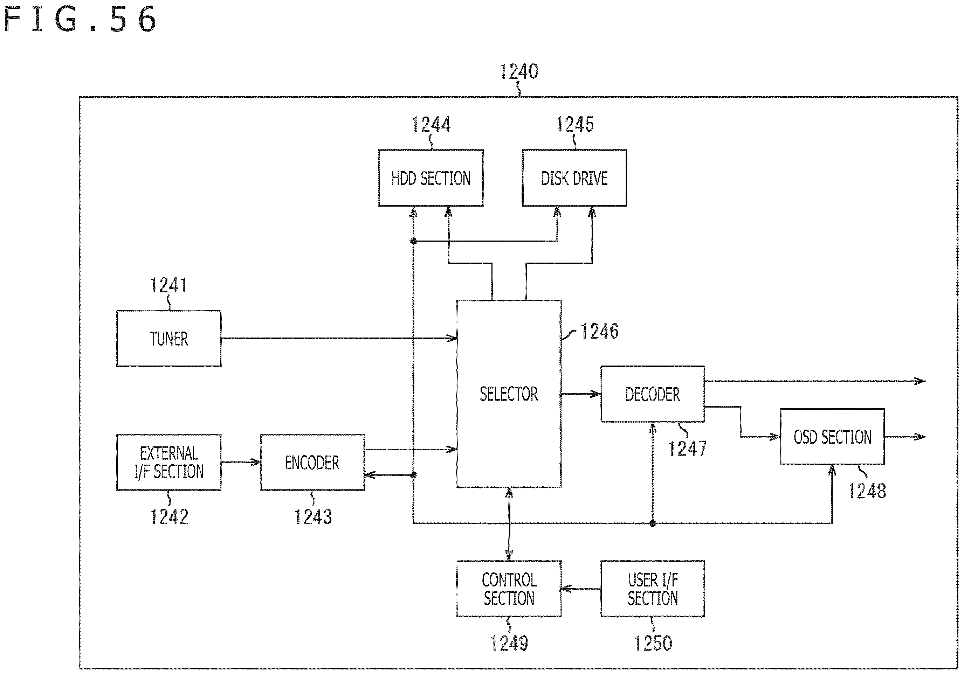

FIG. 56 is a block diagram depicting an example of a schematic configuration of a recording and reproduction apparatus.
[FIG. 57]

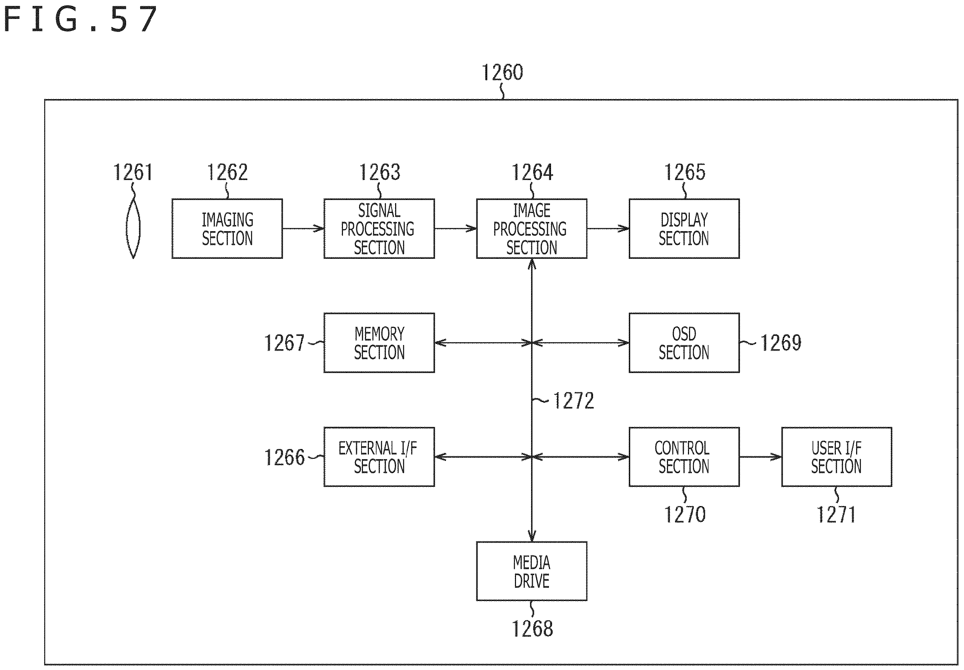

FIG. 57 is a block diagram depicting an example of a schematic configuration of an imaging apparatus.
[FIG. 58]

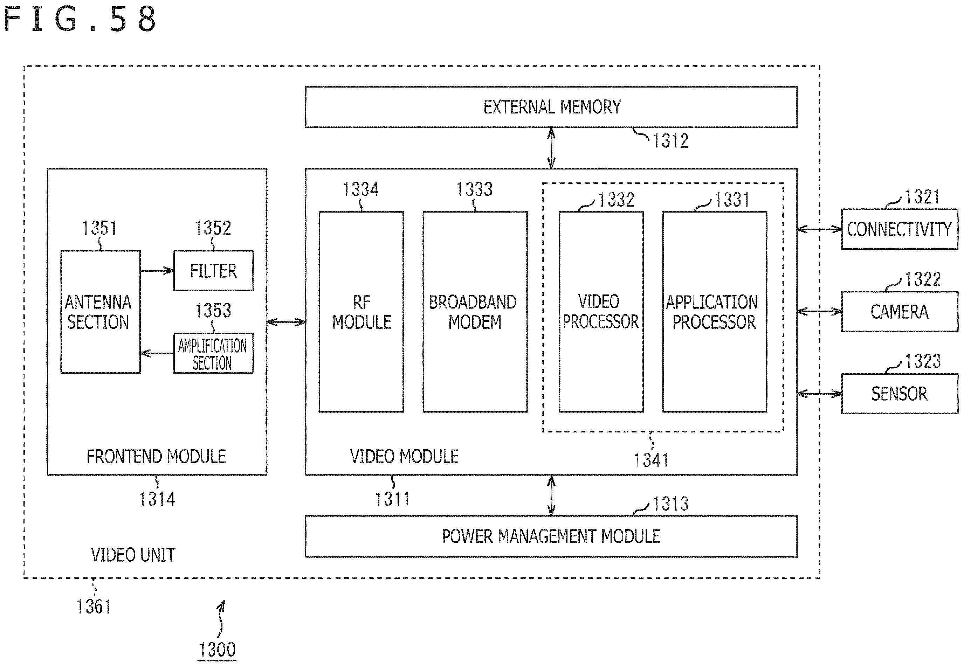

FIG. 58 is a block diagram depicting an example of a schematic configuration of a video set.
[FIG. 59]

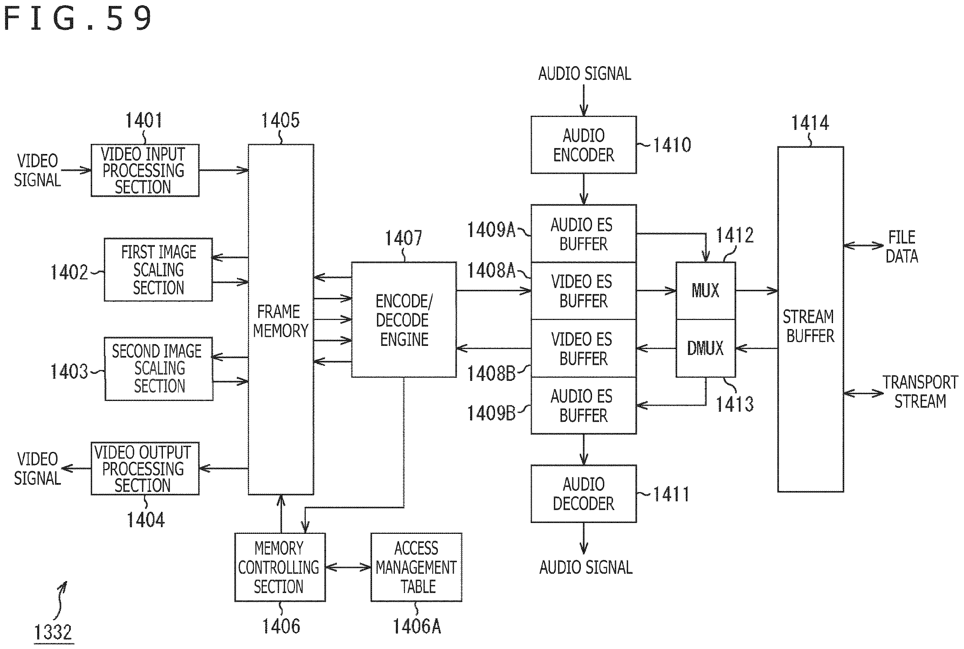

FIG. 59 is a block diagram depicting an example of a schematic configuration of a video processor.
[FIG. 60]

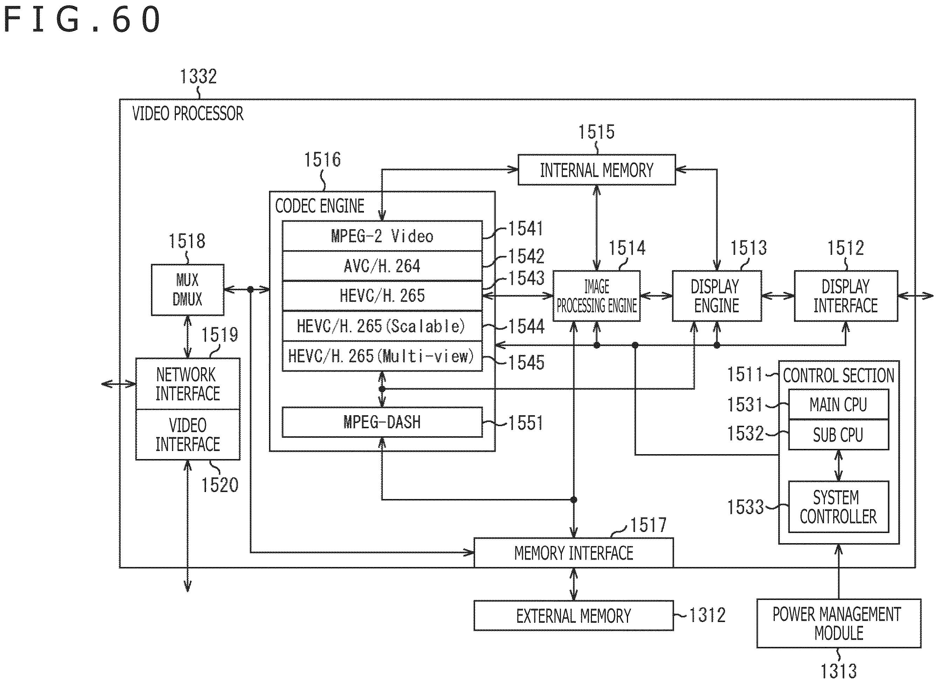

FIG. 60 is a block diagram depicting another example of a schematic configuration of a video processor.

[Description of Embodiments]

<Image Processing System to Which Present Technology Is Applied>

FIG. 1 is a view depicting an example of a configuration of an embodiment of an image processing system to which the present invention is applied.

Referring to FIG. 1, an image processing system includes an encoding apparatus 11 and a decoding apparatus 12.

To the encoding apparatus 11, an original image of an encoding target is supplied.

The encoding apparatus 11 encodes an original image by prediction encoding such as, for example, HEVC (High Efficiency Video Coding), AVC (Advanced Video Coding), or MPEG (Moving Picture Experts Group). It is to be noted that the predicting encoding of the encoding apparatus 11 is not restricted to HEVC or the like described above.

In prediction encoding of the encoding apparatus 11, a predicted image of an original image is generated, and a residual between the original image and the predicted image is encoded.

Further, in the prediction encoding of the encoding apparatus 11, an ILF process of applying an ILF (In Loop Filter) to an image during decoding obtained by adding the residual of the prediction encoding and the predicted image is performed to generate a reference image that is used in prediction for a predicted image.

Here, an image obtained by performing a filter process (filtering) as an ILF process for the image during decoding is referred to as post-filter image.

The encoding apparatus 11 performs prediction encoding and further performs learning using the image during decoding and the original image to determine a tap coefficient and so forth for performing a filter process as such an ILF process that, for example, a post-filter image comes near to the original image as far as possible.

Further, the encoding apparatus 11 performs a reduction process for generating reduction filter information of reduction of tap coefficients.

The ILF process of the encoding apparatus 11 is performed using tap coefficients obtained using the reduction filter information determined by the reduction process.

Here, the learning for determining a tap coefficient and so forth and the reduction process for generating reduction filter information can be performed in an arbitrary unit of one or a plurality of sequences of the original image, one or a plurality of scenes (frames from a scene change to a next scene change), one or a plurality of frames (pictures) of the original image, one or a plurality of slices of the original image, one or a plurality of lines of a block (CU, PU or the like) of a unit of encoding of a picture or the like. Further, the learning for determining reduction filter information can be performed, for example, in the case where the residual obtained by prediction encoding becomes equal to or higher than a threshold value or in a like case.

The encoding apparatus 11 transmits encoded data obtained by prediction encoding of the original image and reduction filter information obtained by the reduction process through a transmission medium 13 or transmits them to a recording medium 14 so as to be recorded into the recording medium 14.

It is to be noted that generation of reduction filter information (including learning of a tap coefficient as occasion demands) can be performed by an apparatus different from the encoding apparatus 11.

Also it is possible to transmit the reduction filter information separately from the encoded data or together with and included in the encoded data.

Further, the learning for determining a tap coefficient or the like can be performed not only using the original image itself (and an image during decoding obtained by prediction decoding of the original image) but also using an image that is different from the original image but is similar in image feature amount.

The decoding apparatus 12 accepts (receives) (acquires) the encoded data and the reduction filter transmitted from the encoding apparatus 11 through the transmission medium 13 or the recording medium 14 and decodes the encoded data by a method corresponding to that of the prediction encoding by the encoding apparatus 11.

In particular, the decoding apparatus 12 processes the encoded data from the encoding apparatus 11 to determine a residual of prediction encoding. Further, the decoding apparatus 12 adds the residual and the predicted image to determine an image during decoding similar to that obtained by the encoding apparatus 11. Then, the decoding apparatus 12 performs, for the image during decoding, a filter process as an ILF processes using tap images obtained using the reduction filter process from the encoding apparatus 11 and so forth to determine a post-filter image.

In the decoding apparatus 12, the post-filter image is outputted as a decoded image of the original image and, as occasion demands, is temporarily stored as a reference image that is used for prediction for a predicted image.

The filter process as an ILF process of the encoding apparatus 11 and the decoding apparatus 12 is performed by a classification adaptive process. In the following, the classification adaptive process is described.

<Classification Adaptive Process>

FIG. 2 is a block diagram depicting a first example of a configuration of the image conversion apparatus that performs the classification adaptive process.

Here, the classification adaptive process can be recognized, for example, as an image conversion process for converting a first image into a second image.

The image conversion process of converting a first image into a second image becomes various signal processes depending upon the definition of the first and second images.

In particular, for example, if the first image is defined as an image of a low spatial resolution and the second image is defined as an image of a high spatial resolution, then the image conversion process can be regarded as a spatial resolution creation (improvement) process for improving the spatial resolution.

On the other hand, for example, if the first image is an image of a low S/N ratio and the second image is an image of a high S/N ratio, then the image conversion process can be regarded as a noise removal process for removing noise.

Furthermore, for example, if the first image is an image of a predetermined pixel number (size) and the second image is an image whose pixel number is increased or decreased from that of the first image, then the image conversion process can be regarded as a resize process for performing resizing (expansion or reduction) of an image.

Further, for example, if the first image is a decoded image obtained by decoding an image encoded in a unit of a block by HEVC or the like and the second image is an original image before the encoding, then the image conversion process can be regarded as a distortion removal process for removing block distortion caused by encoding and decoding in a unit of a block.

It is to be noted that the classification adaptive process can be performed, in addition to an image, for example, for acoustic as a target of processing thereof. The classification adaptive process targeting acoustic can be regarded as an acoustic conversion process for converting first acoustic (for example, acoustic of a low S/N ratio or the like) into second acoustic (for example, acoustic of a high S/N ratio or the like).

In the classification adaptive process, a pixel value of a noticed pixel noticed within a first image (a processing target pixel of a processing target) is determined by prediction operation using tap coefficients of a class obtained by classifying the pixel value of the noticed pixel into one of a plurality of classes and pixel values of the number of pixels in the first image equal to the number of the tap coefficients, the pixels being selected for the noticed pixel.

FIG. 2 depicts a configuration of an image conversion apparatus that performs an image conversion process by the classification adaptive process.

Referring to FIG. 2, an image conversion apparatus 20 includes a tap selection section 21, a classification section 22, a coefficient acquisition section 23, and a prediction operation section 24.

To the image conversion apparatus 20, a first image is supplied. The first image supplied to the image conversion apparatus 20 is supplied to the tap selection section 21 and the classification section 22.

The tap selection section 21 selects pixels configuring a first image successively as a noticed pixel. Further, the tap selection section 21 selects some of (pixel values of) pixels configuring the first image and used to predict (a pixel value of) a corresponding pixel of a second image corresponding to the noticed pixel as a prediction tap.

In particular, the tap selection section 21 selects a plurality of pixels of the first pixel, which are positioned near in space or time from the position in time-space of the noticed pixel, as a prediction tap to configure the prediction tap, and supplies the prediction tap to the prediction operation section 24.

The classification section 22 performs classification for classifying the noticed pixel to one of several classes in accordance with a fixed rule and supplies a class code corresponding to the class obtained as a result of the classification to the coefficient acquisition section 23.

In particular, the classification section 22 selects, for example, as class taps, some of (the pixel values of) the pixels configuring the first image to be used to perform classification of the noticed pixel. For example, the classification section 22 selects class taps similarly as in selection of a prediction tap by the tap selection section 21.

It is to be noted that the prediction tap and the class tap may have the same tap structure or may have tap structures different from each other.

The classification section 22 classifies the noticed pixel, for example, using the class taps and supplies a class code corresponding to the class obtained as a result of the classification to the coefficient acquisition section 23.

For example, the classification section 22 determines an image feature amount of the noticed pixel using the class taps. Further, the classification section 22 classifies the noticed pixel in response to an image feature amount of the noticed pixel and supplies a class code corresponding to the class obtained as a result of the classification to the coefficient acquisition section 23.

Here, as the method for performing classification, for example, ADRC (Adaptive Dynamic Range Coding) or the like can be adopted.

In a method that uses ADRC, (a pixel value of) a pixel configuring a class tap is ADRC processed, and a class of the noticed pixel is determined in accordance with an ADRC code (ADRC value) obtained as a result of the ADRC process. The ADRC code represents a waveform pattern as an image feature amount of a small region including the noticed pixel.

It is to be noted that, in L-bit ADRC, for example, a maximum value MAX and a minimum value MIN of pixel values of pixels configuring class taps are detected and, using DR = MAX - MIN as a local dynamic range of the set, each pixel value of the pixels configuring the class taps is re-quantized into L bits. In particular, the minimum value MIN is subtracted from the pixel value of each of the pixels configuring the class taps, and the subtraction value is divided (re-quantized) by $DR/2^L$. Then, a bit string in which the pixel values of the pixels of L bits configuring the class taps obtained in such a manner as described above are arranged in a predetermined order is outputted as an ADRC code. Accordingly, for example, in the case where the class taps are subject to a 1-bit ADRC process, the pixel values of the pixels configuring the class taps are divided by an average value of the maximum value MAX and the minimum value MIN (truncates after decimal point), and by this, the pixel value of each pixel is represented by 1 bit (binarized). Then, a bit string in which such pixel values of 1 bit are arranged in a predetermined order is outputted as an ADRC code.

It is to be noted that also it is possible to configure the classification section 22 such that, for example, a pattern of a level distribution of pixel values of pixels configuring class taps is outputted as it is as a class code therefrom. However, in this case, if it is assumed that a class tap is configured from pixel values of N pixels and A bits are allocated to the pixel value of each pixel, then the number of cases of class codes to be outputted from the classification section 22 is $(2^N)^A$ and is a huge number that increases in exponential proportion to the bit number A of the pixel value of a pixel.

Accordingly, in the classification section 22, the information amount of class taps is preferably compressed by the ADRC process described above or by vector quantization or the like to perform classification.

Further, as the image feature amount to be used for classification, in addition to the ADRC code, for example, a DR (Dynamic Range) that is a difference between a maximum value and a minimum value of pixel values such as luminances of pixels configuring class taps, DiffMax and DR, which are maximum values of difference absolute values of pixel values of pixels adjacent in horizontal, vertical and oblique directions in class taps, and DiffMax/DR obtained using DiffMax, and so forth can be adopted.

The coefficient acquisition section 23 stores tap coefficients for individual classes determined by learning hereinafter described and further acquires, from among the stored tap coefficients, a tap coefficient of a class represented by a class code supplied from the classification section 22, namely, a tap coefficient of the class of the noticed pixel. Further, the coefficient acquisition section 23 supplies the tap coefficient of the class of the noticed pixel to the prediction operation section 24.

Here, the tap coefficient is a coefficient corresponding to a coefficient to be multiplied with input data in a so-called tap in a digital filter.

The prediction operation section 24 uses a prediction tap outputted from the tap selection section 21 and a tap coefficient supplied from the coefficient acquisition section 23 to perform predetermined prediction operation for determining a predicted value of a true value of a pixel value of a pixel (corresponding pixel) of a second pixel corresponding to a noticed pixel. Consequently, the prediction operation section 24 determines and outputs (a predicted value of) the pixel value of the corresponding pixel, namely, a pixel value of a pixel configuring the second image.

FIG. 3 is a block diagram depicting an example of a configuration of a learning apparatus that performs learning of tap coefficients to be stored into the coefficient acquisition section 23.

Here, a case is considered in which, for example, determining an image of high picture quality (high picture quality image) as the second image and determining an image of low picture quality (low picture quality image) whose picture quality (resolution) is decreased by filtering the high picture quality image with an LPF (Low Pass Filter) or the like as the first image, a prediction tap is selected from within the low picture quality image and the prediction tap and a tap coefficient are used to determine (predict) a pixel value of a pixel of the high picture quality image (high picture quality pixel) by predetermined prediction operation.

If, for example, linear first-order prediction operation is adopted as the predetermined prediction operation, then a pixel value y of a high picture quality pixel is determined by the following linear first-order equation.

[Math. 1]

$$y = \sum_{n=1}^{N} w_n x_n \qquad \cdots \quad (1)$$

It is to be noted that, in the expression (1) above, $x_n$ represents a pixel value of an nth pixel of the low picture quality image (hereinafter referred to suitably as low picture quality pixel) configuring the prediction tap for the high picture quality pixel y as a corresponding pixel, and $w_n$ represents an nth tap coefficient to be multiplied with (the pixel value of) the nth low picture quality pixel. It is to be noted that it is assumed that, in the expression (1), the prediction tap is configured from N low picture quality pixels $x_1, x_2, ..., x_N$.

Here, also it is possible to determine the pixel value y of the high picture quality pixel not by the linear first-order equation indicated by the expression (1) but by a second-order or higher high-order equation.

Here, if the true value of the pixel value of the high picture quality pixel of the kth sample is represented by $y_k$ and the predicted value of the true value $y_k$ obtained by the equation (1) is represented by $y_k'$, then the prediction error $e_k$ of the same is represented by the following expression.

[Math. 2]

$$e_k = y_k - y_k' \quad \cdots \quad (2)$$

Now, since the predicted value $y_k'$ of the expression (2) is determined in accordance with the expression (1), if $y_k'$ of the expression (2) is replaced in accordance with the equation (1), then the following expression is obtained.

[Math. 3]

$$e_k = y_k - \left( \sum_{n=1}^{N} w_n x_{n,k} \right) \quad \cdots \quad (3)$$

However, in the expression (3), $x_{n,k}$ represents the nth low picture quality pixel configuring the prediction tap for the high picture quality pixel of the kth sample as the corresponding pixel.

Although the tap coefficient $w_n$ with which the prediction error $e_k$ of the expression (3) (or the expression (2)) becomes 0 is optimum for prediction of the high picture quality pixel, it is generally difficult to determine such tap coefficient $w_n$ in regard to all high picture quality pixels.

Thus, if it is assumed that, as a norm that represents that the tap coefficient $w_n$ is optimum, for example, the least square method is adopted, then the optimum tap coefficient $w_n$ can be determined by minimizing the sum total E (statistical error) of squared errors represented by the following expression.

[Math. 4]

$$E = \sum_{k=1}^{K} e_k^2 \quad \cdots \quad (4)$$

It is to be noted that, in the expression (4), K represents a sample number (number of samples for learning) of a set of a high picture quality pixel $y_k$ as a corresponding pixel and low picture quality pixels $x_{1,k}, x_{2,k}, ..., x_{N,k}$ that configure a prediction tap for the high picture quality pixel $y_k$.

The minimum value (lowest value) of the sum total E of the squared errors of the expression (4) is given by $w_n$ with which a result of partial differentiation of the sum total E by the tap coefficient $w_n$ is 0 as indicated by the expression (5).

[Math. 5]

$$\frac{\partial E}{\partial w_n} = e_1 \frac{\partial e_1}{\partial w_n} + e_2 \frac{\partial e_2}{\partial w_n} + \cdots + e_k \frac{\partial e_k}{\partial w_n} = 0 \quad (n=1, 2, \cdots, N) \quad \cdots$$

$$(5)$$

Thus, by partially differentiating the expression (3) given hereinabove with the tap coefficient $w_n$, the following expression is obtained.

[Math. 6]

$$\frac{\partial e_k}{\partial w_1} = -x_{1,k}, \ \frac{\partial e_k}{\partial w_2} = -x_{2,k}, \cdots, \ \frac{\partial e_k}{\partial w_N} = -x_{N,k}, \ (k=1, 2, \cdots, K) \quad \cdots$$

$$(6)$$

From the expressions (5) and (6), the following expression is obtained.
[Math. 7]

$$\sum_{k=1}^{K} e_k x_{1,k} = 0, \ \sum_{k=1}^{K} e_k x_{2,k} = 0, \cdots \sum_{k=1}^{K} e_k x_{N,k} = 0 \quad \cdots \ (7)$$

By substituting the expression (3) into $e_k$ of the expression (7), the expression (7) can be represented by a normal equation given by the expression (8).

[Math. 8]

$$\begin{bmatrix} \left(\sum_{k=1}^{K} x_{1,k}x_{1,k}\right) & \left(\sum_{k=1}^{K} x_{1,k}x_{2,k}\right) & \cdots & \left(\sum_{k=1}^{K} x_{1,k}x_{N,k}\right) \\ \left(\sum_{k=1}^{K} x_{2,k}x_{1,k}\right) & \left(\sum_{k=1}^{K} x_{2,k}x_{2,k}\right) & \cdots & \left(\sum_{k=1}^{K} x_{2,k}x_{N,k}\right) \\ \vdots & \vdots & \ddots & \vdots \\ \left(\sum_{k=1}^{K} x_{N,k}x_{1,k}\right) & \left(\sum_{k=1}^{K} x_{N,k}x_{2,k}\right) & \cdots & \left(\sum_{k=1}^{K} x_{N,k}x_{N,k}\right) \end{bmatrix} \begin{bmatrix} w_1 \\ w_2 \\ \vdots \\ w_N \end{bmatrix} = \begin{bmatrix} \left(\sum_{k=1}^{K} x_{1,k}y_k\right) \\ \left(\sum_{k=1}^{K} x_{2,k}y_k\right) \\ \vdots \\ \left(\sum_{k=1}^{K} x_{N,k}y_k\right) \end{bmatrix}$$

$$\cdots \ (8)$$

The normal equation of the expression (8) can be solved for the tap coefficient $w_n$, for example, using a sweeping method (Gauss-Jordan elimination method) or the like.

By creating and solving the normal equation of the expression (8) for each class, an optimum tap coefficient (here, a tap coefficient that minimizes the sum total E of the squared errors) $w_n$ can be determined for each class.

FIG. 3 depicts an example of a configuration of a learning apparatus that performs learning for determining a tap coefficient $w_n$ by creating and solving the normal equation of the expression (8).

Referring to FIG. 3, a learning apparatus 40 includes a teacher data generation section 41, a student data generation section 42, and a learning section 43.

To the teacher data generation section 41 and the student data generation section 42, a learning image to be used for learning of a tap coefficient $w_n$ (image as a sample for learning) is supplied. As the learning image, for example, a high picture quality image having a high resolution can be used.

The teacher data generation section 32 generates, from the learning image, a teacher image that is a mapping destination of mapping as prediction operation in accordance with the expression (1) as teacher data that becomes a teacher (true value) of learning of a tap coefficient, namely, teacher data to be obtained by a classification adaptive process, and supplies the generated teacher data to the learning section 43. Here, the teacher data generation section 32 supplies, for example, the high picture quality image as a learning image as it is as a teacher image to the learning section 43.

The student data generation section 42 generates, from the learning image, a student image, which becomes a conversion target by mapping as prediction operation in accordance with the expression (1), as student data that becomes a student of learning of a tap coefficient, namely, as student data that becomes a target of prediction operation with a tap coefficient in a classification adaptive process, and supplies the student image to the learning section 43. Here, the student data generation section 42 performs, for example, filtering of a high picture quality image as a learning image with an LPF (Low Pass Filter) to decrease the resolution of the learning image to generate a low picture quality image, and supplies the low picture quality image as a teacher image to the learning section 43.

The learning section 43 successively determines pixels, which configure the student image as student data from the student data generation section 42, as a noticed pixel and selects, in regard to the noticed pixel, a pixel of a tap structure same as that to be selected by the tap selection section 21 of FIG. 2 as a prediction tap from the student image. Further, the learning section 43 uses a corresponding pixel configuring the teacher image and corresponding to the noticed pixel and the prediction tap of the noticed pixel to create and solve the normal equation of the expression (8) for each class to determine a tap coefficient for each class.

FIG. 4 is a block diagram depicting an example of a configuration of the learning section 43 of FIG. 3.

Referring to FIG. 4, the learning section 43 includes a tap selection section 51, a classification section 52, an addition section 53, and a coefficient calculation section 54.

A student image (student data) is supplied to the tap selection section 51 and the classification section 52, and a teacher image (teacher data) is supplied to the addition section 53.

The tap selection section 51 successively selects pixels configuring the student image as a noticed pixel and supplies information representative of the noticed pixel to necessary blocks.

Further, the tap selection section 51 selects, in regard to the noticed pixel, a pixel same as that to be selected by the tap selection section 21 of FIG. 2 as a prediction tap from among the pixels configuring the student image, thereby obtaining a prediction tap of a tap structure same as that obtained by the tap selection section 21, and supplies the prediction tap to the addition section 53.

The classification section 52 uses the student image to perform classification same as that by the classification section 22 of FIG. 2 for the noticed pixel and outputs a class code corresponding to a class of the noticed pixel obtained as a result of the classification to the addition section 53.

For example, the classification section 52 selects, in regard to the noticed pixel, a pixel same as that to be selected by the classification section 22 of FIG. 2 as a class tap from among the pixels configuring the student image, thereby configuring a class tap of a tap structure same as that obtained by the classification section 22. Further, the classification section 52 uses the class tap of the noticed pixel to perform classification same as that by the classification section 22 of FIG. 2 and outputs a class code corresponding to a class of the noticed pixel obtained as a result of the classification to the addition section 53.

The addition section 53 acquires, from among the pixels configuring the teacher image (teacher data), (a pixel value of) a corresponding pixel corresponding to the noticed pixel. Further, the addition section 53 performs addition targeting the corresponding pixel and (the pixel value of) the pixel of the student image configuring the prediction tap regarding the noticed pixel supplied from the tap selection section 51 for each of class codes supplied from the classification section 52.

In particular, to the addition section 53, a corresponding pixel $y_k$ of the teacher image as teacher data, a prediction tap $x_{n,k}$ of the noticed pixel as the student data and a class code representative of the class of the noticed pixel.

The addition section 53 uses the prediction tap (student data) $x_{n,k}$ for each class of the noticed pixel to perform multiplication ($x_{n,k}x_{n',k}$) between, and arithmetic operation corresponding to summation ($\Sigma$) of, the student data in the matrix on the left side of the expression (8).

Further, the addition section 53 uses, also for each class of the noticed pixel, the prediction tap (student data) $x_{n,k}$ and the teacher data $y_k$ to perform multiplication ($x_{n,k}y_k$), and arithmetic operation corresponding to summation ($\Sigma$), of the student data $x_{n,k}$ and the teacher data $y_k$ in the vector on the right side of the expression (8).

In particular, the addition section 53 stored, in the preceding cycle, the components ($\Sigma x_{n,k}x_{n',k}$) of the matrix on the left side and the components ($\Sigma x_{n,k}Y_k$) of the vector on the right side of the expression (8) determined in regard to the corresponding pixel corresponding to the noticed pixel as the teacher data into a built-in memory (not depicted) thereof. Thus, the addition section 53 adds, to the components ($\Sigma x_{n,k}x_{n',k}$) of the matrix or the components ($\Sigma x_{n,k}Y_k$) of the vector, corresponding components $x_{n,k+1}x_{n',k+1}$ or $x_{n,k+1}y_{k+1}$ calculated using teacher data $y_{k+1}$ and student data $x_{n,k+1}$ in regard to teacher data that has become a corresponding pixel corresponding to a new noticed pixel (performs addition represented by the summation of the expression (8)).

Then, the addition section 53 performs the addition described above, for example, setting all pixels of the student image as a noticed pixel to create a normal equation indicated by the expression (8) for each class, and supplies the normal equation to the coefficient calculation section 54.

The coefficient calculation section 54 solves the normal equation for each class supplied from the addition section 53 to determine and output an optimum tap coefficient $w_n$ for each class.

Into the coefficient acquisition section 23 of the image conversion apparatus 20 of FIG. 2, a tap coefficient $w_n$ for each class determined in such a manner as described above can be stored.

FIG. 5 is a block diagram depicting a second example of a configuration of the image conversion apparatus that performs a classification adaptive process.

It is to be noted that, in FIG. 5, elements corresponding to those in the case of FIG. 2 are denoted by the same reference numerals and description of them is omitted suitably.

Referring to FIG. 5, the image conversion apparatus 20 includes a tap selection section 21, a classification section 22, a prediction operation section 24, and a coefficient acquisition section 61.

Accordingly, the image conversion apparatus 20 of FIG. 5 is common to that of the case of FIG. 2 in that it includes the tap selection section 21, the classification section 22, and the prediction operation section 24.

However, the image conversion apparatus 20 of FIG. 5 is different from that in the case of FIG. 2 in that it includes the coefficient acquisition section 61 in place of the coefficient acquisition section 23.

The coefficient acquisition section 61 stores therein a seed coefficient hereinafter described. Further, to the coefficient acquisition section 61, a parameter z is supplied from the outside.

The coefficient acquisition section 61 generates and stores a tap coefficient for each class corresponding to the parameter z from the seed coefficient, and acquires a tap coefficient of a class from the classification section 22 from the tap coefficients for the classes and supplies the tap coefficient to the prediction operation section 24.

FIG. 6 is a block diagram depicting an example of a configuration of a learning apparatus that performs learning for determining a seed coefficient to be stored into the coefficient acquisition section 61.

Here, a case is considered in which, for example, similarly as in the case described hereinabove with reference to FIG. 3, determining an image of high picture quality (high picture quality image) as the second image and determining an image of low picture quality (low picture quality image) whose spatial resolution is decreased from that of the high picture quality image as the first image, a prediction tap is selected from within the low picture quality image and the prediction tap and a tap coefficient are used to determine (predict) a pixel value of a pixel of the high picture quality image, which is a pixel of the high picture quality image, for example, by linear first-order prediction operation of the expression (1).

It is assumed now that the tap coefficient $w_n$ is generated in accordance with the following expression using the seed coefficient and the parameter z.

[Math. 9]

$$w_n = \sum_{m=1}^{M} \beta_{m,n} z^{m-1} \qquad \cdots \ (9)$$

However, in the expression (9), $\beta_{m,n}$ represents an mth seed coefficient that is used to determine an nth tap coefficient $w_n$. It is to be noted that, in the expression (9), the tap coefficient $w_n$ is determined using M seed coefficients $\beta_{1,n}, \beta_{2,n}, \ldots, \beta_{M,n}$.

Here, the expression for determining the tap coefficient $w_n$ from the seed coefficient $\beta_{m,n}$ and the parameter z is not restricted to the expression (9).

Now, the value $z^{m-1}$ determined by the parameter z in the expression (9) is defined by the following expression introducing a new variable $t_m$.

[Math. 10]

$$t_m = z^{m-1} \qquad (m = 1, 2, \cdots, M) \ \cdots \ (10)$$

By substituting the expression (10) into the expression (9), the following expression is obtained.

[Math. 11]

$$w_n = \sum_{m=1}^{M} \beta_{m,n} t_m \qquad \cdots \ (11)$$

According to the expression (11), the tap coefficient $w_n$ is determined by a linear first-order equation of the seed coefficient $\beta_{m,n}$ and the variable $t_m$.

Incidentally, if the true value of the pixel value of a high picture quality pixel of the kth sample is represented as $y_k$ and the predicted value of the true value $y_k$ obtained in accordance with the expression (1) is represented as $y_k'$,

then the prediction error $e_k$ is represented by the following expression.
[Math. 12]

$$e_k = y_k - y_k' \quad \cdots \quad (12)$$

Now, since the predicted value $y_k'$ of the expression (12) is determined in accordance with the expression (1), if $y_k'$ of the expression (12) is replaced in accordance with the expression (1), then the following expression is obtained.
[Math. 13]

$$e_k = y_k - \left( \sum_{n=1}^{N} w_n x_{n,k} \right) \quad \cdots \quad (13)$$

However, in the expression (13), $x_{n,k}$ represents the nth low picture quality pixel configuring the prediction tap for the high picture quality pixel of the kth sample as a corresponding pixel.
By substituting the expression (11) into $w_n$ of the expression (13), the following expression is obtained.
[Math. 14]

$$e_k = y_k - \left( \sum_{n=1}^{N} \left( \sum_{m=1}^{M} \beta_{m,n} t_m \right) x_{n,k} \right) \quad \cdots \quad (14)$$

Although the seed coefficient $\beta_{m,n}$ with which the predicted error $e_k$ of the expression (14) is 0 is optimum for prediction of a high picture quality pixel, generally it is difficult to determine such seed coefficient $\beta_{m,n}$ for all high picture quality pixels.
Therefore, if, for example, the least square method is adopted as a norm that represents that the seed coefficient $\beta_{m,n}$ is optimum, then the optimum seed coefficient $\beta_{m,n}$ can be determined by minimizing the sum total E of the square errors represented by the following expression.
[Math. 15]

$$E = \sum_{k=1}^{K} e_k^2 \quad \cdots \quad (15)$$

It is to be noted that, in the expression (15), K represents a sample number (number of samples for learning) of a set of the high picture quality pixel $y_k$ as the corresponding pixel and the low picture quality pixels $x_{1,k}, x_{2,k}, ..., x_{N,k}$ that configure a prediction tap for the high picture quality pixel $y_k$.
The minimum value (lowest value) of the sum total E of the squared errors of the expression (15) is given by $\beta_{m,n}$ with which the sum total E whose partial derivative by the seed coefficient $\beta_{m,n}$ is 0 as indicated by the expression (16).
[Math. 16]

$$\frac{\partial E}{\partial \beta_{m,n}} = \sum_{k=1}^{K} 2 \cdot \frac{\partial e_k}{\partial \beta_{m,n}} \cdot e_k = 0 \quad \cdots \quad (16)$$

By substituting the expression (13) into the expression (16), the following expression is obtained.
[Math. 17]

$$\sum_{k=1}^{K} t_m x_{n,k} e_k = \sum_{k=1}^{K} t_m x_{n,k} \left( y_k - \left( \sum_{n=1}^{N} \left( \sum_{m=1}^{M} \beta_{m,n} t_m \right) x_{n,k} \right) \right) = 0 \quad \cdots \quad (17)$$

Now, $X_{i,p,j,q}$ and $Y_{i,p}$ are defined as represented by the expressions (18) and (19), respectively.
[Math. 18]

$$X_{i,p,j,q} = \sum_{k=1}^{K} x_{i,k} t_p x_{j,k} t_q$$

$$(i=1, 2, \cdots, N: j=1, 2, \cdots, N: p=1, 2, \cdots, M: q=1, 2, \cdots, M) \quad \cdots$$

$$(18)$$

[Math. 19]

$$Y_{i,p} = \sum_{k=1}^{K} x_{i,k} t_p y_k \quad \cdots \quad (19)$$

In this case, the expression (17) can be represented by a normal equation indicated by the expression (20) using $X_{i,p,j,q}$ and $Y_{i,p}$.

[Math. 20]

$$\begin{bmatrix} X_{1,1,1,1} & X_{1,1,1,2} & \cdots & X_{1,1,1,M} & X_{1,1,2,1} & \cdots & X_{1,1,N,M} \\ X_{1,2,1,1} & X_{1,2,1,2} & \cdots & X_{1,2,1,M} & X_{1,2,2,1} & \cdots & X_{1,2,N,M} \\ \vdots & \vdots & \ddots & \vdots & \vdots & & \vdots \\ X_{1,M,1,1} & X_{1,M,1,2} & \cdots & X_{1,M,1,M} & X_{1,M,2,1} & \cdots & X_{1,M,N,M} \\ X_{2,1,1,1} & X_{2,1,1,2} & \cdots & X_{2,M,1,M} & X_{2,M,2,1} & \cdots & X_{2,M,N,M} \\ \vdots & \vdots & & \vdots & \vdots & \ddots & \vdots \\ X_{N,M,1,1} & X_{N,M,1,2} & \cdots & X_{N,M,1,M} & X_{N,M,2,M} & \cdots & X_{N,M,N,M} \end{bmatrix} \begin{bmatrix} \beta_{1,1} \\ \beta_{2,1} \\ \vdots \\ \beta_{M,1} \\ \beta_{1,2} \\ \vdots \\ \beta_{M,N} \end{bmatrix} = \begin{bmatrix} Y_{1,1} \\ Y_{1,2} \\ \vdots \\ Y_{1,M} \\ Y_{2,1} \\ \vdots \\ Y_{N,M} \end{bmatrix}$$

$$\cdots \quad (20)$$

The normal equation of the expression (20) can be solved for the seed coefficient $\beta_{m,n}$, for example, by using the sweeping method (Gauss-Jordan elimination method) or the like.

In the image conversion apparatus 20 of FIG. 5, the seed coefficient $\beta_{m,n}$ for each class determined by performing learning of creating and solving a normal equation of the expression (20) for each class using a large number of high picture quality pixels $y_1$, $y_2$, ..., $y_K$ as teacher data and using low picture quality pixels $x_{1,k}$, $x_{2,k}$, ..., $x_{N,k}$ as student data is stored into the coefficient acquisition section 61. Then, in the coefficient acquisition section 61, a tap coefficient $w_n$ for each class is generated in accordance with the expression (9) from the seed coefficient $\beta_{m,n}$ and the parameter z given from the outside. Further, in the prediction operation section 24, the expression (1) is calculated using the tap coefficient $w_n$ and the low picture quality pixel (pixel of the first image) $x_n$ configuring a prediction tap of the noticed pixel to determine (a predicted value proximate to) a pixel value of the high picture quality pixel (corresponding pixel of the second image).

FIG. 6 is a view depicting an example of a configuration of a learning apparatus that performs learning of determining a seed coefficient $\beta_{m,n}$ for each class by creating and solving the normal equation of the expression (20).

It is to be noted that, in FIG. 6, elements corresponding to those in the case of FIG. 3 are denoted by the same reference numerals and, in the following description, description of them is omitted suitably.

Referring to FIG. 6, a learning apparatus 70 includes a teacher data generation section 41, a parameter generation section 71, a student data generation section 72, and a learning section 73.

Accordingly, the learning apparatus 70 of FIG. 6 is common to the learning apparatus 40 of FIG. 3 in that it includes the teacher data generation section 41.

However, the learning apparatus 70 of FIG. 6 is different from the learning apparatus 40 of FIG. 3 in that it newly includes the parameter generation section 71. Further, the learning apparatus 70 of FIG. 6 is different from the learning apparatus 40 of FIG. 3 in that it includes the student data generation section 72 and the learning section 73 in place of the student data generation section 42 and the learning section 43, respectively.

The parameter generation section 71 generates several values within a range within which the parameter z can take the values and supplies the values to the student data generation section 72 and the learning section 73.

For example, if it is assumed that the value the parameter z can take is a real number within the range of 0 to Z, then the parameter generation section 71 generates a parameter z of the values of, for example, z = 0, 1, 2, ..., Z and supplies it to the student data generation section 72 and the learning section 73.

To the student data generation section 72, a learning image similar to that supplied to the teacher data generation section 41 is supplied.

The student data generation section 72 generates a student image from the learning image similar to the student data generation section 42 of FIG. 3 and supplies the student image as student data to the learning section 73.

Here, to the student data generation section 72, in addition to the learning image, several values within the range that can be taken by the parameter z are supplied from the parameter generation section 71.

The student data generation section 72 filters the high picture quality image as the learning image, for example, with an LPF of a cutoff frequency corresponding to the parameter z supplied thereto to generate low picture quality images as student images individually for the several values of the parameter z.

In particular, the student data generation section 72 generates low picture quality images as student images of Z+1 different spatial resolutions in regard to the high picture quality image as the learning image.

It is to be noted here that, for example, an LPF having a frequency, which increases as the value of the parameter z increase, is used to filter the high picture quality image to generate low picture quality images as student images. In this case, a low picture quality image as the student image corresponding to a parameter z having a higher value has a higher spatial resolution.

Further, the student data generation section 72 can generate a low picture quality image as a student image whose spatial resolution in one of or both a horizontal direction and a vertical direction of the high picture quality image as the learning image is decreased in response to the parameter z.

Furthermore, in the case where a low picture quality image as a student image having a spatial resolution in both the horizontal direction and the vertical direction decreased from that of the high picture quality image as the learning image, the spatial resolutions in the horizontal direction and the vertical direction of the high picture quality image as a learning image can be decreased separately from each other in response to parameters different from each other, namely, in response to the two parameters z and z'.

In this case, the coefficient acquisition section 23 of FIG. 5 receives the two parameters z and z' provided from the outside and uses the two parameters z and z' and the seed coefficient to generate a tap coefficient.

As described above, as the seed coefficient, a seed coefficient with which not only one parameter z but also two parameters z and z' or three or more parameters can be used to generate a tap coefficient can be determined. However, in the present specification, in order to simplify the description, description is given of an example in which the single parameter z is used to generate a tap coefficient.

The learning section 73 determines and outputs a seed coefficient for each class using the teacher image as teacher data from the teacher data generation section 41, the parameter z from the parameter generation section 71 and the student images as student data from the student data generation section 72.

FIG. 7 is a block diagram depicting an example of a configuration of the learning section 73 of FIG. 6.

It is to be noted that, in FIG. 7, elements corresponding to those of the learning section 43 of FIG. 4 are denoted by the same reference numerals and description of them is omitted suitably.

Referring to FIG. 7, the learning section 73 includes a tap selection section 51, a classification section 52, an addition section 81, and a coefficient calculation section 82.

Accordingly, the learning section 73 of FIG. 7 is common to the learning section 43 of FIG. 4 in that it includes the tap selection section 51 and the classification section 52.

However, the learning section 73 is different from the learning section 43 of FIG. 4 in that it includes the addition section 81 and the coefficient calculation section 82 in place of the addition section 53 and the coefficient calculation section 54, respectively.

In FIG. 7, the tap selection section 51 selects a prediction tap from within a student image generated in accordance with a parameter z generated by the parameter generation section 71 of FIG. 6 (here, a low picture quality image as student data generated using an LPF of a cutoff frequency corresponding to the parameter z) and supplies the prediction tap to the addition section 81.

The addition section 81 acquires a corresponding pixel corresponding to the noticed pixel from the teacher image from the teacher data generation section 41 of FIG. 6 and performs addition of the corresponding pixel, student data configuring the prediction tap configured in regard to the noticed image supplied from the tap selection section 51 (image of the student image) and the parameter z when the student data is generated for each class supplied from the classification section 52.

In particular, to the addition section 81, teacher data $y_k$ as the corresponding pixel corresponding to the noticed pixel, the prediction tap $x_{i,k}$ ($x_{j,k}$) regarding the noticed pixel outputted from the tap selection section 51 and a class of the noticed pixel outputted from the classification section 52 are supplied, and the parameter z when the student data of the noticed pixel configuring the prediction tap regarding the noticed pixel is supplied from the parameter generation section 71.

Then, the addition section 81 performs, for each of class codes supplied from the classification section 52, multiplication ($x_{i,k}t_p x_{j,k}t_q$) of the student data and the parameter z for determining the component $X_{i,p,j,q}$ defined by the expression (18) and arithmetic operation corresponding to summation ($\Sigma$) in the matrix on the left side in the expression (20). It is to be noted that $t_p$ in the expression (18) is calculated from the parameter z in accordance with the expression (10). This similarly applied also to $t_q$ of the expression (18).

Further, the addition section 81 further uses, also for each class supplied from the classification section 52, the prediction tap (student data) $x_{i,k}$, teacher data $y_k$ and parameter z to perform multiplication ($x_{i,k}t_p y_k$) of the student data $x_{i,k}$, teacher data $y_k$ and parameter z for determining the component $Y_{i,p}$ defined by the expression (19) and arithmetic operation corresponding to the summation ($\Sigma$) in the vector on the right side of the expression (20). It is to be noted that $t_p$ of the expression (19) is calculated from the parameter z in accordance with the expression (10).

In particular, in the preceding cycle, the components $X_{i,p,j,q}$ of the matrix on the left side and the components $Y_{i,p}$ of the vector on the right side in the expression (20) determined in regard to a corresponding pixel corresponding to a noticed pixel were stored as teacher data into the memory (not depicted) built in the addition section 81, and the addition section 81 adds, to the component $X_{i,p,j,q}$ of the matrix or the component $Y_{i,p}$ of the vector, the corresponding component $x_{i,k}t_p x_{j,k}t_q$ or $x_{i,k}t_p y_k$ calculated, in regard to the teacher data that has become a corresponding pixel corresponding to the new noticed pixel, using the teacher data $y_k$, student data $x_{i,k}$ ($x_{j,k}$) (performs addition represented by the summation of the components $X_{i,p,j,q}$ of the expression (18) or the components $Y_{i,p}$ of the expression (19)).

Then, the addition section 81 performs the addition described above using all of the pixels of the student image as a noticed pixel in regard to the parameter of all values of 0, 1, ..., Z to create the normal equation indicated by the expression (20) for each class, and supplies the normal equations to the coefficient calculation section 82.

The coefficient calculation section 82 solves the normal equation for each class supplied from the addition section 81 to determine the seed coefficient $\beta_{m,n}$ for each class and outputs the seed coefficients $\beta_{m,n}$.

Incidentally, although the learning apparatus 70 of FIG. 6 is configured such that, using a high picture quality image as a learning image as teacher data and using a low picture quality image whose spatial resolution is decreased from that of the high picture quality image in response to a parameter z as student data, learning for determining a seed coefficient $\beta_{m,n}$ that directly minimizes the sum total of the squared errors of the predicted values y of the teacher data predicted by the linear one-dimensional equation of the expression (1) from the tap coefficients $w_n$ and the student data $x_n$, as the learning of the seed coefficient $\beta_{m,n}$, learning for determining the seed coefficient $\beta_{m,n}$ that it, as it were, indirectly minimizes the sum total of the squared errors of the predicted values y of the teacher data can be performed.

In particular, it is possible to determine, using a high picture quality image as a learning image as teacher data and using a low picture quality image whose horizontal resolution and vertical resolution are reduced by filtering the high picture quality image by an LPF of a cutoff frequency corresponding to the parameter z as student data, a tap coefficients $w_n$ that minimizes the sum total of the squired errors of the predicted values y of the teacher data predicted by the linear one-dimensional equation of the expression (1) using the tap coefficients $w_n$ and the student data $x_n$ for each value of the parameter z (here, z = 0, 1, ..., Z). Then, using the tap coefficients $w_n$ determined individually for the values of the parameter z as teacher data and using the parameters z as student data, a seed coefficient $\beta_{m,n}$ that minimizes the sum total of the squared errors of the predicted values of the tap coefficients $w_n$ as the teacher data predicted from the seed coefficients $\beta_{m,n}$ and the variables $t_m$ corresponding to the parameters z that are student data can be determined in accordance with the expression (11).

Here, the tap coefficient $w_n$ that minimizes (makes lowest) the sum total E of the squared errors of the predicted values y of the teacher data predicted by the linear one-dimensional equation of the expression (1) can be determined for each value of the parameter z (z = 0, 1, ..., Z) for each class by creating and solving the normal equation (8) similarly as in the case of the learning apparatus 40 of FIG. 3.

Incidentally, as indicated by the expression (11), a tap coefficient is determined from the seed coefficient $\beta_{m,n}$ and the variable $t_m$ corresponding to the parameter z. Thus, if the tap coefficient determined by the expression (11) is represented as $w_n'$, then although the seed coefficient $\beta_{m,n}$ with which the error $e_n$, represented by the following expression (21), between the optimum tap coefficient $w_n$ and the tap coefficients $w_n'$ determined by the expression (11) becomes 0 is a seed coefficient optimum to determine an optimum tap coefficient $w_n$, it is generally difficult to determine such

seed coefficient $\beta_{m,n}$ in regard to all tap coefficients $w_n$.
[Math. 21]

$$e_n = w_n - w_n' \quad \cdots \quad (21)$$

It is to be noted that the expression (21) can be transformed as represented by the following expression with the expression (11).
[Math. 22]

$$e_n = w_n - \left( \sum_{m=1}^{M} \beta_{m,n} t_m \right) \quad \cdots \quad (22)$$

Therefore, if, for example, the least square method is adopted also here as a norm representing that the seed coefficient $\beta_{m,n}$ is optimum, then the optimum seed coefficient $\beta_{m,n}$ can be determined by minimizing the sum total E of the square errors represented by the following expression.
[Math. 23]

$$E = \sum_{n=1}^{N} e_n^2 \quad \cdots \quad (23)$$

The minimum value (lowest value) of the sum total E of the square errors of the expression (23) is given by $\beta_{m,n}$ with which the sum total E whose partial derivative by the seed coefficient $\beta_{m,n}$ is 0 as indicated by the expression (24).
[Math. 24]

$$\frac{\partial E}{\partial \beta_{m,n}} = \sum_{m=1}^{M} 2 \frac{\partial e_n}{\partial \beta_{m,n}} \cdot e_n = 0 \quad \cdots \quad (24)$$

By substituting the expression (22) into the expression (24), the following expression is obtained.

[Math. 25]

$$\sum_{m=1}^{M} t_m \left( w_n - \left( \sum_{m=1}^{M} \beta_{m,n} t_m \right) \right) = 0 \quad \cdots \quad (25)$$

Now, $X_{i,j}$ and $Y_i$ are defined as indicated by the expressions (26) and (27), respectively.
[Math. 26]

$$X_{i,j} = \sum_{z=0}^{Z} t_i t_j \quad (i = 1, 2, \cdots, M : j = 1, 2, \cdots, M) \quad \cdots \quad (26)$$

[Math. 27]

$$Y_i = \sum_{z=0}^{Z} t_i w_n \quad \cdots \quad (27)$$

In this case, the expression (25) can be represented by a normal equation indicated by the expression (28) using $X_{i,j}$ and $Y_i$.

[Math. 28]

$$\begin{bmatrix} X_{1,1} & X_{1,2} & \cdots & X_{1,M} \\ X_{2,1} & X_{2,1} & \cdots & X_{2,2} \\ \vdots & \vdots & \ddots & \vdots \\ X_{M,1} & X_{M,2} & \cdots & X_{M,M} \end{bmatrix} \begin{bmatrix} \beta_{1,n} \\ \beta_{2,n} \\ \vdots \\ \beta_{M,n} \end{bmatrix} = \begin{bmatrix} Y_1 \\ Y_2 \\ \vdots \\ Y_M \end{bmatrix} \quad \cdots \quad (28)$$

Also the normal equation of the expression (28) can be solved for the seed coefficient $\beta_{m,n}$ by using, for example, a sweep method or the like.

FIG. 8 is a block diagram depicting another example of a configuration of the learning section 73 of FIG. 6.

In particular, FIG. 8 depicts an example of a configuration of the learning section 73 that performs learning of determining a seed coefficient $\beta_{m,n}$ by creating and solving the normal equation of the expression (28).

It is to be noted that, in FIG. 8, elements corresponding to those in the case of FIG. 4 or 7 are denoted by the same reference numerals and, in the following description, description of them is omitted suitably.

The learning section 73 of FIG. 8 includes a tap selection section 51, a classification section 52, a coefficient calculation section 54, addition sections 91 and 92, and a coefficient calculation section 93.

Accordingly, the learning section 73 of FIG. 8 is common to the learning section 43 of FIG. 4 in that it includes the tap selection section 51, the classification section 52, and the coefficient calculation section 54.

However, the learning section 73 of FIG. 8 is different from the learning section 43 of FIG. 4 in that it includes the addition section 91 in place of the addition section 53 and that it newly includes the addition section 92 and the coefficient calculation section 93.

To the addition section 91, a class of a noticed pixel outputted from the classification section 52 and a parameter z outputted from the parameter generation section 71 are supplied. The addition section 91 performs addition of teacher data as a corresponding pixel corresponding to the noticed pixel from within the teacher image from the teacher data generation section 41 and student data configuring a prediction tap regarding the notice pixel supplied from the tap selection section 51 for each class supplied from the classification section 52 and for each value of the parameter z outputted from the parameter generation section 71.

In particular, to the addition section 91, teacher data $y_k$, a prediction tap $x_{n,k}$, a class of the noticed pixel, and the parameter z when the student image configuring the prediction tap $x_{n,k}$ is generated are supplied.

The addition section 91 performs, for each class of the noticed pixel and for each value of the parameter z, multiplication ($x_{n,k}x_{n',k}$) of the student data and arithmetic operation corresponding to summation ($\Sigma$) in the matrix on the left side of the expression (8) using the prediction tap (student data) $x_{n,k}$.

Further, the addition section 91 performs, for each class of the noticed pixel and for each value of the parameter z, multiplication ($x_{n,k}y_k$) of the student data $x_{n,k}$ and the teacher data $y_k$ and arithmetic operation corresponding to summation ($\Sigma$) in the vector on the right side of the expression (8) using the prediction tap (student data) $x_{n,k}$ and the teacher data $y_k$.

In particular, the addition section 91 stored the components ($\Sigma x_{n,k}x_{n',k}$) of the matrix on the left side and the components ($\Sigma x_{n,k}y_k$) of the vector on the right side of the expression (8) determined in regard to the corresponding pixel of the teacher data corresponding to the noticed pixel into a built-in memory (not depicted) thereof in the preceding cycle. Thus, the addition section 91 adds, to the components ($\Sigma x_{n,k}x_{n',k}$) of the matrix or the components ($\Sigma x_{n,k}y_k$) of the vector, the corresponding components $x_{n,k+1}x_{n',k+1}$ and $x_{n,k+1}y_{k+1}$ calculated using teacher data $y_{k+1}$ and student data $x_{n,k+1}$ in regard to teacher data that has become a corresponding pixel corresponding to a new noticed pixel (performs addition represented by the summation of the expression (8)).

Then, the addition section 91 performs the addition described above using all of the pixels of the student image as a noticed pixel to create the normal equation indicated by the expression (8) for each value of the parameter z in regard to each class, and supplies the normal equations to the coefficient calculation section 54.

Accordingly, the addition section 91 creates the normal equation of the expression (8) for each class similar to the addition section 53 of FIG. 4. However, the addition section 91 is different from the addition section 53 of FIG. 4 in that it creases the normal equation of the expression (8) also for each value of the parameter z.

The coefficient calculation section 54 solves the normal equation for each value of the parameter z for each class supplied from the addition section 91 to determine an optimum tap coefficient $w_n$ for each value of the parameter z for each class, and supplies the tap coefficients $w_n$ to the addition section 92.

The addition section 92 performs addition of (a variable $t_m$ corresponding to) the parameter z supplied from the parameter generation section 71 (FIG. 6) and the optimum tap coefficients $w_n$ supplied from the coefficient calculation section 54 for each class.

In particular, the addition section 92 uses a variable $t_i$ ($t_j$) determined by the expression (10) from the parameter z supplied from the parameter generation section 71 to perform, for each class, multiplication ($t_i t_j$) of the variable $t_i$ ($t_j$) corresponding to the parameter z for determining the component $X_{i,j}$ defined by the expression (26) and arithmetic operation corresponding to the summation ($\Sigma$) in the matrix on the left side of the expression (28).

Here, since the component $X_{i,j}$ is determined only with the parameter z and has no relation to the class, actually the calculation of the component $X_{i,j}$ need not be performed for each class but may be performed only once.

Further, the addition section 92 uses the variable $t_i$ determined by the expression (10) from the parameter z supplied from the parameter generation section 71 and the optimum tap coefficients $w_n$ supplied from the coefficient calculation section 54 to perform, for each class, multiplication ($t_i w_n$) of the variable $t_i$ corresponding to the parameter z for determining the component $Y_i$ defined by the expression (27) and the optimum tap coefficient $w_n$ and arithmetic operation corresponding to the summation ($\Sigma$) in the vector on the right side of the expression (28).

The addition section 92 determines, for each class, the component $X_{i,j}$ represented by the expression (26) and the component $Y_i$ represented by the expression (27) to create the normal equation of the expression (28) for each class and supplies the normal equations to the coefficient calculation section 93.

The coefficient calculation section 93 solves the normal equation of the expression (28) for each class supplied from the addition section 92 to determine a seed coefficient $\beta_{m,n}$ for each class and outputs the seed coefficients $\beta_{m,n}$.

Into and in the coefficient acquisition section 61 of FIG. 5, the seed coefficient $\beta_{m,n}$ for each class determined in such a manner as described above can be stored.

It is to be noted that, also in learning of a seed coefficient, depending upon the way of selection of images that become student data corresponding to a first image and teacher data corresponding to a second image, seed coefficients for performing various image conversion processes can be obtained similarly as in the case of learning of a tap coefficient.

In particular, in the case described above, since learning of a seed coefficient is performed using a learning image as it is as teacher data corresponding to a second image and using a low picture quality image having a spatial resolution decreased from that of the learning image as student data corresponding to a first image, as the seed coefficient, a seed coefficient for performing an image conversion process as a spatial resolution creation process for converting a first image into a second image whose spatial resolution is improved can be obtained.

In this case, in the image conversion apparatus 20 of FIG. 5, the horizontal resolution and the vertical resolution of an image can be improved to resolutions corresponding to the parameter z.

Further, for example, by performing learning of a seed coefficient using a high picture quality image as teacher data and using an image on which noise of a level corresponding to the parameter z is superimposed on the high picture quality image as the teacher data as student data, as a seed coefficient, a seed coefficient for performing an image conversion process as a noise removal process for converting a first image into a second image from which the included noise is removed (reduced) can be obtained. In this case, in the image conversion apparatus 20 of FIG. 5, an image of an S/N ratio corresponding to the parameter z (image for which noise removal of an intensity corresponding to the parameter z is performed) can be obtained.

It is to be noted that, although, in the case described above, the tap coefficient $w_n$ is defined by $\beta_{1,n}z^0 + \beta_{2,n}z^1 + ... + \beta_{M,n}z^{M-1}$ as indicated by the expression (9) and tap coefficients $w_n$ for improving the spatial resolutions in both the horizontal and vertical resolutions in a corresponding relationship to the parameter z is determined by the expression (9), as regards the tap coefficients $w_n$, also it is possible to determine those that can improve the horizontal resolution and the vertical resolution independently of each other in a corresponding relationship to parameters $z_x$ and $z_y$ independent of each other.

In particular, the tap coefficient $w_n$ is defined, for example, by a cubic equation $\beta_{1,n}z_x^0z_y^0 + \beta_{2,n}z_x^1z_y^0 + \beta_{3,n}z_x^2z_y^0 + \beta_{4,n}z_x^3z_y^0 + \beta_{5,n}z_x^0z_y^1 + \beta_{6,n}z_x^0z_y^2 + \beta_{7,n}z_x^0z_y^3 + \beta_{8,n}z_x^1z_y^1 + \beta_{9,n}z_x^2z_y^1 + \beta_{10,n}z_x^1z_y^2$ in place of the expression (9) and defines the variable $t_m$ defined by the expression (10), for example, by $t_1 = z_x^0z_y^0$, $t_2 = z_x^1z_y^0$, $t_3 = z_x^2z_y^0$, $t_4 = z_x^3z_y^0$, $t_5 = z_x^0z_y^1$, $t_6 = z_x^0z_y^2$, $t_7 = z_x^0z_y^3$, $t_8 = z_x^1z_y^1$, $t_9 = z_x^2z_y^1$, $t_{10} = z_x^1z_y^2$ in place of the expression (10). Also in this case, the tap coefficients $w_n$ can be presented by the expression (11). Accordingly, in the learning apparatus 70 of FIG. 6, by determining a seed coefficient $\beta_{m,n}$ by performing learning using an image having a horizontal resolution and a vertical resolution decreased from those of teacher data in a corresponding relationship to the parameters $z_x$ and $z_y$, tap coefficients $w_n$ that improve the horizontal resolution and the vertical resolution independently of each other corresponding to the parameters $z_x$ and $z_y$ independent of each other can be determined.

Further, for example, by introducing a parameter $z_t$ corresponding to a resolution in the time direction in addition to the parameters $z_x$ and $z_y$ corresponding to the horizontal resolution and the vertical resolution, respectively, tap

coefficients $w_n$ that improve the horizontal resolution, vertical resolution and time resolution independently of each other in a corresponding relationship to the parameters $z_x$, $z_y$, and $z_t$ independent of each other can be determined.

Further, in the learning apparatus 70 of FIG. 6, by performing learning using an image, which has a horizontal resolution and a vertical resolution decreased from those of teacher data in a corresponding relationship to the parameter $z_x$ and which has noise added to the teacher data in a corresponding relationship to the parameter $z_y$, as student data to determine a seed coefficient $\beta_{m,n}$, the seed coefficient $\beta_{m,n}$ that improves the horizontal resolution and the vertical resolution corresponding to the parameter $z_x$ and that performs noise removal corresponding to the parameter $z_y$.

<First Example of Configuration of Encoding Apparatus 11>

FIG. 9 is a block diagram depicting a first example of a configuration of the encoding apparatus 11 of FIG. 1.

It is to be noted that, in the block diagrams described below, lines for supplying information (data) necessitated in processing of the blocks are suitably omitted in order to avoid the figures from becoming complicated.

Referring to FIG. 9, the encoding apparatus 11 includes an A/D conversion section 101, a sorting buffer 102, an arithmetic operation section 103, an orthogonal transform section 104, a quantization section 105, a reversible encoding section 106, and an accumulation buffer 107. The encoding apparatus 11 further includes a dequantization section 108, an inverse orthogonal transform section 109, an arithmetic operation section 110, a classification adaptive filter 111, a frame memory 112, a selection section 113, an intra-prediction section 114, a motion prediction compensation section 115, a predicted image selection section 116, and a rate controlling section 117.

The A/D conversion section 101 A/D converts an original image of an analog signal into an original image of a digital signal and supplies the resulting original signal to the sorting buffer 102 so as to be stored.

The sorting buffer 102 sorts frames of the original image from a displaying order into an encoding (decoding) order in response to the GOPs (Group Of Pictures) and supplies the original image of the resulting frames to the arithmetic operation section 103, the intra-prediction section 114, the motion prediction compensation section 115, and the classification adaptive filter 111.

The arithmetic operation section 103 subtracts a predicted image supplied from the intra-prediction section 114 or the motion prediction compensation section 115 through the predicted image selection section 116 from the original image from the sorting buffer 102 and supplies a residual (prediction residual) obtained by the subtraction to the orthogonal transform section 104.

For example, in the case of an image for which inter encoding is to be performed, the arithmetic operation section 103 subtracts a predicted image supplied from the motion prediction compensation section 115 from an original image read out from the sorting buffer 102.

The orthogonal transform section 104 performs orthogonal transform such as discrete cosine transform or Karhunen Loeve transform for the residual supplied from the arithmetic operation section 103. It is to be noted that the method for such orthogonal transform is arbitrary. The orthogonal transform section 104 supplies an orthogonal transform coefficient obtained by the orthogonal transform to the quantization section 105.

The quantization section 105 quantizes the orthogonal transform coefficient supplied from the orthogonal transform section 104. The quantization section 105 sets a quantization parameter QP on the basis of a target value for the code amount (code amount target value) supplied from the rate controlling section 117 and performs quantization of the orthogonal transform coefficient. It is to be noted that the method for such quantization is arbitrary. The quantization section 105 supplies the quantized orthogonal transform coefficient to the reversible encoding section 106.

The reversible encoding section 106 encodes the orthogonal transform coefficient quantized by the quantization section 105 in accordance with a predetermined reversible encoding method. Since the orthogonal transform coefficient has been quantized under the control of the rate controlling section 117, the code amount of the encoded data obtained by the reversible encoding of the reversible encoding section 106 becomes the code amount target value (is approximated to the code amount target value) set by the rate controlling section 117.

Further, the reversible encoding section 106 acquires encoding information necessary for decoding by the decoding apparatus 12 from within the encoding information regarding the prediction encoding by the encoding apparatus 11 from the blocks.

Here, as the encoding information, for example, a prediction mode of intra prediction or inter prediction, motion information such as a motion vector, a code amount target value, a quantization parameter QP, a picture type (I, P, B), and information of a CU (Coding Unit) or a CTU (Coding Tree Unit) are available.

For example, the prediction mode can be acquired from the intra-prediction section 114 or the motion prediction compensation section 115. Further, the motion information can be acquired from the motion prediction compensation section 115.

The reversible encoding section 106 not only acquires encoding information but also acquires, from the classification adaptive filter 111, reduction filter information in which tap coefficients to be used in a classification adaptive process by the classification adaptive filter 111 are reduced.

The reversible encoding section 106 encodes the encoding information and the reduction filter information by an arbitrary reversible encoding method and places (multiplexes) the encoding information into part of header information of the encoded data.

The reversible encoding section 106 transmits the encoded data through the accumulation buffer 107. Accordingly, the reversible encoding section 106 functions as a transmission section that transmits the encoded data and after all transmits encoding information or reduction filter information included in the encoded data.

As the reversible encoding method of the reversible encoding section 106, for example, variable length encoding, arithmetic encoding or the like can be adopted. As the variable length encoding, for example, CAVLC (Context-Adaptive Variable Length Coding) prescribed by the H.264/AVC method or the like is available. As the arithmetic encoding, for example, CABAC (Context-Adaptive Binary Arithmetic Coding) or the like is available.

The accumulation buffer 107 temporarily accumulates encoded data supplied from the reversible encoding section 106. The encoded data accumulated in the accumulation buffer 107 is read out and transmitted at a predetermined timing.

Orthogonal transform coefficients quantized by the quantization section 105 are supplied to the reversible encoding section 106 and supplied also to the dequantization section 108. The dequantization section 108 dequantizes the quantized orthogonal transform coefficients by a method corresponding to the quantization by the quantization section 105. The method for such dequantization may be any method if it is compatible with the quantization process by the quantization section 105. The dequantization section 108 supplies orthogonal transform coefficients obtained by the dequantization to the inverse orthogonal transform section 109.

The inverse orthogonal transform section 109 inversely orthogonally transforms the orthogonal transform coefficients supplied from the dequantization section 108 by a method corresponding to the orthogonal transform process by the orthogonal transform section 104. The method for such inverse orthogonal transform may be any method if it is compatible with the orthogonal transform process by the orthogonal transform section 104. An output by the inverse orthogonal transform (restored residuals) is supplied to the arithmetic operation section 110.

The arithmetic operation section 110 adds a predicted image supplied from the intra-prediction section 114 or the motion prediction compensation section 115 through the predicted image selection section 116 to the inverse orthogonal transform result supplied from the inverse orthogonal transform section 109, namely, to the restored residuals and outputs a result of the addition as an image during decoding that is during decoding.

The image during decoding outputted from the arithmetic operation section 110 is supplied to the classification adaptive filter 111 or the frame memory 112.

The classification adaptive filter 111 is a filter that functions as an ILF by performing a classification adaptive process and performs an ILF process by a classification adaptive process.

To the classification adaptive filter 111, not only the image during decoding is supplied from the arithmetic operation section 110, but also the original image corresponding to the image during decoding is supplied from the sorting buffer 102.

The classification adaptive filter 111 performs learning of determining a tap coefficient for each class using the student image corresponding to the image during decoding from the arithmetic operation section 110 and a teacher image corresponding to the original image from the sorting buffer 102.

In particular, the classification adaptive filter 111 uses, for example, the image during decoding itself from the arithmetic operation section 110 as a student image and uses the original image itself from the sorting buffer 102 as a teacher image to perform learning for determining a tap coefficient for each class.

Further, the classification adaptive filter 111 performs a reduction process for reducing the data amount of a tap coefficient for each class and generates reduction filter information in which the tap coefficients for each class are reduced. The reduction filter information is supplied from the classification adaptive filter 111 to the reversible encoding section 106.

Further, the classification adaptive filter 111 converts the image during decoding from the arithmetic operation section 110 into a post-filter image using the tap coefficients obtained using the reduction filter information.

In particular, the classification adaptive filter 111 performs, using the image during decoding from the arithmetic operation section 110 as a first image, (image conversion by) a classification adaptive process using tap coefficients for each class to convert the image during decoding as the first image into a post-filter image as a second image that corresponds to the original image (to generate a post-filter image), and outputs the post-filter image.

The post-filter image outputted from the classification adaptive filter 111 is supplied to the frame memory 112.

Here, in the classification adaptive filter 111, learning is performed using the image during decoding as a student image and using the original image as a teacher image as described above, and a classification adaptive process for converting the image during decoding into a post-filter image using tap coefficients obtained by the learning. Accordingly, the post-filter image obtained by the classification adaptive filter 111 is an image very proximate to the original image.

The frame memory 112 temporarily stores the image during decoding supplied from the arithmetic operation section 110 or the post-filter image supplied from the classification adaptive filter 111 as a decoded image that is decoded locally. The decoded image stored in the frame memory 112 is supplied as reference image to be used for generation of a predicted image at a necessary timing to the selection section 113.

The selection section 113 selects a supplying destination of the reference image supplied from the frame memory 112. For example, in the case where intra prediction is to be performed by the intra-prediction section 114, the selection section 113 supplies the reference image supplied from the frame memory 112 to the intra-prediction section 114. On the other hand, for example, in the case where inter prediction is to be performed by the motion prediction compensation section 115, the selection section 113 supplies the reference image supplied from the frame memory 112 to the motion prediction compensation section 115.

The intra-prediction section 114 performs intra prediction (intra prediction) basically using a PU (Prediction Unit) as a unit for processing using the original image supplied from the sorting buffer 102 and the reference image supplied from the frame memory 112 through the selection section 113. The intra-prediction section 114 selects an optimum intra prediction mode on the basis of a predetermined cost function and supplies a predicted image generated by the optimum intra prediction mode to the predicted image selection section 116. Further, the intra-prediction section 114 suitably supplies the prediction mode indicative of the intra prediction mode selected on the basis of the cost function to the reversible encoding section 106 and so forth as described hereinabove.

The motion prediction compensation section 115 performs motion prediction (inter prediction) basically using a PU as a unit for processing and using the original image supplied from the sorting buffer 102 and the reference image supplied from the frame memory 112 through the selection section 113. Further, the motion prediction compensation section 115 performs motion compensation in response to a motion vector detected by the motion prediction to generate a predicted image. The motion prediction compensation section 115 performs inter prediction in a plurality of inter prediction modes prepared in advance to generate predicted images.

The motion prediction compensation section 115 selects an optimum inter prediction mode on the basis of a predetermined cost function for a predicted image obtained for each of the plurality of inter prediction modes. Further, the motion prediction compensation section 115 supplies a predicted image generated by the optimum inter prediction mode to the predicted image selection section 116.

Further, the motion prediction compensation section 115 supplies the prediction mode indicative of the inter prediction mode selected on the basis of the cost function, motion information such as a motion vector necessary when encoded data encoded by the inter prediction mode is decoded and so forth to the reversible encoding section 106.

The predicted image selection section 116 selects a supplying source (intra-prediction section 114 or motion prediction compensation section 115) of the predicted image to be supplied to the arithmetic operation sections 103 and 110 and supplies the predicted image supplied from the selected supplying source to the arithmetic operation sections 103 and 110.

The rate controlling section 117 controls the rate of the quantization operation of the quantization section 105 on the basis of the code amount of encoded data accumulated in the accumulation buffer 107 such that overflow or underflow may not occur. In particular, the rate controlling section 117 sets a target code amount for encoded data such that overflow or underflow of the accumulation buffer 107 may not occur and supplies the target code amount to the quantization section 105.

<Example of Configuration of Classification Adaptive Filter 111>

FIG. 10 is a block diagram depicting an example of a configuration of the classification adaptive filter 111 of FIG. 9.

Referring to FIG. 10, the classification adaptive filter 111 includes a learning apparatus 131, a reduction apparatus (reduction section) 132, and an image conversion apparatus 133.

To the learning apparatus 131, an original image is supplied from the sorting buffer 102 (FIG. 9) and an image during decoding is supplied from the arithmetic operation section 110 (FIG. 9).

The learning apparatus 131 performs learning for determining a tap coefficient for each class (hereinafter referred to as tap coefficient learning) using the image during decoding as student data and using the original image as teacher data.

Further, the learning apparatus 131 supplies the tap coefficient for each class obtained by the tap coefficient learning to the reduction apparatus 132.

It is to be noted that the learning apparatus 131 can perform classification using the encoding information as occasion demands in the tap coefficient learning.

The reduction apparatus 132 performs a reduction process for generating reduction filter information in which the data amount of tap coefficients for each class from the learning apparatus 131 is reduced and supplies reduction filter information obtained by the reduction process to the image conversion apparatus 133 and the reversible encoding section 106 (FIG. 9).

To the image conversion apparatus 133, the image during decoding is supplied from the arithmetic operation section 110 (FIG. 9) and the reduction filter information is supplied from the reduction apparatus 132.

The image conversion apparatus 133 updates the tap coefficients for each class using the reduction filter information of the reduction apparatus 132. Further, the image conversion apparatus 133 performs, using the image during decoding as a first image, image conversion by the classification adaptive process in which the tap coefficients for each class are used to convert the image during decoding as the first image into a post-filter image as a second image corresponding to the original image (to generate a post-filter image), and supplies the post-filter image to the frame memory 112 (FIG. 9).

It is to be noted that the image conversion apparatus 133 can perform the classification using the encoding information as occasion demands in the classification adaptive process similar to the learning apparatus 131.

Here, in the prediction encoding, since it is necessary for the encoding apparatus 11 and the decoding apparatus 12 to use the same reference image, in order to generate a post-filter image that becomes such a reference image as just described, it is necessary for the encoding apparatus 11 and the decoding apparatus 12 to use the same tap coefficient.

Accordingly, it is necessary to transmit the tap coefficients to be used in the classification adaptive process of the image conversion apparatus 133 of the encoding apparatus 11 to the decoding apparatus 12.

However, since the tap coefficients become an overhead of encoded data, if the data amount of the tap coefficients is great, then the compression efficiency decreases. Accordingly, in order to improve the compression efficiency, for example, it is necessary to reduce the data amount of tap coefficients.

Therefore, in the reduction apparatus 132, reduction filter information in which the data amount of tap coefficients is reduced is generated, and this reduction filter information is transmitted from the encoding apparatus 11 and the decoding apparatus 12.

Incidentally, as the reduction method for reducing the data amount of tap coefficients, for example, a reduction method that uses space symmetry adopted in an ALF (Adaptive Loop Filter) is available.

According to the reduction method that uses space symmetry, tap coefficients having a point symmetrical position or a line symmetrical position in regard to each tap coefficient for each class are limited to the same value, and the substantial number of coefficients is reduced, and this reduces the (overall) data amount of tap coefficients.

However, in the reduction method that uses space symmetry, it is sometimes difficult to appropriately improve the compression efficiency.

In particular, in the case where tap coefficients in point symmetrical positions or line symmetrical positions are limited to the same value, it sometimes becomes difficult to maintain sufficient picture quality as the picture quality of the post-filter image (and after all a reference image or a decoded image).

For example, when a value of a tap coefficient having a high performance in the case where tap coefficients in point symmetrical positions or line symmetrical positions are not limited to the same value is limited to the same value as that of the tap coefficient in the point or line symmetrical position, the tap coefficient becomes a tap coefficient of a lower performance, and this sometimes degrades the picture quality of the post-filter image.

Here, the tap coefficient having a high performance signifies a tap coefficient that is high in degree of contribution to making of the picture quality of the post-filter image closer to the picture quality of the original image, and the tap coefficient having a low performance signifies a tap coefficient that is low in degree of contribution to making of the picture quality of the post-filter image closer to the picture quality of the original image.

As the reduction method for reducing the data amount of tap coefficients, a reduction method that uses, for example, DPCM (Differential Pulse Code Modulation) is further available.

However, in the reduction method that uses DPCM, since, for example, in regard to a tap coefficient to be transmitted in the current cycle, the difference between the tap coefficient and a tap coefficient transmitted in the preceding cycle is transmitted, the number of data to be transmitted as tap coefficients do not vary, and it is difficult to effectively improve the compression efficiency.

Therefore, in the reduction apparatus 132, a reduction process of generating reduction filter information in which the data amount of tap coefficients is reduced is performed such that the compression efficiency can be improved appropriately.

It is to be noted that, in the classification adaptive filter 111, tap coefficient learning is suitably performed by the learning apparatus 131, and the tap coefficients for each class are updated. Then, reduction filter information is generated for the tap coefficient for each class after updated and is transmitted from the encoding apparatus 11 to the decoding apparatus 12. In this case, if the frequency of transmission of reduction filter information is high, then the overhead increases, resulting in degradation of the compression efficiency.

On the other hand, in the case where the correlation of images during decoding (and after all the original images) in the time direction is high, even if the classification adaptive filter 111 performs a classification adaptive process as a filter process in which a tap coefficient same as that upon immediately preceding updating of the tap coefficients is used, the S/N ratio of the post-filter image can be maintained.

Further, in the case where the classification adaptive filter 111 performs a classification adaptive process as a filter process using a tap coefficient same as that upon immediately preceding updating of tap coefficients, also the decoding apparatus 12 can continue to use a tap coefficient having been used until just before. In this case, the tap coefficient need not be transmitted newly from the encoding apparatus 11 to the decoding apparatus 12, and the compression efficiency can be improved.

Due to such improvement of the compression efficiency as described above, the reduction apparatus 132 can generate copy information representative of whether a tap coefficient same as that upon immediately preceding updating is to be used as a tap coefficient in place of reduction filter information.

In the case where the reduction apparatus 132 generates copy information in place of reduction filter information, the compression efficiency can be improved in comparison with that in an alternative case in which reduction filter information is generated.

In the reduction apparatus 132, copy information representing that a tap coefficient same as that upon immediately preceding updating is to be used as the tap coefficient can be generated in a case in which, for example, the latest tap coefficient supplied from the learning apparatus 131 (substantially) coincides with a tap coefficient in the preceding cycle supplied form the learning apparatus 131, in another case in which a sequence of an original image used in tap coefficient learning in the current cycle and a sequence of the original image used in tap coefficient learning in the immediately preceding cycle have a high correlation in the time direction therebetween or in a like case.

As the reduction method for reducing the data amount of tap coefficients in the reduction apparatus 132, a method is available by which a tap coefficient for each class is converted into a reduction coefficient by projecting the tap coefficient to a low dimensional space that is lower in dimension than a tap coefficient space that is a space of the tap coefficient for each class.

As the method of converting a tap coefficient for each class into a reduction coefficient projected to a low dimensional space, for example, a method that uses main component analysis is available.

In the following, a reduction method of reducing the data amount of tap coefficients by converting a tap coefficient for each class into a reduction coefficient projected to a low dimensional space (hereinafter referred to also as main component utilization type reduction method) utilizing main component analysis.

<Main Component Utilization Type Reduction Method>

FIG. 11 is a view illustrating an overview of the main component utilization type reduction method.

A of FIG. 11 depicts an example of a tap coefficient for each class obtained by tap coefficient learning of the learning apparatus 131.

In A of FIG. 11, tap coefficients of C classes (the number of classes is C) are depicted. Here, (a set of) tap coefficients of a class c ($c = 1, 2, ..., C$) from among the C classes is represented by $w(c)$, and the nth ($n = 1, 2, ..., N$) tap coefficient among the tap coefficients $w(c)$ of the class c is represented by $w(c, n)$. n represents an order number in the N tap coefficients $w(c,1)$, $w(c,2)$, ..., $w(c,N)$ in the class c.

N represents the number of tap coefficients $w(c, n)$ of a class (one class), and in A of FIG. 11, N is 25. Further, in A of FIG. 11, 5 horizontal pixels and 5 vertical pixels form a prediction tap, and a tap coefficient multiplied to the pixel values of $5 \times 5$ pixels as the prediction tap is depicted.

B of FIG. 11 depicts a state in which the tap coefficients $w(c)$ for each class of A of FIG. 11 are plotted to a tap coefficient space that is a space of tap coefficients.

The tap coefficient space is a space whose coordinate axis is given by the tap coefficient of the class, and if the number of tap coefficients $w(c, n)$ of the class is N, then the tap coefficient space is an N-dimensional space.

Now, if points to which the tap coefficients $w(1)$, $w(2)$, ..., $w(C)$ for each class are plotted are referred to as class coordinate points, then the number of class coefficient points to be plotted to the tap coefficient space is equal to the class number C.

C of FIG. 11 depicts a state in which the class coefficient points, namely, the tap coefficients $w(c,1)$, $w(c,2)$, ..., $w(c,N)$ of each class, are projected to a low dimensional space of the Q ($< N$) dimension lower than the dimension N of the tap coefficient space.

In the main component utilization type reduction method, a low dimensional space of the Q dimension lower than the dimension N of the tap coefficient space is determined by main component analysis. Here, if it is assumed that the space that is determined by main component analysis and has a coordinate axis given by the main component is referred to as main component space, then the low dimensional space of the Q dimension is, for example, a main component space.

Now, a projection point when a class coefficient point represented by one of the N tap coefficients $w(c,1)$ to $w(c,N)$ of the class c is projected to a low dimensional space (main component space) of the Q dimension is represented by Q coordinates. The Q coordinates are referred to as reduction coefficients and represented by $w'(c,1)$, $w'(c,2)$, ..., $w'(c,N)$.

Since the number of reduction coefficients $w'(c,1)$ to $w'(c,Q)$ when the N tap coefficients $w(c,1)$ to $w(c,N)$ of the class c is Q, by projecting the tap coefficients $w(c,1)$ to $w(c,N)$ of the tap coefficient space of the N dimension to the low dimensional space of the Q dimension, the N tap coefficients $w(c,1)$ to $w(c,N)$ are reduced to Q ($< N$) reduction coefficients w'(c,1) to W'(c,Q).

According to the main component utilization type reduction method, the N tap coefficients w(c,1) to w(c,N) of the class c are reduced to the Q reduction coefficients w' (c,1) to w' (c,Q) of the class C and transmitted from the encoding apparatus 11 to the decoding apparatus 12. In the decoding apparatus 12, the Q reduction coefficients w' (c,1) to w' (c,Q) of the class c are converted into N tap coefficients w(c,1) to w(c,N) of the class c in the tap coefficient space and are used in a classification adaptive process as a filter process.

The main component utilization type reduction method is described further.

Now, it is assumed that the set w(c) of the N tap coefficients w(c,1) to w(c,N) of the class c is a column vector whose components are the tap coefficients w(c,1) to w(c,N).

Further, a coefficient representative of the nth main component obtained by main component analysis of (the class coefficient points representing) the tap coefficients w(1) to w(C) of all classes in the tap coefficient space is referred to also as main component coefficient, and N main component coefficients of the nth main component are represented as A(n,1), A(n,2), ..., A(n,N).

Furthermore, a matrix in which the N main component coefficients A(n,1) to A(n,N) of the nth main component are components of the nth row (nth row from above) is referred to also as main component matrix, and the main component matrix is represented as A.

A column vector W(c) when the tap coefficients w(c) that are a column vector are projected to a main component space whose coordinate axes are given by the first main component to the Nth main component is represented by the expression (29).

[Math. 29]

$$W(c) = Aw(c) \quad \cdots \quad (29)$$

If the column vectors W(c) and w(c) of the expression (29) and the main component matrix A are represented by components, then the expression (29) is represented by the expression (30).

[Math. 30]

$$\begin{bmatrix} W(c,1) \\ \vdots \\ \vdots \\ \vdots \\ W(c,N) \end{bmatrix} = \begin{bmatrix} A(1,1) & \cdots & A(1,N) \\ \vdots & & \vdots \\ \vdots & \cdots & \vdots \\ \vdots & & \vdots \\ A(N,1) & \cdots & A(N,N) \end{bmatrix} \begin{bmatrix} w(c,1) \\ \vdots \\ \vdots \\ \vdots \\ w(c,N) \end{bmatrix} \quad \cdots \quad (30)$$

The components W(c,1), W(c,2), ..., W(c,N) of the column vector W(c) are called main component scores. W(c,n) represents the main component score of the nth main component and represents the value of the coordinate axis of the nth main component of the column vector W(c) when the column vector w(c) in the tap coefficient space of the N dimension is projected to the main component space of the N dimension.

By multiplying both sides of the expression (29) by the inverse matrix $A^{-1}$ of the main component matrix A, the expression (31) can be led.

[Math. 31]

$$w(c) = A^{-1}W(c) \quad \cdots \quad (31)$$

If the ith row jth column component of the inverse matrix $A^{-1}$ is represented as A' (i,j) and the column vectors W(c) and w(c) of the expression (31) and the inverse matrix $A^{-1}$ are represented by components, then the expression (31) is represented by the expression (32).

[Math. 32]

$$\begin{bmatrix} w(c,1) \\ \vdots \\ \vdots \\ w(c,N) \end{bmatrix} = \begin{bmatrix} A'(1,1) & \cdots & A'(1,N) \\ \vdots & \cdots & \vdots \\ \vdots & & \vdots \\ A'(N,1) & \cdots & A'(N,N) \end{bmatrix} \begin{bmatrix} W(c,1) \\ \vdots \\ \vdots \\ W(c,N) \end{bmatrix} \quad \cdots \quad (32)$$

According to the expression (31) and the expression (32), if the column vector W(c) and the inverse matrix $A^{-1}$ are available, then (the column vector whose components are) the tap coefficients w(c) of the class c can be restored fully.

Incidentally, from a characteristic of main component analysis, a main component score W(c,n) of a main component of a higher order number n (main component whose n of the "nth main component" is greater) has a smaller influence on the tap coefficient w(c).

When a tap coefficient w(c) of the class c is determined in accordance with the expression (31) and the expression (32), the influence the main component score W(c,n) of a main component having a higher order number n has on the tap coefficient w(c) is smaller.

Therefore, in the main component use time reduction method, the main component scores W(c,Q+1), W(c,Q+2), ..., W(c,N) of P = N - Q main components of the Q+1th main component to the Nth main component having a high order number n are set to 0 thereby to (substantially) reduce the number of main component scores W(c,n) configuring the column vector W(c) from N to Q.

To set the main component scores W(c,Q+1), W(c,Q+2), ..., W(c,N) of P = N - Q main components of the Q+1th main component to the Nth main component of higher orders from among the main component scores W(c,1), W(c,2), ..., W(c,N) of the first main component to the Nth main component to 0 is equivalent to projection of the N tap coefficients w(c,1) to w(c,N) of the class c in the tap coefficient space to the low dimensional space of the Q dimension lower than the dimension N of the tap coefficient space as depicted in FIG. 11.

By setting the main component scores W(c,Q+1), W(c,Q+2), ..., W(c,N) of P = N - Q main components of the Q+1th main component to the Nth main component of higher orders from among the main component scores W(c,1), W(c,2), ..., W(c,N) of the first main component to the Nth main component to 0 as described above, the number of main component scores W(c,n) configuring the column vector W(c) is (substantially) reduced from N to Q. The number of the main component scores W(c,1), W(c,2), ..., W(c,Q) reduced to Q is the reduction coefficient.

Here, the number of main component scores W(c,Q+1), W(c,Q+2), ..., W(c,N) that are set to 0 is referred to also as reduction number and is represented by P.

In the case where the tap coefficient w(c) is restored in accordance with the expression (32), when the main component scores W(c,Q+1), W(c,Q+2), ..., W(c,N) of the Q+1th main component to the Nth main component are 0, the components A'(i,Q+1), A'(i,Q+2), ..., A'(i,N) from the Q+1th column to the Nth column among the components A'(i,1), A'(i,2), ..., A'(i,N) of each row of the inverse matrix $A^{-1}$ can be regarded as 0.

By setting the main component scores W(c,Q+1) to W(c,N) of the Q+1th main component to the Nth main component to 0 and setting the components A'(i,Q+1) to A'(i,N) of the Q+1th column to the Nth column of each row of the inverse matrix $A^{-1}$ to 0 in the expression (32), the expression (33) can be obtained.

[Math. 33]

$$
\begin{bmatrix} w'(c,1) \\ \vdots \\ w'(c,N) \end{bmatrix} = \begin{bmatrix} A'(1,1) & \cdots & A'(1,Q) & 0 & \cdots & 0 \\ \vdots & \cdots & \vdots & \vdots & \cdots & \vdots \\ A'(N,1) & \cdots & A'(N,Q) & 0 & \cdots & 0 \end{bmatrix} \begin{bmatrix} W(c,1) \\ \cdots \\ W(c,Q) \\ 0 \\ \cdots \\ 0 \end{bmatrix} \updownarrow P
$$

$$
\Downarrow \qquad\qquad \Downarrow \qquad \overset{P}{\longleftrightarrow} \qquad \Downarrow
$$

$$
w'(c) \qquad\qquad A'^{-1} \qquad\qquad W'(c)
$$

$$
\cdots \ (33)
$$

In the expression (33), w'(c,n) on the left side represents the arithmetic operation result A'(n,1) × W(c,1) + A' (n,2) × W(c,2), ..., A' (n,Q) × W(c,Q) on the right side.

If the column vector on the left side of the expression (33) is represented as w'(c), the matrix on the right side of the expression (33) is represented as $A'^{-1}$ and the column vector on the right side of the expression (33) is represented as W'(c), then the expression (33) is represented by the expression (34).

[Math. 34]

$$
w'(c) = A'^{-1} W'(c) \ \cdots \ (34)
$$

In the expression (33) and the expression (34), since the main component scores W(c,Q+1) to W(c,N) of the Q+1th main component to the Nth main component and the components A'(i,Q+1) to (i,N) of the Q+1th column to the Nth column of each row of the inverse matrix $A^{-1}$ are 0, although w'(c,n) may not fully coincide with the original tap coefficient w(c,n), it has a value at least proximate to the tap coefficient w(c,n). In other words, in the tap coefficient space, the column vector w'(c) becomes a vector proximate to the column vector w(c).

Accordingly, according to the expression (33) and the expression (34), although the original tap coefficient w(c,n) may not possibly be restored fully, a tap coefficient w'(c,n) proximate to the original tap coefficient w(c,n) can be reconstructed.

Although the reduction coefficients here accurately signify the main component scores W(c,1) to W(c,Q) except the number of high order main component scores equal to the reduction number P from among the main component scores as the components of the column vector W'(c), in order to simplify the description, also the column vector W'(c) is referred to also as reduction coefficients.

Further, the matrix $A'^{-1}$ and the components except the components A'(i,Q+1) to A'(i,N) of 0 from the Q+1th column to the Nth column of each row of the matrix $A'^{-1}$ are referred to also as transform coefficients.

According to the main component utilization type reduction method, in place of the tap coefficients w(1), w(2), ..., w(C) for each class, the reduction coefficients W'(1), W'(2), ..., W'(C) for each class and the transform coefficient $A'^{-1}$ common to all classes are placed into reduction filter information and transmitted from the encoding apparatus 11 to the decoding apparatus 12.

Here, the reduction coefficients W'(c) are coefficients in regard to which P high order main component scores W(c,Q+1) to W(c,N) of the column vector W(c) are 0, and if the reduction number P can be acquired by the decoding apparatus 12, then since the coefficients having the value 0 need not be transmitted from the encoding apparatus 11 to the decoding apparatus 12, the reduction coefficients W'(c) of one class are reduced in data amount from the tap coefficients w(c) of one class by a number equal to P that is the reduction number.

Further, the transform coefficient $A'^{-1}$ is a coefficient common to all of the C classes (class 1 to class C), and it is sufficient if only one matrix as the transform coefficient $A'^{-1}$ for all classes is transmitted from the encoding apparatus 11 to the decoding apparatus 12. Then, the transform coefficient $A'^{-1}$ is coefficients (matrix) in which the components A' (i,Q+1) to A' (i,N) of the Q+1th column to the Nth column of each row of the inverse matrix $A^{-1}$ are 0, and if the reduction number P can be acquired by the decoding apparatus 12, then there is no necessity to transmit the coefficients of 0 from the encoding apparatus 11 to the decoding apparatus 12.

Thus, from the foregoing, if the class number C or the reduction number P is somewhat great, then the total data amount including the reduction coefficients W'(c) for the individual classes and the transform coefficient $A'^{-1}$ common to all classes becomes sufficiently smaller than the data amount of the tap coefficients w(c) for the individual classes.

Further, in the main component utilization type reduction method, when the reduction coefficients W'(c) and the transform coefficient $A'^{-1}$ are generated, the main component scores W(c,n) of higher order main components (main component scores W(c,Q+1), W(c,Q+2), ..., W(c,N) of the Q+1th main component to the Nth main component) and the components A'(i,Q+1), A'(i,Q+2), ..., A'(i, N) of the Q+1th row to the Nth row of the inverse matrix $A^{-1}$ corresponding to the main component scores W(c,n) of the high order main components, all of which have less influence on the tap coefficients to be reconstructed using the reduction coefficients W'(c) and the transform coefficients $A'^{-1}$, are set to 0.

Accordingly, the tap coefficients w'(c,n) reconstructed in accordance with the expression (33) and the expression (34) using such reduction coefficients W'(c) and the transform coefficient $A'^{-1}$ can be made have values very proximate to the original tap coefficients w(c,n), and the compression efficiency can be improved appropriately.

In other words, the compression efficiency can be improved while sufficient picture quality is maintained as the picture quality of a post-filter image (and after all, of a reference image or a decoded image).

FIG. 12 is a view depicting an example of a determination method for determining the reduction number P in the main component utilization type reduction method.

As the determination method for the reduction number P, for example, an optimization method and an available information utilization method are available.

In the optimization method, the encoding apparatus 11 determines a reduction number P such that, for each predetermined unit such as a picture or a sequence, the compression efficiency and the picture quality of a post-filter image may become best, namely, for example, the RD (Rate-Distortion) cost may become best.

In the case where the optimization method is adopted as the determination method for a reduction number P, it is necessary to transmit the reduction number P from the encoding apparatus 11 to the decoding apparatus 12 in order to allow the decoding apparatus 12 to recognize the reduction number P, namely, the number of components on the lower side that are 0 in the column vector as the reduction coefficients W'(c) (main component scores W(c,Q+1), W(c,Q+2), ..., W(c,N) of the high order main components) or the number of columns on the left side that are 0 in the matrix as the transform coefficient $A'^{-1}$ (the Q+1th column to the Nth column). In this case, the reduction number P can be, for example, placed into and transmitted together with the reduction filter information.

In the available information utilization method, the reduction number P is determined in response to available information.

The available information signifies information that can be acquired from encoded data of an image during decoding, encoding information or the like, which can be obtained by prediction encoding of an original image by the encoding apparatus 11. Accordingly, the available information can be acquired by any of the encoding apparatus 11 and the decoding apparatus 12.

In the case where the available information utilization method is adopted as the determination method for the reduction number P, if a rule for determining a reduction number P is shared by the encoding apparatus 11 and the decoding apparatus 12 in response to the available information, then there is no necessity to transmit the reduction number P from the encoding apparatus 11 to the decoding apparatus 12.

As the available information to be used for determination of the reduction number P in the available information utilization method, for example, a quantization parameter QP as encoding information, a bit rate of encoded data, an image feature amount of an image during decoding or the like can be adopted.

In the available information utilization method, for example, as the average of the parameters QP of the overall screen (one screen) increases, the reduction number P can be determined to a lower value in order to maintain a fine texture of the original image or the like.

Further, in the available information utilization method, for example, as the bit rate of encoded data increases, the reduction number P can be set to a lower value in order to maintain a fine structure of the original image or the like.

Further, in the available information utilization method, for example, as the frequency band (bandwidth) of the overall screen as the image feature amount of an image during decoding increases, the reduction number P can be set to a lower value in order to maintain a fine structure of the original image or the like.

It is to be noted that which one of the optimization method and the available information utilization method is to be adopted as the determination method of a reduction number P can be determined in advance. Further, which one of the optimization method and the available information utilization method is to be adopted as the determination method for the reduction number P can be determined suitably by the encoding apparatus 11, and information representative of the determination method for a reduction number P can be transmitted from the encoding apparatus 11 to the decoding apparatus 12.

FIG. 13 is a view illustrating a range of a class to which the main component utilization type reduction method is applied.

Here, the tap coefficient for each class obtained by tap coefficient learning of the learning apparatus 131 (FIG. 10) is referred to also as initial coefficient.

In the case described above, in order to simplify description, the description is given assuming that the main component utilization type reduction method is applied to all classes of the initial coefficients. However, the range of the classes to which the main component utilization type reduction method is to be applied (hereinafter referred to also as reduction application range) may be all classes of the initial coefficients or may be part of the classes.

In the case where part of the classes of the initial coefficients are adopted as the reduction application range, for example, a nonconforming class in which it is not suitable to use a tap coefficient (initial coefficient) as a reduction coefficient W'(c) is detected, and the main component utilization type reduction method can be applied to the remaining classes where such nonconforming classes are removed from all classes of the initial coefficients as the reduction application range.

Here, as a nonconforming class, for example, a class (hereinafter referred to also as singular class) in which, for example, in the tap coefficient space, a tap coefficient (class coefficient point) is spaced by a distance equal to or greater than a threshold value from a tap coefficient of a different class that is nearest can be adopted.

Further, as the nonconforming class, for example, a class in which the S/N ratio of a post-filter image as a second image generated by the classification adaptive process as a filter process using the tap coefficients w'(c) reconstructed by transforming the reduction coefficients W'(c) with the transform coefficient $A'^{-1}$, for example, in accordance with the expression (33) and the expression (34) is equal to or lower than a threshold value (such class is hereinafter referred to as low S/N ratio class) can be adopted.

Furthermore, as the nonconforming class, both a singular class and a low S/N ratio class can be adopted.

In the case where all classes of the initial coefficients are adopted as the reduction application range, into the reduction filter information, the reduction coefficients W'(1), W'(2), ..., W'(C) of all classes and the transform coefficient $A'^{-1}$ are placed.

In the case where the classes other than the nonconforming classes from among all classes of the initial coefficients are adopted as the reduction application range, into the reduction filter information, the reduction coefficients W'(c) of the classes other than the nonconforming classes and the transform coefficient $A'^{-1}$ are placed. Further, in this case, into the reduction filter information, the tap coefficients of the nonconforming classes and a class flag representative of whether each class is a nonconforming class are placed further.

As the class flag, for example, a set of flags of 1 bit representative of whether the flag is a nonconforming class or the like can be adopted for each class.

It is to be noted that, in any of the case where all classes are adopted as the reduction application range and the case where classes other than nonconforming classes are adopted, when the optimization method is adopted as the determination method for the reduction number P, into the reduction filter information, the reduction number P is placed further.

Further, which one of all classes and classes other than nonconforming classes are adopted as the reduction application range can be determined in advance. Further, which one of all classes and classes other than nonconforming classes are to be adopted as the reduction application range can be determined suitably by the encoding apparatus 11, and information representative of a result of the determination can be transmitted from the encoding apparatus 11 to the decoding apparatus 12.

Here, in the case where a class flag is to be transmitted, which one of all classes and classes other than nonconforming classes is adopted as the reduction application range need not necessarily be distinguished. This is because, in the case where a class flag is transmitted, whether the reduction application range is all classes or classes other than nonconforming classes can be recognized from the class flag.

<Example of Configuration of Learning Apparatus 131>

FIG. 14 is a block diagram depicting an example of a configuration of the learning apparatus 131 of FIG. 10.

Referring to FIG. 14, the learning apparatus 131 includes a tap selection section 151, a classification section 152, an addition section 153, and a coefficient calculation section 154.

The tap selection section 151 to coefficient calculation section 154 are configured similarly to the tap selection section 51 to coefficient calculation section 54 of FIG. 4, respectively.

In the learning apparatus 131 of FIG. 14, tap coefficient learning is performed using an image during decoding as student data and using an original image corresponding to the image during decoding as teacher data, and tap coefficients obtained by the tap coefficient learning are supplied as initial coefficients form the coefficient calculation section 154 to the reduction apparatus 132 (FIG. 10).

The tap coefficient learning by the learning apparatus 131 can be performed in parallel to encoding of an original image and also can be performed in advance irrespective of encoding of an original image.

In the case where the tap coefficient learning is performed in advance irrespective of encoding of an original image, original images of a plurality of categories can be used as teacher data to perform tap coefficient learning for each category. Then, tap coefficients, for example, of a category that minimize a predetermined cost function of an RD cost or the like can be outputted as initial coefficients.

<First Example of Configuration of Reduction Apparatus 132>

FIG. 15 is a block diagram depicting a first example of a configuration of the reduction apparatus 132 of FIG. 10.
In particular, FIG. 15 depicts an example of a configuration of the reduction apparatus 132 in the case where the optimization method is used as the determination method of a reduction number P (FIG. 12) and classes other than nonconforming classes among all classes of initial coefficients are adopted as the reduction application range (FIG. 13).
Referring to FIG. 15, the reduction apparatus 132 includes a reduction number determination section 161, a coefficient reduction section 162, a selection section 163, and a nonconforming class detection section 164.
The reduction number determination section 161 determines a plurality of candidates for a reduction number P, for example, in response to the quantization parameter QP, a bit rate of encoded data, an image feature amount of an image during decoding, an image feature amount of an original image and so forth, and supplies the candidates to the coefficient reduction section 162.
For example, the reduction number determination section 161 determines values of the plurality of candidates for a reduction number P such that the value decreases or increases as the average value of the quantization parameter QP over the overall screen (one screen) increases or decreases.
Further, the reduction number determination section 161 determines values of the plurality of candidates for a reduction number P such that the value decreases or increases as the bit rate of the encoded data increases or decreases.
Furthermore, the reduction number determination section 161 determines values of the plurality of candidates for a reduction number P such that the value decreases or increases as the frequency bandwidth of the overall screen as an image feature amount of an image during decoding or an original image increases or decreases.
To the coefficient reduction section 162, not only the plurality of candidates for a reduction number P are supplied from the reduction number determination section 161 but also initial coefficients are supplied from the learning apparatus 131.
The coefficient reduction section 162 detects a class whose initial coefficient from among the initial coefficients from the learning apparatus 131 is spaced by a great amount from a different class whose tap coefficient is nearest in the tap coefficient space (class spaced by a distance equal to or greater than a threshold value) as a nonconforming class.
Further, the coefficient reduction section 162 performs, determining each class except nonconforming classes from among all classes of initial coefficients as a target class that is a target of main component analysis, main component analysis of tap coefficients of the target glass to determine, for each of the plurality of candidates for a reduction number, a reduction coefficient W'(c) for each target class and a transform coefficient $A'^{-1}$ common to all target classes.
Then, the coefficient reduction section 162 supplies the reduction coefficients W'(c) regarding the plurality of candidates for a reduction number P and the transform coefficient $A'^{-1}$ to the selection section 163.
The selection section 163 selects, from among the plurality of candidates for a reduction number P in regard to which the reduction coefficients W'(c) and the transform coefficient $A'^{-1}$ are supplied from the coefficient reduction section 162, a candidate whose RD cost is best as an adopted reduction number P to be adopted for reduction of the data amount of the tap coefficients.
Further, the selection section 163 selects, from among the reduction coefficients W'(c) regarding the plurality of candidates for a reduction number P and the transform coefficient $A'^{-1}$ from the coefficient reduction section 162, a reduction coefficient W'(c) and the transform coefficient $A'^{-1}$ regarding the adopted reduction number P as an adopted reduction coefficient W'(c) and the adopted transform coefficient $A'^{-1}$ to be adopted for reduction of the data amount of tap coefficients.
Then, the selection section 163 supplies the adopted reduction number P, adopted reduction coefficient W'(c) and the adopted transform coefficient $A'^{-1}$ to the nonconforming class detection section 164.
The nonconforming class detection section 164 uses the adopted reduction number P, the adopted reduction coefficient W'(c), and the adopted transform coefficient $A'^{-1}$ to reconstruct the tap coefficients W'(c,n) for each target class in accordance with the expression (33) and the expression (34).
Here, the tap coefficient w'(c,n) reconfigured in accordance with the expression (33) and the expression (34) is referred to also as reconstruction tap coefficient w'(c,n).
The nonconforming class detection section 164 detects a class in which the PSNR (Peak signal-to-noise ratio) of a post-filter image as a second image obtained by the classification adaptive process as a filter process that uses the reconstruction tap coefficients w'(c,n) for each target class is reduced significantly (class whose PSNR is equal to or lower than a threshold value) as a nonconforming class. Then, the nonconforming class detection section 164 deletes the reduction coefficient of the nonconforming class from the adopted reduction coefficients W'(c).

Further, the nonconforming class detection section 164 acquires the nonconforming classes detected by the coefficient reduction section 162 and the tap coefficients w(c) of the nonconforming classes detected by the nonconforming class detection section 164 from among the initial coefficients from the learning apparatus 131.

The nonconforming class detection section 164 generates a class flag representative of whether each class of initial coefficients is a nonconforming class, and places the reduction number P, adopted reduction coefficient W'(c) and the adopted transform coefficient $A'^{-1}$ of the target class, the tap coefficient w(c) of the nonconforming class and the class flag into the reduction filter information and supplies them to the image conversion apparatus 133 (FIG. 10) and the reversible encoding section 106 (FIG. 9).

<First Example of Configuration of Image Conversion Apparatus 133>

FIG. 16 is a block diagram depicting a first example of a configuration of the image conversion apparatus 133 of FIG. 10.

In particular, FIG. 16 depicts an example of a configuration of the image conversion apparatus 133 in the case where the reduction apparatus 132 is configured in such a manner as depicted in FIG. 15.

Referring to FIG. 16, the image conversion apparatus 133 includes a tap selection section 171, a classification section 172, a coefficient acquisition section 173, a prediction operation section 174, and a coefficient reconstruction section 175.

The tap selection section 171 to the prediction operation section 174 are configured similarly to the tap selection section 21 to the prediction operation section 24 of FIG. 2, respectively.

To the coefficient reconstruction section 175, reduction filter information is supplied from the reduction apparatus 132 of FIG. 15.

The reduction filter information supplied from the reduction apparatus 132 of FIG. 15 includes an adopted reduction number P, adopted reduction coefficients W'(c), and adopted transform coefficients $A'^{-1}$ of a target class, tap coefficients w(c) of nonconforming classes and class flags.

The coefficient reconstruction section 175 recognizes, in regard to the classes of initial coefficients, nonconforming classes and other classes than the nonconforming classes (hereinafter referred to also as conforming classes) in response to the class flags included in reduction filter information from the reduction apparatus 132.

The coefficient reconstruction section 175 recognizes coefficients that are 0 among the adopted reduction coefficients W'(c) and the adopted transform coefficients $A'^{-1}$ included in the reduction filter information in response to the adopted reduction numbers P included in the reduction filter information, and then reconstructs the tap coefficients w'(c) of the conforming classes in accordance with the expression (33) and the expression (34) using the adopted reduction coefficients W'(c) and the adopted transform coefficients $A'^{-1}$.

Then, the coefficient reconstruction section 175 supplies the tap coefficients w'(c) of the conforming classes and the tap coefficients w(c) of the nonconforming classes included in the reduction filter information as tap coefficients of the individual C classes to the coefficient acquisition section 173.

The coefficient acquisition section 173 stores the tap coefficients from the coefficient reconstruction section 175, acquires, from among the tap coefficients, the tap coefficients of a class supplied from the classification section 172 and supplies the tap coefficients to the prediction operation section 174.

<Second Example of Configuration of Reduction Apparatus 132>

FIG. 17 is a block diagram depicting a second example of a configuration of the reduction apparatus 132 of FIG. 10.

In particular, FIG. 17 depicts an example of a configuration of the reduction apparatus 132 in the case where the optimization method is adopted as the determination method for a reduction number P (FIG. 12) and all classes of initial coefficients are adopted as the reduction application range (FIG. 13).

It is to be noted that, in FIG. 17, elements corresponding to those in the case of FIG. 15 are denoted by the same reference numerals and, in the following description, description of them is omitted suitably.

Referring to FIG. 17, the reduction apparatus 132 includes a reduction number determination section 161, a selection section 163, and a coefficient reduction section 181.

Accordingly, the reduction apparatus 132 of FIG. 17 is common to that of the case of FIG. 15 in that it includes the reduction number determination section 161 and the selection section 163.

However, the reduction apparatus 132 of FIG. 17 is different from that in the case of FIG. 15 in that it does not include the nonconforming class detection section 164 and that it includes the coefficient reduction section 181 in place of the coefficient reduction section 162.

Although the coefficient reduction section 162 of FIG. 15 performs, determining classes except nonconforming classes from among all classes of initial coefficients as target classes that are a target of main component analysis, the coefficient reduction section 181 of FIG. 17 performs, determining all classes of initial coefficients as target classes, main component analysis of tap coefficients of the target classes to determine, for each of a plurality of candidates for a reduction number P, reduction coefficients W'(c) for each target class and a transform coefficients $A'^{-1}$ common to all target classes.

In the reduction apparatus 132 of FIG. 17, the selection section 163 selects an adopted reduction number P from a plurality of candidates for a reduction number P and selects, from among the reduction coefficients W'(c) similarly as in the case of FIG. 15 and the transform coefficients $A'^{-1}$ regarding each of the plurality of candidates for a reduction number P from the coefficient reduction section 181, reduction coefficients W'(c) and transform coefficients $A'^{-1}$ regarding the adopted reduction number P as the adopted reduction coefficients W'(c) and the adopted transform coefficients $A'^{-1}$.

Then, the selection section 163 places the adopted reduction numbers P, adopted reduction coefficients W'(c) and adopted transform coefficients $A'^{-1}$ into reduction filter information and supplies them to the image conversion apparatus 133 (FIG. 10) and the reversible encoding section 106 (FIG. 9).

<Second Example of Configuration of Image Conversion Apparatus 133>

FIG. 18 is a block diagram depicting a second example of a configuration of the image conversion apparatus 133 of FIG. 10.

In particular, FIG. 18 depicts an example of a configuration of the image conversion apparatus 133 in the case where the reduction apparatus 132 is configured in such a manner as depicted in FIG. 17.

It is to be noted that, in FIG. 18, elements corresponding to those in the case of FIG. 16 are denoted by the same reference numerals and, in the following description, description of them is omitted suitably.

Referring to FIG. 18, the image conversion apparatus 133 includes a tap selection section 171 to a prediction operation section 174 and a coefficient reconstruction section 191.

Accordingly, the image conversion apparatus 133 of FIG. 18 is common to that of the case of FIG. 16 in that it includes the tap selection section 171 to the prediction operation section 174.

However, the image conversion apparatus 133 of FIG. 18 is different from that of the case of FIG. 16 in that it includes the coefficient reconstruction section 191 in place of the coefficient reconstruction section 175.

The coefficient reconstruction section 175 of FIG. 16 recognizes nonconforming classes and conforming classes other than the nonconforming classes in response to class flags included in the reduction filter information and uses the adopted reduction coefficient W'(c) and the adopted transform coefficient $A'^{-1}$ only for the conforming classes to reconstruct the tap coefficients w'(c) of the conforming classes in accordance with the expression (33) and the expression (34).

On the other hand, although class flags are not included in the reduction filter information supplied from the reduction apparatus 132 of FIG. 17 to the coefficient reconstruction section 191 of FIG. 18, adopted reduction coefficients W'(c) of all classes of initial coefficients are included.

Therefore, the coefficient reconstruction section 191 uses, in regard to all classes of initial coefficients, the adopted reduction coefficients W'(c) and the adopted transform coefficients $A'^{-1}$ included in the reduction filter information to reconstruct the tap coefficients w'(c) in accordance with the expression (33) and the expression (34) similar to the coefficient reconstruction section 175.

Then, the coefficient reconstruction section 191 supplies the tap coefficients w'(c) reconstructed in regard to all classes of initial coefficient as tap coefficients individually of the C classes to the coefficient acquisition section 173.

<Third Example of Configuration of Reduction Apparatus 132>

FIG. 19 is a block diagram depicting a third example of a configuration of the reduction apparatus 132 of FIG. 10.

In particular, FIG. 19 depicts an example of a configuration of the reduction apparatus 132 in the case where the available information utilization method is adopted as the determination method for a reduction number P (FIG. 12) and conforming classes other than nonconforming classes from among all classes of initial coefficients are adopted as the reduction application range (FIG. 13).

It is to be noted that, in FIG. 19, elements corresponding to those in the case of FIG. 15 are denoted by the same reference numerals and, in the following description, description of them is omitted suitably.

Referring to FIG. 19, the reduction apparatus 132 includes a coefficient reduction section 162, a nonconforming class detection section 164, and a reduction number determination section 211.

Accordingly, the reduction apparatus 132 of FIG. 19 is common to that of the case of FIG. 15 in that it includes the coefficient reduction section 162 and the nonconforming class detection section 164.

However, the reduction apparatus 132 of FIG. 19 is different from that of the case of FIG. 15 in that it does not include the selection section 163 and that it includes the reduction number determination section 211 in place of the reduction number determination section 161.

Although the reduction number determination section 161 of FIG. 15 determines a plurality of candidates for a reduction number P, the reduction number determination section 211 of FIG. 19 determines a reduction number P in response to available information as described hereinabove with reference to FIG. 12 and supplies the reduction number P to the coefficient reduction section 162.

In the reduction apparatus 132 of FIG. 19, the coefficient reduction section 162 performs, determining classes other than nonconforming classes excluded from all classes of initial coefficients as target classes that are made a target of main component analysis similarly as in the case of FIG. 15, main component analysis of the tap coefficients of the target classes to determine the reduction coefficients W'(c) and the transform coefficients $A^{'-1}$. However, the coefficient reduction section 162 determines, determining the reduction number P from the reduction number determination section 211 as the adopted reduction number P, the reduction coefficients W'(c) and the transform coefficients $A^{'-1}$ only in regard to the adopted reduction number P.

Then, the coefficient reduction section 162 supplies the reduction coefficients W'(c) and the transform coefficients $A^{'-1}$ determined in regard to the adopted reduction number P as the adopted reduction coefficients W'(c) and the adopted transform coefficients $A^{'-1}$ to the nonconforming class detection section 164 together with the adopted reduction number P.

The nonconforming class detection section 164 detects each class that significantly decreases the PSNR of a post-filter image as a nonconforming class similarly as in the case of FIG. 15 and deletes reduction coefficients of such nonconforming classes from the adopted reduction coefficients W'(c).

Further, the nonconforming class detection section 164 acquires the nonconforming classes detected by the coefficient reduction section 162 and the tap coefficients w'(c) of the nonconforming classes detected by the nonconforming class detection section 164 from among the initial coefficients from the learning apparatus 131 similarly as in the case of FIG. 15.

Then, the nonconforming class detection section 164 generates a class flag that represents whether each class of initial coefficients is a nonconforming class, places the adopted reduction coefficients W'(c) and the adopted transform coefficients $A^{'-1}$ of the target classes, tap coefficients w'(c) of the nonconforming classes and class flags into the reduction filter information and supplies them to the image conversion apparatus 133 (FIG. 10) and the reversible encoding section 106 (FIG. 9).

<Third Example of Configuration of Image Conversion Apparatus 133>

FIG. 20 is a block diagram depicting a third example of a configuration of the image conversion apparatus 133 of FIG. 10.

In particular, FIG. 20 depicts an example of a configuration of the image conversion apparatus 133 in the case where the reduction apparatus 132 is configured in such a manner as depicted in FIG. 19.

It is to be noted that, in FIG. 20, elements corresponding to those in the case of FIG. 16 are denoted by the same reference numerals and, in the following description, description of them is omitted suitably.

Referring to FIG. 20, the image conversion apparatus 133 includes a tap selection section 171 to a prediction operation section 174, a reduction number determination section 221, and a coefficient reconstruction section 222.

Accordingly, the image conversion apparatus 133 of FIG. 20 is common to that in the case of FIG. 16 in that it includes the tap selection section 171 to the prediction operation section 174.

However, the image conversion apparatus 133 of FIG. 20 is different from that in the case of FIG. 16 in that it includes the reduction number determination section 221 newly provided therein and that it includes the coefficient reconstruction section 222 in place of the coefficient reconstruction section 175.

The reduction number determination section 221 determines a reduction number P in accordance with available information in a similar manner as in the reduction number determination section 211 of FIG. 19 and supplies the reduction number P to the coefficient reconstruction section 222.

The coefficient reconstruction section 222 recognizes, in regard to classes of initial coefficients, nonconforming classes and conforming classes other than the nonconforming classes in response to class flags included in reduction filter information from the reduction apparatus 132 similar to the coefficient reconstruction section 175 of FIG. 16.

Further, the coefficient reconstruction section 222 recognizes coefficients that are 0 among the adopted reduction coefficients W'(c) and the adopted transform coefficients $A^{'-1}$ included in the reduction filter information in response to the reduction number P and then uses the adopted reduction coefficients W'(c) and the adopted transform coefficients $A^{'-1}$ to reconstruct the tap coefficients w'(c) of the conforming classes in accordance with the expression (33) and the expression (34) similar to the coefficient reconstruction section 175 of FIG. 16.

However, the coefficient reconstruction section 222 performs the recognition of the coefficients of 0 among the adopted reduction coefficients W'(c) and the adopted transform coefficients $A^{'-1}$ in response to the reduction number P supplied from the reduction number determination section 221.

Then, the coefficient reconstruction section 222 supplies the tap coefficients w'(c) of the conforming classes and the tap coefficients w(c) of the nonconforming classes included in the reduction filter information as tap coefficients individually of the C classes to the coefficient acquisition section 173 similar to the coefficient reconstruction section 175 of FIG. 16.

<Fourth Example of Configuration of Reduction Apparatus 132>

FIG. 21 is a block diagram depicting a fourth example of a configuration of the reduction apparatus 132 of FIG. 10.

In particular, FIG. 21 depicts an example of a configuration of the reduction apparatus 132 in the case where the available information utilization method is applied as the determination method of a reduction number P (FIG. 12) and all classes of initial coefficients are adopted as the reduction application range (FIG. 13).

It is to be noted that, in FIG. 21, elements corresponding to those in the case of FIG. 17 or 19 are denoted by the same reference numerals and, in the following description, description of them is omitted suitably.

Referring to FIG. 21, the reduction apparatus 132 includes a coefficient reduction section 181 and a reduction number determination section 211.

In FIG. 21, the reduction number determination section 211 determines a reduction number P in response to available information similarly as in the case of FIG. 19. Then, the reduction number determination section 211 supplies the reduction number P to the coefficient reduction section 181.

The coefficient reduction section 181 uses the reduction number P from the reduction number determination section 211 as an adopted reduction number P and determines the number of reduction coefficients W'(c) and the number of transform coefficients $A'^{-1}$ equal to the adopted reduction number P similarly as in the case of FIG. 17.

Then, the coefficient reduction section 181 places the reduction coefficients W'(c) and the transform coefficients $A'^{-1}$ determined in regard to the reduction number P as adopted reduction coefficients W'(c) and adopted transform coefficients $A'^{-1}$ into reduction filter information and supplies them to the image conversion apparatus 133 (FIG. 10) and the reversible encoding section 106 (FIG. 9).

<Fourth Example of Configuration of Image Conversion Apparatus 133>

FIG. 22 is a block diagram depicting a fourth example of a configuration of the image conversion apparatus 133 of FIG. 10.

In particular, FIG. 22 depicts an example of a configuration of the image conversion apparatus 133 in the case where the reduction apparatus 132 is configured in such a manner as depicted in FIG. 21.

It is to be noted that, in FIG. 22, elements corresponding to those in the case of FIG. 20 are denoted by the same reference numerals and, in the following description, description of them is omitted suitably.

Referring to FIG. 22, the image conversion apparatus 133 includes a tap selection section 171 to a prediction operation section 174, a reduction number determination section 221, and a coefficient reconstruction section 231.

Accordingly, the image conversion apparatus 133 of FIG. 22 is common to that of the case of FIG. 20 in that it includes the tap selection section 171 to the prediction operation section 174 and the reduction number determination section 221.

However, the image conversion apparatus 133 of FIG. 22 is different from that in the case of FIG. 20 in that it includes the coefficient reconstruction section 231 provided in place of the coefficient reconstruction section 222.

The coefficient reconstruction section 231 recognizes coefficients that are 0 among the adopted reduction coefficients W'(c) and the adopted transform coefficients $A'^{-1}$ included in the reduction filter information in response to the reduction number P from the reduction number determination section 221 similar to the coefficient reconstruction section 222 of FIG. 20. Then, the coefficient reconstruction section 231 uses the adopted reduction coefficients W'(c) and the adopted transform coefficients $A'^{-1}$ in regard to all classes of initial coefficients to reconstruct the tap coefficients w'(c) in accordance with the expression (33) and the expression (34) similar to the coefficient reconstruction section 191 of FIG. 18. Then, the coefficient reconstruction section 231 supplies the tap coefficients w'(c) as tap coefficients individually of the C classes to the coefficient acquisition section 173.

<Encoding Process>

FIG. 23 is a flow chart illustrating an example of an encoding process of the encoding apparatus 11 of FIG. 9.

It is to be noted that the order of steps of the encoding process depicted in FIG. 23 and so forth is an order of convenience of description, and the steps of an actual encoding process are suitably performed in parallel or in a necessary order. This similarly applies also to processes hereinafter described.

In the encoding apparatus 11, the learning apparatus 131 (FIG. 10) of the classification adaptive filter 111 temporarily stores an image during decoding supplied thereto as student data and temporarily stores an original image corresponding to the image during decoding as teacher data.

Then, the learning apparatus 131 decides at step S11 whether the current timing is an update timing for updating tap coefficients.

Here, the update timing for tap coefficients can be determined in advance, for example, for each one or more frames (pictures), for each one or more sequences, for each one or more slices, for each one or more lines of a predetermined block such as a CTU or the like.

Further, as the update timing for tap coefficients, not only such a periodical (fixed) timing as a timing for each one or more frames (pictures) but also, as it were, a dynamic timing such as a timing at which the S/N ratio of a post-filter image becomes equal to or lower than a threshold value (timing at which the error of a post-filter image with respect to the original image becomes equal to or greater than a threshold value), a timing at which the (absolute value sum or the like of) the residual becomes equal to or greater than a threshold value can be adopted.

In the case where it is decided at step S11 that the current timing is not an update timing for tap coefficients, the processing skips steps S12 to S15 and advances to step S16.

On the other hand, in the case where it is decided at step S11 that the current timing is an update timing for tap coefficients, the processing advances to step S12, at which the learning apparatus 131 performs tap coefficient learning.

In particular, the learning apparatus 131 performs tap coefficient learning using an image during decoding and an original image stored, for example, during a period after the update timing in the preceding cycle to the update timing in the current cycle as student data and teacher data, respectively, to determine tap coefficients as initial coefficients for each class.

Then, the learning apparatus 131 supplies the initial coefficients for the individual classes obtained by the tap coefficient learning to the reduction apparatus 132, and the processing advances from step S12 to step S13.

At step S13, the reduction apparatus 132 generates reduction filter information in which the data amount of the initial coefficients from the learning apparatus 131 is reduced, for example, by a main component utilization type reduction method, and supplies the reduction filter information to the image conversion apparatus 133 (FIG. 10) and the reversible encoding section 106 (FIG. 9).

In particular, the reduction apparatus 132 converts the initial coefficients w(c) from the learning apparatus 131 into tap coefficients w'(c) using main component analysis. Further, the reduction apparatus 132 generates reduction filter information that includes at least the reduction coefficients W'(c) and transform coefficients $A'^{-1}$ for converting the reduction coefficients W'(c) into tap coefficients w'(c), and supplies the reduction filter information to the image conversion apparatus 133 and the reversible encoding section 106.

Here, the reduction filter information includes, in addition to the reduction coefficients W'(c) and the transform coefficients $A'^{-1}$, the reduction number P, class flags, and tap coefficients w(c) of nonconforming classes as occasion demands as described hereinabove with reference to FIGS. 15 to 22.

Thereafter, the processing advances from step S13 to step S14, at which the reversible encoding section 106 (FIG. 9) sets the reduction filter information from the reduction apparatus 132 to a transmission target, and thereafter, the processing advances to step S15. The reduction filter information set to the transmission target is placed into and transmitted together with encoded data in a prediction encoding process performed at step S16 hereinafter described.

At step S15, the image conversion apparatus 133 (FIG. 16, 18, 20, or 22) reconstructs tap coefficients (w'(c)) in accordance with the expression (33) from the reduction coefficients W'(c) and the transform coefficients $A'^{-1}$ included in the reduction filter information from the reduction apparatus 132. Then, the image conversion apparatus 133 updates tap coefficients stored in the coefficient acquisition section 173 (tap coefficients to be used in a classification adaptive process) to the tap coefficients reconstructed from the reduction filter information, and the processing advances to step S16.

At step S16, a prediction encoding process of the original image is performed, and the encoding process ends therewith.

FIG. 24 is a flow chart illustrating an example of the prediction encoding process at step S16 of FIG. 23.

In the prediction encoding process, at step S31, the A/D conversion section 101 (FIG. 9) A/D converts the original image and supplies a resulting image to the sorting buffer 102, and the processing advances to step S32.

At step S32, the sorting buffer 102 stores such original images from the A/D conversion section 101, sorts the original images into an encoding order and outputs a resulting image, and the processing advances to step S33.

At step S33, the intra-prediction section 114 performs an intra-prediction process of the intra prediction mode, and the processing advances to step S34. At step S34, the motion prediction compensation section 115 performs an inter-motion prediction process for performing motion prediction or motion compensation in the inter prediction mode, and the processing advances to step S35.

In the intra prediction process of the intra-prediction section 114 and the inter-motion prediction process of the motion prediction compensation section 115, cost functions of various prediction modes are arithmetically operated and predicted images are generated.

At step S35, the predicted image selection section 116 determines an optimum prediction mode on the basis of the cost functions obtained by the intra-prediction section 114 and the motion prediction compensation section 115.

Then, the predicted image selection section 116 selects and outputs the predicted image of an optimum prediction mode from among the predicted images generated by the intra-prediction section 114 and the predicted images generated by the motion prediction compensation section 115, and the processing advances from step S35 to step S36.

At step S36, the arithmetic operation section 103 arithmetically operates a residual between a target image of an encoding target that is the original image outputted from the sorting buffer 102 and the predicted image outputted from the predicted image selection section 116 and supplies the residual to the orthogonal transform section 104, and the processing advances to step S37.

At step S37, the orthogonal transform section 104 orthogonally transforms the residual from the arithmetic operation section 103 and supplies orthogonal transform coefficients obtained by the orthogonal transform to the quantization section 105, and the processing advances to step S38.

At step S38, the quantization section 105 quantizes the orthogonal transform coefficients from the orthogonal transform section 104 and supplies quantization coefficients obtained by the quantization to the reversible encoding section 106 and the dequantization section 108, and the processing advances to step S39.

At step S39, the dequantization section 108 dequantizes the quantization coefficients from the quantization section 105 and supplies orthogonal transform coefficients obtained as a result of the dequantization to the inverse orthogonal transform section 109, and the processing advances to step S40. At step S40, the inverse orthogonal transform section 109 inversely orthogonally transforms the orthogonal transform coefficients from the dequantization section 108 and supplies a residual obtained as a result of the inverse orthogonal transform to the arithmetic operation section 110, and the processing advances to step S41.

At step S41, the arithmetic operation section 110 adds the residual from the inverse orthogonal transform section 109 and the predicted image outputted from the predicted image selection section 116 to generate an image during decoding corresponding to the original image having been the target of the arithmetic operation of the residual by the arithmetic operation section 103. The arithmetic operation section 110 supplies the image during decoding to the classification adaptive filter 111 or the frame memory 112, and the processing advances from step S41 to step S42.

In the case where the image during decoding is supplied from the arithmetic operation section 110 to the classification adaptive filter 111, at step S42, the classification adaptive filter 111 performs a classification adaptive process (classification adaptive filter process) as a process of an ILF for the image during decoding from the arithmetic operation section 110. Since the classification adaptive process is performed for the image during decoding, a post-filter image that is more proximate to the original than that in the case where the image during decoding is filtered by an ILF is determined (generated).

The classification adaptive filter 111 supplies the post-filter image obtained by the classification adaptive process to the frame memory 112, and the processing advances from step S42 to step S43.

At step S43, the frame memory 112 stores the image during decoding supplied from the arithmetic operation section 110 or the post-filter image supplied from the classification adaptive filter 111 as a decoded image, and the processing advances to step S44. The decoded image stored in the frame memory 112 is used as a reference image from which a predicted image is to be generated at step S34 or S35.

At step S44, the reversible encoding section 106 encodes the quantization coefficients from the quantization section 105. Further, the reversible encoding section 106 encodes encoding information such as the quantization parameter QP used in the quantization by the quantization section 105, the prediction mode obtained by the intra prediction process by the intra-prediction section 114, the prediction mode obtained by the inter-motion prediction process by the motion prediction compensation section 115 and the motion information as occasion demands and places the encoding information into the encoded data.

Further, the reversible encoding section 106 encodes the reduction filter information set to a transmission target at step S14 of FIG. 23 as occasion demands and places the encoded reduction filter information into the encoded data. Then, the reversible encoding section 106 supplies the encoded data to the accumulation buffer 107, and the processing advances from step S44 to step S45.

At step S45, the accumulation buffer 107 accumulates the encoded data from the reversible encoding section 106, and the processing advances to step S46. The encoded data accumulated in the accumulation buffer 107 is suitably read out and transmitted.

At step S46, the rate controlling section 117 controls the rate of the quantization operation of the quantization section 105 such that an overflow or an underflow may not occur on the basis of the code amount (generation code amount) of the encoded data accumulated in the accumulation buffer 107, and the encoding process ends therewith.

FIG. 25 is a flow chart illustrating an example of the classification adaptive process performed at step S42 of FIG. 24.

In the image conversion apparatus 133 (FIG. 16, 18, 20, or 22) of the classification adaptive filter 111, at step S51, the tap selection section 171 selects one of pixels that have not been designated as a noticed pixel from among the pixels of (a block as) the image during decoding supplied from the arithmetic operation section 110 as a noticed pixel (processing target pixel), and the processing advances to step S52.

At step S52, the tap selection section 171 selects a pixel to be used as a prediction tap in regard to the noticed pixel from the image during decoding supplied from the arithmetic operation section 110. Then, the tap selection section 171 supplies the prediction tap to the prediction operation section 174, and the processing advances from step S52 to step S53.

At step S53, the classification section 172 performs classification of the noticed pixel and supplies a class of the noticed pixel obtained as a result of the classification to the coefficient acquisition section 173, and the processing advances to step S54.

At step S54, the coefficient acquisition section 173 acquires tap coefficients of the class supplied from the classification section 172 from among the tap coefficients stored therein and supplies the tap coefficients to the prediction operation section 174, and the processing advances to step S55.

The tap coefficients stored in the coefficient acquisition section 173 (FIG. 16, 18, 20, or 22) here have been updated to tap coefficients reconstructed from the reduction filter information from the reduction apparatus 132 at step S15 of FIG. 23.

At step S55, the prediction operation section 174 performs prediction operation of the expression (1) using the prediction taps from the tap selection section 171 and the tap coefficients from the coefficient acquisition section 173. Consequently, the prediction operation section 174 determines a predicted value of the pixel value of a corresponding pixel of the original image corresponding to the target pixel as a pixel value of a post-filter image, and the processing advances to step S56.

At step S56, the tap selection section 171 decides whether there remains a pixel that has not been designated as a noticed pixel as yet among the pixels in (a block as) the image during decoding from the arithmetic operation section 110. In the case where it is decided at step S56 that there remains a pixel that has not been designated as a noticed pixel as yet, the processing returns to step S51, and similar processes are repeated thereafter.

On the other hand, in the case where it is decided at step S56 that there remains no pixel that has not been designated as a noticed pixel, the processing advances to step S57, at which the prediction operation section 174 supplies the post-filter process configured from pixel values obtained in regard to (a block as) the image during decoding from the arithmetic operation section 110 to the frame memory 112 (FIG. 9). Then, the classification adaptive process is ended, and the processing returns.

<First Example of Configuration of Decoding Apparatus 12>

FIG. 26 is a block diagram depicting a first example of a configuration of the decoding apparatus 12 of FIG. 1.

Referring to FIG. 26, the decoding apparatus 12 includes an accumulation buffer 301, a reversible decoding section 302, a dequantization section 303, an inverse orthogonal transform section 304, an arithmetic operation section 305, a classification adaptive filter 306, a sorting buffer 307, and a D/A conversion section 308. Further, the decoding apparatus 12 includes a frame memory 310, a selection section 311, an intra-prediction section 312, a motion prediction compensation section 313, and a selection section 314.

The accumulation buffer 301 temporarily accumulates encoded data transmitted from the encoding apparatus 11 and supplies the encoded data to the reversible decoding section 302 at a predetermined timing.

The reversible decoding section 302 acquires the encoded data from the accumulation buffer 301. Accordingly, the reversible decoding section 302 functions as a reception section for receiving encoded data transmitted from the encoding apparatus 11 and after all accepting encoding information and reduction filter information included in the encoded data.

The reversible decoding section 302 decodes the encoded data acquired from the accumulation buffer 301 by a method corresponding to the encoding method of the reversible encoding section 106 of FIG. 9.

Then, the reversible decoding section 302 supplies quantization coefficients obtained by the decoding of the encoded data to the dequantization section 303.

Further, in the case where the encoding information and the reduction information are obtained by the decoding of the encoded data, the reversible decoding section 302 supplies the necessary encoding information to the intra-prediction section 312, motion prediction compensation section 313 and other necessary blocks.

Furthermore, the reversible decoding section 302 supplies the reduction filter information to the classification adaptive filter 306.

The dequantization section 303 dequantizes the quantization coefficients from the reversible decoding section 302 by a method corresponding to the quantization method of the quantization section 105 of FIG. 9 and supplies orthogonal transform coefficients obtained as a result of the dequantization to the inverse orthogonal transform section 304.

The inverse orthogonal transform section 304 inversely orthogonally transforms the orthogonal transform coefficients supplied from the dequantization section 303 by a method corresponding to the orthogonal transform method of the orthogonal transform section 104 of FIG. 9 and supplies residuals obtained as a result of the inverse orthogonal transform to the arithmetic operation section 305.

To the arithmetic operation section 305, not only the residuals are supplied from the inverse orthogonal transform section 304, but also a predicted image is supplied from the intra-prediction section 312 or the motion prediction compensation section 313 through the selection section 314.

The arithmetic operation section 305 adds the residuals from the inverse orthogonal transform section 304 and the predicted image from the selection section 314 to generate an image during decoding, and supplies the image during decoding to the classification adaptive filter 306 or the frame memory 310.

The classification adaptive filter 306 performs a classification adaptive process to perform a process of an ILF by a classification adaptive process by a filter that functions as an ILF similar to the classification adaptive filter 111 of FIG. 9.

In particular, the classification adaptive filter 306 performs, designating the image during decoding from the arithmetic operation section 305 as a first image, (image conversion by) a classification adaptive process using tap coefficients for each class obtained using the reduction filter information from the reversible decoding section 302 to convert the image during decoding as the first image into a post-filter image as a second image corresponding to the original image (generate a post-filter image) and outputs the post-filter image.

The post-filter image outputted from the classification adaptive filter 306 is an image similar to a post-filter image outputted from the classification adaptive filter 111 of FIG. 9 and is supplied to the sorting buffer 307 and the frame memory 310.

The sorting buffer 307 temporarily stores the post-filter image supplied from the classification adaptive filter 306 as a decoded image, sorts the sequence of frames (pictures) of the decoded image from an encoding order to a displaying order, and supplies the sorted decoded image to the D/A conversion section 308.

The D/A conversion section 308 D/A converts the decoded image supplied from the sorting buffer 307 and outputs the resulting decoded image to a display not depicted so as to be displayed on the display.

The frame memory 310 temporarily stores an image during decoding supplied from the arithmetic operation section 305 or a post-filter image supplied from the classification adaptive filter 306 as a decoded image. Further, the frame memory 310 supplies the decoded image as a reference image to be used for generation of a predicted image to the selection section 311 at a predetermined timing or on the basis of an external request of the intra-prediction section 312, motion prediction compensation section 313 or the like.

The selection section 311 selects a supplying destination of the reference image supplied from the frame memory 310. In the case where an intra coded image is to be decoded, the selection section 311 supplies the reference image supplied from the frame memory 310 to the intra-prediction section 312. On the other hand, in the case where an inter coded image is to be decoded, the selection section 311 supplies the reference image supplied from the frame memory 310 to the motion prediction compensation section 313.

The intra-prediction section 312 performs intra prediction using a reference image supplied from the frame memory 310 through the selection section 311 in the intra prediction mode used in the intra-prediction section 114 of FIG. 9 in accordance with a prediction mode included in the encoding information supplied from the reversible decoding section 302. Then, the intra-prediction section 312 supplies a predicted image obtained by the intra prediction to the selection section 314.

The motion prediction compensation section 313 performs inter prediction using a reference image supplied from the frame memory 310 through the selection section 311 in the inter prediction mode used in the motion prediction compensation section 115 of FIG. 9 in accordance with a prediction mode included in the encoding information supplied from the reversible decoding section 302. The inter prediction is performed using motion information or the like included in the encoding information supplied from the reversible decoding section 302 as occasion demands.

The motion prediction compensation section 313 supplies a predicted image obtained by the inter prediction to the selection section 314.

The selection section 314 selects the predicted image supplied from the intra-prediction section 312 or the predicted image supplied from the motion prediction compensation section 313 and supplies the selected predicted image to the arithmetic operation section 305.

<Example of Configuration of Classification Adaptive Filter 306>

FIG. 27 is a block diagram depicting an example of a configuration of the classification adaptive filter 306 of FIG. 26.

Referring to FIG. 27, the classification adaptive filter 306 includes an image conversion apparatus 331.

To the image conversion apparatus 331, an image during decoding is supplied from the arithmetic operation section 305 (FIG. 26) and reduction filter information is supplied from the reversible decoding section 302.

The image conversion apparatus 331 performs, using the image during decoding as a first image, image conversion, similar to the image conversion apparatus 133 of FIG. 10, by a classification adaptive process using tap coefficients for each class to convert the image during decoding as the first image into a post-filter image as a second image corresponding to the original image (to generate a post-filter image) and supplies the post-filter image to the sorting buffer 307 and the frame memory 310 (FIG. 26).

It is to be noted that the image conversion apparatus 331 acquires (updates) tap coefficients to be used in a classification adaptive process using the reduction filter information similar to the image conversion apparatus 133 of FIG. 10.

Further, the image conversion apparatus 331 performs classification using encoding information as occasion demands in the classification adaptive process similar to the image conversion apparatus 133 of FIG. 10. In particular, in the case where the image conversion apparatus 133 of FIG. 10 performs classification using encoding information, the image conversion apparatus 331 performs classification using encoding information in order to perform classification similar to that by the image conversion apparatus 133.

<Examples of Configuration of Image Conversion Apparatus 331>

FIG. 28 is a block diagram depicting a first example of a configuration of the image conversion apparatus 331 of FIG. 27.

In particular, FIG. 28 depicts an example of a configuration of the image conversion apparatus 331 in the case where the reduction apparatus 132 is configured in such a manner as depicted in FIG. 15.

In the case where the reduction apparatus 132 is configured in such a manner as depicted in FIG. 15, from the description given with reference to FIG. 15, reduction filter information supplied from the reversible decoding section 302 (FIG. 26) includes adopted reduction numbers P, adopted reduction coefficients W'(c) and adopted transform coefficients $A'^{-1}$, tap coefficients w(c) of nonconforming classes and class flags.

Referring to FIG. 28, the image conversion apparatus 331 includes a tap selection section 341, a classification section 342, a coefficient acquisition section 343, a prediction operation section 344, and a coefficient reconstruction section 345.

The tap selection section 341 to the coefficient reconstruction section 345 are configured similarly to the tap selection section 171 to the coefficient reconstruction section 175 of FIG. 16, respectively, and since a process similar to that of the image conversion apparatus 133 of FIG. 16 is performed in the image conversion apparatus 331, description of the same is omitted.

FIG. 29 is a block diagram depicting a second example of a configuration of the image conversion apparatus 331 of FIG. 27.

In particular, FIG. 29 depicts an example of a configuration of the image conversion apparatus 331 in the case where the reduction apparatus 132 is configured in such a manner as depicted in FIG. 17.

In the case where the reduction apparatus 132 is configured in such a manner as depicted in FIG. 17, from the description given with reference to FIG. 17, the reduction filter information supplied from the reversible decoding section 302 (FIG. 26) includes a reduction number P, adopted reduction coefficients W'(c), and adopted transform coefficients $A'^{-1}$.

Referring to FIG. 29, the image conversion apparatus 331 includes a tap selection section 341 to a prediction operation section 344 and a coefficient reconstruction section 351.

The tap selection section 341 to the prediction operation section 344 and the coefficient reconstruction section 351 are configured similarly to the tap selection section 171 to the prediction operation section 174 and the coefficient reconstruction section 191 of FIG. 18, respectively, and since the image conversion apparatus 331 performs processes similar to those of the image conversion apparatus 133 of FIG. 18, description of the same is omitted.

FIG. 30 is a block diagram depicting a third example of a configuration of the image conversion apparatus 331 of FIG. 27.

In particular, FIG. 30 depicts an example of a configuration of the image conversion apparatus 331 in the case where the reduction apparatus 132 is configured in such a manner as depicted in FIG. 19.

In the case where the reduction apparatus 132 is configured in such a manner as depicted in FIG. 19, from the description given with reference to FIG. 19, the reduction filter information supplied from the reversible decoding section 302 (FIG. 26) includes adopted reduction coefficients W'(c) and adopted transform coefficients $A'^{-1}$ of a target class, tap coefficients w(c) of nonconforming classes, and class flags.

Referring to FIG. 30, the image conversion apparatus 331 includes a tap selection section 341 to a prediction operation section 344, a reduction number determination section 361, and a coefficient reconstruction section 362.

The tap selection section 341 to the prediction operation section 344, the reduction number determination section 361, and the coefficient reconstruction section 362 are configured similarly to the tap selection section 171 to the prediction operation section 174, the reduction number determination section 221, and the coefficient reconstruction section 222 of FIG. 20, respectively, and since the image conversion apparatus 331 performs processes similar to those of the image conversion apparatus 133 of FIG. 20, description of the same is omitted.

FIG. 31 is a block diagram depicting a fourth example of a configuration of the image conversion apparatus 331 of FIG. 27.

In particular, FIG. 31 depicts an example of a configuration of the image conversion apparatus 331 in the case where the reduction apparatus 132 is configured in such a manner as depicted in FIG. 21.

In the case where the reduction apparatus 132 is configured in such a manner as depicted in FIG. 21, from the description given with reference to FIG. 21, the reduction filter information supplied from the reversible decoding section 302 (FIG. 26) includes adopted reduction coefficients W'(c) and adopted transform coefficients $A'^{-1}$.

Referring to FIG. 31, the image conversion apparatus 331 includes a tap selection section 341 to a prediction operation section 344, a reduction number determination section 361, and a coefficient reconstruction section 371.

The tap selection section 341 to the prediction operation section 344, the reduction number determination section 361, and the coefficient reconstruction section 371 are configured similarly to the tap selection section 171 to the prediction operation section 174, the reduction number determination section 221, and the coefficient reconstruction section 231 of FIG. 22, respectively, and since the image conversion apparatus 331 performs processes similar to those of the image conversion apparatus 133 of FIG. 22, description of the same is omitted.

<Decoding Process>

FIG. 32 is a flow chart illustrating an example of a decoding process of the decoding apparatus 12 of FIG. 26.

In the decoding process, at step S71, the accumulation buffer 301 temporarily accumulates encoded data transmitted from the encoding apparatus 11 and suitably supplies the encoded data to the reversible decoding section 302, and the processing advances to step S72.

At step S72, the reversible decoding section 302 receives and decodes the encoded data supplied from the accumulation buffer 301 and supplies quantization coefficients obtained by the decoding to the dequantization section 303.

Further, in the case where encoding information and reduction filter information are obtained by the decoding of the encoded data, the reversible decoding section 302 supplies necessary encoding information to the intra-prediction section 312, motion prediction compensation section 313 and other necessary blocks.

Furthermore, the reversible decoding section 302 supplies the reduction filter information to the classification adaptive filter 306.

Thereafter, the processing advances from step S72 to step S73, at which the classification adaptive filter 306 decides whether reduction filter information is supplied from the reversible decoding section 302.

In the case where it is decided at step S73 that reduction filter information is not supplied, the processing skips step S74 and advances to step S75.

On the other hand, in the case where it is decided at step S73 that reduction filter information is supplied, the processing advances to step S74, at which the image conversion apparatus 331 (FIGS. 28 to 31) acquires the reduction filter information from the reversible decoding section 302. Further, the image conversion apparatus 331 reconstructs tap coefficients (w'(c)) from the reduction filter information and updates the tap coefficients stored in the coefficient acquisition section 343 (tap coefficients to be used in a classification adaptive process) to the tap coefficients reconstructed from the reduction filter information.

Then, the processing advances from step S74 to step S75, at which a prediction decoding process is performed, and the decoding process ends therewith.

FIG. 33 is a flow chart illustrating an example of the prediction decoding process at step S75 of FIG. 32.

At step S81, the dequantization section 303 dequantizes the quantization coefficients from the reversible decoding section 302 and supplies orthogonal transform coefficients obtained as a result of the dequantization to the inverse orthogonal transform section 304, and the processing advances to step S82.

At step S82, the inverse orthogonal transform section 304 inversely orthogonally transforms the orthogonal transform coefficients from the dequantization section 303 and supplies residuals obtained as a result of the inverse orthogonal transform to the arithmetic operation section 305, and the processing advances to step S83.

At step S83, the intra-prediction section 312 or the motion prediction compensation section 313 performs a prediction process for generating a predicted image using a reference image supplied from the frame memory 310 through the selection section 311 and encoding information supplied from the reversible decoding section 302. Then, the intra-prediction section 312 or the motion prediction compensation section 313 supplies predicted images obtained by the prediction process to the selection section 314, and the processing advances from step S83 to step S84.

At step S84, the selection section 314 selects a predicted image supplied from the intra-prediction section 312 or the motion prediction compensation section 313 and supplies the selected predicted image to the arithmetic operation section 305, and the processing advances to step S85.

At step S85, the arithmetic operation section 305 adds the residuals from the inverse orthogonal transform section 304 and the predicted image from the selection section 314 to generate an image during decoding. Then, the arithmetic operation section 305 supplies the image during decoding to the classification adaptive filter 306 or the frame memory 310, and the processing advances from step S85 to step S86.

In the case where the image during decoding is supplied from the arithmetic operation section 305 to the classification adaptive filter 306, at step S86, the classification adaptive filter 306 performs a classification adaptive process (classification adaptive filter process) as a process of an ILF for the image during decoding from the arithmetic operation section 305. Since the classification adaptive process is performed for the image during decoding, a post-filter image nearer to the original image than that in the case where the image during decoding is filtered by an ILF similarly as in the case of the encoding apparatus 11.

The classification adaptive filter 306 supplies the post-filter image obtained by the classification adaptive process to the sorting buffer 307 and the frame memory 310, and the processing advances from step S86 to step S87.

At step S87, the sorting buffer 307 temporarily stores the image during decoding supplied from the arithmetic operation section 305 or the post-filter image supplied from the classification adaptive filter 306 as a decoded image. Further, the sorting buffer 307 sorts the stored decoded image into a displaying order and supplies a resulting decoded image to the D/A conversion section 308, and the processing advances from step S87 to step S88.

At step S88, the D/A conversion section 308 D/A converts the decoded image from the sorting buffer 307, and the processing advances to step S89. The decoded image after the D/A conversion is outputted to and displayed on a display not depicted.

At step S89, the frame memory 310 stores the image during decoding supplied from the arithmetic operation section 305 or the post-filter image supplied from the classification adaptive filter 306 as a decoded image, and the decoding process ends therewith. The decoded image stored in the frame memory 310 is used as a reference image that becomes a source from which a predicted image is to be generated by the prediction process at step S83.

FIG. 34 is a flow chart illustrating an example of the classification adaptive process performed at step S86 of FIG. 33.

In the image conversion apparatus 331 of the classification adaptive filter 306 (FIGS. 28 to 31), at step S91, the tap selection section 341 selects one of pixels that have not been designated as a noticed pixel as yet from among the pixels of (a block as) the image during decoding supplied from the arithmetic operation section 305 as a noticed pixel, and the processing advances to step S92.

At step S92, the tap selection section 341 selects a pixel to be made a prediction tap regarding the noticed pixel from within the image during decoding supplied from the arithmetic operation section 305. Then, the tap selection section 341 supplies the prediction tap to the prediction operation section 344, and the processing advances from step S92 to step S93.

At step S93, the classification section 342 performs classification of the noticed pixel and supplies a class of the noticed pixel obtained as a result of the classification to the coefficient acquisition section 343, and the processing advances to step S94.

At step S94, the coefficient acquisition section 343 acquires tap coefficients of the class supplied from the classification section 342 from among the tap coefficients stored therein and supplies the tap coefficients to the prediction operation section 344, and the processing advances to step S95.

Here, the tap coefficients stored in the coefficient acquisition section 343 (FIGS. 28 to 31) have been updated to tap coefficients reconstructed from the reduction filter information from the reversible decoding section 302 at step S74 of FIG. 32.

At step S95, the prediction operation section 344 performs prediction operation of the expression (1) using the prediction tap from the tap selection section 341 and the tap coefficients from the coefficient acquisition section 343. Consequently, the prediction operation section 344 determines the predicted value of the pixel value of the corresponding pixel of the original image corresponding to the noticed pixel as a pixel value of the post-filter image, and the processing advances to step S96.

At step S96, the tap selection section 341 decides whether there remains a pixel that has not been designated as a noticed pixel as yet among the pixels of (a block as) the image during decoding from the arithmetic operation section 305. In the case where it is decided at step S96 that there remains a pixel that has not been designated as a noticed pixel, the processing returns to step S91 and similar processes are repeated thereafter.

On the other hand, in the case where it is decided at step S96 that there remains no pixel that has not been designated as a noticed pixel, the processing advances to step S97, at which the prediction operation section 344 supplies a post-filter image configured from pixel values obtained from (a block as) the image during decoding from the arithmetic operation section 305 to the sorting buffer 307 and the frame memory 310 (FIG. 26). Then, the classification adaptive process ends therewith, and the processing returns.

As described above, the encoding apparatus 11 converts tap coefficients for each class into reduction coefficients obtained by projecting the tap coefficients for each class to a low dimensional space of a lower dimension than that of the tap coefficient space that is a space of the tap coefficients for each class, for example, by main component analysis and transmits the reduction coefficients to the decoding apparatus 12. When the tap coefficients are returned to reduction coefficients, the data amount of reduction coefficients obtained by the conversion of the tap coefficients is reduced by setting the main component scores of high orders, which have a less influence to the tap coefficients, to 0.

Accordingly, the compression efficiency can be improved appropriately. In other words, while sufficient picture quality is maintained as the picture quality of the post-filter image (and after all of a reference image or a decoded image), the compression efficiency can be improved.

It is to be noted that, while, in the first example of a configuration of the encoding apparatus 11 of FIG. 9, all processes of an ILF, namely, of a DF, a SAO, and an ALF, are performed by a classification adaptive process, in the classification adaptive process, not all of the ILF but processing of one or more of the DF, SAO, and ALF can be performed. This similarly applies also to the first example of a configuration of the decoding apparatus 12 of FIG. 26 and other examples of a configuration of the encoding apparatus 11 and the decoding apparatus 12 hereinafter described.

<Second Example of Configuration of Encoding Apparatus 11>

FIG. 35 is a block diagram depicting a second example of a configuration of the encoding apparatus 11 of FIG. 1.

It is to be noted that, in FIG. 35, elements corresponding to those in the case of FIG. 9 are denoted by the same reference numerals and, in the following description, description of them is omitted suitably.

Referring to FIG. 35, the encoding apparatus 11 includes an A/D conversion section 101 to an arithmetic operation section 110, a frame memory 112 to a rate controlling section 117, and a classification adaptive filter 511.

Accordingly, the encoding apparatus 11 of FIG. 35 is common to that of the case of FIG. 9 in that it includes the A/D conversion section 101 to the arithmetic operation section 110 and the frame memory 112 to the rate controlling section 117.

However, the encoding apparatus 11 of FIG. 35 is different from that of the case of FIG. 9 in that it includes the classification adaptive filter 511 in place of the classification adaptive filter 111.

The classification adaptive filter 511 is a filter that functions as an ILF by performing a classification adaptive process and is common to the classification adaptive filter 111 in that it performs an ILF process by the classification adaptive process.

However, the classification adaptive filter 511 is different from the classification adaptive filter 111 in that, in a reduction process for generating reduction filter information in which the data amount of tap coefficients for each class is reduced, seed coefficients for one class are generated as reduction filter information.

Further, the classification adaptive filter 511 is different from the classification adaptive filter 111 in that it performs the classification adaptive process using tap coefficients for each class obtained using the seed coefficients for one class as the reduction filter information.

In short, the classification adaptive filter 511 is different from the classification adaptive filter 111 in that it generates tap coefficients for each class (tap coefficients of necessary classes) from seed coefficients for one class as the reduction filter information.

<Example of Configuration of Classification Adaptive Filter 511>

FIG. 36 is a block diagram depicting an example of a configuration of the classification adaptive filter 511 of FIG. 35.

It is to be noted that, in FIG. 36, elements common to those in the case of the classification adaptive filter 111 of FIG. 10 are denoted by the same reference numerals and, in the following description, description of them is omitted suitably.

Referring to FIG. 36, the classification adaptive filter 511 includes a learning apparatus 131, a reduction apparatus 531, and an image conversion apparatus 532.

Accordingly, the classification adaptive filter 511 is common to the classification adaptive filter 111 of FIG. 10 in that it includes the learning apparatus 131.

However, the classification adaptive filter 511 is different from the classification adaptive filter 111 of FIG. 10 in that it includes the reduction apparatus 531 and the image conversion apparatus 532 in place of the reduction apparatus 132 and the image conversion apparatus 133, respectively.

To the reduction apparatus 531, tap coefficients for each class obtained by the learning apparatus 131 performing tap coefficient learning are supplied.

The reduction apparatus 531 performs a reduction process for reducing the data amount of tap coefficients for each class from the learning apparatus 131 and generates reduction filter information in which the data amount of tap coefficients for each class is reduced by the reduction process.

In particular, the reduction apparatus 531 generates, from tap coefficients for each class from the learning apparatus 131, seed coefficients for one class to be used to determine tap coefficients for each class by predetermined arithmetic operation with a parameter representative of the class, places the seed coefficients into the reduction filter information and supplies them to the image conversion apparatus 532 and the reversible encoding section 106 (FIG. 35).

The image conversion apparatus 532 reconstructs tap coefficients for each class (or tap coefficients of the class of a noticed pixel) from the seed coefficients for one class included in the reduction filter information from the reduction apparatus 531.

Further, the image conversion apparatus 532 performs, using an image during decoding as a first image, image conversion by a classification adaptive process using the tap coefficients for each class reconstructed from the reduction filter information to convert the image during decoding as the first image into a post-filter image as a second image corresponding to the original image (to generate a post-filter image), and supplies the post-filter image to the frame memory 112 (FIG. 35).

It is to be noted that the reduction apparatus 531 can generate copy information similar to the reduction apparatus 132 of FIG. 10.

Further, the reduction apparatus 531 adopts a method of converting tap coefficients for each class into seed coefficients as the reduction method for reducing the data amount of tap coefficients for each class.

In the following, a reduction method for reducing the data amount of tap coefficients by converting tap coefficients for each class into seed coefficients (hereinafter referred to also as seed coefficient utilization type reduction method) is described.

<Seed Coefficient Utilization Type Reduction Method>

FIG. 37 is a view illustrating an overview of the seed coefficient utilization type reduction method.

Here, to determine a seed coefficient to be used to determine tap coefficients $w(c,n)$ for each class c by predetermined arithmetic operation with a parameter z as described, for example, with reference to FIGS. 5 to 8 is referred to as seed coefficient conversion.

In the seed coefficient utilization type reduction method, the data amount of the tap coefficients $w(c,n)$ is reduced by converting the tap coefficients $w(c,n)$ for each class c into seed coefficients by seed coefficient conversion.

Here, in the seed coefficient conversion described hereinabove with reference to FIGS. 5 to 8, a set of teacher data and student data (hereinafter referred to as learning data set) is prepared for each of a plurality of values the parameter z can take, and a seed coefficient for each class to be used to determine tap coefficients $w(c,n)$ for each class by predetermined arithmetic operation with the parameter z is determined using the learning data sets individually for the plurality of values.

Now, the seed coefficient conversion for determining a seed coefficient for each class using a learning data set for each of the plurality of values the parameter z can take as described hereinabove with reference to FIGS. 5 to 8 is referred to also as individual class seed coefficient conversion, and a seed coefficient for each class determined by the individual class seed coefficient conversion is referred to also as individual class seed coefficient.

As indicated by the expression (9), in the case where M seed coefficients $\beta_{1,n}, \beta_{2,n}, ..., \beta_{M,n}$ are used to determine an nth tap coefficient $w(c,n)$ of a class c, as the individual class seed coefficients, M coefficients $\beta_{1,n}, \beta_{2,n}, ..., \beta_{M,n}$ of the expression (9) exist for each class.

Accordingly, an individual class seed coefficient can be represented by a variable $\beta(c,n,m)$ where the arguments are given by a class c, an order number n of the tap coefficient $w(c,n)$, and an order number m of the individual class seed coefficient. The individual class seed coefficient $\beta(c,n,m)$ is the mth seed coefficient that is used to determine the nth tap coefficient $w(c,n)$ of the class c.

In the case where the individual class seed coefficient $\beta(c,n,m)$ is used to determine a tap coefficient $w(c,n)$, the nth tap coefficient $w(c,n)$ of the class c can be determined, for example, in accordance with an expression $w(c,n) = \sum(\beta(c,n,m) \times z^{m-1})$ corresponding to the expression (9) using M individual class seed coefficients $\beta(c,n,1), \beta(c,n,2), ..., \beta(c,n,M)$ of the class c. $\sum$ represents summation with m changed to 1 to M.

Since the individual class seed coefficient $\beta(c,n,m)$ exists for each class c, the data amount of such individual class seed coefficients $\beta(c,n,m)$ becomes a data amount that increases in proportion to the class number C. Also it is possible to say that the individual class seed coefficient $\beta(c,n,m)$ exists for each order number n of the tap coefficients $w(c,n)$ of one class and the data amount of them becomes a data amount that increases in proportion to the number N of tap coefficients $w(c,n)$ for one class.

For one order number n of the tap coefficient $w(c,n)$ of a certain class c, as individual class seed coefficients $\beta(c,n,m)$, M individual class seed coefficients $\beta(c,n,1), \beta(c,n,2), ..., \beta(c,n,M)$ exist.

The seed coefficient utilization type reduction method is common to individual class coefficient conversion of determining an individual class seed coefficient $\beta(c,n,m)$ in that, in the seed coefficient utilization type reduction method, a seed coefficient that is used to determine tap coefficients $w(c,n)$ for each class c by predetermined arithmetic operation with the parameter z is determined by seed coefficient conversion.

However, the seed coefficient utilization type reduction method is different from individual class coefficient conversion in that, in the seed coefficient utilization type reduction method, in order to determine tap coefficients $w(c,n)$ for each class, the parameter z used together with a seed coefficient represents the class c.

Therefore, in the seed coefficient conversion used in the seed coefficient utilization type reduction method (hereinafter referred to also as reduction seed coefficient conversion), using the class c as the parameter z, a seed coefficient is determined which is used to determine the tap coefficients w(1,n), w(2,n), ..., w(C,n) of the respective classes 1, 2, ..., C by predetermined arithmetic operation with the parameter z.

Now, if it is assumed that, for example, the expression (9) is adopted as the predetermined arithmetic operation, then in the reduction seed coefficient conversion, a seed coefficient (hereinafter referred to also as reduction seed coefficient) represented by a variable β(n,m) is determined in which the arguments are given by an order number n of the tap coefficient w(c,n) and an order number m of the reduction seed coefficient.

In particular, in the reduction seed coefficient conversion, for example, using M reduction seed coefficients β(n,1), β(n,2), ..., β(n,M) regarding an order number n of a tap coefficient w(c,n), a reduction seed coefficient β(n,m) that statistically minimizes the error between a predicted value of the nth tap coefficient w(c,n) of the class c determined in accordance with an expression $w(c,n) = \sum(β(n,m) \times c^{m-1})$ ($\sum$ represents summation with m changed to 1 to M) corresponding to the expression (9) and a true value of the tap coefficient w(c,n) is determined by the least squares method or the like.

Now, as depicted in FIG. 37, if coefficient points representing the nth tap coefficients w(1,n), w(2,n), ..., w(C,n) of the classes 1, 2, ..., C are plotted on a class vs. tap coefficient plane that is a plane having axes of a class c and an nth tap coefficient w(c,n) of the class c, then the expression $w(c,n) = \sum(β(n,m) \times c^{m-1})$ corresponding to the expression (9) represents an approximate curve that approximates the coefficient points of the tap coefficient w(1,n), w(2,n), ..., w(C,n).

In the reduction seed coefficient conversion, for each order number n of the tap coefficient w(c,n), the reduction seed coefficient β(n,m) is determined which is used to determine the tap coefficient w(c,n) of the order number n by predetermined arithmetic operation with the parameter z representative of the class c.

Accordingly, the reduction seed coefficient β(n,m) exists for each of the order numbers n of the tap coefficients w(c,n) for one class, and the data amount of such reduction seed coefficients β(n,m) becomes a data amount that increases in proportion to the number N of the tap coefficients w(c,n) for one class. In regard to one order number n of the tap coefficient w(c,n), the number of reduction seed coefficients β(n,m) is M including β(n,1), β(n,2), ..., β(n,M).

However, since the reduction seed coefficient β(n,m) is used to determine a tap coefficient w(c,n) using the class c as the parameter z, it exists but not in each class c. In other words, such reduction seed coefficients β(n,m) exist for one class.

In FIG. 37, as tap coefficients of one class, 25 tap coefficients w(c,1), w(c,2), ..., w(c,25) exist, and the reduction seed coefficient β(n,m) exists for each order number n of the 25 tap coefficients w(c,n). Further, in regard to one order number n of the tap coefficient w(c,n), the number of such reduction seed coefficients β(n,m) is M = 4 including β(n,1), β(n,2), β(n,3), and β(n,4).

According to such reduction seed coefficients β(n,m), the nth tap coefficient w(c,n) of the class c is determined in accordance with a cubic $w(c,n) = β(n,1) + β(n,2) \times c + β(n,3) \times c^2 + β(n,4) \times c^3$ corresponding to the expression (9) using a parameter z representative of the class c.

In the seed coefficient utilization type reduction method, the reduction seed coefficient β(n,m) determined by reduction seed coefficient conversion is different from the individual class seed coefficient β(c,n,m) from which a tap coefficient is determined by predetermined arithmetic operation with a parameter z that is different according to a learning data set in that a tap coefficient w(c,n) is determined by predetermined arithmetic operation with a parameter z representative of a class c from the reduction seed coefficient β(n,m).

Further, the reduction seed coefficient β(n,m) exists but not for each class but is a coefficient for one class.

In contrast, the individual class seed coefficient β(c,n,m) exists for each class c and is a coefficient for class number C.

Accordingly, if the number M of seed coefficients that are used to determine a tap coefficient w(c,n) of a certain order number n is equal between the reduction seed coefficient β(n,m) and individual class seed coefficient β(c,n,m), then since the reduction seed coefficient β(n,m) is a coefficient for one class, the data amount of the same becomes 1/C in comparison with the individual class seed coefficient β(c,n,m) that is a coefficient for the class number C.

Further, since the data amount of the reduction seed coefficients β(n,m) increases in proportion to $N \times M$ and the data amount of the tap coefficients w(c,n) increases in proportion to $C \times N$, the data amount of the reduction seed coefficients β(n,m) becomes M/C of the data amount of the tap coefficient w(c,n). Accordingly, according to the seed coefficient utilization type reduction method, the compression efficiency can be improved more as the class number C of the tap coefficients w(c,n) increases.

Furthermore, according to the seed coefficient utilization type reduction method, the compression efficiency can be improved more as the number M of the reduction seed coefficients β(n,1), β(n,2), ..., β(n,M) for each order number of the tap coefficient w(c,n) decreases.

However, if the number M of the reduction seed coefficients β(n,1), β(n,2), ..., β(n,M) for each order number of the tap coefficient w(c,n) is made excessively small, then the approximation accuracy where the approximate curve represented by the expression $w(c,n) = \sum(\beta(n,m) \times c^{m-1})$ approximates (the coefficient points representative of) the tap coefficients $w(c,n)$ degrades, and the picture quality of a post-filter image (and after all a decoded image) sometimes degrades.

Therefore, the number M of the reduction seed coefficients $\beta(n,1)$ to $\beta(n,M)$ for each order number n of the tap coefficient $w(c,n)$ can be determined similarly as in the optimization method or the available information utilization method for determining a reduction number P.

In particular, the number M of the reduction seed coefficients $\beta(n,1)$ to $\beta(n,M)$ for each order number n of the tap coefficient $w(c,n)$ can be determined such that, for example, the RD cost becomes best. Further, the number M of the reduction seed coefficients $\beta(n,1)$ to $\beta(n,M)$ for each order number n of the tap coefficient $w(c,n)$ can be determined in response to available information.

In the case where the number M of the reduction seed coefficients $\beta(n,1)$ to $\beta(n,M)$ for each order number n of the tap coefficient $w(c,n)$ is determined in response to available information, the number M can be determined to a number that increases as, for example, the average of the quantization parameter QP over the overall area of the available information decreases. Further, the number M can be determined to a value that increases as, for example, the bit rate of encoded data increases. Furthermore, the number M can be determined to a value that increases as, for example, the frequency bandwidth of an overall screen that is one of image feature amounts of an image during decoding increases as the available information.

<Example of Configuration of Reduction Apparatus 531>

FIG. 38 is a block diagram depicting an example of a configuration of the reduction apparatus 531 of FIG. 36.

Referring to FIG. 38, the reduction apparatus 531 includes an addition section 541 and a coefficient calculation section 542.

The addition section 541 and the coefficient calculation section 542 perform processes similar to those of the addition section 92 and the coefficient calculation section 93 of FIG. 8, respectively.

However, although the addition section 92 of FIG. 8 performs addition targeting (a variable $t_m$ corresponding to) a parameter z and a tap coefficient $w_n$ supplied from the parameter generation section 71 (FIG. 6) for each frame, the addition section 541 adopts classes 1, 2, ..., C as the parameter z and performs, for each order number n of the tap coefficient $w(c,n)$, addition targeting the parameter z and the nth tap coefficients $w(1,n), w(2,n), ..., w(C,n)$ of each class 1, 2, ..., C, and supplies a normal equation obtained by the addition to the coefficient calculation section 542.

The coefficient calculation section 542 solves the normal equation from the addition section 541 to determine seed coefficients (reduction seed coefficients) $\beta(1,n), \beta(2,n), ..., \beta(M,n)$ used to determine the tap coefficient $w(c,n)$ using the class c as the parameter z for each of the order numbers n of the tap coefficient $w(c,n)$ .

The seed coefficients $\beta(m,n)$ determined by the coefficient calculation section 542 are placed into reduction filter information and transmitted to the image conversion apparatus 532 (FIG. 36) and the reversible encoding section 106 (FIG. 35).

<Example of Configuration of Image Conversion Apparatus 532>

FIG. 39 is a bock diagram depicting an example of a configuration of the image conversion apparatus 532 of FIG. 36.

It is to be noted that, in FIG. 39, elements corresponding to those of the image conversion apparatus 133 of FIG. 16 are denoted by the same reference numerals and, in the following description, description of them is omitted suitably.

Referring to FIG. 39, the image conversion apparatus 532 includes a tap selection section 171 to a prediction operation section 174 and a coefficient reconstruction section 561.

Accordingly, the image conversion apparatus 532 is common to the image conversion apparatus 133 of FIG. 16 in that it includes the tap selection section 171 to the prediction operation section 174.

However, the image conversion apparatus 532 is different from the image conversion apparatus 133 of FIG. 16 in that it includes the coefficient reconstruction section 561 in place of the coefficient reconstruction section 175.

To the coefficient reconstruction section 561, reduction filter information is supplied from the reduction apparatus 531 (FIG. 36).

The coefficient reconstruction section 561 performs arithmetic operation in accordance with the expression $w(c,n) = \sum(\beta(n,m) \times c^{m-1})$ with the parameter z representative of the class c using the seed coefficient (reduction seed coefficient) $\beta(m,n)$ included in the reduction filter information to reconstruct a tap coefficient $w(c,n)$ for each class c, and supplies such tap coefficients $w(c,n)$ to the coefficient acquisition section 173.

In the coefficient acquisition section 173, when the tap coefficients $w(c,n)$ for the individual classes reconstructed from the seed coefficients $\beta(m,n)$ are supplied from the coefficient reconstruction section 561, the stored tap coefficients are updated with the tap coefficients w(c,n) of the individual classes.

<Encoding Process>

FIG. 40 is a flow chart illustrating an example of an encoding process of the encoding apparatus 11 of FIG. 36.

At step S111, the learning apparatus 131 (FIG. 36) decides whether the current timing is an update timing at which the tap coefficients are to be updated similarly as at step S11 (FIG. 23), and in the case where it is decided that the current timing is not an update timing, the processing advances to step S116 skipping steps S112 to S115.

On the other hand, in the case where it is decided at step S111 that the current timing is an update timing of the tap coefficients, the processing advances to step S112, at which the learning apparatus 131 performs tap coefficient learning to determine tap coefficients for each class similarly as at step S12 (FIG. 23).

Then, the learning apparatus 131 supplies the tap coefficients for the individual classes obtained by the tap coefficient learning to the reduction apparatus 531, and the processing advances from step S112 to step S113.

At step S113, the reduction apparatus 531 (FIG. 36) generates in which the data amount of tap coefficients from the learning apparatus 131 is reduced, for example, by the seed coefficient utilization type reduction method, and supplies the reduction filter information to the image conversion apparatus 532 and the reversible encoding section 106 (FIG. 35).

In particular, the reduction apparatus 531 converts the tap coefficients w(c,n) for the individual classes into the reduction seed coefficients $\beta(m,n)$, in which the class c is the parameter z, by the reduction seed coefficient conversion of the tap coefficients w(c,n) for the individual classes from the learning apparatus 131 and generates reduction filter information that includes the reduction seed coefficients $\beta(m,n)$. Then, the reduction apparatus 531 supplies the reduction filter information to the image conversion apparatus 532 and the reversible encoding section 106.

Thereafter, the processing advances from step S113 to step S114, at which the reversible encoding section 106 (FIG. 35) sets the reduction filter information from the reduction apparatus 531 to a transmission target, and thereafter, the processing advances to step S115. The reduction filter information set to the transmission target is placed into encoded data by a prediction encoding process performed at step S116 hereinafter described and is transmitted.

At step S115, the image conversion apparatus 532 (FIG. 39) reconstructs tap coefficients (w(c,n)) for each class in accordance with the expression $w(c,n) = \sum(\beta(n,m) \times c^{m-1})$ using the class c as the parameter z from the reduction seed coefficients $\beta(m,n)$ included in the reduction filter information from the reduction apparatus 531. Further, a step S115, the image conversion apparatus 532 updates the tap coefficients stored in the coefficient acquisition section 173 (tap coefficients to be used in a classification adaptive process) stored in the coefficient acquisition section 173 with the tap coefficients for each class reconstructed from the reduction filter information, and the processing advances to step S116.

At step S116, a prediction encoding process of the original image is performed, and the encoding process ends therewith.

FIG. 41 is a flow chart illustrating an example of the prediction encoding process at step S116 of FIG. 40.

In the prediction encoding process, at steps S131 to S146, processes similar to those at steps S31 to S46 of FIG. 24 are performed.

It is to be noted that, at step S142, the classification adaptive filter 511 performs a classification application process as a process of an ILF for an image during decoding from the arithmetic operation section 110 similarly as at step S42 of FIG. 24. Although the classification adaptive process at step S142 is similar to the classification adaptive process described hereinabove in connection with FIG. 25, the prediction operation of the prediction operation section 174 (FIG. 39) is performed using the tap coefficients w(c,n) reconstructed from the reduction seed coefficients $\beta(m,n)$ included in the reduction filter information from the reduction apparatus 531 at step S115 of FIG. 40 performed immediately before then.

Further, at step S144, the reversible encoding section 106 encodes the quantization coefficients, encoding information, and reduction filter information similarly as at step S44 of FIG. 24. However, the reduction filter information includes the reduction seed coefficients $\beta(m,n)$ obtained at step S113 of FIG. 40 performed immediately before then.

<Second Example of Configuration of Decoding Apparatus 12>

FIG. 42 is a block diagram depicting a second example of a configuration of the decoding apparatus 12 of FIG. 1.

It is to be noted that, in FIG. 42, elements corresponding to those in the case of FIG. 26 are denoted by the same reference numerals and, in the following description, description of them is omitted suitably.

Referring to FIG. 42, the decoding apparatus 12 includes an accumulation buffer 301, a reversible decoding section 302, a dequantization section 303, an inverse orthogonal transform section 304, an arithmetic operation section 305, a sorting buffer 307, and a D/A conversion section 308. The decoding apparatus 12 further includes a frame memory 310, a selection section 311, an intra-prediction section 312, a motion prediction compensation section 313, a selection section 314, and a classification adaptive filter 611.

Accordingly, the decoding apparatus 12 of FIG. 42 is common to that of the case of FIG. 26 in that it includes the accumulation buffer 301 to the arithmetic operation section 305, the sorting buffer 307 and the D/A conversion section 308, and the frame memory 310 to the selection section 314.

However, the decoding apparatus 12 is different from that in the case of FIG. 26 in that it includes the classification adaptive filter 611 in place of the classification adaptive filter 306.

The decoding apparatus 12 of FIG. 42 decodes encoded data transmitted thereto from the encoding apparatus 11 of FIG. 35.

Accordingly, reduction filter information supplied from the reversible decoding section 302 to the classification adaptive filter 611 includes reduction seed coefficients $\beta(m,n)$.

The classification adaptive filter 611 is a filter that functions as an ILF by performing a classification adaptive process and is common to the classification adaptive filter 306 of FIG. 26 in that it performs an ILF process by a classification adaptive process.

However, the classification adaptive filter 611 is different from the classification adaptive filter 306 in that it reconstructs tap coefficients $w(c,n)$ for each class from the reduction seed coefficients $\beta(m,n)$ included in the reduction filter process and performs a classification adaptive process using the tap coefficients $w(c,n)$ for each class.

<Example of Configuration of Classification Adaptive Filter 611>

FIG. 43 is a block diagram depicting an example of a configuration of the classification adaptive filter 611 of FIG. 42.

Referring to FIG. 43, the classification adaptive filter 611 includes an image conversion apparatus 631.

To the image conversion apparatus 631, an image during decoding is supplied from the arithmetic operation section 305 (FIG. 42) and reduction filter information is supplied from the reversible decoding section 302.

The image conversion apparatus 631 reconstructs tap coefficients $w(c,n)$ for each class using the class c as the parameter z from reduction seed coefficients $\beta(m,n)$ included in the reduction filter information from the reversible decoding section 302 similar to the image conversion apparatus 532 of FIG. 36. Then, the image conversion apparatus 631 performs image conversion by a classification adaptive process using the tap coefficients $w(c,n)$ for each class using an image during decoding as a first image to convert the image during decoding as the first image into a post-filter image as a second image corresponding to the original image (to generate a post-filter image) similar to the image conversion apparatus 532 of FIG. 36, and supplies the post-filter image to the sorting buffer 307 and the frame memory 310 (FIG. 42).

<Example of Configuration of Image Conversion Apparatus 631>

FIG. 44 is a block diagram depicting an example of a configuration of the image conversion apparatus 631 of FIG. 43.

It is to be noted that, in FIG. 44, elements common to those in the image conversion apparatus 331 of FIG. 28 are denoted by the same reference numerals and, in the following description, description of them is omitted suitably.

Referring to FIG. 44, the image conversion apparatus 631 includes a tap selection section 341 to a prediction operation section 344 and a coefficient reconstruction section 641.

Accordingly, the image conversion apparatus 631 of FIG. 44 is common to the image conversion apparatus 331 of FIG. 28 in that it includes the tap selection section 341 to the prediction operation section 344.

However, the image conversion apparatus 631 of FIG. 44 is different from the image conversion apparatus 331 of FIG. 28 in that it includes the coefficient reconstruction section 641 in place of the coefficient reconstruction section 345.

To the coefficient reconstruction section 641, reduction filter information is supplied from the reversible decoding section 302 (FIG. 42).

The coefficient reconstruction section 641 reconstructs tap coefficients for each class from the reduction filter process from the reversible decoding section 302 similar to the coefficient reconstruction section 561 of FIG. 39.

In particular, the coefficient reconstruction section 641 performs arithmetic operation in accordance with the expression $w(c,n) = \sum(\beta(n,m) \times c^{m-1})$ with the parameter z representative of the class c using the reduction seed coefficients $\beta(m,n)$ included in the reduction filter information to reconstruct tap coefficients $w(c,n)$ for each class, and supplies the tap coefficients $w(c,n)$ to the coefficient acquisition section 343.

<Decoding Process>

FIG. 45 is a flow chart illustrating an example of a decoding process of the decoding apparatus 12 of FIG. 42.

In the decoding process, processes similar to those at steps S71 to S73 of FIG. 32 are performed at steps S171 to S173, respectively.

Then, in the case where it is decided at step S173 that reduction filter information is not supplied from the reversible decoding section 302 to the classification adaptive filter 611, the processing advances to step S175 skipping step S174.

On the other hand, in the case where it is decided at step S173 that reduction filter information is supplied from the reversible decoding section 302 to the classification adaptive filter 611, the processing advances to step S174, at which the coefficient reconstruction section 641 configuring the image conversion apparatus 631 (FIG. 44) of the classification adaptive filter 611 acquires reduction filter process.

Further, the coefficient reconstruction section 641 reconstructs tap coefficients w(c,n) for each class in accordance with the expression $w(c,n) = \sum(\beta(n,m) \times c^{m-1})$ using the class c as the parameter z from the reduction seed coefficients $\beta(m,n)$ included in the reduction filter information. Then, the coefficient reconstruction section 641 updates (overwrites) the tap coefficients stored in the coefficient acquisition section 343 (tap coefficients used in a classification adaptive process) with the tap coefficients w(c,n) for each class reconstructed from the reduction filter process.

Then, the processing advances from step S174 to step S175, at which a prediction decoding process is performed, thereby ending the decoding process.

FIG. 46 is a flow chart illustrating an example of the prediction decoding process at step S175 of FIG. 45.

In the prediction decoding process, at steps S181 to S189, processes similar to those at steps S81 to S89 of FIG. 33 are performed, respectively.

It is to be noted that, at step S186, the classification adaptive filter 611 performs a classification adaptive process as a process of an ILF for an image during decoding from the arithmetic operation section 110 similarly as at step S86 of FIG. 33. Although the classification adaptive process at step S186 is similar to the classification adaptive process described hereinabove with reference to FIG. 34, the prediction operation of the prediction operation section 344 (FIG. 44) is performed using the tap coefficients w(c,n) reconstructed from the reduction seed coefficients $\beta(m,n)$ included in the reduction filter process from the reversible decoding section 302 at step S174 of FIG. 45 performed immediately before then.

<Application to Multi-View Image Encoding and Decoding System>

The series process described above can be applied to a multi-view image encoding and decoding system.

FIG. 47 is a view depicting an example of a multi-view image encoding method.

As depicted in FIG. 47, a multi-view image includes a plurality of images of different points of view (views (view)). The plurality of views of the multi-view image is configured from a base view whose encoding and decoding are performed using only an image of the view itself without using information of any other view and a non-base view whose encoding and decoding are performed using information of a different view. Encoding and decoding of a non-base view may be performed using information of the base view or may be performed using information of a different non-base view.

In the case where such a multi-view image as in the example of FIG. 47 is encoded and decoded, the multi-view image is encoded for each point of view. Then, in the case where encoded data obtained in such a manner are decoded, the encoded data at the individual points of view are individually decoded (namely, individually for the points of view). To such encoding and decoding of each point of view as described above, the methods described in connection with the embodiments may be applied. This makes it possible to improve the S/N ratio and the compression efficiency. In short, also in the case of a multi-view image, the S/N ratio and the compression efficiency can be improved similarly.

<Multi-View Image Encoding and Decoding System>

FIG. 48 is a view depicting a multi-view image encoding apparatus of a multi-view image encoding and decoding system that performs multi-view encoding and decoding described above.

As depicted in FIG. 48, a multi-view image encoding apparatus 1000 includes an encoding section 1001, another encoding section 1002, and a multiplexing section 1003.

The encoding section 1001 encodes a base view image to generate a base view image encoded stream. The encoding section 1002 encodes non-base view images to generate a non-base view image encoded stream. The multiplexing section 1003 multiplexes the base view image encoded stream generated by the encoding section 1001 and the non-base view image encoded stream generated by the encoding section 1002 to generate a multi-view image encoded stream.

FIG. 49 is a view depicting a multi-view image decoding apparatus that performs multi-view image decoding described above.

As depicted in FIG. 49, the multi-view image decoding apparatus 1010 includes a demultiplexing section 1011, a decoding section 1012, and a decoding section 1013.

The demultiplexing section 1011 demultiplexes a multi-view image encoded stream in which a base view image encoded stream and a non-base view image encoded stream are multiplexed to extract the base view image encoded stream and the non-base view image encoded stream. The decoding section 1012 decodes the base view image encoded stream extracted by the demultiplexing section 1011 to obtain a base view image. The decoding section 1013 decodes the non-base view image encoded stream extracted by the demultiplexing section 1011 to obtain non-base view images.

For example, in such a multi-view image encoding and decoding system as described above, the encoding apparatus 11 described in the foregoing description of the embodiment may be applied as the encoding section 1001 and the encoding section 1002 of the multi-view image encoding apparatus 1000. This makes it possible to apply the method described hereinabove in connection with the embodiment also to encoding of a multi-view image. In particular, the S/N ratio and the compression efficiency can be improved. Further, for example, the decoding apparatus 12 described hereinabove connection with the embodiment may be applied as the decoding section 1012 and the decoding section 1013 of the multi-view image decoding apparatus 1010. This makes it possible to apply the method described hereinabove in connection with the embodiment also to decoding of encoded data of a multi-view image. In particular, the S/N ratio and the compression efficiency can be improved.

<Application to Hierarchical Image Encoding and Decoding System>

Further, the series of processes described hereinabove can be applied to a hierarchical image encoding (scalable encoding) and decoding system.

FIG. 50 is a view depicting an example of a hierarchical image encoding method.

Hierarchical image encoding (scalable encoding) converts (hierarchizes) an image into a plurality of layers so as to have a scalability (scalability) function in regard to a predetermined parameter and encodes the image data for each layer. Hierarchical image decoding (scalable decoding) is decoding corresponding to the hierarchical image encoding.

As depicted in FIG. 50, in hierarchization of an image, one image is divided into a plurality of images (layers) with reference to a predetermined parameter having a scalability function. In short, the hierarchized image (hierarchical image) includes images of a plurality of hierarchies (layers) that are different from each other in value of the predetermined parameter. The plurality of the hierarchical image include a base layer whose encoding and decoding are performed using only an image of the layer of itself without utilizing an image of any other layer and a non-base layer (also referred to as enhancement layer) whose encoding and decoding are performed using an image of a different layer. The non-base layer may utilize an image of the base layer or may utilize an image of a different non-base layer.

Generally, a non-base layer is configured from data of a difference image between an own image and an image of a different layer (from difference data). For example, in the case where one image is hierarchized into two layers including a base layer and a non-base layer (referred to also as enhancement layer), an image of lower picture quality than that of the original image is obtained from data of the base layer, and by synthesizing data of the base layer and data of the non-base layer, the original image (namely, an image of high picture quality) can be obtained.

By hierarchizing an image in such a manner, images of various picture qualities can be obtained easily in response to a situation. For example, it is possible to transmit image compression information according to the capability of a terminal or a network from a server without performing a transcode process such that, to a terminal having a low processing capacity like a portable telephone set, image compression information only of the base layer (base layer) is transmitted such that a moving image having a low space-time resolution or having a low picture quality is reproduced, but to a terminal having a high processing capacity like a television set or a personal computer, image compression information of the enhancement layer (enhancement layer) is transmitted in addition to the base layer (base layer) such that a moving image having a high time-space resolution or having a high picture quality is reproduced.

In the case where such a hierarchical image as in the example of FIG. 50 is encoded and decoded, the hierarchical image is encoded for each layer. Then, in the case where encoded data obtained in such a manner is decoded, the encoded data for each layer is decoded individually (namely, for each layer). To such encoding and decoding of each layer as just described, the method described hereinabove in connection with the embodiment may be applied. This makes it possible to improve the S/N ratio and the compression efficiency. In short, also in the case of a hierarchical image, the S/N ratio and the compression efficiency can be improved similarly.

<Scalable Parameter>

In such hierarchical image encoding and hierarchical image decoding (scalable encoding and scalable decoding) as described above, the parameter having the scalability (scalability) function is arbitrary. For example, the spatial resolution may be applied as the parameter (spatial scalability). In the case of this spatial scalability (spatial scalability), the frame rate differs for each layer.

Further, as a parameter to which such a scalability performance is to be provided, for example, the time resolution may be applied (temporal scalability). In the case of this temporal scalability (temporal scalability), the frame rate differs for each layer.

Furthermore, as a parameter to which such a scalability performance is to be provided, for example, the signal to noise ratio (SNR (Signal to Noise ratio)) may be applied (SNR scalability). In the case of this SNR scalability (SNR scalability), the SN ratio differs for each layer.

The parameter to which a scalability performance is to be provided may naturally be any other than the examples described above. For example, bit depth scalability (bit-depth scalability) is available with which a 10-bit (bit) image is obtained by adding an enhancement layer (enhancement layer) to the base layer that includes an 8-bit (bit) image.

Further, chroma scalability (chroma scalability) is available with which a component image of a 4:2:2 format is obtained by adding an enhancement layer (enhancement layer) to the base layer (base layer) that includes a component image of a 4:2:0 format.

<Hierarchical Image Encoding and Decoding System>

FIG. 51 is a view depicting a hierarchical image encoding apparatus of a hierarchical image encoding and decoding system that performs hierarchical image encoding and decoding described above.

As depicted in FIG. 51, a hierarchical image encoding apparatus 1020 includes an encoding section 1021, another encoding section 1022, and a multiplexing section 1023.

The encoding section 1021 encodes a base layer image to generate a base layer image encoded stream. The encoding section 1022 encodes non-base layer images to generate a non-base layer image encoded stream. The multiplexing section 1023 multiplexes the base layer image encoded stream generated by the encoding section 1021 and the non-base layer image encoded stream generated by the encoding section 1022 to generate a hierarchical image encoded stream.

FIG. 52 is a view depicting a hierarchical image decoding apparatus that performs hierarchical image decoding described above.

As depicted in FIG. 52, a hierarchical image decoding apparatus 1030 includes a demultiplexing section 1031, a decoding section 1032, and another decoding section 1033.

The demultiplexing section 1031 demultiplexes a hierarchical image encoded stream in which a base layer image encoded stream and a non-base layer image encoded stream are multiplexed to extract the base layer image encoded stream and the non-base layer image encoded stream. The decoding section 1032 decodes the base layer image encoded stream extracted by the demultiplexing section 1031 to obtain a base layer image. The decoding section 1033 decodes the non-base layer image encoded stream extracted by the demultiplexing section 1031 to obtain a non-base layer image.

For example, in such a hierarchical image encoding and decoding system as described above, the encoding apparatus 11 described hereinabove in connection with the embodiment may be applied as the encoding section 1021 and the encoding section 1022 of the hierarchical image encoding apparatus 1020. This makes it possible to apply, also to encoding of a hierarchical image, the method described hereinabove in connection with the embodiment. In particular, the S/N ratio and the compression efficiency can be improved. Further, for example, as the decoding section 1032 and the decoding section 1033 of the hierarchical image decoding apparatus 1030, the decoding apparatus 12 described hereinabove in connection with the embodiment may be applied. This makes it possible to apply, also to decoding of encoded data of a hierarchical image, the method described hereinabove in connection with the embodiment. In particular, the S/N ratio and the compression efficiency can be improved.

<Computer>

While the series of processes described above can be executed by hardware, it may otherwise be executed by software. In the case where the series of processes is executed by software, a program that constructs the software is installed into a computer. Here, such computers include a computer incorporated in hardware for exclusive use, for example, a personal computer for universal use that can execute various functions by installing various programs, and so forth.

FIG. 53 is a block diagram depicting an example of a configuration of hardware of a computer that executes the series of processes described hereinabove in accordance with a program.

In the computer 1100 depicted in FIG. 53, a CPU (Central Processing Unit) 1101, a ROM (Read Only Memory) 1102, and a RAM (Random Access Memory) 1103 are connected to each other by a bus 1104.

To the bus 1104, also an input/output interface 1110 is connected. To the input/output interface 1110, an inputting section 1111, an outputting section 1112, a storage section 1113, a communication section 1114, and a drive 1115 are connected.

The inputting section 1111 includes, for example, a keyboard, a mouse, a microphone, a touch panel, an input terminal and so forth. The outputting section 1112 includes, for example, a display, a speaker, an output terminal and so forth. The storage section 1113 includes, for example, a hard disk, a RAM disk, a nonvolatile memory and so forth. The communication section 1114 includes, for example, a network interface. The drive 1115 drives a removable medium 821 such as a magnetic disk, an optical disk, a magneto-optical disk, a semiconductor memory or the like.

In the computer configured in such a manner as described above, the CPU 1101 loads a program stored, for example, in the storage section 1113 into the RAM 1103 through the input/output interface 1110 and the bus 1104 to perform the series of processes described above. Into the RAM 1103, also data and so forth necessary for the CPU 1101 to execute various processes are stored suitably.

The program that is executed by the computer (CPU 1101) can be recorded into and applied as the removable medium 821, for example, as a package medium or the like. In this case, the program can be installed into the storage section 1113 through the input/output interface 1110 by mounting the removable medium 821 on the drive 1115.

Further, the program can be provided through a wired or wireless transmission medium such as a local area network, the Internet, a digital satellite broadcast or the like. In this case, the program can be received by the communication section 1114 and installed into the storage section 1113.

Also it is possible to install the program in advance into the ROM 1102 or the storage section 1113.

<Applications of Present Technology>

The encoding apparatus 11 and the decoding apparatus 12 according to the embodiment described above can be applied to various electronic equipment such as, for example, a transmitter and a receiver in satellite broadcasting, wired broadcasting such as a cable TV, delivery through the Internet, delivery to terminals by cellular communication and so forth, or a recording apparatus that records an image on a medium such as an optical disk, a magnetic disk or a flash memory, a reproduction apparatus that reproduces an image from such storage media and so forth. In the following, four application examples are described.

<First Application Example: Television Receiver>

FIG. 54 is a view depicting an example of a schematic configuration of a television apparatus to which the embodiment described hereinabove is applied.

A television apparatus 1200 includes an antenna 1201, a tuner 1202, a demultiplexer 1203, a decoder 1204, a video signal processing section 1205, a display section 1206, an audio signal processing section 1207, a speaker 1208, an external interface (I/F) section 1209, a control section 1210, a user interface (I/F) section 1211, and a bus 1212.

The tuner 1202 extracts a signal of a desired channel from broadcasting signals received through the antenna 1201 and demodulates the extracted signal. Then, the tuner 1202 outputs an encoded bit stream obtained by the decoding to the demultiplexer 1203. In other words, the tuner 1202 has a role as a transmission section in the television apparatus 1200, which receives an encoded stream in which images are encoded.

The demultiplexer 1203 demultiplexes a video stream and an audio stream of a broadcasting program of a viewing target from an encoded bit stream and outputs demultiplexed streams to the decoder 1204. Further, the demultiplexer 1203 extracts auxiliary data such as an EPG (Electronic Program Guide) from the encoded bit stream and supplies the extracted data to the control section 1210. It is to be noted that, in the case where the encoded bit stream is in a scrambled state, the demultiplexer 1203 may perform descrambling.

The decoder 1204 decodes a video stream and an audio stream inputted from the demultiplexer 1203. Then, the decoder 1204 outputs video data generated by the decoding process to the video signal processing section 1205. Further, the decoder 1204 outputs audio data generated by the decoding process to the audio signal processing section 1207.

The video signal processing section 1205 reproduces video data inputted from the decoder 1204 and causes the display section 1206 to display a video. Further, the video signal processing section 1205 may cause the display section 1206 to display an application screen image supplied thereto through a network. Further, the video signal processing section 1205 may perform an additional process such as, for example, noise removal from video data in response to settings. Furthermore, the video signal processing section 1205 may generate an image of a GUI (Graphical User Interface) such as, for example, a menu, a button, or a cursor and superpose the generated image on an output image.

The display section 1206 is driven by a driving signal supplied from the video signal processing section 1205 and displays a video or an image on a video face of a display device (for example, a liquid crystal display, a plasma display, an OELD (Organic ElectroLuminescence Display) (organic EL display) or the like).

The audio signal processing section 1207 performs a reproduction process such as D/A conversion and amplification for audio data inputted from the decoder 1204 and causes the speaker 1208 to output sound. Further, the audio signal processing section 1207 may perform an additional process such as noise reduction for the audio data.

The external interface section 1209 is an interface for connecting the television apparatus 1200 and an external apparatus or a network to each other. For example, a video stream or an audio stream received through the external interface section 1209 may be decoded by the decoder 1204. In particular, also the external interface section 1209 has a role as a transmission section in the television apparatus 1200, which receives an encoded stream in which an image is encoded.

The control section 1210 includes a processor such as a CPU, and a memory such as a RAM and a ROM. The memory stores therein a program to be executed by the CPU, program data, EPG data, data acquired through a network and so forth. The program stored in the memory is read by the CPU and executed, for example, upon activation of the television apparatus 1200. The CPU executes the program to control operation of the television apparatus 1200, for example, in response to an operation signal inputted from the user interface section 1211.

The user interface section 1211 is connected to the control section 1210. The user interface section 1211 includes, for example, buttons and switches for allowing a user to operate the television apparatus 1200, a reception section for a remote controlling signal and so forth. The user interface section 1211 detects an operation by a user through the components mentioned to generate an operation signal and outputs the generated operation signal to the control section 1210.

The bus 1212 connects the tuner 1202, the demultiplexer 1203, the decoder 1204, the video signal processing section 1205, the audio signal processing section 1207, the external interface section 1209, and the control section 1210 to each other.

In the television apparatus 1200 configured in such a manner as described above, the decoder 1204 may have the functions of the decoding apparatus 12 described hereinabove. In short, the decoder 1204 may decode encoded data by the methods described in the foregoing description of the embodiment. This makes it possible for the television apparatus 1200 to improve the S/N ratio and the compression efficiency.

Further, the television apparatus 1200 configured in such a manner as described above may be configured such that the video signal processing section 1205 can encode image data supplied, for example, from the decoder 1204 and output resulting encoded data to the outside of the television apparatus 1200 through the external interface section 1209. Further, the video signal processing section 1205 may have the functions of the encoding apparatus 11 described hereinabove. In short, the video signal processing section 1205 may encode image data supplied from the decoder 1204 by the method described hereinabove in connection with the embodiment. This makes it possible for the television apparatus 1200 to improve the S/N ratio and the compression efficiency.

<Second Application Example: Portable Telephone Set>

FIG. 55 is a view depicting an example of a schematic configuration of a portable telephone set to which the embodiment described hereinabove is applied.

The portable telephone set 1220 includes an antenna 1221, a communication section 1222, an audio codec 1223, a speaker 1224, a microphone 1225, a camera section 1226, an image processing section 1227, a demultiplexing section 1228, a recording and reproduction section 1229, a display section 1230, a control section 1231, an operation section 1232, and a bus 1233.

The antenna 1221 is connected to the communication section 1222. The speaker 1224 and the microphone 1225 are connected to the audio codec 1223. The operation section 1232 is connected to the control section 1231. The bus 1233 connects the communication section 1222, the audio codec 1223, the camera section 1226, the image processing section 1227, the demultiplexing section 1228, the recording and reproduction section 1229, the display section 1230, and the control section 1231 to each other.

The portable telephone set 1220 performs various operations such as transmission and reception of an audio signal, transmission and reception of an electronic mail or image data, imaging of an image, recording of data and so forth in various operation modes including a speech mode, a data communication mode, an imaging mode and a videophone mode.

In the speech mode, an analog audio signal generated by the microphone 1225 is supplied to the audio codec 1223. The audio codec 1223 converts the analog audio signal into audio data and A/D converts and compresses the audio data after the conversion. Then, the audio codec 1223 outputs the compressed audio data to the communication section 1222. The communication section 1222 encodes and modulates the audio data to generate a transmission signal. Then, the communication section 1222 transmits the generated transmission signal to a base station (not depicted) through the antenna 1221. Further, the communication section 1222 amplifies and frequency converts a wireless signal received through the antenna 1221 to acquire a reception signal. Then, the communication section 1222 demodulates and decodes the reception signal to generate audio data and outputs the generated audio data to the audio codec 1223. The audio codec 1223 decompresses and D/A converts the audio data to generate an analog audio signal. Then, the audio codec 1223 supplies the generated audio signal to the speaker 1224 such that audio is outputted.

Meanwhile, in the data communication mode, for example, the control section 1231 generates character data that configure an electronic mail in response to an operation by a user through the operation section 1232. Further, the control section 1231 controls the display section 1230 to display characters thereon. Further, the control section 1231 generates electronic mail data in response to a transmission instruction from the user through the operation section 1232 and outputs the generated electronic mail data to the communication section 1222. The communication section 1222 encodes and modulates the electronic mail data to generate a transmission signal. Then, the communication section 1222 transmits the generated transmission signal to a base station (not depicted) through the antenna 1221. Further, the communication section 1222 amplifies and frequency converts a wireless signal received through the antenna 1221 to acquire a reception signal. Then, the communication section 1222 demodulates and decodes the reception signal to restore electronic mail data and outputs the restored electronic mail data to the control section 1231. The control section 1231 controls the display section 1230 to display the substance of the electronic mail and supplies the electronic mail data to the recording and reproduction section 1229 such that the electronic mail data is written into a storage medium of the recording and reproduction section 1229.

The recording and reproduction section 1229 has an arbitrary readable/writable storage medium. For example, the storage medium may be a built-in type storage medium such as a RAM or a flash memory or may be an externally mounted storage medium such as a hard disk, a magnetic disk, a magneto-optical disk, an optical disk, a USB (Universal Serial Bus) memory or a memory card.

Further, in the imaging mode, for example, the camera section 1226 images an image pickup object to generate image data and outputs the generated image data to the image processing section 1227. The image processing section 1227 encodes the image data inputted from the camera section 1226 and supplies an encoded stream to the recording and reproduction section 1229 such that it is written into a storage medium of the recording and reproduction section 1229.

Furthermore, in the image display mode, the recording and reproduction section 1229 reads out an encoded stream recorded in a storage medium and outputs the encoded stream to the image processing section 1227. The image processing section 1227 decodes the encoded stream inputted from the recording and reproduction section 1229 and supplies image data to the display section 1230 such that an image of the image data is displayed.

Further, in the videophone mode, for example, the demultiplexing section 1228 multiplexes a video stream encoded by the image processing section 1227 and an audio stream inputted from the audio codec 1223 and outputs the multiplexed stream to the communication section 1222. The communication section 1222 encodes and modulates the stream to generate a transmission signal. Then, the communication section 1222 transmits the generated transmission signal to a base station (not depicted) through the antenna 1221. Meanwhile, the communication section 1222 amplifies and frequency converts a wireless signal received through the antenna 1221 to acquire a reception signal. The transmission signal and the reception signal can include an encoded bit stream. Then, the communication section 1222 demodulates and decodes the reception signal to restore a stream and outputs the restored stream to the demultiplexing section 1228. The demultiplexing section 1228 demultiplexes a video stream and an audio stream from the inputted stream and outputs the video stream to the image processing section 1227 while it outputs the audio stream to the audio codec 1223. The image processing section 1227 decodes the video stream to generate video data. The video data is supplied to the display section 1230, by which a series of images are displayed. The audio codec 1223 decompresses and D/A converts the audio stream to generate an analog audio signal. Then, the audio codec 1223 supplies the generated audio signal to the speaker 1224 such that audio is outputted from the speaker 1224.

In the portable telephone set 1220 configured in such a manner as described above, for example, the image processing section 1227 may have the functions of the encoding apparatus 11 described hereinabove. In short, the image processing section 1227 may encode image data by the method described hereinabove in connection with the embodiment. This makes it possible for the portable telephone set 1220 to improve the S/N ratio and the compression efficiency.

Further, in the portable telephone set 1220 configured in such a manner as described above, for example, the image processing section 1227 may have the functions of the decoding apparatus 12 described hereinabove. In short, the image processing section 1227 may decode encoded data by the method described hereinabove in connection with the embodiment. This makes it possible for the portable telephone set 1220 to improve the S/N ratio and the compression efficiency.

<Second Application Example: Recording and Reproduction Apparatus>

FIG. 56 is a view depicting an example of a schematic configuration of a recording and reproduction apparatus to which the embodiment described hereinabove is applied.

A recording and reproduction apparatus 1240 encodes and records, for example, audio data and video data of a received broadcasting program into a recording medium. Further, the recording and reproduction apparatus 1240 may encode and record audio data and video data acquired, for example, from a different apparatus into a recording medium. Further, the recording and reproduction apparatus 1240 reproduces data recorded in the recording medium on a monitor and a speaker, for example, in response to an instruction of a user. At this time, the recording and reproduction apparatus 1240 decodes audio data and video data.

The recording and reproduction apparatus 1240 includes a tuner 1241, an external interface (I/F) section 1242, an encoder 1243, an HDD (Hard Disk Drive) section 1244, a disk drive 1245, a selector 1246, a decoder 1247, an OSD (On-Screen Display) section 1248, a control section 1249, and a user interface (I/F) section 1250.

The tuner 1241 extracts a signal of a desired channel from broadcasting signals received through an antenna (not depicted) and demodulates the extracted signal. Then, the tuner 1241 outputs an encoded bit stream obtained by the demodulation to the selector 1246. In other words, the tuner 1241 has a role as a transmission section in the recording and reproduction apparatus 1240.

The external interface section 1242 is an interface for connecting the recording and reproduction apparatus 1240 and an external apparatus or a network to each other. The external interface section 1242 may be, for example, an IEEE (Institute of Electrical and Electronic Engineers) 1394 interface, a network interface, a USB interface, a flash memory interface or the like. For example, video data and audio data received through the external interface section 1242 are inputted to the encoder 1243. In other words, the external interface section 1242 has a role as a transmission section in the recording and reproduction apparatus 1240.

The encoder 1243 encodes video data and audio data inputted from the external interface section 1242 in the case where the video data and the audio data are not in an encoded form. Then, the encoder 1243 outputs an encoded bit stream to the selector 1246.

The HDD section 1244 records an encoded bit stream, in which content data of videos and audios are compressed, various programs and other data on an internal hard disk thereof. Further, upon reproduction of videos and audios, the HDD section 1244 reads out such data from the hard disk.

The disk drive 1245 performs recording and reading out of data on and from a recording medium loaded therein. The recording medium to be loaded into the disk drive 1245 may be, for example, a DVD (Digital Versatile Disc) disk (DVD-Video, DVD-RAM (DVD - Random Access Memory), DVD-R (DVD - Readable), DVD-RW (DVD - Rewritable), DVD+R (DVD + Recordable), DVD+RW (DVD + Rewritable) and so forth) or a Blu-ray (registered trademark) disk or the like.

Upon recording of videos and audios, the selector 1246 selects an encoded bit stream inputted from the tuner 1241 or the encoder 1243 and outputs the selected encoded bit stream to the HDD section 1244 or the disk drive 1245. On the other hand, upon reproduction of videos and audios, the selector 1246 outputs an encoded bit stream inputted from the HDD section 1244 or the disk drive 1245 to the decoder 1247.

The decoder 1247 decodes an encoded bit stream to generate video data and audio data. Then, the decoder 1247 outputs the generated video data to the OSD section 1248. Meanwhile, the decoder 1247 outputs the generated audio data to an external speaker.

The OSD section 1248 reproduces video data inputted from the decoder 1247 to display a video. Further, the OSD section 1248 may superimpose an image of a GUI such as, for example, a menu, a button, or a cursor on the video to be displayed.

The control section 1249 includes a processor such as a CPU and a memory such as a RAM and a ROM. The memory stores therein a program to be executed by the CPU, program data and so forth. The program recorded in the memory is read into and executed by the CPU, for example, upon activation of the recording and reproduction apparatus 1240. The CPU executes the program to control operation of the recording and reproduction apparatus 1240 in response to an operation signal inputted, for example, from the user interface section 1250.

The user interface section 1250 is connected to the control section 1249. The user interface section 1250 has buttons and switches for allowing, for example, a user to operate the recording and reproduction apparatus 1240 and a reception section for a remote controlling signal and so forth. The user interface section 1250 detects an operation by the user through the components mentioned to generate an operation signal and outputs the generated operation signal to the control section 1249.

In the recording and reproduction apparatus 1240 configured in such a manner, for example, the encoder 1243 may have the functions of the encoding apparatus 11 described hereinabove. In short, the encoder 1243 may encode image data by a method described in connection with the embodiment. This makes it possible for the recording and reproduction apparatus 1240 to improve the S/N ratio and the compression efficiency.

Further, in the recording and reproduction apparatus 1240 configured in such a manner, for example, the decoder 1247 may have the functions of the decoding apparatus 12 described hereinabove. In short, the decoder 1247 may decode encoded data by the method described in the foregoing description of the embodiment. This makes it possible for the recording and reproduction apparatus 1240 to improve the S/N ratio and the compression efficiency.

<Fourth Application Example: Imaging Apparatus>

FIG. 57 is a view depicting an example of a schematic configuration of an imaging apparatus to which the embodiment described above is applied.

An imaging apparatus 1260 images an image pickup object to generate an image and encodes and records image data into a recording medium.

The imaging apparatus 1260 includes an optical block 1261, an imaging section 1262, a signal processing section 1263, an image processing section 1264, a display section 1265, an external interface (I/F) section 1266, a memory section 1267, a media drive 1268, an OSD section 1269, a control section 1270, a user interface (I/F) section 1271, and a bus 1272.

The optical block 1261 is connected to the imaging section 1262. The imaging section 1262 is connected to the signal processing section 1263. The display section 1265 is connected to the image processing section 1264. The user interface section 1271 is connected to the control section 1270. The bus 1272 connects the image processing section 1264, the external interface section 1266, the memory section 1267, the media drive 1268, the OSD section 1269, and the control section 1270 to each other.

The optical block 1261 has a focus lens, a diaphragm mechanism and so forth. The optical block 1261 forms an optical image of an image pickup object on an imaging face of the imaging section 1262. The imaging section 1262 includes an image sensor such as a CCD (Charge Coupled Device) image sensor or a CMOS (Complementary Metal Oxide Semiconductor) image sensor and converts the optical image formed on the imaging face into an image signal as an electric signal by photoelectric conversion. Then, the imaging section 1262 outputs the image signal to the signal processing section 1263.

The signal processing section 1263 performs various camera signal processes such as knee correction, gamma correction, and color correction for the image signal inputted from the imaging section 1262. The signal processing section 1263 outputs image data after the camera signal processes to the image processing section 1264.

The image processing section 1264 encodes the image data inputted from the signal processing section 1263 to generate encoded data. Then, the image processing section 1264 outputs the generated encoded data to the external interface section 1266 or the media drive 1268. Further, the image processing section 1264 decodes encoded data inputted from the external interface section 1266 or the media drive 1268 to generate image data. Then, the image processing section 1264 outputs the generated image data to the display section 1265. Further, the image processing section 1264 may output the image data inputted from the signal processing section 1263 to the display section 1265 such that an image is displayed on the display section 1265. Further, the image processing section 1264 may superimpose displaying data acquired from the OSD section 1269 with the image to be outputted to the display section 1265.

The OSD section 1269 generates an image of a GUI such as, for example, a menu, a button, or a cursor and outputs the generated image to the image processing section 1264.

The external interface section 1266 is configured, for example, as USB input/output terminals. The external interface section 1266 connects the imaging apparatus 1260 and a printer to each other, for example, upon printing of the image. Further, a drive is connected to the external interface section 1266 as occasion demands. A removable medium such as, for example, a magnetic disk or an optical disk is mounted on the drive, and a program read out from the removable medium can be installed into the imaging apparatus 1260. Further, the external interface section 1266 may be configured as a network interface that is connected to a network such as a LAN or the Internet. In particular, the external interface section 1266 has a role as a transmission section in the imaging apparatus 1260.

The recording medium to be mounted on the media drive 1268 may be an arbitrary rewritable removable medium such as, for example, a magnetic disk, a magneto-optical disk, an optical disk, or a semiconductor memory. Further, the recording medium may be fixedly mounted on the media drive 1268 such that a non-portable storage section like, for example, a built-in hard disk drive or an SSD (Solid State Drive) is configured.

The control section 1270 includes a processor such as a CPU and a memory such as a RAM and a RAM. The memory has a program to be executed by the CPU, program data and so forth stored therein. The program stored in the memory is read into and executed by the CPU upon activation of the imaging apparatus 1260. The CPU executes the program to control operation of the imaging apparatus 1260 in accordance with, for example, an operation signal inputted from the user interface section 1271.

The user interface section 1271 is connected to the control section 1270. The user interface section 1271 has, for example, buttons, switches and so forth for operation of the imaging apparatus 1260 by the user. The user interface section 1271 detects an operation by the user through the components described above to generate an operation signal and outputs the generated operation signal to the control section 1270.

In the imaging apparatus 1260 configured in such a manner as described above, for example, the image processing section 1264 may include the functions of the encoding apparatus 11 described above. In particular, the image processing section 1264 may encode image data by the method described in connection with the embodiment described above. This makes it possible for the imaging apparatus 1260 to improve the S/N ratio and the compression efficiency.

Further, in the imaging apparatus 1260 configured in such a manner as described above, for example, the image processing section 1264 may include the functions of the decoding apparatus 12 described hereinabove. In particular, the image processing section 1264 may decode encoded data by the method described in connection with the embodiment described above. This makes it possible for the imaging apparatus 1260 to improve the S/N ratio and the compression efficiency.

<Other Application Examples>

It is to be noted that the present technology can be applied also to HTTP streaming of, for example, MPEG DASH or the like in which, from among a plurality of encoded data prepared in advance and having resolutions or the like different from each other, an appropriate encoded data is selected and used in a unit of a segment. In short, information relating to encoding and decoding can be shared by such a plurality of encoded data as just described.

Further, also the foregoing description relates to an example of an apparatus, a system and so forth to which the present technology is applied, the present technology is not limited to this, and also it is possible to carry out the present technology to any configuration that is incorporated in an apparatus that configures such an apparatus or system as described above, for example, a processor as a system LSI (Large Scale Integration) or the like, a module in which a plurality of processors or the like are used, a unit in which a plurality of modules or the like are used, a set in which a different function is further added to the unit (namely, part of the configuration of the apparatus) or the like.

<Video Set>

An example in the case where the present technology is carried out as a set is described with reference to FIG. 58.

FIG. 58 depicts an example of a schematic configuration of the video set to which the present technology is applied.

In recent years, multifunctionalization of electronic equipment has been and is being advanced, and, in the case where some component is carried out as selling, provision or the like in development or fabrication of the electronic equipment, not only a case in which the component is carried out as a component having one function but also a case in which a plurality of components having functions relating to each other are combined and carried out as one set having a plurality of functions are seen frequently.

A video set 1300 depicted in FIG. 58 has such a multifunctionalized configuration as described above and is an apparatus in which a device having functions relating to encoding and decoding of an image (one of or both encoding and decoding may be applied) and another device having other functions relating to the functions are combined.

As depicted in FIG. 58, the video set 1300 includes a module group including a video module 1311, an external memory 1312, a power management module 1313, and a frontend module 1314 and devices having relating functions such as a connectivity 1321, a camera 1322, a sensor 1323 and so forth.

A module is a part in which several part functions relating to each other are combined so as to have coherent functions. Although a particular physical configuration is arbitrary, a physical configuration is conceivable in which, for example, a plurality of processors individually having functions, electronic circuit devices such as resisters and capacitors, other devices and so forth are disposed and integrated on a wiring board. Also it is conceivable to combine a different module, a processor or the like with a module to produce a new module.

In the case of the example of FIG. 58, the video module 1311 is a combination of components having functions relating to image processing and includes an application processor 1331, a video processor 1332, a broadband modem 1333, and an RF module 1334.

The processor is an integration of a component having a predetermined function with a semiconductor chip by SoC (System On a Chip), and also a processor referred to, for example, as system LSI (Large Scale Integration) or the like is available. The component that has a predetermined function may be a logic circuit (hardware configuration) or may be a CPU, a ROM, a RAM and so forth and a program executed using them or else may be a combination of both of them. For example, the processor may include a logic circuit, a CPU, a ROM, a RAM and so forth such that part of functions are implemented by the logic circuit (hardware configuration) and the remaining part of the functions are implemented by the program to be executed by the CPU (software configuration).

The application processor 1331 of FIG. 58 is a processor that executes an application relating to an image process. In order to implement a predetermined function, the application to be executed by the application processor 1331 not only can perform an arithmetic operation process but also can control, as occasion demands, the components of the inside and the outside of the video module 1311 such as, for example, the video processor 1332.

The video processor 1332 is a processor having functions relating to (one of or both) encoding and decoding of an image.

The broadband modem 1333 converts data (digital signal) to be transmitted by wire or wireless (or both) broadband communication performed through a broadband line such as the Internet or a public telephone network into an analog signal by digital modulation of the data or the like or converts an analog signal received by the broadband communication into data (digital signal) by demodulation of the analog signal. The broadband modem 1333 processes arbitrary information such as, for example, image data to be processed by the video processor 1332, a stream in which image data is encoded, an application program or setting data.

The RF module 1334 is a module that performs frequency conversion, modulation and demodulation, amplification, filter process and so forth for an RF (Radio Frequency) signal to be sent or received through an antenna. For example, the RF module 1334 performs frequency conversion and so forth for a baseband signal generated by the broadband modem 1333 to generate an RF signal. Further, for example, the RF module 1334 performs frequency conversion and so forth for an RF signal received through the frontend module 1314 to generate a baseband signal.

It is to be noted that, as depicted by a broken line 1341 of FIG. 58, the application processor 1331 and the video processor 1332 may be integrated so as to be configured as one processor.

The external memory 1312 is a module that is provided outside the video module 1311 and has a storage device to be utilized by the video module 1311. While the storage device of the external memory 1312 may be implemented by any physical component, since generally the storage device is frequently utilized for storage of a great amount of data like image data of a unit of a frame, it is desirable to implement the storage device by a comparatively-low-price and great-capacity semiconductor memory such as, for example, a DRAM (Dynamic Random Access Memory).

The power management module 1313 manages and controls power supply to the video module 1311 (components in the video module 1311).

The frontend module 1314 is a module that provides a frontend function (circuit at a transmission or reception end on the antenna side) to the RF module 1334. As depicted in FIG. 58, for example, the frontend module 1314 includes an antenna section 1351, a filter 1352, and an amplification section 1353.

The antenna section 1351 includes an antenna for transmitting and receiving a wireless signal and peripheral elements of the antenna. The antenna section 1351 transmits a signal supplied from the amplification section 1353 as a wireless signal and supplies a received wireless signal as an electric signal (RF signal) to the filter 1352. The filter 1352 performs a filter process and so forth for the RF signal received through the antenna section 1351 and supplies the RF signal after the process to the RF module 1334. The amplification section 1353 amplifies and supplies an RF signal supplied from the RF module 1334 to the antenna section 1351.

The connectivity 1321 is a module having a function relating to connection to the outside. The physical configuration of the connectivity 1321 is arbitrary. For example, the connectivity 1321 has a component having a communication function of a communication standard different from that with which the broadband modem 1333 is compatible, external input/output terminals and so forth.

For example, the connectivity 1321 may include a module having a communication function that complies with a wireless communication standard such as Bluetooth (registered trademark), IEEE 802.11 (for example, Wi-Fi (Wireless Fidelity, registered trademark)), NFC (Near Field Communication), or IrDA (InfraRed Data Association), an antenna for transmitting and receiving a signal that complies with the standard and so forth. Further, for example, the connectivity 1321 may include a module having a communication function that complies with a wire communication standard such as USB (Universal Serial Bus), HDMI (registered trademark) (High-Definition Multimedia Interface) or the like and a terminal that complies with the standard. Furthermore, for example, the connectivity 1321 may include a different data (signal) transmission function or the like such as analog input/output terminals or the like.

It is to be noted that the connectivity 1321 may include a device for a transmission destination of data (signal). For example, the connectivity 1321 may include a drive that performs reading out and writing of data from and into a recording medium such as a magnetic disk, an optical disk, a magneto-optical disk, or a semiconductor memory (include not only a drive for a removable medium but also a drive for a hard disk, an SSD (Solid State Drive), an NAS (Network Attached Storage)) or the like. Further, the connectivity 1321 may include an outputting device for an image or sound (a monitor, a speaker or the like).

The camera 1322 is a module having a function for imaging an image pickup object to obtain image data of the image pickup object. The image data obtained by imaging of the camera 1322 is supplied to and encoded by, for example, the video processor 1332.

The sensor 1323 is a module having an arbitrary sensor function of, for example, a sound sensor, an ultrasonic sensor, an optical sensor, an illumination sensor, an infrared sensor, an image sensor, a rotation sensor, an angle sensor, an angular velocity sensor, a velocity sensor, an acceleration sensor, an inclination sensor, a magnetic identification sensor, a shock sensor, a temperature sensor or the like. Data detected by the sensor 1323 is supplied, for example, to the application processor 1331 and is utilized by an application or the like.

The components described as the modules in the foregoing description may be implemented as a processor, or conversely, the component described as a processor may be implemented as a module.

In the video set 1300 having such a configuration as described above, the present technology can be applied to the video processor 1332 as hereinafter described. Accordingly, the video set 1300 can be carried out as a set to which the present technology is applied.

<Example of Configuration of Video Processor>

FIG. 59 depicts an example of a schematic configuration of the video processor 1332 (FIG. 58) to which the present technology is applied.

In the case of the example of FIG. 59, the video processor 1332 has a function for receiving an input of a video signal and an audio signal and encoding the signals by a predetermined method and another function for decoding video data and audio data in an encoded form and reproducing and outputting a video signal and an audio signal.

As depicted in FIG. 59, the video processor 1332 includes a video input processing section 1401, a first image scaling section 1402, a second image scaling section 1403, a video output processing section 1404, a frame memory 1405, and a memory controlling section 1406. The video processor 1332 further includes an encode/decode engine 1407, video ES (Elementary Stream) buffers 1408A and 1408B, and audio ES buffers 1409A and 1409B. The video processor 1332 further includes an audio encoder 1410, an audio decoder 1411, a multiplexing section (MUX (Multiplexer)) 1412, a demultiplexing section (DMUX (Demultiplexer)) 1413, and a stream buffer 1414.

The video inputting processing section 1401 acquires a video signal inputted, for example, from the connectivity 1321 (FIG. 58) or the like and converts the acquired video signal into digital image data. The first image scaling section 1402 performs format conversion, a scaling process of an image and so forth for the image data. The second image scaling section 1403 performs a scaling process of an image in accordance with a format at a destination of outputting through the video output processing section 1404, and performs format conversion, a scaling process of an image or the like similar to that of the first image scaling section 1402 for the image data. The video output processing section 1404 performs format conversion, conversion into an analog signal and so forth for the image data and outputs resulting data as a reproduced video signal, for example, to the connectivity 1321 and so forth.

The frame memory 1405 is a memory for image data shared by the video inputting processing section 1401, the first image scaling section 1402, the second image scaling section 1403, the video output processing section 1404, and the encode/decode engine 1407. The frame memory 1405 is implemented as a semiconductor memory such as, for example, a DRAM.

The memory controlling section 1406 receives a synchronizing signal from the encode/decode engine 1407 and controls accessing for writing and reading out to the frame memory 1405 in accordance with an access schedule to the frame memory 1405 written in an access management table 1406A. The access management table 1406A is updated by the memory controlling section 1406 in response to a process executed by the encode/decode engine 1407, the first image scaling section 1402, the second image scaling section 1403 or the like.

The encode/decode engine 1407 performs an encoding process of image data and a decoding process of a video stream that is data encoded from image data. For example, the encode/decode engine 1407 encodes image data read out from the frame memory 1405 and successively writes the encoded image data as a video stream into the video ES buffer 1408A. Further, the encode/decode engine 1407 successively reads out a video stream, for example, from the video ES buffer 1408B and decodes the video stream, and successively writes the decoded video stream as image data into the frame memory 1405. The encode/decode engine 1407 uses the frame memory 1405 as a working area in the encoding and decoding. Further, the encode/decode engine 1407 outputs a synchronizing signal to the memory controlling section 1406, for example, at a timing at which processing for each macro block is to be started.

The video ES buffer 1408A buffers a video stream generated by the encode/decode engine 1407 and supplies the resulting video stream to the multiplexing section (MUX) 1412. The video ES buffer 1408B buffers a video stream supplied from the demultiplexing section (DMUX) 1413 and supplies the resulting video stream to the encode/decode engine 1407.

The audio ES buffer 1409A buffers an audio stream generated by the audio encoder 1410 and supplies the resulting audio stream to the multiplexing section (MUX) 1412. The audio ES buffer 1409B buffers an audio stream supplied from the demultiplexing section (DMUX) 1413 and supplies the resulting audio stream to the audio decoder 1411.

The audio encoder 1410 performs, for example, digital conversion for an audio signal inputted, for example, from the connectivity 1321 or the like and encodes the resulting audio signal by a predetermined method such as, for example, an MPEG audio method or an AC3 (AudioCode number 3) method. The audio encoder 1410 successively writes the audio stream that is data encoded from the audio signal into the audio ES buffer 1409A. The audio decoder 1411 decodes an audio stream supplied from the audio ES buffer 1409B and performs, for example, conversion into an analog signal or the like and then supplies the resulting analog signal as a reproduced audio signal, for example, to the connectivity 1321 and so forth.

The multiplexing section (MUX) 1412 multiplexes a video stream and an audio stream. The method of the multiplexing (namely, format of a bit stream generated by multiplexing) is arbitrary. Further, upon such multiplexing, the multiplexing section (MUX) 1412 can also add predetermined header information and so forth to the bit stream. In short, the multiplexing section (MUX) 1412 can convert the format of a stream by multiplexing. For example, the multiplexing section (MUX) 1412 multiplexes a video stream and an audio stream to convert them into a transport stream that is a bit stream of a transfer format. Further, for example, the multiplexing section (MUX) 1412 multiplexes the video stream and the audio stream to convert them into data of a recording file format (file data).

The demultiplexing section (DMUX) 1413 demultiplexes a bit stream, in which a video stream and an audio stream are multiplexed, by a method corresponding to the multiplexing by the multiplexing section (MUX) 1412. In particular, the demultiplexing section (DMUX) 1413 extracts the video stream and the audio stream from the bit stream read out from the stream buffer 1414 (separates the video stream and the audio stream from each other). In short, the demultiplexing section (DMUX) 1413 can convert the format of the stream by the demultiplexing (inverse conversion of the conversion by the multiplexing section (MUX) 1412). For example, the demultiplexing section (DMUX) 1413 can acquire a transport stream supplied, for example, from the connectivity 1321, broadband modem 1333 or the like through the stream buffer 1414 and demultiplex the acquired stream so as to convert it into a video stream and an audio stream. Further, for example, the demultiplexing section (DMUX) 1413 can acquire file data read out from various recording media, for example, by the connectivity 1321 and can demultiplex the read out file data so as to convert it into a video stream and an audio stream.

The stream buffer 1414 buffers a bit stream. For example, the stream buffer 1414 buffers a transport stream supplied from the multiplexing section (MUX) 1412 and supplies the buffered transport stream, for example, to the connectivity 1321, broadband modem 1333 or the like at a predetermined timing or on the basis of a request from the outside or the like.

Further, for example, the stream buffer 1414 buffers file data supplied from the multiplexing section (MUX) 1412 and supplies the buffered file data, for example, to the connectivity 1321 or the like so as to be recorded on various recording media at a predetermined timing or on the basis of a request from the outside or the like.

Furthermore, the stream buffer 1414 buffers a transport stream acquired, for example, through the connectivity 1321, broadband modem 1333 or the like and supplies the buffered transport stream to the demultiplexing section (DMUX) 1413 at a predetermined timing or on the basis of a request from the outside or the like.

Further, the stream buffer 1414 buffers file data read out from various recording media, for example, by the connectivity 1321 or the like and supplies the buffered file data to the demultiplexing section (DMUX) 1413 at a predetermined timing or on the basis of a request from the outside or the like.

Now, an example of operation of the video processor 1332 having such a configuration as described above is described. For example, a video signal inputted from the connectivity 1321 or the like to the video processor 1332 is converted into digital image data of a predetermined method such as a 4:2:2 Y/Cb/Cr method by the video inputting processing section 1401 and successively written into the frame memory 1405. The digital image data is read out by the first image scaling section 1402 or the second image scaling section 1403, subjected to format conversion into that of a predetermined method such as a 4:2:0 Y/Cb/Cr method and a scaling process, and written back into the frame memory 1405. This image data is encoded by the encode/decode engine 1407 and written as a video stream into the video ES buffer 1408A.

Further, an audio signal inputted from the connectivity 1321 or the like to the video processor 1332 is encoded by the audio encoder 1410 and written as an audio stream into the audio ES buffer 1409A.

The video stream of the video ES buffer 1408A and the audio stream of the audio ES buffer 1409A are read out to and multiplexed by the multiplexing section (MUX) 1412, by which they are converted into a transport stream, file data or the like. The transport stream generated by the multiplexing section (MUX) 1412 is buffered by the stream buffer 1414 and then outputted to the external network, for example, through the connectivity 1321, the broadband modem 1333 and so forth. Further, the file data generated by the multiplexing section (MUX) 1412 is buffered by the stream buffer 1414, whereafter it is outputted, for example, to the connectivity 1321 or the like and recorded on various recording media.

Further, a transport stream inputted from the external network to the video processor 1332, for example, through the connectivity 1321, the broadband modem 1333 or the like is buffered by the stream buffer 1414 and then demultiplexed by the demultiplexing section (DMUX) 1413. Further, file data read out from various recording media, for example, by the connectivity 1321 or the like and inputted to the video processor 1332 is buffered by the stream buffer 1414 and then demultiplexed by the demultiplexing section (DMUX) 1413. In sort, a transport stream or file data inputted to the video processor 1332 is separated into a video stream and an audio stream by the demultiplexing section (DMUX) 1413.

The audio stream is supplied through the audio ES buffer 1409B to and decoded by the audio decoder 1411 such that an audio signal is reproduced. Meanwhile, the video stream is written into the video ES buffer 1408B and then is successively read out and decoded by the encode/decode engine 1407 and written into the frame memory 1405. The decoded image data is subjected to a scaling process by the second image scaling section 1403 and written into the frame memory 1405. Then, the decoded image data is read out by the video output processing section 1404 and subjected to format conversion to a format of a predetermined method such as a 4:2:2 Y/Cb/Cr method, whereafter it is converted further into an analog signal such that a video signal is reproduced and outputted.

In the case where the present technology is applied to the video processor 1332 configured as in such a manner, it is sufficient if the present technology according to the embodiment described above is applied to the encode/decode engine 1407. In particular, for example, the encode/decode engine 1407 may include the functions of the encoding apparatus 11 or the functions of the decoding apparatus 12 described above or both of them. This makes it possible for the video processor 1332 to achieve advantageous effects similar to those of the encoding apparatus 11 or the decoding apparatus 12 of the embodiment described above.

It is to be noted that, in the encode/decode engine 1407, the present technology (namely, the functions of the encoding apparatus 11 or the functions of the decoding apparatus 12 or both of them) may be implemented by hardware such as a logic circuit or may be implemented by software such as an embedded program, or may be implemented by both of them.

<Different Example of Configuration of Video Processor>

FIG. 60 is a view depict another example of a schematic configuration of the video processor 1332 to which the present technology is applied.

In the case of the example of FIG. 60, a video processor 1332 has a function for encoding and decoding video data by a predetermined method.

More particularly, as depicted in FIG. 60, the video processor 1332 includes a control section 1511, a display interface 1512, a display engine 1513, an image processing engine 1514, and an internal memory 1515. The video processor 1332 further includes a codec engine 1516, a memory interface 1517, a multiplexing and demultiplexing section (MUX DMUX) 1518, a network interface 1519, and a video interface 1520.

The control section 1511 controls operation of processing sections in the video processor 1332 such as the display interface 1512, the display engine 1513, the image processing engine 1514, and the codec engine 1516.

As depicted in FIG. 60, the control section 1511 includes, for example, a main CPU 1531, a sub CPU 1532, and a system controller 1533. The main CPU 1531 executes a program for controlling operation of the processing sections in the video processor 1332 and so forth. The main CPU 1531 generates a control signal in accordance with the program and so forth and supplies the control signal to the processing sections (namely, controls operation of the processing sections). The sub CPU 1532 plays an auxiliary role for the main CPU 1531. For example, the sub CPU 1532 executes a child process, a sub routine and so forth of the program and so forth to be executed by the main CPU 1531. The system controller 1533 controls operation of the main CPU 1531 and the sub CPU 1532 such as designation of a program to be executed by the main CPU 1531 and the sub CPU 1532 or the like.

The display interface 1512 outputs image data, for example, to the connectivity 1321 or the like under the control of the control section 1511. For example, the display interface 1512 converts image data of digital data into an analog signal and outputs the analog signal as a reproduced video signal or outputs the image data of digital data as it is to a monitor apparatus or the like of the connectivity 1321.

The display engine 1513 performs various conversion processes such as format conversion, size conversion and color gamut conversion for image data under the control of the control section 1511 so as to match with hardware specifications for a monitor apparatus for displaying an image.

The image processing engine 1514 performs a predetermined image process such as, for example, a filter process for picture quality improvement for the image data under the control of the control section 1511.

The internal memory 1515 is a memory provided in the inside of the video processor 1332 and shared by the display engine 1513, the image processing engine 1514, and the codec engine 1516. The internal memory 1515 is utilized, for example, for sending and reception of data performed between the display engine 1513, the image processing engine 1514, and the codec engine 1516. For example, the internal memory 1515 stores data supplied from the display engine 1513, the image processing engine 1514, or the codec engine 1516 and supplies the data to the display engine 1513, image processing engine 1514 or codec engine 1516 as occasion demands (for example, in response to a request). While the internal memory 1515 may be implemented by any storage device, since generally the internal memory 1515 is frequently utilized for storage of a small amount of data such as image data in a unit of a block or a parameter, it is desirable to implement the internal memory 1515 from a semiconductor memory having a high response speed although it has a comparatively small capacity (for example, in comparison with that of the external memory 1312) such as, for example, an SRAM (Static Random Access Memory).

The codec engine 1516 performs a process relating to encoding and decoding of image data. The method of encoding and decoding with which the codec engine 1516 is compatible is arbitrary, and the number of such methods may be one or a plural number. For example, the codec engine 1516 may include a plurality of codec functions for encoding and decoding methods such that encoding of image data or decoding of encoded data is performed by a selected one of the methods.

In the example depicted in FIG. 60, as functional blocks of a process relating to the codec, the codec engine 1516 includes, for example, an MPEG-2 Video 1541, an AVC/H.264 1542, an HEVC/H.265 1543, an HEVC/H.265 (Scalable) 1544, an HEVC/H.265 (Multi-view) 1545, and an MPEG-DASH 1551.

The MPEG-2 Video 1541 is a functional block that encodes and decodes image data by the MPEG-2 method. The AVC/H.264 1542 is a functional block that encodes and decodes image data by the AVC method. The HEVC/H.265 1543 is a functional block that encodes and decodes image data by the HEVC method. The HEVC/H.265 (Scalable) 1544 is a functional block that performs scalable encoding or scalable decoding for image data by the HEVC method. The HEVC/H.265 (Multi-view) 1545 is a functional block that performs multi-view encoding or multi-view decoding for image data by the HEVC method.

The MPEG-DASH 1551 is a functional block that transmits and receives image data by the MPEG-DASH (MPEG-Dynamic Adaptive Streaming over HTTP) method. The MPEG-DASH is a technology by which streaming of a video is performed using the HTTP (HyperText Transfer Protocol), and it is one of features that suitable encoded data from among a plurality of encoded data prepared in advance and having resolutions or the like different from each other is selected and transmitted in a unit of a segment. The MPEG-DASH 1551 performs generation of a stream in compliance with the standard, transmission control of the stream and so forth, and utilizes the MPEG-2 Video 1541 to HEVC/H.265 (Multi-view) 1545 described above in encoding and decoding of image data.

The memory interface 1517 is an interface for the external memory 1312. Data supplied from the image processing engine 1514 or the codec engine 1516 is supplied to the external memory 1312 through the memory interface 1517. Further, data read out from the external memory 1312 is supplied to the video processor 1332 (image processing engine 1514 or the codec engine 1516) through the memory interface 1517.

The multiplexing and demultiplexing section (MUX DMUX) 1518 performs multiplexing and demultiplexing of various data relating to an image such as a bit stream of encoded data, image data, a video signal and so forth. The method for the multiplexing and demultiplexing is arbitrary. For example, upon multiplexing, the multiplexing and demultiplexing section (MUX DMUX) 1518 not only can unite a plurality of data into one data but also can add predetermined header information or the like to the data. Further, upon demultiplexing, the multiplexing and demultiplexing section (MUX DMUX) 1518 not only can divide one data into a plurality of data but also can add predetermined header information or the like to each of the divisional data. In short, the multiplexing and demultiplexing section (MUX DMUX) 1518 can convert the format of data by multiplexing or demultiplexing. For example, the multiplexing and demultiplexing section (MUX DMUX) 1518 can convert a bit stream into a transport stream that is a bit stream of a format for transfer or data of a file format for recoding (file data) by multiplexing the bit stream. Naturally, inverse conversion to the conversion is possible by demultiplexing.

The network interface 1519 is an interface, for example, for the broadband modem 1333, the connectivity 1321 and so forth. The video interface 1520 is an interface, for example, for the connectivity 1321, the camera 1322 and so forth.

Now, an example of operation of such a video processor 1332 as described above is described. For example, if a transport stream is received from an external network through the connectivity 1321, broadband modem 1333 or the like, then the transport stream is supplied through the network interface 1519 to and demultiplexed by the multiplexing and demultiplexing section (MUX DMUX) 1518 and is decoded by the codec engine 1516. Image data obtained by the decoding of the codec engine 1516 is subjected to a predetermined image process, for example, by the image processing engine 1514, subjected to predetermined conversion by the display engine 1513 and supplied, for example, to the connectivity 1321 or the like through the display interface 1512 such that an image thereof is displayed on a monitor. Further, for example, the image data obtained by the decoding of the codec engine 1516 is re-encoded by the codec engine 1516, multiplexed by the multiplexing and demultiplexing section (MUX DMUX) 1518 so as to be converted into file data, outputted, for example, to the connectivity 1321 or the lie through the video interface 1520 and then recorded on various recording media.

Furthermore, for example, file data of encoded data encoded from image data after read out from a recording medium not depicted by the connectivity 1321 or the like is supplied through the video interface 1520 to and demultiplexed by the multiplexing and demultiplexing section (MUX DMUX) 1518 and decoded by the codec engine 1516. Image data obtained by the decoding of the codec engine 1516 is subjected to a predetermined image process by the image processing engine 1514, subjected to predetermined conversion by the display engine 1513, and supplied, for example, to the connectivity 1321 or the like through the display interface 1512 such that an image is displayed on the monitor. Further, for example, the image data obtained by the decoding of the codec engine 1516 is re-encoded by the codec engine 1516, multiplexed by the multiplexing and demultiplexing section (MUX DMUX) 1518 so as to be converted into a transport stream, supplied, for example, to the connectivity 1321, broadband modem 1333 or the like through the network interface 1519 and then transmitted to a different apparatus not depicted.

It is to be noted that sending and reception of image data or other data between the processing sections in the video processor 1332 are performed, for example, utilizing the internal memory 1515 or the external memory 1312. Further, the power management module 1313 controls power supply, for example, to the control section 1511.

In the case where the present technology is applied to the video processor 1332 configured in such a manner, it is sufficient if the present technology according to the embodiment described hereinabove is applied to the codec engine 1516. In short, it is sufficient, for example, if the codec engine 1516 has the functions of the encoding apparatus 11 or the functions of the decoding apparatus 12 described hereinabove or both of them. This makes it possible for the video processor 1332 to achieve advantageous effects similar to the encoding apparatus 11 or the decoding apparatus 12 described hereinabove.

It is to be noted that, in the codec engine 1516, the present technology (namely, the functions of the encoding apparatus 11 or the decoding apparatus 12) may be implemented by hardware such as logic circuits or may be implemented by software such as an embedded program or else may be implemented by both of them.

While two examples of the configuration of the video processor 1332 are exemplified above, the configuration of the video processor 1332 is arbitrary and may be any other than the two examples described above. Further, although the video processor 1332 may be configured as one semiconductor chip, it may otherwise be configured as a plurality of semiconductor chips. For example, the video processor 1332 may be formed as a three-dimensional stacked LSI in which a plurality of semiconductors are stacked. Alternatively, the video processor 1332 may be implemented by a plurality of LSIs.

<Example of Application to Apparatus>

The video set 1300 can be incorporated into various apparatus by which image data is processed. For example, the video set 1300 can be incorporated into the television apparatus 1200 (FIG. 54), the portable telephone set 1220 (FIG. 55), the recording and reproduction apparatus 1240 (FIG. 56), the imaging apparatus 1260 (FIG. 57) and so forth. By incorporating the video set 1300, the apparatus can achieve advantageous effects similar to those of the encoding apparatus 11 or the decoding apparatus 12 described hereinabove.

It is to be noted that, if even part of the components of the video set 1300 described above includes the video processor 1332, it can be carried out as a configuration to which the present technology is applied. For example, it is possible to carry out only the video processor 1332 as a video processor to which the present technology is applied. Further, it is possible to carry out the processor, video module 1311 and so forth indicated by a broken line 1341 as a processor, a module or the like to which the present technology is applied as described hereinabove. Furthermore, for example, the video module 1311, the external memory 1312, the power management module 1313, and the frontend module 1314 can be combined so as to be carried out as the video unit 1361 to which the present technology is applied. With any of the configurations, advantageous effects similar to those of the encoding apparatus 11 or the decoding apparatus 12 can be achieved.

In short, if the video processor 1332 is included, then any configuration can be incorporated into various apparatus that process image data similarly as in the case of the video set 1300. For example, the video processor 1332, processor indicated by the broken line 1341, video module 1311 or video unit 1361 can be incorporated into the television apparatus 1200 (FIG. 54), the portable telephone set 1220 (FIG. 55), the recording and reproduction apparatus 1240 (FIG. 56), the imaging apparatus 1260 (FIG. 57) and so forth. Then, by incorporating some of the components to which the present technology is applied into an apparatus, the apparatus can achieve advantageous effects similar to those by the encoding apparatus 11 or the decoding apparatus 12 similarly as in the case of video set 1300.

<Others>

It is to be noted that, although an example in which various kinds of information are multiplexed into encoded data (bit stream) and transmitted from the encoding side to the decoding side is described in the present specification, the technique for transmission such information is not limited to this example. For example, such information may be transmitted or recorded as separate data associated with encoded data without being multiplexed with the encoded data. Here, the term "associate" signifies to make it possible to link, for example, an image included in encoded data (or part of an image such as a slice or a block may be applicable) and information corresponding to the image to each other upon decoding. In particular, the information associated with the encoded data (image) may be transmitted on a transmission line separate from that for the encoded data (image). Further, the information associated with the encoded data may be recorded on a recording medium different from that for the encoded data (image) (or into a different recording area of the same recording medium). Further, the image and the information corresponding to the image may be associated with each other in an arbitrary unit such as a plurality of frames, one frame or part in a frame.

Further, the embodiment of the present technology is not limited to the embodiment described hereinabove, and various alterations are possible without departing from the subject matter of the present disclosure.

For example, in the present specification, the term system signifies a set of plural components (apparatus, modules (parts) and so forth) and does not matter whether or not all components are placed in the same housing. Accordingly, both a plurality of apparatus that are accommodated in separate housings and are connected to each other by a network and one apparatus in which a plurality of modules are accommodated in one housing are systems.

Further, for example, a constitution described as one apparatus (or one processing section) may be divided into and configured as a plurality of apparatus (or processing sections). Conversely, constitutions described as a plurality of apparatus (or processing sections) in the foregoing description may be collected such that they are configured as one apparatus (or one processing section). Further, a constitution other than those may naturally be added to the configuration of each apparatus (or each processing section). Furthermore, if a constitution or operation as an entire system is substantially same, then part of constitutions of a certain apparatus (or a certain processing section) may be included in constitutions of a different apparatus (or a difference processing section).

Further, for example, the present technology can assume a configuration for cloud computing in which one function is shared and processed in cooperation by a plurality of apparatus through a network.

Further, for example, the program described hereinabove can be executed by an arbitrary apparatus. In this case, it is sufficient if the apparatus is configured such that it has necessary functions (functional blocks and so forth) and can acquire necessary information.

Further, for example, the steps described in connection with the flow charts described hereinabove can be executed by one apparatus and further can be shared and executed by a plurality of apparatus. Furthermore, in the case where a plurality of processes are included in one step, the plurality of processes included in the one step can be executed by one apparatus and also can be shared and executed by a plurality of apparatus.

It is to be noted that the program to be executed by the computer may be of the type by which the processes at steps by which the program is described are executed in a time series in the order as described in the present specification or of the type by which the processes are executed in parallel or executed individually at necessary timings such as when the process is called. In other words, unless inconsistency occurs, the processes at the steps may be executed in an order different from the order described hereinabove. Furthermore, the processes at the steps by which the program is executed may be executed in parallel to processes of a different program or may be executed in combination with processes of a different apparatus.

It is to be noted that the plurality of present technologies described in the present specification can individually be carried out solely and independently of each other unless inconsistency occurs. Naturally, also it is possible to carry out an arbitrary plurality of present technologies in combination. For example, also it is possible to carry out the present technology described in the description of any embodiment in combination with the present technology described in the description of a different embodiment. Also it is possible to carry out an arbitrary one of the present technologies described hereinabove in combination with a different technology that is not described hereinabove.

Further, the advantageous effects described in the present specification are exemplary to the last and are not restrictive, and other advantageous effects may be applicable.

It is to be noted that the present disclosure can assume such a configuration as described below.

<1> An encoding apparatus, including:

a filter section including
a prediction tap selection section configured to select, from a first image obtained by adding a residual of prediction encoding and a predicted image, a pixel that becomes a prediction tap to be used for prediction operation for determining a pixel value of a corresponding pixel, which corresponds to a noticed pixel noticed in the first image, of a second image that is used for prediction of the predicted image,
a classification section configured to classify the noticed pixel into one of a plurality of classes,
a coefficient acquisition section configured to acquire, from tap coefficients reconstructed from reduction coefficients obtained by projecting tap coefficients for the individual classes, which are determined by learning using a student image corresponding to the first image and an a teacher image equivalent to an original image corresponding to the first image, to a space of a dimension lower than that of a tap coefficient space that is a space of the tap coefficients for the individual classes, a tap coefficient of the class of the noticed pixel, and
an arithmetic operation section configured to determine a pixel value of the corresponding pixel by performing the prediction operation using the tap coefficient of the class of the noticed pixel and the prediction tap of the noticed pixel,
the filter section performing a filter process for the first image to generate the second image; and
a transmission section configured to transmit the reduction coefficients and a transform coefficient for projecting the reduction coefficients to the tap coefficient space.

<2> The encoding apparatus according to <1>, further including:
a reduction section configured to determine the reduction coefficients and the transform coefficient from the tap coefficients of the individual classes using main component analysis.

<3> The encoding apparatus according to <2>, in which
the reduction section

determines a reduction number that is a number, from among main component scores obtained by converting the tap coefficients of the individual classes with main components obtained by the main component analysis of the tap coefficients of the individual classes, the main component scores that are 0, and
determines, for each of the classes, a main component score where the number of higher order main component scores equal to the reduction number are set to 0 among the main component scores as the reduction coefficient and determines, for all of the classes, a matrix in which, from among components of an inverse matrix to a main component matrix for converting the tap components into the main component scores, components to the higher order main component scores as the transform coefficient.

<4> The encoding apparatus according to <3>, in which
the reduction section determines a plurality of candidates for the reduction number and selects the reduction number from among the plurality of candidates; and
the transmission section further transmits the reduction number.
<5> The encoding apparatus according to <3>, in which
the reduction section determines the reduction number in response to available information that may be acquired from encoded data obtained by the prediction encoding.
<6> The encoding apparatus according to any one of <3> to <5>, in which
the reduction section

detects a nonconforming class with regard to which it is not suitable to set the tap coefficient as the reduction coefficient, and
outputs, for the nonconforming class, the tap coefficient of the nonconforming class in place of the reduction coefficient;

the transmission section further transmits the tap coefficient of the nonconforming class and a class flag representative of whether the class is the nonconforming class; and
the nonconforming class includes one of or both a class whose tap coefficient is spaced by a distance equal to or greater than a threshold value from the tap coefficient of a different class in the tap coefficient space and a class in which an S/N ratio of the second image that is generated by the filter process using the tap coefficients reconstructed by converting the reduction coefficients with the transform coefficient is equal to or lower than a threshold value.
<7> An encoding method, including:

performing a filter process including

selecting, from a first image obtained by adding a residual of prediction encoding and a predicted image, a pixel that becomes a prediction tap to be used for prediction operation for determining a pixel value of a corresponding pixel, which corresponds to a noticed pixel noticed in the first image, of a second image that is used for prediction of the predicted image,
classifying the noticed pixel into one of a plurality of classes,
acquiring, from tap coefficients reconstructed from reduction coefficients obtained by projecting tap coefficients for the individual classes, which are determined by learning using a student image corresponding to the first image and an a teacher image equivalent to an original image corresponding to the first image, to a space of a dimension lower than that of a tap coefficient space that is a space of the tap coefficients for the individual classes, a tap coefficient of the class of the noticed pixel, and
determining a pixel value of the corresponding pixel by performing the prediction operation using the tap coefficient of the class of the noticed pixel and the prediction tap of the noticed pixel,

the filter process being performed for the first image to generate the second image; and
transmitting the reduction coefficients and a transform coefficient for projecting the reduction coefficients to the tap coefficient space.

<8> A decoding apparatus, including:

a filter section including

a reception section configured to receive reduction coefficients obtained by projecting tap coefficients for individual classes, which are determined by learning using a student image equivalent to a first image obtained by adding a residual of prediction encoding and a predicted image and a teacher image equivalent to an original image corresponding to the first image, to a space of a dimension lower than that of a tap coefficient space that is a space of the tap coefficients for the individual classes, and a transform coefficient for projecting the reduction coefficients to the tap coefficient space,
a prediction tap selection section configured to select, from within the first image, a pixel that becomes a prediction tap to be used for prediction operation for determining a pixel value of a corresponding pixel, which corresponds to a noticed pixel noticed in the first image, of a second image that is used for prediction of the predicted image,

a classification section configured to classify the noticed pixel into one of a plurality of classes,

a coefficient acquisition section configured to acquire, from the tap coefficients reconstructed by conversion of the reduction coefficients with the transform coefficient, a tap coefficient of the class of the noticed pixel, and

an arithmetic operation section configured to determine a pixel value of the corresponding pixel by performing the prediction operation using the tap coefficient of the class of the noticed class and the prediction tap of the noticed pixel, in which

the filter section performs a filter process for the first image to generate the second image.

<9> The decoding apparatus according to <8>, further including:
a reconstruction section configured to reconstruct the tap coefficients by converting the reduction coefficients with the transform coefficient.

<10> The decoding apparatus according to <9>, in which
from among main component scores obtained by converting the tap coefficients for the individual classes with main components obtained by main component analysis of the tap coefficients for the individual classes, the number of the main component scores that are 0 is determined as a reduction number;
the reduction coefficients include main component scores where the number of higher order main component scores equal to the reduction number are set to 0 among the main component scores; and
the transform coefficient includes a matrix in which, from among components of an inverse matrix to a main component matrix for converting the tap components into the main component scores, components corresponding to the higher order main component scores are set to 0.

<11> The decoding apparatus according to <10>, in which
the reception section further receives the reduction number; and
the reconstruction section reconstructs the tap coefficients using the reduction number, transform coefficient and reduction coefficients.

<12> The decoding apparatus according to <10>, further including:

a determination section configured to determine the reduction number in response to an available information that may be acquired from encoded data obtained by the prediction encoding, in which
the reconstruction section reconstructs the tap coefficients using the reduction number, transform coefficient and reduction coefficients.

<13> The decoding apparatus according to any one of <10> to <12>, in which
the reception section further receives the tap coefficient of a nonconforming class with regard to which it is not suitable to set the tap coefficient as the reduction coefficient and a class flag representative of whether the class is the nonconforming class;
the reconstruction section reconstructs the tap class for classes where the nonconforming class is excluded from all of the classes; and
the nonconforming class includes one of or both a class whose tap coefficient is spaced by a distance equal to or greater than a threshold value from the tap coefficient of a different class in the tap coefficient space and a class in which an S/N ratio of the second image that is generated by the filter process using the tap coefficients reconstructed by converting the reduction coefficients with the transform coefficient is equal to or lower than a threshold value.

<14> A decoding method, including:

performing a filter process including

receiving reduction coefficients obtained by projecting tap coefficients for individual classes, which are determined by learning using a student image equivalent to a first image obtained by adding a residual of prediction encoding and a predicted image and a teacher image equivalent to an original image corresponding to the first image, to a space of a dimension lower than that of a tap coefficient space that is a space of the tap coefficients for the individual classes, and a transform coefficient for projecting the reduction coefficients to the tap coefficient space,
selecting, from within the first image, a pixel that becomes a prediction tap to be used for prediction operation for determining a pixel value of a corresponding pixel, which corresponds to a noticed pixel noticed in the first image, of a second image that is used for prediction of the predicted image,
classifying the noticed pixel into one of a plurality of classes,

acquiring, from the tap coefficients reconstructed by conversion of the reduction coefficients with the transform coefficient, a tap coefficient of the class of the noticed pixel, and
determining a pixel value of the corresponding pixel by performing the prediction operation using the tap coefficient of the class of the noticed class and the prediction tap of the noticed pixel;

the filter process being performed for the first image to generate the second image.

<15> An encoding apparatus, including:

a filter section including

a prediction tap selection section configured to select, from a first image obtained by adding a residual of prediction encoding and a predicted image, a pixel that becomes a prediction tap to be used for prediction operation for determining a pixel value of a corresponding pixel, which corresponds to a noticed pixel noticed in the first image, of a second image that is used for prediction of the predicted image,
a classification section configured to classify the noticed pixel into one of a plurality of classes,
a coefficient acquisition section configured to acquire, from tap coefficients reconstructed from seed coefficients used to determine tap coefficients for the individual classes, which are determined by learning using a student image corresponding to the first image and an a teacher image equivalent to an original image corresponding to the first image, by given arithmetic operation with a parameter representative of each class, a tap coefficient of the class of the noticed pixel, and
an arithmetic operation section configured to determine a pixel value of the corresponding pixel by performing the prediction operation using the tap coefficient of the class of the noticed pixel and the prediction tap of the noticed pixel,

the filter section performing a filter process for the first image to generate the second image; and
a transmission section configured to transmit the seed coefficients.

<16> An encoding method, including:

performing a filter process including

selecting, from a first image obtained by adding a residual of prediction encoding and a predicted image, a pixel that becomes a prediction tap to be used for prediction operation for determining a pixel value of a corresponding pixel, which corresponds to a noticed pixel noticed in the first image, of a second image that is used for prediction of the predicted image,
classifying the noticed pixel into one of a plurality of classes,
acquiring, from tap coefficients reconstructed from seed coefficients used to determine tap coefficients for the individual classes, which are determined by learning using a student image corresponding to the first image and an a teacher image equivalent to an original image corresponding to the first image, by given arithmetic operation with a parameter representative of each class, a tap coefficient of the class of the noticed pixel, and
determining a pixel value of the corresponding pixel by performing the prediction operation using the tap coefficient of the class of the noticed pixel and the prediction tap of the noticed pixel,

the filter process being performed for the first image to generate the second image; and
transmitting the seed coefficients.

<17> A decoding apparatus, including:

a filter section including

a reception section configured to receive seed coefficients used to determine tap coefficients for individual classes, which are determined by learning using a student image corresponding to a first image obtained by adding a residual of prediction encoding and a predicted image and an a teacher image equivalent to an original image corresponding to the first image, by given arithmetic operation with a parameter representative of each class,
a prediction tap selection section configured to select, from within the first image, a pixel that becomes a prediction tap to be used for prediction operation for determining a pixel value of a corresponding pixel, which corresponds to a noticed pixel noticed in the first image, of a second image that is used for prediction of the predicted image,

a classification section configured to classify the noticed pixel into one of a plurality of classes,

a coefficient acquisition section configured to acquire, from the tap coefficients reconstructed by the given arithmetic operation using the parameter and the seed coefficients, a tap coefficient of the class of the noticed pixel, and

an arithmetic operation section configured to determine a pixel value of the corresponding pixel by performing the prediction operation using the tap coefficient of the class of the noticed class and the prediction tap of the noticed pixel, in which

the filter section performs a filter process for the first image to generate the second image.

<18> A decoding method, including:

performing a filter process including

receiving seed coefficients used to determine tap coefficients for individual classes, which are determined by learning using a student image corresponding to a first image obtained by adding a residual of prediction encoding and a predicted image and an a teacher image equivalent to an original image corresponding to the first image, by given arithmetic operation with a parameter representative of each class,

selecting, from within the first image, a pixel that becomes a prediction tap to be used for prediction operation for determining a pixel value of a corresponding pixel, which corresponds to a noticed pixel noticed in the first image, of a second image that is used for prediction of the predicted image,

classifying the noticed pixel into one of a plurality of classes,

acquiring, from the tap coefficients reconstructed by the given arithmetic operation using the parameter and the seed coefficients, a tap coefficient of the class of the noticed pixel, and

determining a pixel value of the corresponding pixel by performing the prediction operation using the tap coefficient of the class of the noticed class and the prediction tap of the noticed pixel;

the filter process being performed for the first image to generate the second image.

[Reference Signs List]

11 Encoding apparatus, 12 Decoding apparatus, 20 Image conversion apparatus, 21 Tap selection section, 22 Classification section, 23 Coefficient acquisition section, 24 Prediction operation section, 40 Learning apparatus, 41 Teacher data generation section, 42 Student data generation section, 43 Learning section, 51 Tap selection section, 52 Classification section, 53 Addition section, 54 Coefficient calculation section, 61 Coefficient acquisition section, 71 Parameter generation section, 72 Student data generation section, 73 Learning section, 81 Addition section, 82 Coefficient calculation section, 91, 92 Addition section, 93 Coefficient calculation section, 101 A/D conversion section, 102 Sorting buffer, 103 Arithmetic operation section, 104 Orthogonal transform section, 105 Quantization section, 106 Reversible encoding section, 107 Accumulation buffer, 108 Dequantization section, 109 Inverse orthogonal transform section, 110 Arithmetic operation section, 111 Classification adaptive filter, 112 Frame memory, 113 Selection section, 114 Intra-prediction section, 115 Motion prediction compensation section, 116 Predicted image selection section, 117 Rate controlling section, 131 Learning apparatus, 132 Reduction apparatus, 133 Image conversion apparatus, 141 Selection section, 151 Tap selection section, 152 Classification section, 153 addition section, 154 Coefficient calculation section, 161 Reduction number determination section, 162 Coefficient reduction section, 163 Selection section, 164 Nonconforming class detection section, 171 Tap selection section, 172 Classification section, 173 Coefficient acquisition section, 174 Prediction operation section, 175 Coefficient reconstruction section, 181 Coefficient reduction section, 191 Coefficient reconstruction section, 211, 221 Reduction number determination section, 222, 231 Coefficient reconstruction section, 301 Accumulation buffer, 302 Reversible decoding section, 303 Dequantization section, 304 Inverse orthogonal transform section, 305 Arithmetic operation section, 306 Classification adaptive filter, 307 Sorting buffer, 308 D/A Conversion section, 310 Frame memory, 311 Selection section, 312 Intra-prediction section, 313 Motion prediction compensation section, 314 Selection section, 331 Image conversion apparatus, 341 Tap selection section, 342 Classification section, 343 Coefficient acquisition section, 344 Prediction operation section, 345, 351 Coefficient reconstruction section, 361 Reduction number determination section, 362, 371 Coefficient reconstruction section, 511 Classification adaptive filter, 531 Reduction apparatus, 532 Image conversion apparatus, 541 Addition section, 542 Coefficient calculation section, 561 Coefficient reconstruction section, 611 Classification adaptive filter, 631 Image conversion apparatus, 641 Coefficient reconstruction section

**Claims**

1. An encoding apparatus, comprising:

   a filter section including

   a prediction tap selection section configured to select, from a first image obtained by adding a residual of prediction encoding and a predicted image, a pixel that becomes a prediction tap to be used for prediction operation for determining a pixel value of a corresponding pixel, which corresponds to a noticed pixel noticed in the first image, of a second image that is used for prediction of the predicted image,
   a classification section configured to classify the noticed pixel into one of a plurality of classes,
   a coefficient acquisition section configured to acquire, from tap coefficients reconstructed from reduction coefficients obtained by projecting tap coefficients for the individual classes, which are determined by learning using a student image corresponding to the first image and an a teacher image equivalent to an original image corresponding to the first image, to a space of a dimension lower than that of a tap coefficient space that is a space of the tap coefficients for the individual classes, a tap coefficient of the class of the noticed pixel, and
   an arithmetic operation section configured to determine a pixel value of the corresponding pixel by performing the prediction operation using the tap coefficient of the class of the noticed pixel and the prediction tap of the noticed pixel,

   the filter section performing a filter process for the first image to generate the second image; and
   a transmission section configured to transmit the reduction coefficients and a transform coefficient for projecting the reduction coefficients to the tap coefficient space.

2. The encoding apparatus according to claim 1, further comprising:
   a reduction section configured to determine the reduction coefficients and the transform coefficient from the tap coefficients of the individual classes using main component analysis.

3. The encoding apparatus according to claim 2, wherein
   the reduction section

   determines a reduction number that is a number, from among main component scores obtained by converting the tap coefficients of the individual classes with main components obtained by the main component analysis of the tap coefficients of the individual classes, the main component scores that are 0, and
   determines, for each of the classes, a main component score where the number of higher order main component scores equal to the reduction number are set to 0 among the main component scores as the reduction coefficient and determines, for all of the classes, a matrix in which, from among components of an inverse matrix to a main component matrix for converting the tap components into the main component scores, components to the higher order main component scores as the transform coefficient.

4. The encoding apparatus according to claim 3, wherein
   the reduction section determines a plurality of candidates for the reduction number and selects the reduction number from among the plurality of candidates; and
   the transmission section further transmits the reduction number.

5. The encoding apparatus according to claim 3, wherein
   the reduction section determines the reduction number in response to available information that may be acquired from encoded data obtained by the prediction encoding.

6. The encoding apparatus according to claim 3, wherein
   the reduction section

   detects a nonconforming class with regard to which it is not suitable to set the tap coefficient as the reduction coefficient, and

outputs, for the nonconforming class, the tap coefficient of the nonconforming class in place of the reduction coefficient;

the transmission section further transmits the tap coefficient of the nonconforming class and a class flag representative of whether the class is the nonconforming class; and

the nonconforming class includes one of or both a class whose tap coefficient is spaced by a distance equal to or greater than a threshold value from the tap coefficient of a different class in the tap coefficient space and a class in which an S/N ratio of the second image that is generated by the filter process using the tap coefficients reconstructed by converting the reduction coefficients with the transform coefficient is equal to or lower than a threshold value.

7. An encoding method, comprising:

performing a filter process including

selecting, from a first image obtained by adding a residual of prediction encoding and a predicted image, a pixel that becomes a prediction tap to be used for prediction operation for determining a pixel value of a corresponding pixel, which corresponds to a noticed pixel noticed in the first image, of a second image that is used for prediction of the predicted image,

classifying the noticed pixel into one of a plurality of classes,

acquiring, from tap coefficients reconstructed from reduction coefficients obtained by projecting tap coefficients for the individual classes, which are determined by learning using a student image corresponding to the first image and an a teacher image equivalent to an original image corresponding to the first image, to a space of a dimension lower than that of a tap coefficient space that is a space of the tap coefficients for the individual classes, a tap coefficient of the class of the noticed pixel, and

determining a pixel value of the corresponding pixel by performing the prediction operation using the tap coefficient of the class of the noticed pixel and the prediction tap of the noticed pixel,

the filter process being performed for the first image to generate the second image; and

transmitting the reduction coefficients and a transform coefficient for projecting the reduction coefficients to the tap coefficient space.

8. A decoding apparatus, comprising:

a filter section including

a reception section configured to receive reduction coefficients obtained by projecting tap coefficients for individual classes, which are determined by learning using a student image equivalent to a first image obtained by adding a residual of prediction encoding and a predicted image and a teacher image equivalent to an original image corresponding to the first image, to a space of a dimension lower than that of a tap coefficient space that is a space of the tap coefficients for the individual classes, and a transform coefficient for projecting the reduction coefficients to the tap coefficient space,

a prediction tap selection section configured to select, from within the first image, a pixel that becomes a prediction tap to be used for prediction operation for determining a pixel value of a corresponding pixel, which corresponds to a noticed pixel noticed in the first image, of a second image that is used for prediction of the predicted image,

a classification section configured to classify the noticed pixel into one of a plurality of classes,

a coefficient acquisition section configured to acquire, from the tap coefficients reconstructed by conversion of the reduction coefficients with the transform coefficient, a tap coefficient of the class of the noticed pixel, and

an arithmetic operation section configured to determine a pixel value of the corresponding pixel by performing the prediction operation using the tap coefficient of the class of the noticed class and the prediction tap of the noticed pixel, wherein

the filter section performs a filter process for the first image to generate the second image.

9. The decoding apparatus according to claim 8, further comprising:
a reconstruction section configured to reconstruct the tap coefficients by converting the reduction coefficients with the transform coefficient.

**10.** The decoding apparatus according to claim 9, wherein
from among main component scores obtained by converting the tap coefficients for the individual classes with main components obtained by main component analysis of the tap coefficients for the individual classes, the number of the main component scores that are 0 is determined as a reduction number;
the reduction coefficients include main component scores where the number of higher order main component scores equal to the reduction number are set to 0 among the main component scores; and
the transform coefficient includes a matrix in which, from among components of an inverse matrix to a main component matrix for converting the tap components into the main component scores, components corresponding to the higher order main component scores are set to 0.

**11.** The decoding apparatus according to claim 10, wherein
the reception section further receives the reduction number; and
the reconstruction section reconstructs the tap coefficients using the reduction number, transform coefficient and reduction coefficients.

**12.** The decoding apparatus according to claim 10, further comprising:

a determination section configured to determine the reduction number in response to an available information that may be acquired from encoded data obtained by the prediction encoding, wherein
the reconstruction section reconstructs the tap coefficients using the reduction number, transform coefficient and reduction coefficients.

**13.** The decoding apparatus according to claim 10, wherein
the reception section further receives the tap coefficient of a nonconforming class with regard to which it is not suitable to set the tap coefficient as the reduction coefficient and a class flag representative of whether the class is the nonconforming class;
the reconstruction section reconstructs the tap class for classes where the nonconforming class is excluded from all of the classes; and
the nonconforming class includes one of or both a class whose tap coefficient is spaced by a distance equal to or greater than a threshold value from the tap coefficient of a different class in the tap coefficient space and a class in which an S/N ratio of the second image that is generated by the filter process using the tap coefficients reconstructed by converting the reduction coefficients with the transform coefficient is equal to or lower than a threshold value.

**14.** A decoding method, comprising:

performing a filter process including

receiving reduction coefficients obtained by projecting tap coefficients for individual classes, which are determined by learning using a student image equivalent to a first image obtained by adding a residual of prediction encoding and a predicted image and a teacher image equivalent to an original image corresponding to the first image, to a space of a dimension lower than that of a tap coefficient space that is a space of the tap coefficients for the individual classes, and a transform coefficient for projecting the reduction coefficients to the tap coefficient space,
selecting, from within the first image, a pixel that becomes a prediction tap to be used for prediction operation for determining a pixel value of a corresponding pixel, which corresponds to a noticed pixel noticed in the first image, of a second image that is used for prediction of the predicted image,
classifying the noticed pixel into one of a plurality of classes,
acquiring, from the tap coefficients reconstructed by conversion of the reduction coefficients with the transform coefficient, a tap coefficient of the class of the noticed pixel, and
determining a pixel value of the corresponding pixel by performing the prediction operation using the tap coefficient of the class of the noticed class and the prediction tap of the noticed pixel;

the filter process being performed for the first image to generate the second image.

**15.** An encoding apparatus, comprising:

a filter section including

a prediction tap selection section configured to select, from a first image obtained by adding a residual of prediction encoding and a predicted image, a pixel that becomes a prediction tap to be used for prediction operation for determining a pixel value of a corresponding pixel, which corresponds to a noticed pixel noticed in the first image, of a second image that is used for prediction of the predicted image,

a classification section configured to classify the noticed pixel into one of a plurality of classes,

a coefficient acquisition section configured to acquire, from tap coefficients reconstructed from seed coefficients used to determine tap coefficients for the individual classes, which are determined by learning using a student image corresponding to the first image and an a teacher image equivalent to an original image corresponding to the first image, by given arithmetic operation with a parameter representative of each class, a tap coefficient of the class of the noticed pixel, and

an arithmetic operation section configured to determine a pixel value of the corresponding pixel by performing the prediction operation using the tap coefficient of the class of the noticed pixel and the prediction tap of the noticed pixel,

the filter section performing a filter process for the first image to generate the second image; and

a transmission section configured to transmit the seed coefficients.

**16.** An encoding method, comprising:

performing a filter process including

selecting, from a first image obtained by adding a residual of prediction encoding and a predicted image, a pixel that becomes a prediction tap to be used for prediction operation for determining a pixel value of a corresponding pixel, which corresponds to a noticed pixel noticed in the first image, of a second image that is used for prediction of the predicted image,

classifying the noticed pixel into one of a plurality of classes,

acquiring, from tap coefficients reconstructed from seed coefficients used to determine tap coefficients for the individual classes, which are determined by learning using a student image corresponding to the first image and an a teacher image equivalent to an original image corresponding to the first image, by given arithmetic operation with a parameter representative of each class, a tap coefficient of the class of the noticed pixel, and

determining a pixel value of the corresponding pixel by performing the prediction operation using the tap coefficient of the class of the noticed pixel and the prediction tap of the noticed pixel,

the filter process being performed for the first image to generate the second image; and

transmitting the seed coefficients.

**17.** A decoding apparatus, comprising:

a filter section including

a reception section configured to receive seed coefficients used to determine tap coefficients for individual classes, which are determined by learning using a student image corresponding to a first image obtained by adding a residual of prediction encoding and a predicted image and an a teacher image equivalent to an original image corresponding to the first image, by given arithmetic operation with a parameter representative of each class,

a prediction tap selection section configured to select, from within the first image, a pixel that becomes a prediction tap to be used for prediction operation for determining a pixel value of a corresponding pixel, which corresponds to a noticed pixel noticed in the first image, of a second image that is used for prediction of the predicted image,

a classification section configured to classify the noticed pixel into one of a plurality of classes,

a coefficient acquisition section configured to acquire, from the tap coefficients reconstructed by the given arithmetic operation using the parameter and the seed coefficients, a tap coefficient of the class of the noticed pixel, and

an arithmetic operation section configured to determine a pixel value of the corresponding pixel by performing the prediction operation using the tap coefficient of the class of the noticed class and the prediction tap of the noticed pixel, wherein

the filter section performs a filter process for the first image to generate the second image.

18. A decoding method, comprising:

performing a filter process including

receiving seed coefficients used to determine tap coefficients for individual classes, which are determined by learning using a student image corresponding to a first image obtained by adding a residual of prediction encoding and a predicted image and an a teacher image equivalent to an original image corresponding to the first image, by given arithmetic operation with a parameter representative of each class,
selecting, from within the first image, a pixel that becomes a prediction tap to be used for prediction operation for determining a pixel value of a corresponding pixel, which corresponds to a noticed pixel noticed in the first image, of a second image that is used for prediction of the predicted image,
classifying the noticed pixel into one of a plurality of classes,
acquiring, from the tap coefficients reconstructed by the given arithmetic operation using the parameter and the seed coefficients, a tap coefficient of the class of the noticed pixel, and
determining a pixel value of the corresponding pixel by performing the prediction operation using the tap coefficient of the class of the noticed class and the prediction tap of the noticed pixel;

the filter process being performed for the first image to generate the second image.

# FIG.1

EP 3 606 079 A1

FIG.3

EP 3 606 079 A1

# FIG.4

EP 3 606 079 A1

EP 3 606 079 A1

# FIG.6

EP 3 606 079 A1

F I G . 7

EP 3 606 079 A1

# FIG.8

EP 3 606 079 A1

# FIG.9

EP 3 606 079 A1

# FIG.10

IMAGE DURING
DECODING

STUDENT DATA
(IMAGE DURING DECODING)

133

IMAGE CONVERSION
APPARATUS

REDUCTION FILTER
INFORMATION

132

REDUCTION
APPARATUS

TAP COEFFICIENT

131

LEARNING
APPARATUS

TEACHER DATA
(ORIGINAL IMAGE)

CLASSIFICATION ADAPTIVE FILTER

111

POST-FILTER IMAGE

TO VARIABLE LENGTH
ENCODING SECTION

FIG.11

FOR C CLASSES

w(1, 1)

w(1, N)

TAP
COEFFICIENT

w(c, 3)

CLASS COEFFICIENT POINT

w(c, 2)

w(c, 1)

TAP COEFFICIENT SPACE
(N-DIMENSIONAL SPACE)

FIRST MAIN COMPONENT

CLASS COEFFICIENT POINT

SECOND MAIN
COMPONENT

TAP COEFFICIENT SPACE

MAIN COMPONENT SPACE
(Q (< N)-DIMENSIONAL SPACE)

A                                    B                                    C

EP 3 606 079 A1

# FIG.12

| DETERMINATION METHOD OF REDUCTION NUMBER P | DETAILS | TRANSMISSION OF REDUCTION NUMBER P |
|---|---|---|
| OPTIMIZATION METHOD | REDUCTION NUMBER P IS DETERMINED SUCH THAT COMPRESSION EFFICIENCY AND PICTURE QUALITY MAY BECOME BEST FOR EACH PICTURE OR SEQUENCE | NECESSARY TO TRANSMIT REDUCTION NUMBER P |
| AVAILABLE INFORMATION UTILIZATION METHOD | DETERMINE REDUCTION NUMBER P IN RESPONSE TO AVAILABLE INFORMATION (ENCODING INFORMATION (QP (AVERAGE OVER OVERALL SCREEN)), BIT RATE OF ENCODED DATA, IMAGE FEATURE AMOUNT (FREQUENCY BAND IN OVERALL SCREEN) AND SO FORTH) | NO NECESSITY TO TRANSMIT REDUCTION NUMBER P (MAY TRANSMIT) |

# FIG.13

| RANGE OF CLASS TO WHICH MAIN COMPONENT UTILIZATION TYPE REDUCTION METHOD (REDUCTION APPLICATION RANGE) | REDUCTION FILTER INFORMATION |
|---|---|
| ALL CLASSES | REDUCTION COEFFICIENT W, TRANSFORM COEFFICIENT $A'^{-1}$ (, REDUCTION NUMBER P) OF ALL CLASSES |
| CLASSES OTHER THAN NONCONFORMING CLASSES | REDUCTION COEFFICIENT W, TRANSFORM COEFFICIENT $A'^{-1}$ (, REDUCTION NUMBER P) OF CLASSES OTHER THAN NONCONFORMING CLASSES, REDUCTION COEFFICIENT W, CLASS FLAG (C BITS) OF NONCONFORMING CLASSES |

F I G . 1 4

131 LEARNING APPARATUS

STUDENT DATA
(IMAGE DURING DECODING)

152 CLASSIFICATION SECTION

151 TAP SELECTION SECTION

153 ADDITION SECTION

154 COEFFICIENT CALCULATION SECTION

TAP COEFFICIENT

TEACHER DATA
(ORIGINAL IMAGE)

# FIG.15

REDUCTION APPARATUS — 132

161
QP, BIT RATE, IMAGE DURING DECODING AND SO FORTH → REDUCTION NUMBER DETERMINATION SECTION

CANDIDATES FOR REDUCTION NUMBER

131
LEARNING APPARATUS → INITIAL COEFFICIENT →

162
COEFFICIENT REDUCTION SECTION →

163
SELECTION SECTION →

164
NONCONFORMING CLASS DETECTION SECTION →

REDUCTION FILTER INFORMATION

REDUCTION NUMBER P
REDUCTION COEFFICIENT W'(c) OF TARGET CLASS,
TRANSFORM COEFFICIENT $A'^{-1}$,
TAP COEFFICIENT OF NONCONFORMING CLASS,
CLASS FLAG

# FIG.16

FIG.16 Block diagram of Image Conversion Apparatus (133).

- **IMAGE CONVERSION APPARATUS** (133)
- **175** COEFFICIENT RECONSTRUCTION SECTION
- **REDUCTION FILTER INFORMATION**
  - REDUCTION NUMBER P
  - REDUCTION COEFFICIENT W'(c) OF TARGET CLASS,
  - TRANSFORM COEFFICIENT A'-1,
  - TAP COEFFICIENT OF NONCONFORMING CLASS,
  - CLASS FLAG
- TAP COEFFICIENT w'(c, n)
- **172** CLASSIFICATION SECTION
- **173** COEFFICIENT ACQUISITION SECTION
- FIRST IMAGE (IMAGE DURING DECODING)
- **171** TAP SELECTION SECTION
- **174** PREDICTION OPERATION SECTION
- SECOND IMAGE (POST-FILTER IMAGE)

# FIG.17

EP 3 606 079 A1

# FIG.18

IMAGE CONVERSION APPARATUS (133)

191 COEFFICIENT RECONSTRUCTION SECTION

REDUCTION FILTER INFORMATION
{ REDUCTION NUMBER P,
REDUCTION COEFFICIENT W'(c) OF TARGET CLASS,
TRANSFORM COEFFICIENT $A'^{-1}$ }

TAP COEFFICIENT w'(c, n)

FIRST IMAGE (IMAGE DURING DECODING)

172 CLASSIFICATION SECTION

173 COEFFICIENT ACQUISITION SECTION

171 TAP SELECTION SECTION

174 PREDICTION OPERATION SECTION

SECOND IMAGE (POST-FILTER IMAGE)

FIG. 19

# FIG.20

**IMAGE CONVERSION APPARATUS** (133)

AVAILABLE INFORMATION (QP, BITRATE, IMAGE DURING DECODING, ETC.) → REDUCTION NUMBER DETERMINATION SECTION (221) → COEFFICIENT RECONSTRUCTION SECTION (222)

REDUCTION FILTER INFORMATION
{ REDUCTION COEFFICIENT W'(c) OF TARGET CLASS, TRANSFORM COEFFICIENT $A'^{-1}$, TAP COEFFICIENT OF NONCONFORMING CLASS, CLASS FLAG }

TAP COEFFICIENT w'(c, n)

FIRST IMAGE (IMAGE DURING DECODING) → CLASSIFICATION SECTION (172) → COEFFICIENT ACQUISITION SECTION (173)

TAP SELECTION SECTION (171) → PREDICTION OPERATION SECTION (174) → SECOND IMAGE (POST-FILTER IMAGE)

EP 3 606 079 A1

# FIG.21

EP 3 606 079 A1

# F I G . 2 2

# FIG.23

```
            ENCODING PROCESS
                    │
                    ▼
NO        ╱                              ╲  S11
◄─────────  UPDATE TIMING FOR TAP COEFFICIENT?
│         ╲                              ╱
│                   │ YES
│                   ▼
│  ┌─────────────────────────────────────────────────┐ S12
│  │ DETERMINE TAP COEFFICIENT FOR EACH CLASS (TAP    │
│  │ COEFFICIENT LEARNING)                            │
│  └─────────────────────────────────────────────────┘
│                   │
│                   ▼
│  ┌─────────────────────────────────────────────────┐ S13
│  │        USE MAIN COMPONENT ANALYSIS TO CONVERT TAP │
│  │ COEFFICIENT W(c) INTO REDUCTION COEFFICIENT w'(c) │
│  │ HAVING REDUCED DATA AMOUNT AND GENERATE REDUCTION │
│  │ FILTER NUMBER INCLUDING REDUCTION COEFFICIENT W'(c)│
│  └─────────────────────────────────────────────────┘
│                   │
│                   ▼
│  ┌─────────────────────────────────────────────────┐ S14
│  │ SET REDUCTION FILTER INFORMATION TO TRANSMISSION TARGET │
│  └─────────────────────────────────────────────────┘
│                   │
│                   ▼
│  ┌─────────────────────────────────────────────────┐ S15
│  │        RECONSTRUCTION TAP COEFFICIENT w'(c) FROM  │
│  │ REDUCTION FILTER INFORMATION AND UPDATE TAP COEFFICIENT │
│  │    TO BE USED FOR CLASSIFICATION ADAPTIVE PROCESS │
│  └─────────────────────────────────────────────────┘
│                   │
└──────────────────►│
                    ▼
        ┌───────────────────────────┐ S16
        │ PREDICTION ENCODING PROCESS │
        └───────────────────────────┘
                    │
                    ▼
                  END
```

# FIG.24

```
         ( PREDICTION ENCODING PROCESS )
                      │
         ┌────────────────────────┐
         │      A/D CONVERSION     │ S31
         └────────────────────────┘
                      │
         ┌────────────────────────┐
         │        SORTING          │ S32
         └────────────────────────┘
                      │
         ┌────────────────────────┐
         │     INTRA-PREDICTION    │ S33
         └────────────────────────┘
                      │
         ┌────────────────────────┐
         │  INTER-MOTION PREDICTION│ S34
         └────────────────────────┘
                      │
         ┌────────────────────────┐
         │   SELECT PREDICTED IMAGE│ S35
         └────────────────────────┘
                      │
 ┌──────────────────────────────────────────────────────────┐
 │ ARITHMETICALLY OPERATE DIFFERENCE (RESIDUAL) BETWEEN       │ S36
 │ TARGET IMAGE AND PREDICTED IMAGE                          │
 └──────────────────────────────────────────────────────────┘
                      │
         ┌────────────────────────┐
         │  ORTHOGONALLY TRANSFORM │ S37
         └────────────────────────┘
                      │
         ┌────────────────────────┐
         │        QUANTIZE         │ S38
         └────────────────────────┘
```

```
         ┌────────────────────────┐
         │       DEQUANTIZE        │ S39
         └────────────────────────┘
                      │
         ┌────────────────────────┐
         │ INVERSELY ORTHOGONALLY  │ S40
         │       TRANSFORM         │
         └────────────────────────┘
                      │
 ┌──────────────────────────────────────────────────────────┐
 │ ADD RESIDUAL AND PREDICTED IMAGE TO DETERMINE IMAGE       │ S41
 │ DURING DECODING                                           │
 └──────────────────────────────────────────────────────────┘
                      │
         ┌────────────────────────┐
         │ CLASSIFICATION ADAPTIVE │ S42
         │        PROCESS          │
         └────────────────────────┘
                      │
         ┌────────────────────────┐
         │         STORE           │ S43
         └────────────────────────┘
                      │
         ┌────────────────────────┐
         │    REVERSIBLY ENCODE    │ S44
         └────────────────────────┘
                      │
         ┌────────────────────────┐
         │  ACCUMULATE AND TRANSMIT│ S45
         └────────────────────────┘
                      │
         ┌────────────────────────┐
         │     CONTROL RATE        │ S46
         └────────────────────────┘
                      │
                   ( END )
```

EP 3 606 079 A1

# FIG.25

```
           ( CLASSIFICATION ADAPTIVE PROCESS )
                          │
                          ▼
              ┌───────────────────────────┐
              │    SELECT NOTICED PIXEL    │  S51
              └───────────────────────────┘
                          │
                          ▼
         ┌────────────────────────────────────┐
         │ SELECT PREDICTION TAP FROM IMAGE DURING │  S52
         │              DECODING              │
         └────────────────────────────────────┘
                          │
                          ▼
         ┌────────────────────────────────────┐
         │        CLASSIFY NOTICED PIXEL      │  S53
         └────────────────────────────────────┘
                          │
                          ▼
         ┌────────────────────────────────────┐
         │     ACQUIRE TAP COEFFICIENT OF CLASS │  S54
         └────────────────────────────────────┘
                          │
                          ▼
            ┌─────────────────────────────┐
            │  PERFORM PREDICTION OPERATION │  S55
            └─────────────────────────────┘
                          │
                          ▼
   YES  ╱  DOES REMAIN PIXEL THAT HAS NOT BEEN  ╲  S56
  ◄─────   SELECTED AS NOTICED PIXEL?            ╱
          ╲                                     ╱
                          │ NO
                          ▼
    ┌──────────────────────────────────────────────┐
    │   OUTPUT POST-FILTER IMAGE TO FRAME MEMORY    │  S57
    └──────────────────────────────────────────────┘
                          │
                          ▼
                      (  END  )
```

# FIG.26

DECODING APPARATUS

EP 3 606 079 A1

# FIG.27

IMAGE DURING DECODING

REDUCTION FILTER
INFORMATION

IMAGE CONVERSION
APPARATUS ~331

CLASSIFICATION ADAPTIVE FILTER
306

POST-FILTER IMAGE

# F I G . 2 8

REDUCTION FILTER INFORMATION
{
REDUCTION NUMBER P
REDUCTION COEFFICIENT W'(c) OF TARGET CLASS,
TRANSFORM COEFFICIENT A-1',
TAP COEFFICIENT OF NONCONFORMING CLASS,
CLASS FLAG
}

331

IMAGE CONVERSION APPARATUS

345

COEFFICIENT RECONSTRUCTION SECTION

TAP COEFFICIENT w'(c, n)

342

CLASSIFICATION SECTION

343

COEFFICIENT ACQUISITION SECTION

FIRST IMAGE
(IMAGE DURING DECODING)

341

TAP SELECTION SECTION

344

PREDICTION OPERATION SECTION

SECOND IMAGE
(IMAGE AFTER DECODING)

EP 3 606 079 A1

# FIG.29

331

IMAGE CONVERSION APPARATUS

REDUCTION FILTER INFORMATION

{ REDUCTION NUMBER P
REDUCTION COEFFICIENT W'(c) OF TARGET CLASS,
TRANSFORM
COEFFICIENT A'$^{-1}$ }

351

COEFFICIENT RECONSTRUCTION SECTION

TAP COEFFICIENT w'(c, n)

342

CLASSIFICATION SECTION

343

COEFFICIENT ACQUISITION SECTION

FIRST IMAGE
(IMAGE DURING DECODING)

341

TAP SELECTION SECTION

344

PREDICTION OPERATION SECTION

SECOND IMAGE
(IMAGE AFTER DECODING)

# FIG.30

IMAGE CONVERSION APPARATUS — 331

REDUCTION FILTER INFORMATION
{REDUCTION COEFFICIENT W'(c) OF TARGET CLASS, TRANSFORM COEFFICIENT A^-1, TAP COEFFICIENT OF NONCONFORMING CLASS, CLASS FLAG}

AVAILABLE INFORMATION (QP, BIT RATE, IMAGE DURING DECODING, ETC.)

361 — REDUCTION NUMBER DETERMINATION SECTION

362 — COEFFICIENT RECONSTRUCTION SECTION

TAP COEFFICIENT w'(c, n)

343 — COEFFICIENT ACQUISITION SECTION

344 — PREDICTION OPERATION SECTION

342 — CLASSIFICATION SECTION

341 — TAP SELECTION SECTION

FIRST IMAGE (IMAGE DURING DECODING)

SECOND IMAGE (IMAGE AFTER DECODING)

# FIG.31

IMAGE CONVERSION APPARATUS 331

AVAILABLE INFORMATION
(QP, BIT RATE,
IMAGE DURING DECODING,
ETC.)

REDUCTION NUMBER DETERMINATION SECTION 361

REDUCTION FILTER INFORMATION
{ REDUCTION COEFFICIENT W'(c) OF TARGET CLASS, TRANSFORM COEFFICIENT $A'^{-1}$ }

COEFFICIENT RECONSTRUCTION SECTION 371

TAP COEFFICIENT w'(c, n)

CLASSIFICATION SECTION 342

COEFFICIENT ACQUISITION SECTION 343

FIRST IMAGE
(IMAGE DURING DECODING)

TAP SELECTION SECTION 341

PREDICTION OPERATION SECTION 344

SECOND IMAGE
(IMAGE AFTER DECODING)

EP 3 606 079 A1

# FIG.32

```
         ( DECODING PROCESS )
                   │
                   ▼
    ┌──────────────────────────────┐  S71
    │   ACCUMULATE ENCODED DATA     │
    └──────────────────────────────┘
                   │
                   ▼
    ┌──────────────────────────────┐  S72
    │     REVERSIBLE DECODING       │
    └──────────────────────────────┘
                   │
                   ▼
 NO ╱────────────────────────────────────╲  S73
◄───  DOES REDUCTION FILTER INFORMATION EXIST?
    ╲────────────────────────────────────╱
                   │ YES
                   ▼
 ┌───────────────────────────────────────────────┐  S74
 │     ACQUIRE REDUCTION FILTER INFORMATION,       │
 │ RECONSTRUCT TAP COEFFICIENT W'(c) FROM REDUCTION FILTER │
 │  INFORMATION AND UPDATE TAP COEFFICIENT TO BE USED IN   │
 │        CLASSIFICATION ADAPTIVE PROCESS          │
 └───────────────────────────────────────────────┘
                   │
                   ▼
    ┌──────────────────────────────┐  S75
    ║   PREDICTION DECODING PROCESS  ║
    └──────────────────────────────┘
                   │
                   ▼
             (    END    )
```

106

# FIG.33

```
            ( PREDICTION DECODING PROCESS )
                          │
                          ▼
        ┌──────────────────────────────────┐  S81
        │            DEQUANTIZE             │
        └──────────────────────────────────┘
                          │
                          ▼
        ┌──────────────────────────────────┐  S82
        │   INVERSELY ORTHOGONALLY TRANSFORM │
        └──────────────────────────────────┘
                          │
                          ▼
        ┌──────────────────────────────────┐  S83
        │         PREDICTION PROCESS        │
        └──────────────────────────────────┘
                          │
                          ▼
        ┌──────────────────────────────────┐  S84
        │        SELECT PREDICTED IMAGE     │
        └──────────────────────────────────┘
                          │
                          ▼
  ┌─────────────────────────────────────────────────────┐  S85
  │ ADD RESIDUAL AND PREDICTED IMAGE TO DETERMINE IMAGE  │
  │              DURING DECODING                         │
  └─────────────────────────────────────────────────────┘
                          │
                          ▼
        ┌──────────────────────────────────┐  S86
        │     CLASSIFICATION ADAPTIVE PROCESS │
        └──────────────────────────────────┘
                          │
                          ▼
        ┌──────────────────────────────────┐  S87
        │             SORTING              │
        └──────────────────────────────────┘
                          │
                          ▼
        ┌──────────────────────────────────┐  S88
        │            D/A CONVERT           │
        └──────────────────────────────────┘
                          │
                          ▼
        ┌──────────────────────────────────┐  S89
        │              STORE               │
        └──────────────────────────────────┘
                          │
                          ▼
                      (   END   )
```

# FIG.34

# FIG. 3 5

EP 3 606 079 A1

# FIG.36

IMAGE DURING DECODING

STUDENT DATA
(IMAGE DURING DECODING)

532

IMAGE CONVERSION
APPARATUS

REDUCTION FILTER
INFORMATION

531

REDUCTION
APPARATUS

TAP COEFFICIENT

131

LEARNING
APPARATUS

TEACHER DATA
(ORIGINAL IMAGE)

CLASSIFICATION ADAPTIVE FILTER

511

POST-FILTER IMAGE

TO VARIABLE LENGTH
ENCODING SECTION

EP 3 606 079 A1

# F I G . 3 7

EP 3 606 079 A1

nTH TAP COEFFICIENTS w(1, n) TO w(C, n) OF CLASSES 1 TO C ARE REPRESENTED BY CUBIC EQUATION IN WHICH CLASS c IS PARAMETER z (4 TERMS)

$$(w(c, n) = \beta(n, 1) + \beta(n, 2) \times c + \beta(n, 3) \times c^2 + \beta(n, 4) \times c^3)$$

FIG.38

531

REDUCTION APPARATUS

131

LEARNING APPARATUS

TAP COEFFICIENT

541

ADDITION SECTION

542

COEFFICIENT CALCULATION SECTION

REDUCTION FILTER COEFFICIENT (SEED COEFFICIENT)

EP 3 606 079 A1

# FIG.40

ENCODING PROCESS

UPDATE TIMING OF TAP COEFFICIENT? — S111

NO

YES

DETERMINE TAP COEFFICIENT FOR EACH CLASS (TAP COEFFICIENT LEARNING) — S112

CONVERT TAP COEFFICIENT w(c, n) INTO SEED COEFFICIENT β(n, m) HAVING REDUCED DATA AMOUNT BY SEED COEFFICIENT CONVERSION AND GENERATE REDUCTION FILTER INFORMATION INCLUDING SEED COEFFICIENT β(n, m) — S113

SET REDUCTION FILTER INFORMATION AS TRANSMISSION TARGET — S114

RECONSTRUCT TAP COEFFICIENT w(c, n) FROM REDUCTION FILTER INFORMATION AND UPDATE TAP COEFFICIENT TO BE USED FOR CLASSIFICATION ADAPTIVE PROCESS — S115

PREDICTION ENCODING PROCESS — S116

END

# FIG.41

PREDICTION ENCODING PROCESS

A/D CONVERSION — S131

SORTING — S132

INTRA-PREDICTION — S133

INTER-MOTION PREDICTION — S134

SELECT PREDICTED IMAGE — S135

ARITHMETICALLY OPERATE DIFFERENCE (RESIDUAL) BETWEEN TARGET IMAGE AND PREDICTED IMAGE — S136

ORTHOGONALLY TRANSFORM — S137

QUANTIZE — S138

DEQUANTIZE — S139

INVERSELY ORTHOGONALLY TRANSFORM — S140

ADD RESIDUAL AND PREDICTED IMAGE TO DETERMINE IMAGE DURING DECODING — S141

CLASSIFICATION ADAPTIVE PROCESS — S142

STORE — S143

REVERSIBLY ENCODE — S144

ACCUMULATE AND TRANSMIT — S145

CONTROL RATE — S146

END

115

# FIG.42

FIG.42 — Decoding apparatus block diagram including ACCUMULATION BUFFER (301), REVERSIBLE DECODING SECTION (302), DEQUANTIZATION SECTION (303), INVERSE ORTHOGONAL TRANSFORM SECTION (304), adder (305), CLASSIFICATION ADAPTIVE FILTER (611), SORTING BUFFER (307), D/A CONVERSION SECTION (308), FRAME MEMORY (310), INTRA-PREDICTION SECTION (312), MOTION PREDICTION COMPENSATION SECTION (313), with REDUCTION FILTER INFORMATION and ENCODING INFORMATION paths. DECODING APPARATUS (12).

EP 3 606 079 A1

FIG.43

IMAGE DURING DECODING

REDUCTION
FILTER
INFORMATION

IMAGE CONVERSION
APPARATUS ~631

CLASSIFICATION ADAPTIVE FILTER

611

POST-FILTER IMAGE

# FIG.44

IMAGE CONVERSION APPARATUS 631

REDUCTION FILTER INFORMATION
(SEED COEFFICIENT)

COEFFICIENT RECONSTRUCTION SECTION 641

TAP COEFFICIENT w(c, n)

FIRST IMAGE
(IMAGE DURING DECODING)

CLASSIFICATION SECTION 342

COEFFICIENT ACQUISITION SECTION 343

TAP SELECTION SECTION 341

PREDICTION OPERATION SECTION 344

SECOND IMAGE
(IMAGE AFTER DECODING)

# FIG.45

```
        DECODING PROCESS

    ACCUMULATE ENCODED DATA        S171

    REVERSIBLE DECODING            S172

NO  DOES REDUCTION FILTER INFORMATION EXIST?   S173
                   YES

    ACQUIRE REDUCTION FILTER INFORMATION,       S174
    RECONSTRUCT TAP COEFFICIENT w(c, n) FROM REDUCTION FILTER
    INFORMATION AND UPDATE TAP COEFFICIENT TO BE USED FOR
    CLASSIFICATION ADAPTIVE PROCESS

    PREDICTION DECODING PROCESS    S175

                   END
```

# FIG.46

```
       ( PREDICTION DECODING PROCESS )
                      |
                      v
      +--------------------------------+
      |          DEQUANTIZE            |  S181
      +--------------------------------+
                      |
                      v
      +--------------------------------+
      |   INVERSE ORTHOGONAL TRANSFORM |  S182
      +--------------------------------+
                      |
                      v
      +--------------------------------+
      |       PREDICTION PROCESS       |  S183
      +--------------------------------+
                      |
                      v
      +--------------------------------+
      |      SELECT PREDICTED IMAGE    |  S184
      +--------------------------------+
                      |
                      v
 +----------------------------------------------------------+
 | ADD RESIDUAL AND PREDICTED IMAGE TO DETERMINE IMAGE DURING DECODING |  S185
 +----------------------------------------------------------+
                      |
                      v
      +--------------------------------+
      |   CLASSIFICATION ADAPTIVE PROCESS   |  S186
      +--------------------------------+
                      |
                      v
      +--------------------------------+
      |           SORTING              |  S187
      +--------------------------------+
                      |
                      v
      +--------------------------------+
      |          D/A CONVERT           |  S188
      +--------------------------------+
                      |
                      v
      +--------------------------------+
      |           STORE               |  S189
      +--------------------------------+
                      |
                      v
                   ( END )
```

# FIG.47

base view
view_id=0

non-base view
view_id=1

non-base view
view_id=2

EP 3 606 079 A1

# FIG.48

FIG.49

EP 3 606 079 A1

# FIG.50

non base layer
layer_id=2

non-base layer
layer_id=1

base layer
layer_id=0

I  B2  B1  B2  B0  B2  B1  B2  P

I  B1  B0  B1  P

I  B1  B0  B1  P

EP 3 606 079 A1

# FIG.51

BASE LAYER IMAGE → [ENCODING SECTION 1021] → BASE LAYER IMAGE ENCODED STREAM → [MULTIPLEXING SECTION 1023] → HIERARCHICAL IMAGE ENCODED STREAM

NON-BASE LAYER IMAGE → [ENCODING SECTION 1022] → NON-BASE LAYER IMAGE ENCODED STREAM → [MULTIPLEXING SECTION 1023]

1020

# FIG.52

# FIG.53

CPU 1101
ROM 1102
RAM 1103

1104

1110

INPUT/OUTPUT INTERFACE

| INPUTTING SECTION | OUTPUTTING SECTION | STORAGE SECTION | COMMUNICATION SECTION | DRIVE |

1111    1112    1113    1114    ~1115

REMOVABLE MEDIUM ~1121

1100

EP 3 606 079 A1

# FIG.54

EP 3 606 079 A1

# FIG.55

1220

1221

1222

COMMUNICATION SECTION

1223

AUDIO CODEC

1224

1225

1226 CAMERA SECTION

DEMULTIPLEXING SECTION 1228

1227 IMAGE PROCESSING SECTION

RECORDING AND REPRODUCTION SECTION 1229

DISPLAY SECTION 1230

1233

CONTROL SECTION

OPERATION SECTION

1231

1232

FIG.56

# FIG.57

# FIG.58

EP 3 606 079 A1

# FIG.59

VIDEO SIGNAL → VIDEO INPUT PROCESSING SECTION (1401)

FIRST IMAGE SCALING SECTION (1402)

SECOND IMAGE SCALING SECTION (1403)

VIDEO OUTPUT PROCESSING SECTION (1404) → VIDEO SIGNAL

FRAME MEMORY (1405)

ENCODE/DECODE ENGINE (1407)

MEMORY CONTROLLING SECTION (1406)

ACCESS MANAGEMENT TABLE (1406A)

AUDIO SIGNAL → AUDIO ENCODER (1410)

AUDIO ES BUFFER (1409A)

VIDEO ES BUFFER (1408A)

VIDEO ES BUFFER

AUDIO ES BUFFER (1409B)

AUDIO DECODER (1411) → AUDIO SIGNAL

MUX (1412)

DMUX (1413)

1408B

STREAM BUFFER (1414)

FILE DATA

TRANSPORT STREAM

1332

EP 3 606 079 A1

133

# FIG.60

EP 3 606 079 A1

## INTERNATIONAL SEARCH REPORT

International application No.

PCT/JP2018/009911

### A. CLASSIFICATION OF SUBJECT MATTER
Int.Cl. H04N19/80(2014.01)i, H04N19/46(2014.01)i

According to International Patent Classification (IPC) or to both national classification and IPC

### B. FIELDS SEARCHED

Minimum documentation searched (classification system followed by classification symbols)
Int.Cl. H04N19/00-19/98

Documentation searched other than minimum documentation to the extent that such documents are included in the fields searched
Published examined utility model applications of Japan    1922-1996
Published unexamined utility model applications of Japan    1971-2018
Registered utility model specifications of Japan    1996-2018
Published registered utility model applications of Japan    1994-2018

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2012-235407 A (SONY CORPORATION) 29 November 2012, paragraphs [0020]-[0102], fig. 1-12 & US 2012/0288209 A1, paragraphs [0035]-[0116], fig. 1-12 & CN 102780887 A | 1-18 |
| A | JP 2005-318096 A (SONY CORPORATION) 10 November 2005 (Family: none) | 1-18 |
| A | JP 2003-299096 A (SONY CORPORATION) 17 October 2003 (Family: none) | 1-18 |

☒ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 08.05.2018 | 22.05.2018 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

| International application No. |
|---|
| PCT/JP2018/009911 |

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2003-23609 A (SONY CORPORATION) 24 January 2003 (Family: none) | 1-18 |
| P, X<br>P, A | WO 2017/191750 A1 (SONY CORPORATION) 09 November 2017, paragraphs [0698]-[0935], fig. 43-63 (Family: none) | 15-18<br>1-14 |

Form PCT/ISA/210 (continuation of second sheet) (January 2015)

## INTERNATIONAL SEARCH REPORT

| International application No. |
| --- |
| PCT/JP2018/009911 |

**Box No. II      Observations where certain claims were found unsearchable (Continuation of item 2 of first sheet)**

This international search report has not been established in respect of certain claims under Article 17 (2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:
[see extra sheet]

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.     Consequently, this international search report is restricted to the invention first mentioned in the claims; it is covered by claims Nos.:

**Remark on Protest**      ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (January 2015)

**INTERNATIONAL SEARCH REPORT**

International application No.

PCT/JP2018/009911

(Invention 1) Claims 1-14
Claims 1-14 recite the special technical feature of obtaining the tap coefficient of the class of a target pixel from tap coefficients reconstructed from a reduction coefficient projected in a lower-order space than a tap coefficient space for tap coefficients of each class, and transmitting the reduction coefficient and a transformation coefficient used for projecting the reduction coefficient in the tap coefficient space, and therefore the claims are identified as invention 1.

(Invention 2) Claims 15-18
Claims 15-18 and claim 1 identified as invention 1 recite the technical feature of selecting pixels to be a predictive tap from a first image, classifying a target pixel as any of a plurality of classes, obtaining the tap coefficient of the class of the target pixel from a tap coefficient for each of the classes produced by learning using a pupil image and a teacher image, carrying out the predictive computation using the tap coefficient of the class of the target pixel and the predictive tap of the target pixel, thereby producing the pixel value of the corresponding pixel, and transmitting information for obtaining a tap coefficient. However, the technical feature does not make a contribution over the prior art in consideration of the disclosure of document 1 (JP 2012-235407 A, Sony Corporation, Nov. 29, 2012, paragraphs [0020]-[0102], fig. 1-12), and therefore the technical feature cannot be a special technical feature. These inventions do not have any other identical or corresponding special technical feature.
Furthermore, claims 15-18 are not dependent from claim 1. Claims 15-18 are not substantially identical to or similarly closely related to any of the claims identified as invention 1.
Therefore, claims 15-18 cannot be identified as invention 1.
Claims 15-18 recite the special technical feature of obtaining the tap coefficient of the class of the target pixel from tap coefficients reconstructed from a type coefficient used for a prescribed operation with a parameter representing a class and transmitting the type coefficient, and therefore the claims are identified as invention 2.

**EP 3 606 079 A1**

**Patent documents cited in the description**

- JP 3890638 B

- JP 4670169 B